# EUROPEAN PATENT APPLICATION

(11) **EP 0 536 918 A2**
(43) Date of publication of application: **14.04.1993**
(21) Application number: 92308656.5
(22) Date of filing: 23.09.1992
(51) Int. Cl.: H04N 1/46

(54) **Method and apparatus for color image processing**

(30) Priority: 01.10.1991 IL 99614
(71) Applicant: SCITEX CORPORATION LTD., Herzliya 46103 (IL)
(72) Inventor: Melman, Haim, Kfar Sava (IL)
(74) Representative: Hillier, Peter

(57) **Abstract**

A method for displaying a color image and a color palette including the steps of providing an analog representation of a color image, the analog representation corresponding to a digital representation of the color image in a first color space, providing a digital representation of a color palette in a second color space, and employing the digital representation of the color palette in the second color space in order to provide an analog representation of the color palette, the analog representation corresponding to a digital representation of the color palette in the first color space.

## Description

### FIELD OF THE INVENTION

The present invention relates to techniques for tone and color reproduction control in graphic arts.

### BACKGROUND OF THE INVENTION

Computerized process color editing apparatus is known in the art. The first such apparatus was introduced in 1979 by Scitex Corporation of Herzlia, Israel, the assignees of the present invention, under the trade name RESPONSE.

The present state of the art is represented by the Scitex RIGHTOUCH, which permits a user to select from among 16,000,000 colors.

Typically, such systems are utilized for correcting colors in scanned images. Once the desired corrections are made to the image, the image is printed via a desired printing process, such as gravure and offset.

The scanned image is typically stored in a printable color coordinate system such as the Cyan-Magenta-Yellow-Black (CMYK) die color coordinate system. Colors are not uniquely defined by the CMYK color values since there are many different die color coordinate systems, which vary due to different inks in use, different printing machines in use, and differences in individual preferences regarding the amounts of black ink to be used. Every printing shop has its own preferred die combinations for producing a given color.

Sometimes, an operator wishing to correct the image does so in the CMYK coordinate system. The CMYK coordinate system, however, is unintuitive, so other, more intuitive coordinate systems are also used, such as the Luminance-Hue-Saturation (LHS) system. Nonetheless, it is generally necessary to ensure that the correction eventually performed on the image be in the operator's own CMYK coordinate system for later printing. In other words, it is desired that the intuitive coordinate system be used for the operator interface, but that the required modifications to the image be stored in accordance with the workshop's own CMYK coordinate system so that the workshop's own CMYK coordinate system may be used directly to effect the modifications to the image.

Two level color selection methods, of the type described above, are known in the art. The Apple Color Manager, a software program by Apple Inc. of the USA designed for the Macintosh II personal computer, provides a bar with varying luminance and a two-dimensional color circle with varying hue and saturation levels where the luminance, hue and saturation levels only approximate the scientific meaning of the words.

Photoshop, a software program designed by Adobe Inc. of the USA also for the Macintosh II, also enables selection of color on scanned images. Various methods for selecting and modifying the color of a scanned image are implemented in Photoshop. For example, a color palette is provided including a strip which represents all hues, each at maximum saturation. Once a hue is selected, a rectangular area displays various levels of saturation and brightness for the selected hue. Color values for colors selected from the color palette may be represented in RGB, LHS, CMYK and other color coordinate systems.

The Photoshop converts color values, expressed in an operator-selected coordinate system, into CMYK values, using a general mathematical formula. Since, as mentioned hereinabove, each printing shop has its own defined CMYK coordinate system which typically is not definable via a formula, such a conversion generally does not produce CMYK combinations which are suited to a particular workshop.

Additionally, as is known in the art, the CMYK coordinate system varies between types of printing processes. Thus, an image represented in a given CMYK system will appear different when printed as an offset print and when printed as a gravure print. Attempts to adjust for the printing process and for a particular reproduction by varying the coefficients in the mathematical formula used to compute the CMYK values are normally relatively unsuccessful, particularly since the end user requirements are normally relatively high.

### SUMMARY OF THE INVENTION

It is therefore an object of the present invention to provide a color editing system which enables an operator to correct an image, using a selected color coordinate system and to print the edited image on a selected printing device using the CMYK coordinate system normally used by the operator for that printing device. The color editing system provides a visual or analog representation to the operator of the colors, once transformed to the color space of the printing device.

There is thus provided in accordance with a preferred embodiment of the present invention a method for displaying a color image and a color palette including the steps of providing an analog representation of a color image, the analog representation corresponding to a digital representation of the color image in a first color space, providing a digital representation of a color palette in a second color space, and employing the digital representation of the color palette in the second color space in order to provide an analog representation of the color palette, the analog representation corresponding to a digital representation of the color palette in the first color space.

Further in accordance with a preferred embodiment of the present invention, the color palette includes a plurality of locations 1, the first and second color spaces define a transformation T such that T transforms the second color space into the first color space, the plurality of locations 1 and the second color space define a function f such that f operating on the plurality of locations 1 is within the second color space, and the step of employing includes the step of computing a color value c within the first color space for each location 1 in accordance with the formula c=T(f(1)).

Still further in accordance with a preferred embodiment of the present invention, the method includes the step of retrieving the transformation T from a storage device.

Additionally in accordance with a preferred embodiment of the present invention, the storage device includes the storage device of a scanner.

Further in accordance with a preferred embodiment of the present invention, the storage device includes the color conversion module of a scanner at a predetermined setting.

Additionally in accordance with a preferred embodiment of the present invention, the step of computing includes the step of employing the color conversion module of a scanner for computing transformation T.

Still further in accordance with a preferred embodiment of the present invention, the method also includes the steps of receiving an indication of a user-selected location 1 in the color palette, the location 1 addressing a color value c within the color palette representation in the first color space, and modifying the color image by assigning the color value c to at least a portion of the digital representation of the color image.

Additionally in accordance with a preferred embodiment of the present invention, the method also includes the steps of receiving an indication of a user-selected location 1 in the color palette, the location 1 addressing a color value c within the representation of the color palette in the first color space, and modifying the transformation T by assigning the color value c to at least a portion of the values in the range of transformation T.

Further in accordance with a preferred embodiment of the present invention, the color value c is computed using the transformation c = T(f(1)).

Still further in accordance with a preferred embodiment of the present invention, the method includes at least one of the following steps: providing an analytical formula for T, and providing an analytical formula for f.

In accordance with another preferred embodiment of the present invention, the method includes at least one of the following steps: providing a LUT which represents the transformation T, and providing a LUT which represents the transformation f.

Further in accordance with a preferred embodiment of the present invention, the second color space is at least a portion of the output color space of a color reading device and the first color space is at least a portion of the input color space of a color writing device.

Further in accordance with a preferred embodiment of the present invention, the method also includes the step of computing transformation T, the step of computing including the step of comparing a plurality of output values of the color reading device to a corresponding plurality of input values of the color writing device.

Still further in accordance with a preferred embodiment of the present invention, the second color space is at least a portion of an RGB space and the first color space is at least a portion of a CMYK space.

There is also provided in accordance with a preferred embodiment of the present invention a color palette for use in conjunction with a color processing system including a color reading device and a substrate which the color reading device reads, the color processing system defining a color value domain thereof including generally all the colors that the color reading device and the substrate are capable of providing, the color value domain being included within a first color space, the color palette including an analog representation of a first plurality of colors, the first plurality of colors including second and third pluralities of colors, the second plurality of colors corresponding to color values within the color value domain and the third plurality of colors corresponding to color values outside the color value domain, and apparatus for differentiating the second plurality of colors from the third plurality of colors.

Further in accordance with a preferred embodiment of the present invention, the apparatus for differentiating defines a border including the locus of all geometrical locations 1 within the palette such that the color of each location 1 is on or adjacent the surface of the second plurality of colors.

Still further in accordance with a preferred embodiment of the present invention, the apparatus for differentiating defines a border including the locus of all geometrical locations 1 within the palette having a color located on or adjacent the internal surface of the third plurality of colors.

Additionally in accordance with a preferred embodiment of the present invention, the first color space is the output space of a color reading device and the color value domain is characterized in that the color reading device is only capable of reading from the substrate any color value within the color value domain.

Still further in accordance with a preferred embodiment of the present invention, the color reading device is a color separation scanner and the output space is the RGB space of the color separation scanner.

Additionally in accordance with a preferred embodiment of the present invention, the color reading device is a color separation scanner and the first color space and the color value domain are both included in the input space of a color writing device into which the color space of the color separation scanner may be transformed.

Still further in accordance with a preferred embodiment of the present invention, the substrate is formed of a photographic material.

Further in accordance with a preferred embodiment of the present invention, the color value domain is defined by employing the color reading device to read a plurality of color values from a plurality of substrates.

There is also provided in accordance with a preferred embodiment of the present invention a method for providing a color palette for use in conjunction with a color processing system including a color reading device and a substrate which the color reading device reads, the color processing system defining a color value domain thereof characterized in that the color reading device and the substrate are only capable of providing any color value within the color value domain and in that the color value domain is included within a first color space, the method including the steps of providing an analog representation of a first plurality of colors corresponding to a digital representation thereof in the first color space, the first plurality of colors including second and third pluralities of colors, the second plurality of colors corresponding to color values within the color value domain and the third plurality of colors corresponding to color values outside the color value domain, and providing apparatus for differentiating the second plurality of colors from the third plurality of colors.

Further in accordance with a preferred embodiment of the present invention, the method also includes the step of discarding at least one individual color value from among the plurality of color values which is enveloped by other individual color values from among the plurality of color values.

Still further in accordance with a preferred embodiment of the present invention, the color value domain is defined employing the color reading device to read an analog representation of a representative plurality of colors on the substrate, the representative plurality of colors spanning substantially all hues and luminances, each hue and luminance having a saturation value substantially equal to the maximum saturation value available on the substrate for that hue and luminance.

Additionally in accordance with a preferred embodiment of the present invention, the plurality of color values includes a representation of a multiplicity of color values generated by a plurality of different types of substrates.

Still further in accordance with a preferred embodiment of the present invention, the plurality of color values is defined in a standard color space.

Additionally in accordance with a preferred embodiment of the present invention, the first color space is defined in a standard color coordinate system.

There is also provided in accordance with a preferred embodiment of the present invention a method of representing a color transformation including the steps of providing a first digital representation of a color palette in a first color space, transforming the first digital representation of the color palette employing the color transformation, thereby to obtain a second digital representation of the color palette in a second color space, and displaying the second digital representation of the color palette.

Further in accordance with a preferred embodiment of the present invention, the method also includes the step of inspecting the displayed second digital representation of the color palette and introducing corrections in the color transformation.

It is appreciated that the first and second color spaces referred to herein may be, but need not be, identical.

### BRIEF DESCRIPTION OF THE DRAWINGS

The present invention will be understood and appreciated more fully from the following detailed description, taken in conjunction with the drawings in which:
Fig. 1 is a block diagram of a color editing system interfacing color scanning apparatus which is constructed and operative in accordance with a first preferred embodiment of the present invention;
Fig. 2 is a block diagram of a color editing system interfacing color scanning apparatus constructed and operative in accordance with a second preferred embodiment of the present invention;
Fig. 3 is a conceptual illustration of a geometrical figure, having a generally ellipsoidal configuration, which corresponds to an input target and is drawn within an RGB coordinate system; and
Fig. 4 is a cross sectional illustration taken along plane 52 of Fig. 3.

### DETAILED DESCRIPTION OF THE INVENTION

The present specification and claims will be better understood with reference to the following definitions:

### Analog representation of a color image:

A representation of a color image which is perceivable by the human eye as a color image. The representation may appear upon a transparency, a photograph, a CRT display, a printed page, etc.

### Digital representation of a color image:

Any representation of a color image which is expressed in discrete symbols, such as numerical symbols. A common digital representation of a color image is a digital file comprising a plurality of numerical values corresponding to a plurality of pixels into which the color image has been divided, each such numerical value representing some aspect pertaining to the color appearance of the corresponding pixel.

### Substrate:

Physical apparatus bearing or displaying an analog representation of an image, e.g. transparency, Cromalin (registered trademark), CRT display, photograph, paper, surfaces suitable for painting on, etc.

### Range of color processing apparatus:

The totality of color values which can be output by the color processing apparatus.

### Domain of color processing apparatus:

The totality of color values which can be input by the color processing apparatus.

### Color processing apparatus:

Apparatus which inputs a first representation of a color image (digital or analog) and converts it into a second representation of a color image (digital or analog), thereby to define a transformation from at least a portion of the range of the color processing apparatus into the domain.

### Image creation system:

Apparatus which creates an image internally or one which takes as input a representation of a color image and modifies it. Such a system can create the color image from geometrical shapes, can alter the shape and can select and/or modify the color of the color image.

### Color reading device or color reading apparatus:

Apparatus which inputs an analog representation of a color image and converts it to a digital representation thereof. e.g., ECSS, DECSS, colorimeters, spectrum analyzers, densitometers. Typically, the digital representation is expressed in a coordinate system such as XYZ, CMYK, RGB, etc.

### Printing machine/device/system; output apparatus, recording apparatus color writing device, etc.:

Any apparatus which inputs a digital representation of a color image and converts it into an analog representation thereof. For example: conventional, offset, gravure, or other printing apparatus employing inks, conventional or direct digital proofing machines, plotters or color recorders which expose photographic materials, electrostatic printing systems employing powder colorants, color monitors, and color CRT displays.

### Calibration:

Adjusting color processing apparatus in order to obtain representations, having predetermined substantially objective color characteristics, of color images sought to be processed.

### Color value:

A representation of a color, typically in a color coordinate system such as but not limited to RGB, L*a*b*, XYZ coordinate systems and device dependent coordinate systems such as color head signals e.g. RGB, ink percentages e.g. CMYK, etc.

### Colorant or ink:

Any stimulant of the human eye's light energy receptors, typically through emission, transmission or reflection of photons, such as liquid colorants, powder colorants, photographic colorants and phosphors.

### Colorant values:

A digital representation of the amount of a colorant which it is sought to use.

It is appreciated that any references to color, color images, color values, colorant values, etc. in the present specification are intended to include the instances of black and white as colors or color values, black and white images, and black colorant and ink.

The following abbreviations are used:
- TCR:: tone and color reproduction
- GCR:: gray component replacement
- UCR:: Undercolor removal
- UCA:: Undercolor addition
- RGB:: red, green, blue. More generally, the term as used herein may refer to any color signals produced by a color reading device. In a color separation scanner, the term normally refers to the color separation signals of the scanner prior to processing thereof.
- CMYK:: cyan, magenta, yellow, black (colorants such as inks). More generally, the term as used herein refers to any signals which may serve as input for a color printing device.
- ECSS:: electronic color separation scanner
- DECSS:: digital electronic color separation scanner

### Color space or color coordinate system:

A coordinate system for representing color, including but not limited to RGB, CMY, CMYK and RGBCMYK. In some coordinate systems, particularly coordinate systems having more than three dimensions, a single color, as perceived by the human eye, may be represented in more than one way.

The present invention preferably takes advantage of the fact that many scanners, such as the Smart Scanner, commercially available from Scitex Corporation, Herzlia, Israel, are operative not only to provide a digital representation of the scanned image in a first color coordinate system such as RGB, but also to transform the RGB representation into a color coordinate system, such as CMYK. The CMYK representation is generally specific to a particular printing environment and to the particular requirements and habits of a particular workshop. Alternatively, an RGB representation may be transformed into a particular CMYK representation on a suitable system other than a scanner, such as an IBM PC.

The present invention seeks to employ a scanner to coordinate an intuitive color coordinate system representation of a color image and a printable color coordinate system representation of the color image. Specifically, the present invention preferably utilizes an existing transformation within the scanner to provide a color palette which is exactly related to the existing transformation. The present invention also preferably identifies borders and automatic matches.

Alternative preferred implementations of the present invention include the following:
(a) loading a stored color transformation, such as a LUT, into the software or hardware of an editing station such as a Softproof, commercially available from Scitex Corporation, Herzlia, Israel;
(b) loading at least some of the content of an analog scanner such as a Hell 399 scanner, commercially available from Hell, GMBH, West Germany, into a software or hardware implemented LUT within an editing station such as a Softproof;
(c) employing the digital color transformation module of a scanner such as Scitex's Smart Scanner in order to perform the desired transformation, using appropriate communication between a color editing station such as a Softproof, and between the scanner; and
(d) employing the analog color transformation module of a scanner such as the Hell 399 scanner in order to perform the desired transformation, using appropriate communication between the scanner and a workstation such as the Prisma workstation, commercially available from Scitex Corporation, Herzlia, Israel.

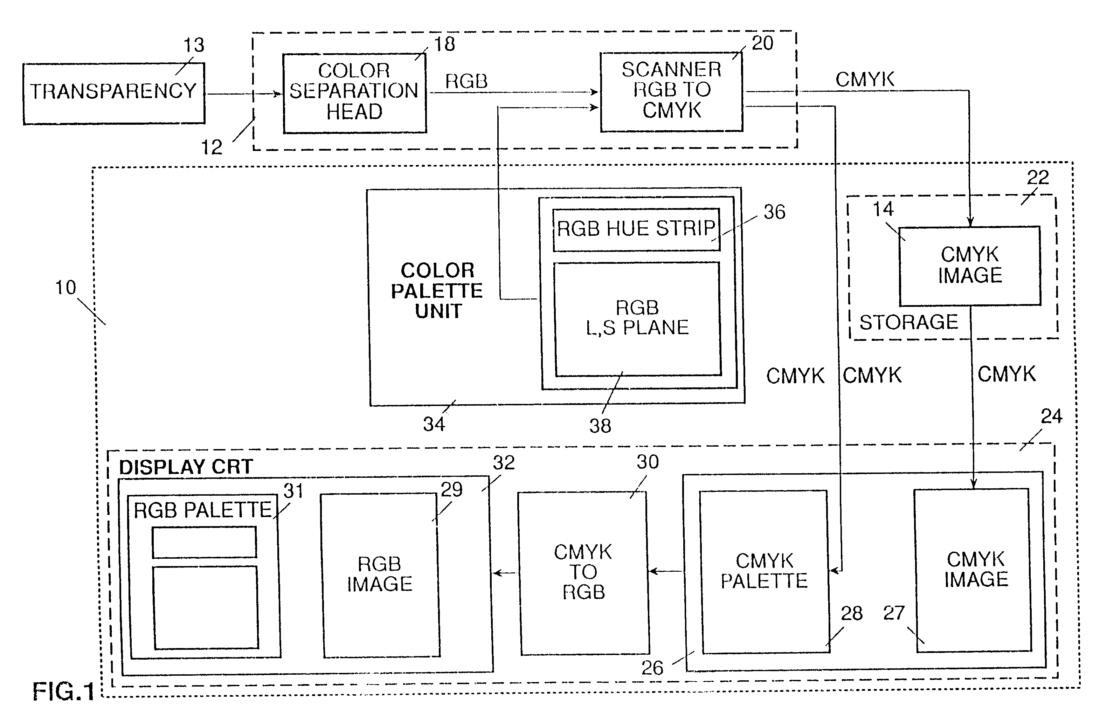

Reference is now made to Fig. 1 which illustrates a color editing system 10 constructed and operative in accordance with a preferred embodiment of the present invention and a color scanning system 12 operative in conjunction with the color editing system 10. The color scanning system may comprise a commercially available scanner such as the Smart Scanner^{TM} manufactured by Scitex Corporation Ltd. of Herzliya Israel. The apparatus of Fig. 1 is operative to transform an intuitive color coordinate system representation of colors into the specific CMYK color coordinate system representation of the color image provided by the scanner.

A particular feature of the apparatus of Fig. 1 is that existing color transformation apparatus, which has already been constructed to effect transformations into a particular color space used for printing purposes, is employed to transform the color selection data from the intuitive color space, which is the RGB space in the present example, to the "printing" color space.

The color scanning system 12 is operative to scan a color transparency 13 and provide a digital representation of a color image 14 useful for printing thereof, typically in the CMYK color coordinate system. Scanning system 12 typically comprises a color separation head 18 and a color transformation module 20 which preferably comprises a 3D LUT. Color separation head 18 is operative to scan the transparency and to provide a representation of the color image in an RGB color coordinate system. Three-dimensional lookup table (3D LUT) 20 is operative to receive the RGB output image and to transform it into digital representation 14 which is denoted in an operator specific CMYK color coordinate system. Digital representation 14 is typically stored in a suitable storage unit 22 such as a magnetic disk.

A technique for providing a transformation for constructing 3D LUT 20 is disclosed in coassigned Israel Patent Application 96955, the disclosure of which is incorporated herein by reference. The relevant portion of the text of Israel Patent Application 96955 is set forth herein in Appendix A. The method of Israel Patent Application 96955 may be used in conjunction with CIE standard color calibration tools such as the ANSI IT8.7-1 target, commercially available from Kodak, Rochester, NY, USA. A sample 3D LUT for transforming Smart Scanner RGB to offset CMYK is provided in Appendix B.

It will be appreciated that an operator preferably has defined a plurality of 3D LUTs 20, each being specific for a particular printing device such as a gravure printer or an offset printer and for a specific type of transparency and scanner.

The color editing system 10 may comprise a commercially available color editor, such as a MACINTOSH, commercially available from Apple Computer, Inc., Cupertino, CA, USA, in association with Photoshop software, commercially available from Adobe Systems, Inc., Mountain View, CA, USA. Color editing system 10 may also comprise a Softproof, commercially available from Scitex Corporation, Herzlia, Israel, for selecting and changing colors in printable image 14. Color editor 10 will be described hereinbelow in the context of the Scitex SoftProof System.

It will be appreciated by persons skilled in the art that the invention is not limited to use with existing process color graphics editors but is applicable to any suitable apparatus which provides the possibility of selecting color characteristics such as the hue, saturation and luminance of colors. The present invention is also not limited to systems in which the color transformation module 20 comprises a 3D LUT. Any suitable implementation of a color transformation module may be employed. For example, the analog color computer provided in the Hell 399 scanner may be used as transformation module 20, however, if the Hell scanner is used, the following conversions must be provided:
a digital to analog conversion between color editing apparatus 10 and color transformation module 20; and
an analog to digital conversion between color transformation module 20 and color editing apparatus 10.

Editing system 10 typically comprises the following subsystems:
a. Storage means 22 for storing a digital representation of a color image 14, as described above. The digital representation 14 is within an output color space of color transformation module 20, such as a CMYK color space.
b. A display unit 24, comprising:
   i. a memory 26, for storing a representation 27 of the color image and a representation 28 of the color palette;
   ii. a transformation unit 30 such as a VIP-2, commercially available from Scitex Corporation, Herzlia, Israel, for transforming representations 27 and 28 of the color image and the color palette respectively from CMYK representations to representations 29 and 31 respectively, in a display coordinate system such as RGB; and
   iii. an image display unit 32; and
c. A color selection unit 34 such as a color palette data generator, operative in an intuitive color space such as an LHS color space. According to one preferred embodiment of the present invention, the color palette data generator contains RGB representations 36 and 38 of a hue strip and a luminance-saturation plane, respectively. According to one embodiment of the present invention, color selection unit 34 is implemented in software.

It is appreciated that "CMYK value" is intended to refer to the color values output by the scanning system 12 which may be defined within any suitable coordinate system such as, but not limited to, CMYK. Similarly, "LHS value" in the present specification is intended to refer to a value defined within the coordinate system of the color selection unit 34 which may be any suitable intuitive coordinate system such as, but not limited to, LHS. "RGB value" is intended to refer to a value defined within the color space of the color separation unit 18 such as, but not limited to, RGB.

The present invention is accessed, in the Scitex SoftProof System, by initially displaying the color image represented by digital representation 14 on display device 32 which may be a CRT. In order to do this, transformation unit 30 transforms the CMYK representation 14 into a representation within the RGB color space of the display device. An example of a commercially available device for performing this type of transformation is the VIP2 processor, commercially available from Scitex Corporation.

Color palette unit 34 may comprise a state of the art color palette such as the color palette shown and described in coassigned United States Patent Application No. 482,435. A computer listing of a preferred embodiment of color selection unit 34 is appended to United States Patent Application No. 482,435, the entire text of which, including appendices, is appended hereto and is referenced Appendix C. The color palette unit described in Appendix C is operative in conjunction with the Softproof workstation, commercially available from Scitex Corporation, Herzlia, Israel.

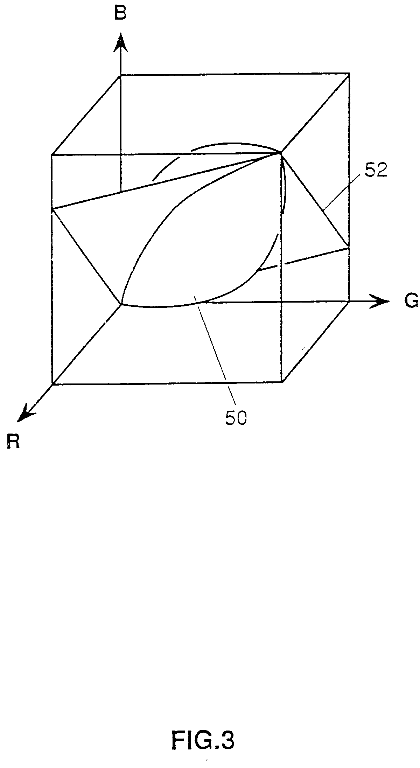

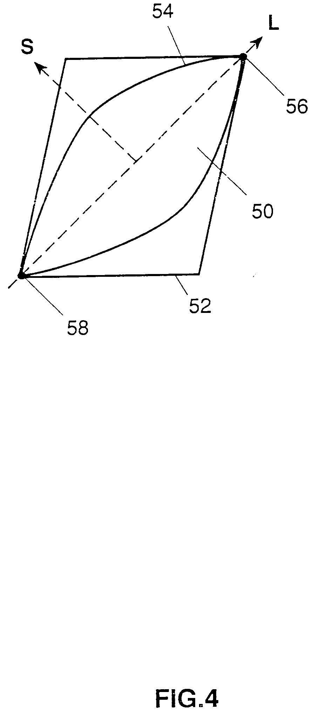

The color selection unit described in Appendix C also has an optional feature whereby colors which cannot be or have not yet been produced with the user's printing device are displayed in such a way as to be differentiated from "safe" colors which have been produced with the user's printing device in the past. This optional feature is explained in more detail below with reference to Figs. 3 and 4.

The above-referenced United States Patent Application describes a color palette including means for displaying a first color display space in which colors of a range of different hues are displayed at substantially uniform levels of luminance and saturation and a second color display space in which colors of a range of different luminances and saturations are displayed for a selected hue from among the range of different hues displayed in the first color display space. The color palette apparatus enables a user to interactively select first the hue, and then the luminance and saturation, of a color he wishes to produce.

Alternatively, any other suitable color palette may be employed, such as the Photoshop palette referred to below, or such as a color palette providing the following color displays:
a. a hue-saturation color wheel in which the hue varies along the azimuth from red, through yellow, green, cyan and blue to magenta; and in which the saturation varies along the radius. Maximally saturated colors appear at the circumference of the color wheel whereas unsaturated colors appear close to the center of the color wheel.
b. a luminance bar in which the luminance is highest at one end of the bar and descends to a minimum at the other end of the bar.

A preferred color transformation method using the apparatus of Fig. 1 is as follows:
1. Select a location to be edited within an image to be edited as displayed on the display CRT 32.
2. Employ display memory 26 to identify position coordinates of the location to be edited.
3. Read printable values of the location to be edited from display memory 26. The printable values may comprise CMYK values, CMY values, or values within any other suitable coordinate system.
4. Employ the color transformation module 20 of the scanner 12 in order to find the RGB value which corresponds to the CMYK value identified in step 3. This may be done by any suitable method, such as by reviewing all 256³ entries in color transformation module 20, assuming 8 bit depth representation of each color component.
5. Compute a surface within the RGB space which includes the RGB value identified in step 4. For example, the surface may comprise all locations within the RGB space having a particular hue but differing between themselves in luminance and in saturation. Generally, this surface is approximately equivalent to the RGB plane which includes the RGB value of step 4 as well as the main diagonal (R=G=B) of the RGB space.
6. Transform the RGB surface identified in step 5 into the CMYK coordinate system, using color transformation module 20 of the scanner 12. Load the CMYK representation of the RGB surface onto display memory 26. The location of each CMYK value within display memory 26 is a function (f⁻¹) of its position within the RGB surface, as explained in detail in Israel Application No. 89359.
7. Construct a CMYK representation of a hue bar in display memory 26. The hue bar may comprise an elongate display of values having the luminance and saturation of the RGB value of step 4, but varying in hue along the axis of the bar. An approximate equivalent of a hue bar in the RGB coordinate system is the circumference of a circle perpendicular to and centered at a point (R, G, B) along the main diagonal R=G=B. Another equivalent of a hue bar in the RGB coordinate system is described in Appendix C, which is the text of United States Application No. 07/482,435.

The CMYK representation of the hue bar may be constructed as follows:

Identify a plurality of locations within the RGB space which have the luminance and saturation of the RGB value of step 4 and which vary in hue.

Transform the RGB values of the identified plurality of locations into the CMYK coordinate system, using color transformation module 20 of the scanner 12. Load the CMYK representation of the identified plurality of locations onto display memory 26. The location of each CMYK value within display memory 26 is a function of its position within the RGB surface, as explained in detail in Appendix C.
8. Employ transformation unit 30 in order to transform the constant-hue surface of step 6, also termed herein the LS plane, and the hue bar of step 7, both of which are stored in display memory 26 in CMYK form, into the RGB of CRT 32.
9. Display the constant-hue surface and the hue bar to the user on CRT 32, thereby enabling the user to change the color of the location to be edited.

If the user elects to change the hue of the location to be edited, repeat steps 1-8 in order to display the LS surface of the hue selected by the user. The user utilizes the display of the LS surface in order to select a desired saturation and luminance.
10. Determine the CMYK value corresponding to the location on the color palette selected by the user by accessing display memory 26.
11. Replace the existing CMYK value of the edited location within digital representation 14, with the new CMYK value computed in step 10.

The relationship between intuitive color spaces, such as the LHS space, and a typical RGB space is known and is described in publications such as Chapter 3 of Color Science, G. Wyszecki and W.S. Stiles, Wiley and Sons, 1982, the disclosure of which is incorporated herein by reference. A transformation between the LHS space and the RGB space of a particular scanner may also be defined or scaled using the function construction method shown and described in coassigned Israel Patent Application No. 96955, in conjunction with ANSI IT8.7 target and calibration methods for constructing the transformation between the scanner RGB and the CIELab space. The relevant text of Israel Patent Application No. 96955 is set forth herein in Appendix A.

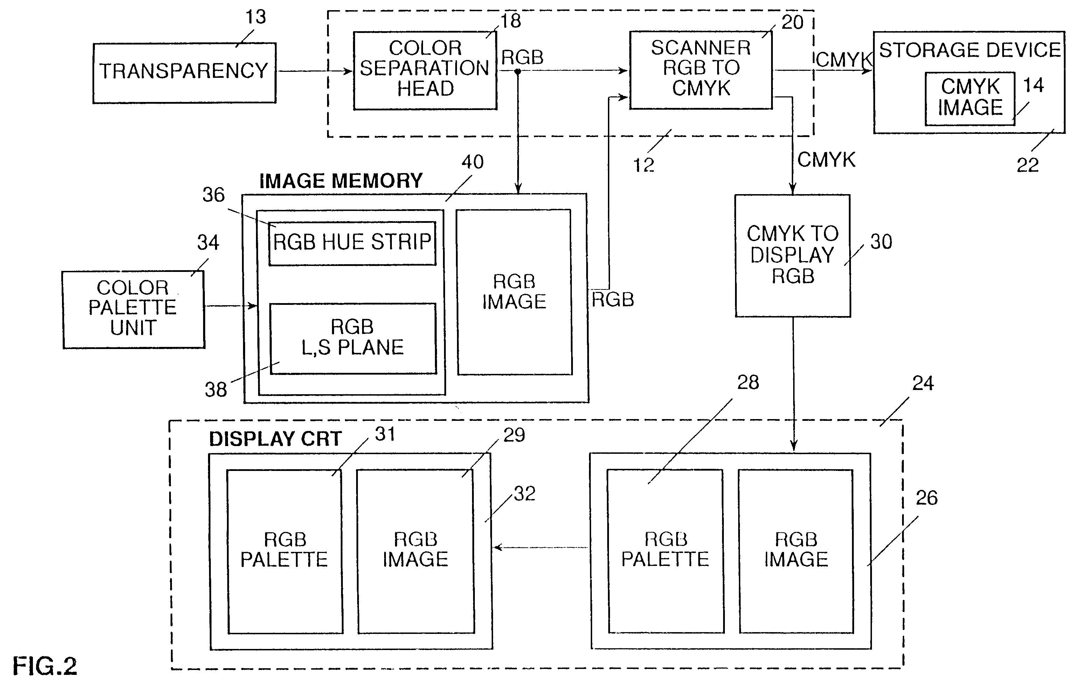

Reference is now made to Fig. 2. The embodiment of Fig. 2 is similar to the embodiment of Fig. 1 except that an RGB color image memory 40 is provided for storing the RGB representation of the color image read by scanning head 18, in addition to having the RGB values read by scanning head 18 transformed "on the fly" by color transformation module 20. Storing the RGB representation of the color image allows step 4 of the previously described method of Fig. 1 to be eliminated. Instead of determining the RGB value as in step 4, the RGB value is read directly from image memory 40.

Also, in the embodiment of Fig. 2, color modifications are carried out directly on the contents of color transformation module 20, rather than on the contents of display memory 26 or on digital image 14. RGB contents of image memory 40 may then be passed through the modified color transformation of module 20, thereby to obtain a suitably transformed color image as well as a transformed color palette for use in modifying the transformed color image.

The CMYK to display RGB transformation may be performed by any suitable means such as by a VIP-2, commercially available from Scitex Corporation, prior to loading of the image onto display memory 26.

A preferred color transformation method using the apparatus of Fig. 2 is as follows:
1. Select a location to be edited within an image to be edited as displayed on the display CRT 32.
2. Employ display memory 26 to identify position coordinates of the location to be edited.
3. Read the RGB values of the location to be edited from RGB image memory 40, addressed by the position coordinates found in step 2.
4. Generate an RGB representation of a color palette including the RGB value of step 3. Store the RGB color palette in memory 40.
5. Display the RGB color palette on display CRT 32 by transferring the RGB representation of the color palette from memory 40 to display memory 26, via RGB to CMYK transformation module 20 and CMYK to display RGB transformation module 30.
6. The user observes display CRT 32 and selects a new hue for the location being edited. Using steps 1-5, display a luminance-saturation plane corresponding to the selected hue on display CRT 32. The user observes display CRT 32 and selects a new luminance and saturation for the location being edited.
7. Determine the CMYK value corresponding to the location on the color palette selected by the user by using the RGB value from memory 40 corresponding to that location from memory 26 in order to access the CMYK representation of that color provided by color transformation module 20.
8. Effect the color modification indicated by the user, by replacing the CMYK content of module 20, corresponding to the RGB values found in step 3, with the CMYK values found in step 7.
9. Update the display by transferring the contents of image memory 40 to display memory 26 via edited module 20 and module 30 for display by display CRT 32.

According to another preferred embodiment of the present invention, steps 1-7 are repeated for a plurality of locations to be edited and then steps 8 and 9 are performed only once for all of the plurality of locations.

It is appreciated that the color editing system 10 of Fig. 1 need not be physically attached to the scanning system 12, if the functionality of the color transformation of the scanner is implemented in the color editing station. For example, a software LUT, corresponding to color transformation module 20, may be provided in the color editing system 10. An RGB or CMYK image may be transferred from the scanner to the color editing station on any suitable substrate such as a magnetic tape. Also, in the embodiment of Fig. 2, color editing system 10 may be provided with a color transformation unit of its own which is functionally equivalent to color transformation unit 20 of the scanner. In this embodiment, color editing system 10 is also provided with a storage unit of its own, for storing image 14.

As discussed above, the color selection unit described in Appendix C also has an optional feature whereby colors and ink combinations which cannot be or have not yet been defined with the user's printing device are displayed in such a way as to be differentiated from "safe" colors and ink combinations which have been defined with the user's printing device. This optional feature is now explained in more detail with reference to Figs. 3 and 4.

When calibrating a scanner, an input target may be used such as the Q60A, commercially available from Kodak Corporation. The scanner operator employs the controls of the color transformation module to assign CMYK values to the various color patches of the Q60A input target. The input target samples generally the entirety of the color space which can be reproduced by the particular substrate employed. When defining a calibration transformation, the operator uses the Q60A or other input target to ensure that substantially all input colors are transformed, by the color transformation module, to CMYK values which are preferred by the operator for use in conjunction with the particular printing device.

When a scanner scans an input target, the resulting plurality of RGB values generally will not span the entire set of RGB values which the scanner is capable of producing. The subset of RGB values spanned by the plurality of feasible RGB values in the input target generally defines a volume of generally ellipsoidal configuration within the RGB color space of the scanner. Different input targets for different substrates may define ellipsoid-like figures of somewhat different shapes.

In the calibration process, each RGB value within the ellipsoid-like figure defined by the input target is assigned a CMYK value which is suitable for the particular printing device and printing substrate employed. The calibration process does not include any treatment by the operator of RGB values outside the ellipsoid-like figure. Instead, these values are normally derived from values inside the ellipsoid-like figure by a mathematical extrapolation process. Therefore, when an operator seeks to select colors for subsequent printing, colors which correspond to a location inside the ellipsoid-like figure are "safe", because they have been calibrated. Colors which correspond to a location outside the ellipsoid-like figure are "risky" because they have not been calibrated. According to a preferred embodiment of the present invention, color selection apparatus is provided which is operative to allow an operator to differentiate safe colors from risky colors, thereby enabling him to avoid selection of risky colors.

Reference is now made to Fig. 3 which is a conceptual illustration of an ellipsoid-like figure 50 corresponding to an input target, drawn within an RGB coordinate system. Also shown is a plane 52 which is an approximation of an LS plane. Plane 52 intersects the ellipsoid-like figure, thereby to define a plane of intersection within the ellipsoid-like figure. Reference is also made to Fig. 4 which is a cross-sectional illustration taken along plane 52 of Fig. 3. In Fig. 4, a white point is indicated by reference number 56 and a dark point is indicated by reference number 58.

A first preferred method for identifying the ellipsoid-like figure of safe RGB values is as follows:
a. Provide a transparency of the desired vendor/type upon which at least enough saturated colors are deposited so as to ensure variation from dark colors to white colors, at various hues. The surface of the ellipsoid-like figure is the locus of the most saturated colors available from this transparency. This transparency may be created as described in Israel Patent Application No. 96955, the disclosure of which is incorporated herein by reference.
b. Scan the transparency on the scanner. Each patch on the transparency corresponds to an RGB point in the RGB space of the scanner that is included in the ellipsoid-like figure which bounds "safe" RGB values. The volume occupied by the RGB points defined by the patches of the transparency, therefore, approximates the ellipsoid-like figure.

A second preferred method for identifying the surface of the ellipsoid-like figure of safe RGB values employs an output device for exposing transparencies, such as an LVDT plotter, commercially available from Light Valve Technology, Inc., Rochester, USA. A digital file is defined which, when output by the transparency exposing device, produces fully saturated colors of substantially all hues and luminances.

The steps of the method are preferably as follows:
a. Select a plurality of angles about the R=G=B axis. More than 6 angles are normally required for good results. 12-24 angles are normally sufficient to obtain good results. Preferably the angles are generally uniformly distributed within a range of 0 degrees to 360 degrees. Each angle defines a plane in RGB space which approximately contains two hues.
b. Construct a digital file which includes, for each plane, the RGB coordinates of each of a plurality of points located along the edge of the plane of step a. The "edge of the plane" is defined as the locus of points within the plane for which at least one component from among R, G and B is either minimal (zero) or maximal (255, in the case of an 8 bit scanner). In other words, the edge of the plane is defined, in the case of an 8 bit scanner, as the union of the intersections of the plane with the following planes: R = 0; G = 0; B = 0; R = 255; G = 255; B = 255.

At least 8 points, and preferably 12 - 24 points should preferably be employed. The points employed should include at least 4 corner points and 4 edge center points.
c. Select an output device which is able to produce generally all available colors from the transparency which it is desired to employ. For example, if the transparency employed is Ektachrome, a suitable output device is LVDT, available from Light Valve Technology Inc., Rochester, NY, USA.
d. Employ the output device to output the digital file of step b. The result is a transparency having a plurality of patches, the number of patches being equal to the number of angles, multiplied by the number of points per angle.
e. Scan the transparency of step d, preferably employing the scanner which is to be used later for production. A suitable scanner is the Smart Scanner, commercially available from Scitex Corporation, Herzlia, Israel. The result of the scanning step will be a plurality of RGB values, one for each patch. Each of these RGB values is located on the surface of the ellipsoid-like figure. To ensure that the plurality of RGB values obtained in this step accurately represents the surface of the ellipsoid-like figure, a relatively large number of angles and a relatively large number of points per angle, should be selected.

A third preferred method for identifying the ellipsoid-like figure of safe RGB values typically comprises the following steps:
a. Select a plurality of points which are preferably uniformly distributed over the surface of the RGB cube whose vertices are (0,0,0); (0,0,255); (0,255,0); (0,255,255); (255,0,0); (255,0,255); (255,255,0); (255,255,255). For example, the following points may be selected for the face of the cube whose vertices are (0,0,255); (0,255,255); (255,0,255); and (255,255,255):

0,0,255
10,0,255
...
250,0,255
255,0,255
0,10,255
10,10,255
...
250,10,255
255,10,255...
0,250,255
10,250,255
...
250,250,255
255,250,255
0,255,255
10,255,255
...
250,255,255
255,255,255

If desired, a higher density of points may be selected near the white point and the dark point, to increase accuracy of representation of the surface of the ellipsoid-like figure.
b. Select an output device which is able to produce generally all available colors from the transparency which it is desired to employ. For example, if the transparency employed is Ektachrome, a suitable output device is LVDT, available from Light Valve Technology In., Rochester, NY, USA.
c. Employ the output device to output the digital file of step b. The result is a transparency having a plurality of patches.
d. Scan the transparency of step c, preferably employing the scanner which is to be used later for production. A suitable scanner is the Smart Scanner, commercially available from Scitex Corporation, Herzlia, Israel. The result of the scanning step will be a plurality of RGB values, one for each patch. Each of these RGB values is located substantially on the surface of the ellipsoid-like figure. To ensure that the plurality of RGB values obtained in this step accurately represents the surface of the ellipsoid-like figure, a relatively large number of points should be selected.

A fourth preferred method for identifying the ellipsoid-like figure of safe RGB values typically comprises the following steps:
a. Provide a large number of transparencies bearing a wide variety of images. The transparencies will normally include a relatively large number of saturated colors of various luminances and hues.
b. Scan each transparency. Store a set of RGB values comprising the union of RGB values scanned from the transparencies of step a.
c. The resulting RGB points are all interior points of the ellipsoid-like figure. Identify the surface points of the ellipsoid-like figure by generating a smooth three-dimensional surface which circumscribes or minimally encloses the set of RGB values of step b. Preferably, select and save a plurality of RGB points which lie on or close to that surface in order to allow these points to be combined, at a later stage, with points similarly obtained from other transparencies, thereby to more accurately identify the surface of the ellipsoid-like figure.

In other words, the plurality of surface RGD values is preferably employed to compute an analytical function g representing the surface of the RGB ellipsoid-like figure. The function g is then employed to compute and save locations on the color palette which are to be designated as border locations.

The function g may be computed either by computing a convex hull spanning the plurality of "surface" RGB points or by interpolating a smooth surface through the plurality of "surface" RGB points or by finding the best approximation of a surface including the "surface" RGB points, using smoothness constraints and optimality measures.

A preferred method for computing a convex hull g to span the plurality of "surface" RGB values is disclosed in F. P. Preparata and S. J. Hong, "Convex hull of finite set of points in 2 and 3 dimensions", Comm. ACM 20 (2), pp. 87-93, 1977.

One preferred method for interpolating a smooth curve through the "surface" RGB points is disclosed in P. Alfeld, "Scattered data interpolation", which appears on pp. 1-33 of Mathematical methods in computer aided geometric design, Eds. T. Lyche and L. L. Schumaker, Academic Press, Boston, 1989.

Another preferred method for interpolating a smooth curve through the "surface" RGB points is disclosed in M. A. Sabin, "Contouring - the state of the art", which appears on pp. 411-482 of Fundamental algorithms for computer graphics, R. A. Earnshaw, Ed., Springer, Berlin, 1985.

A preferred method for finding the best approximation of a surface including the "surface" RGB points, using smoothness constraints and optimality measures, is disclosed in Topics in Multivariate Approximation, C. K. Chui et al (Eds.), Academic Press, NY, USA, 1986.

The disclosures of all the above publications are incorporated herein by reference.

As explained above, the function g(R,G,B) is now employed as follows to compute locations on the color palette which are to be designated as border locations:
a. An L-S surface, S(R,G,B), which is to be displayed with the color palette, is selected.
b. Define border points as the set of RGB points which solve the equation S(R,G,B) = g(R,G,B).
c. Mark the border points on the color palette.

The methods described above as being utilized in the RGB output space of a color separation scanner may alternatively be utilized directly in an input color space, such as CMYK input space, of a color writing device.

The methods described above are not limited to L-S surfaces but rather are also applicable to a color palette displaying an L-H surface or an H-S surface.

Function f, described herein, is preferably characterized as follows:
As explained above, color editing station 10 comprises a computer which is operative to receive CMYK color data and to provide display 32 with monitor RGB color data, enabling presentation of the image on the monitor. A surface in a first color space such as an RGB space is created using the computer of color editing station 10. The surface may be constructed so as to include all L and S combinations for a particular H. Alternatively, a surface may be constructed to contain the R = G = B diagonal and a predetermined RGB value as describeed herein with reference to Fig. 3.

Each point of the created surface is located geometrically on display 32 by means of a transformation (x,y) = f(RGB), provided by unit 34. Each point is transformed from RGB space to CMYK space using the stored transformation of unit 20. The same unit may be used in various applications.

The output is a color palette representation in geometrical (x,y) coordinates of display 32 and in the CMYK color space of the specific output device employed.

Color palette unit 34 may comprise color palette data which is employed to define the desired surfaces in the RGB plane. Unit 34 may also comprise a software unit for deriving such a surface. Unit 34 also preferably comprises the display relations, also termed herein "the f function", namely the relation of each color point in that surface to a corresponding geometrical position on the display.

It will be appreciated by persons skilled in the art that the present invention is not limited by what has been particularly shown and described hereinabove. Rather the scope of the present invention is defined only by the claims which follow:

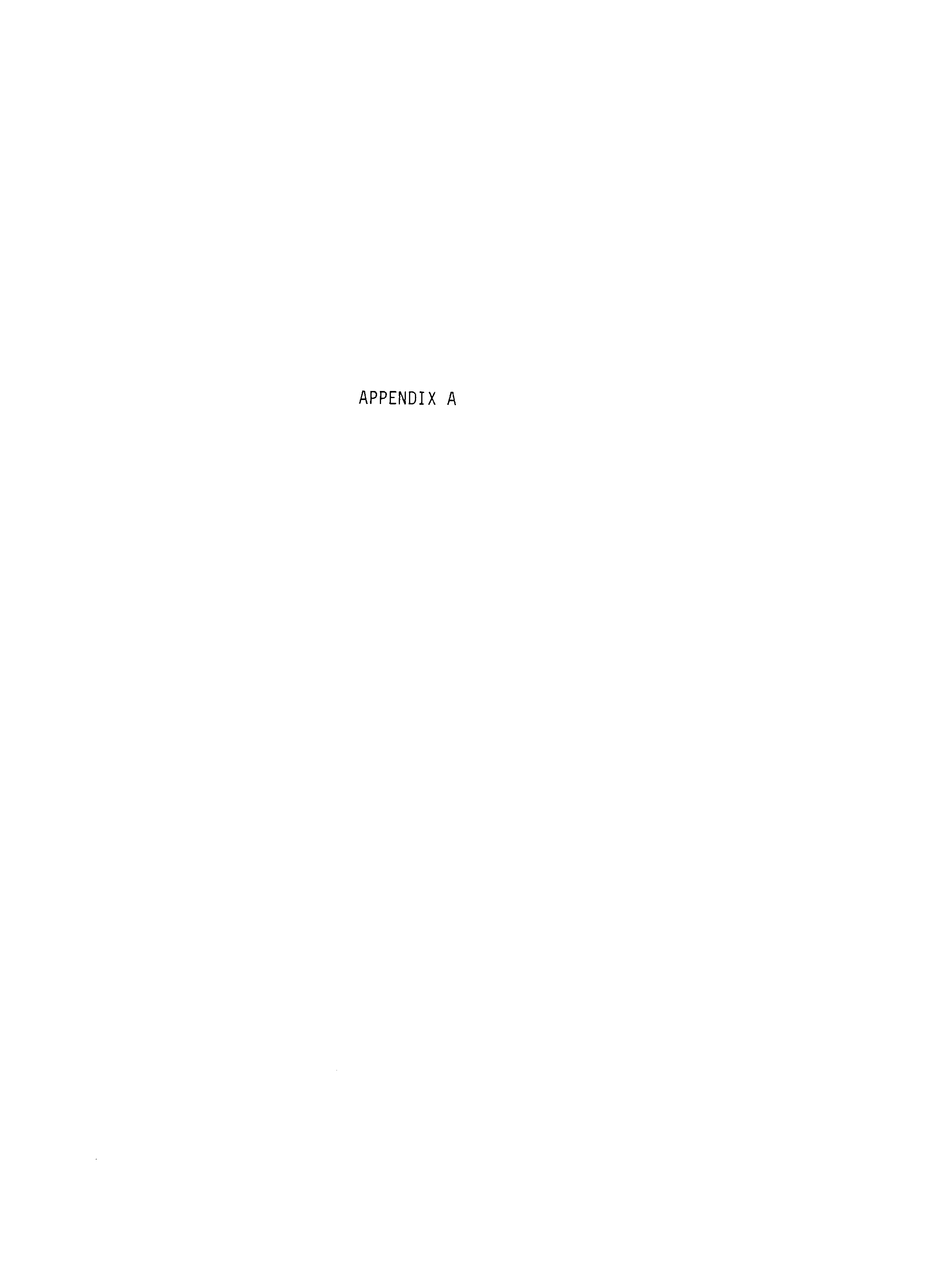

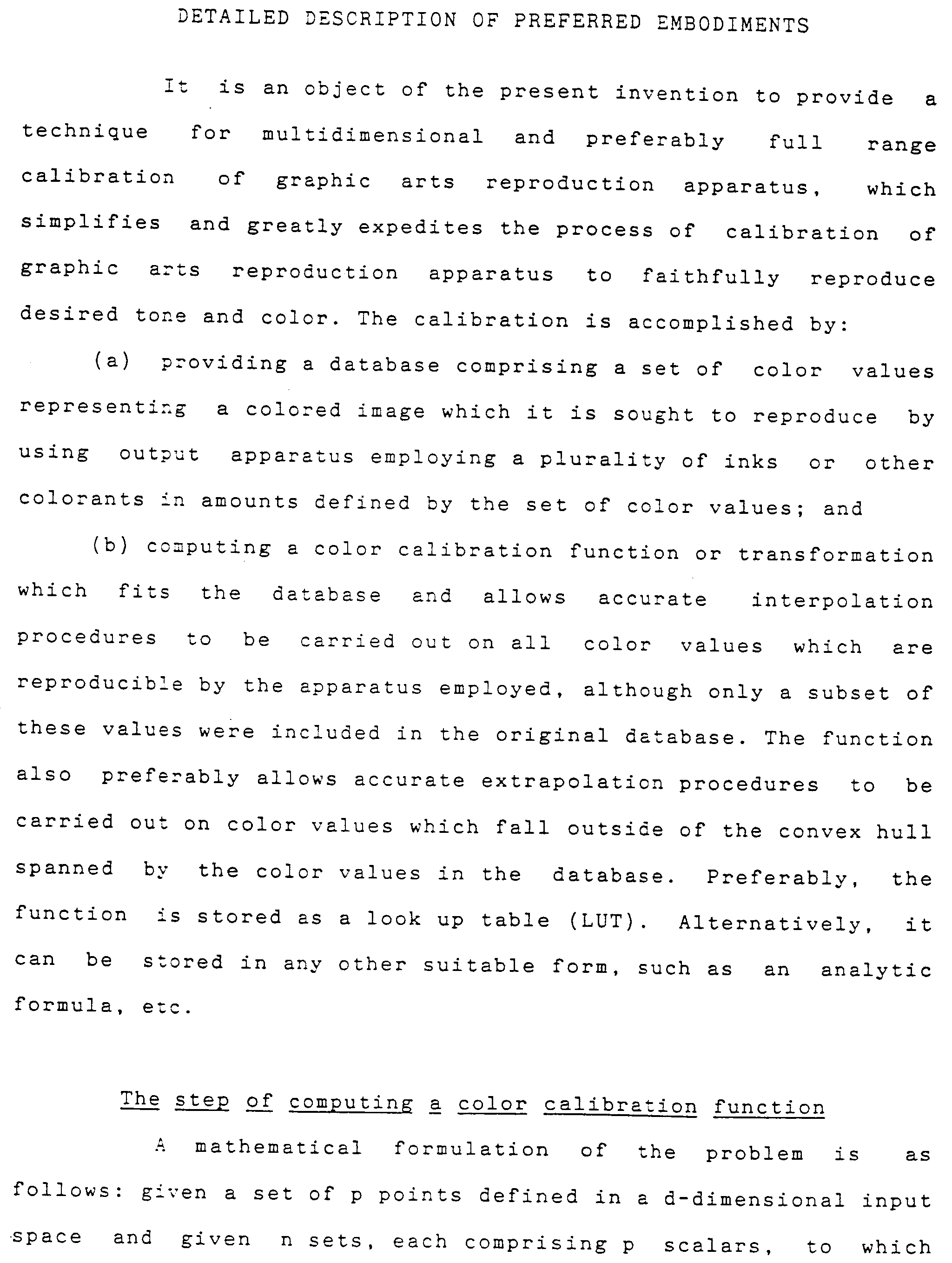

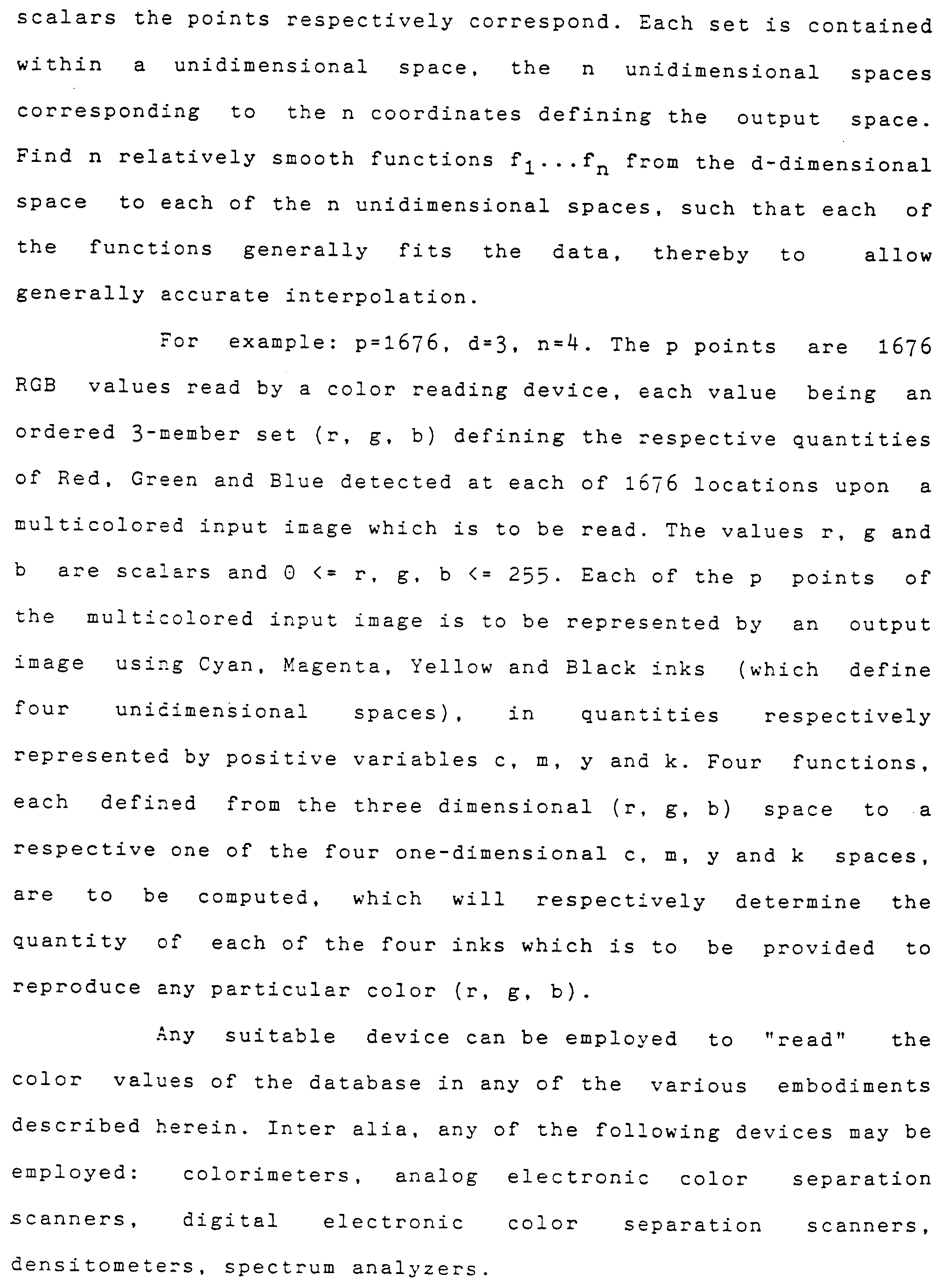

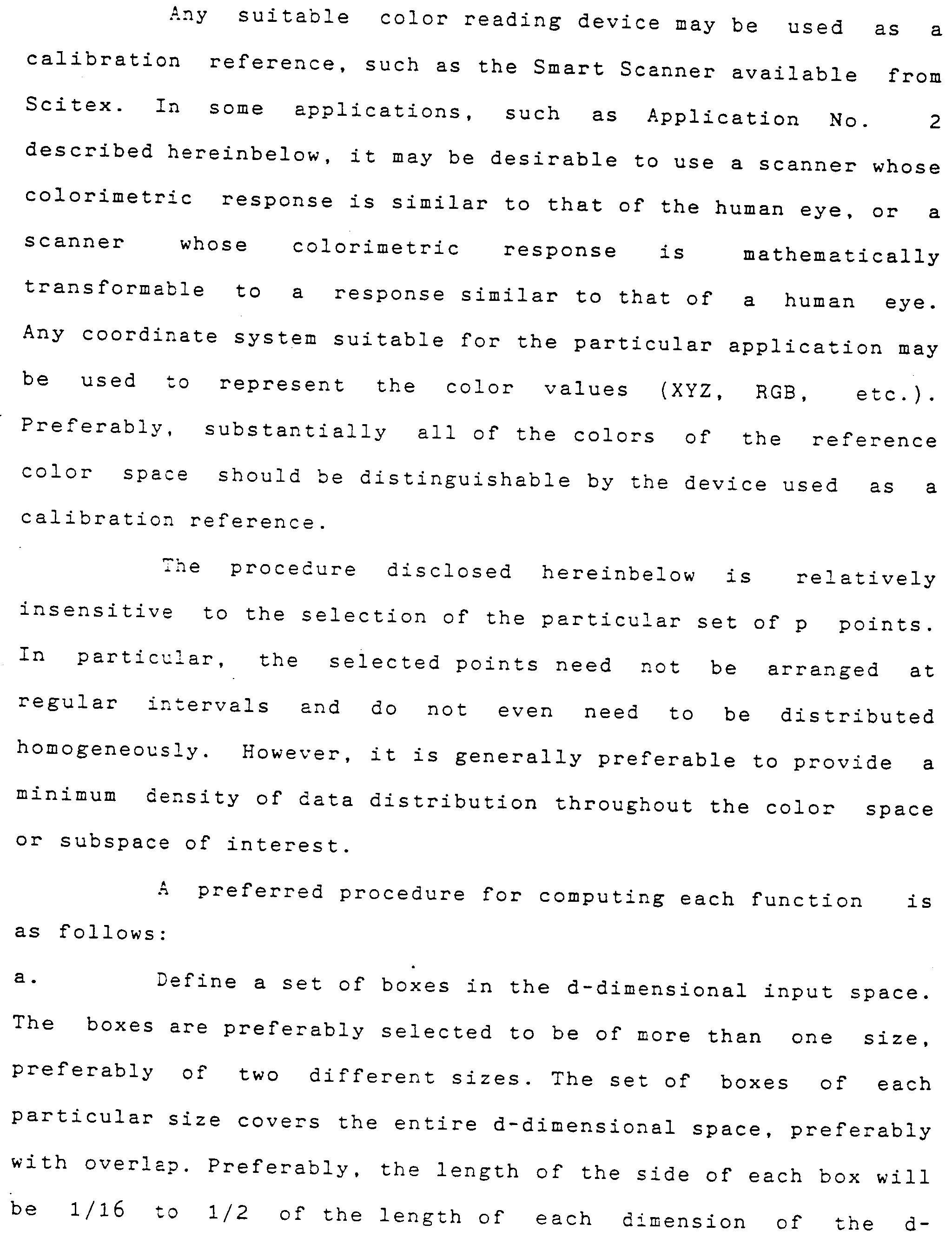

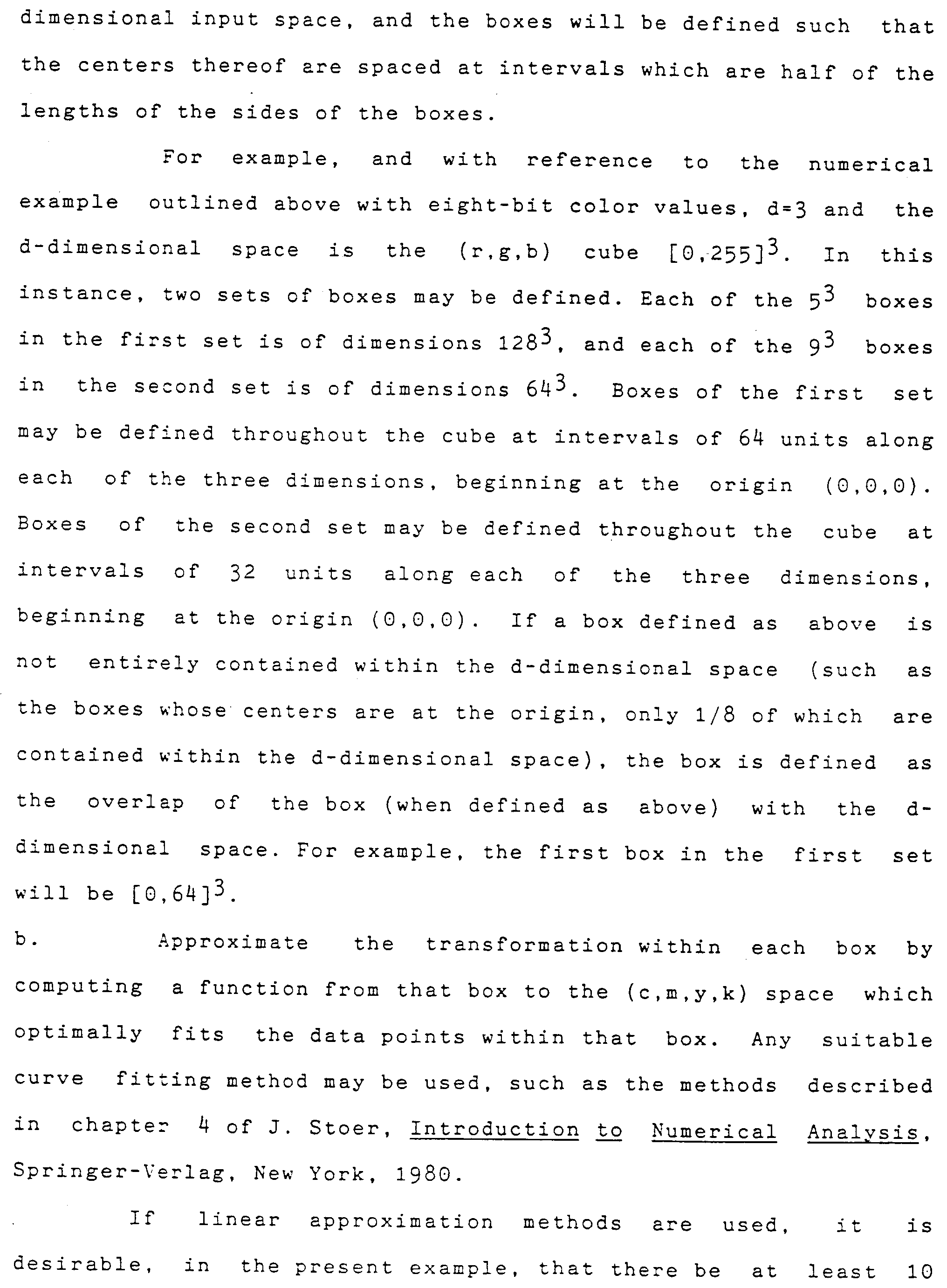

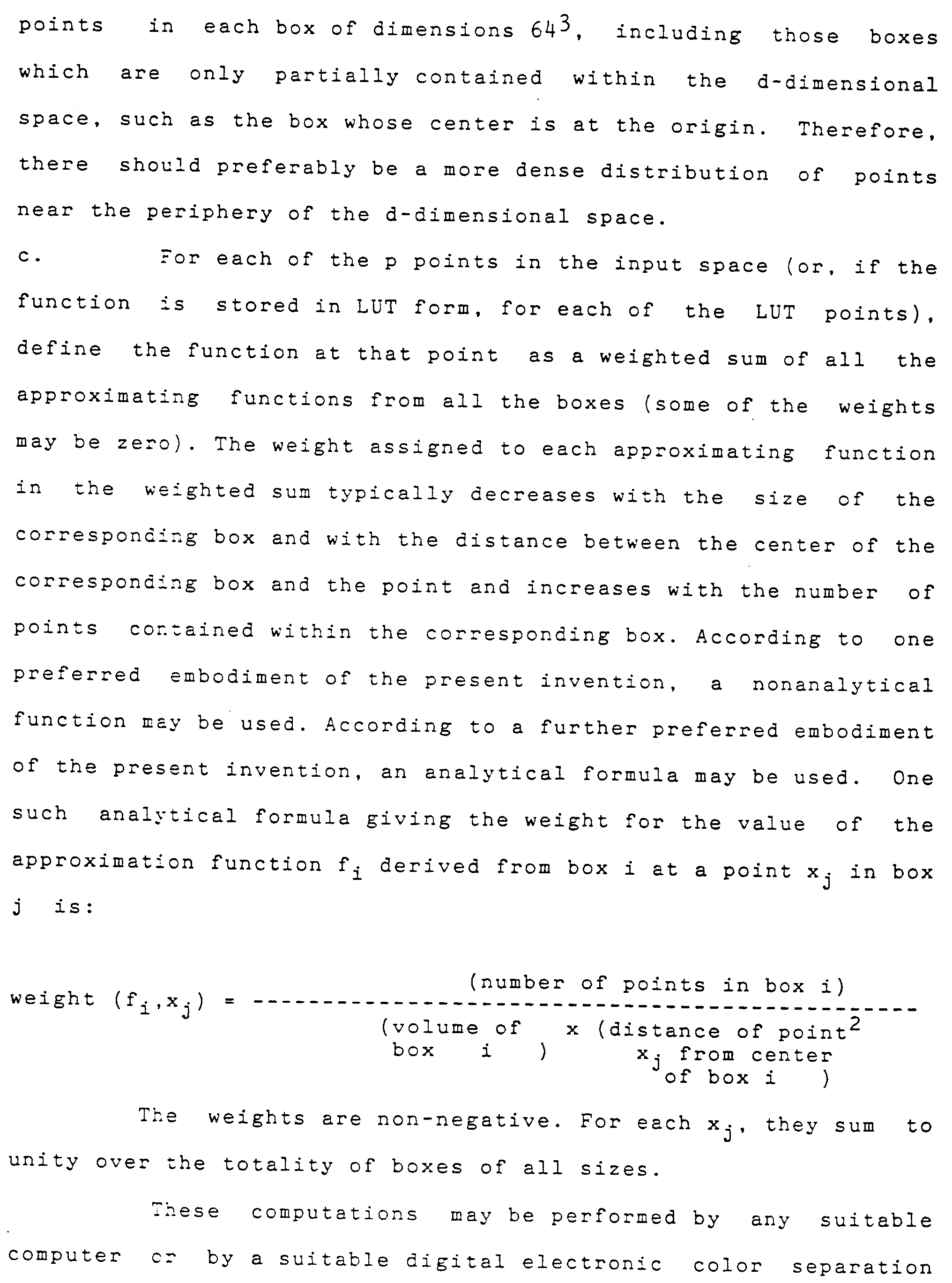

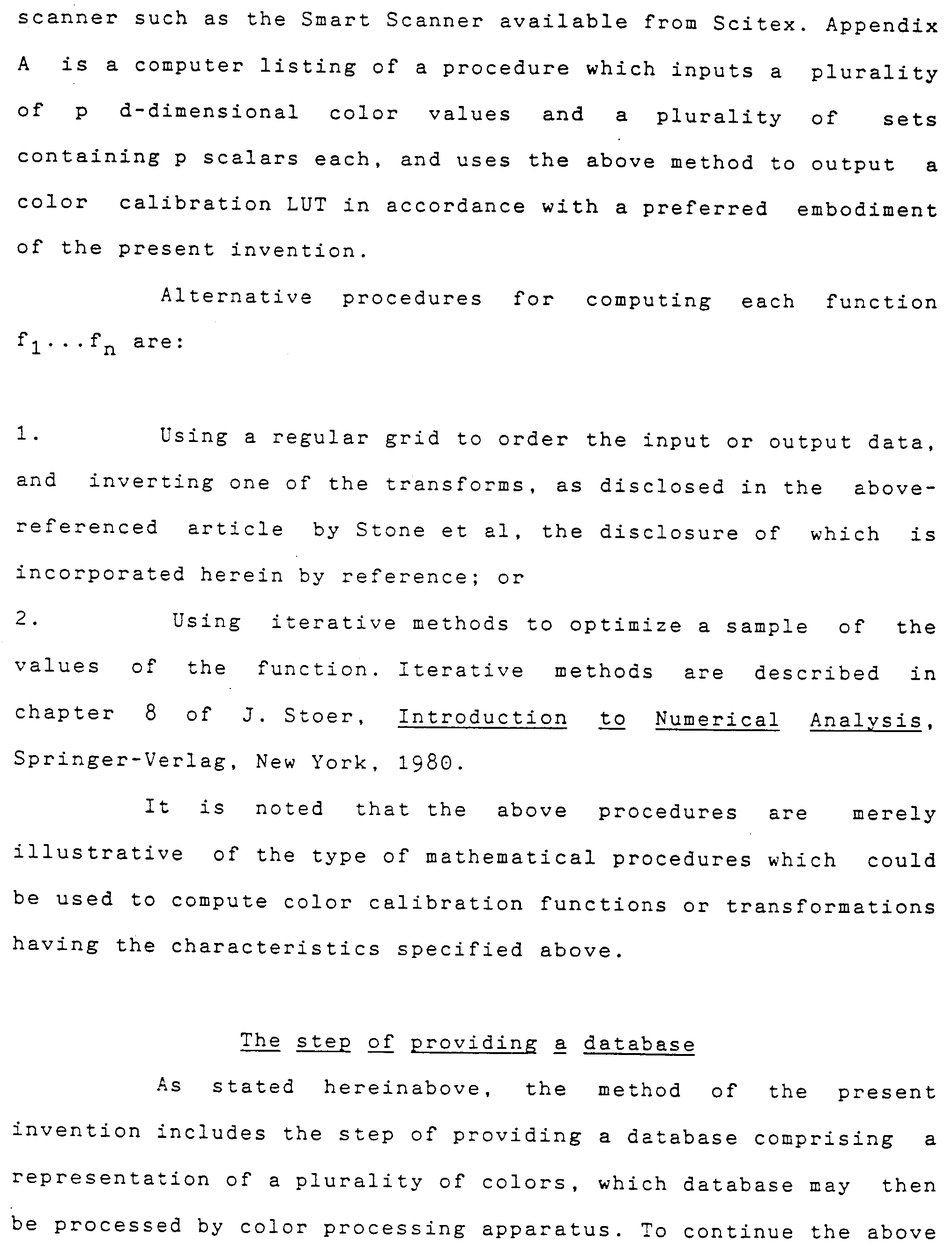

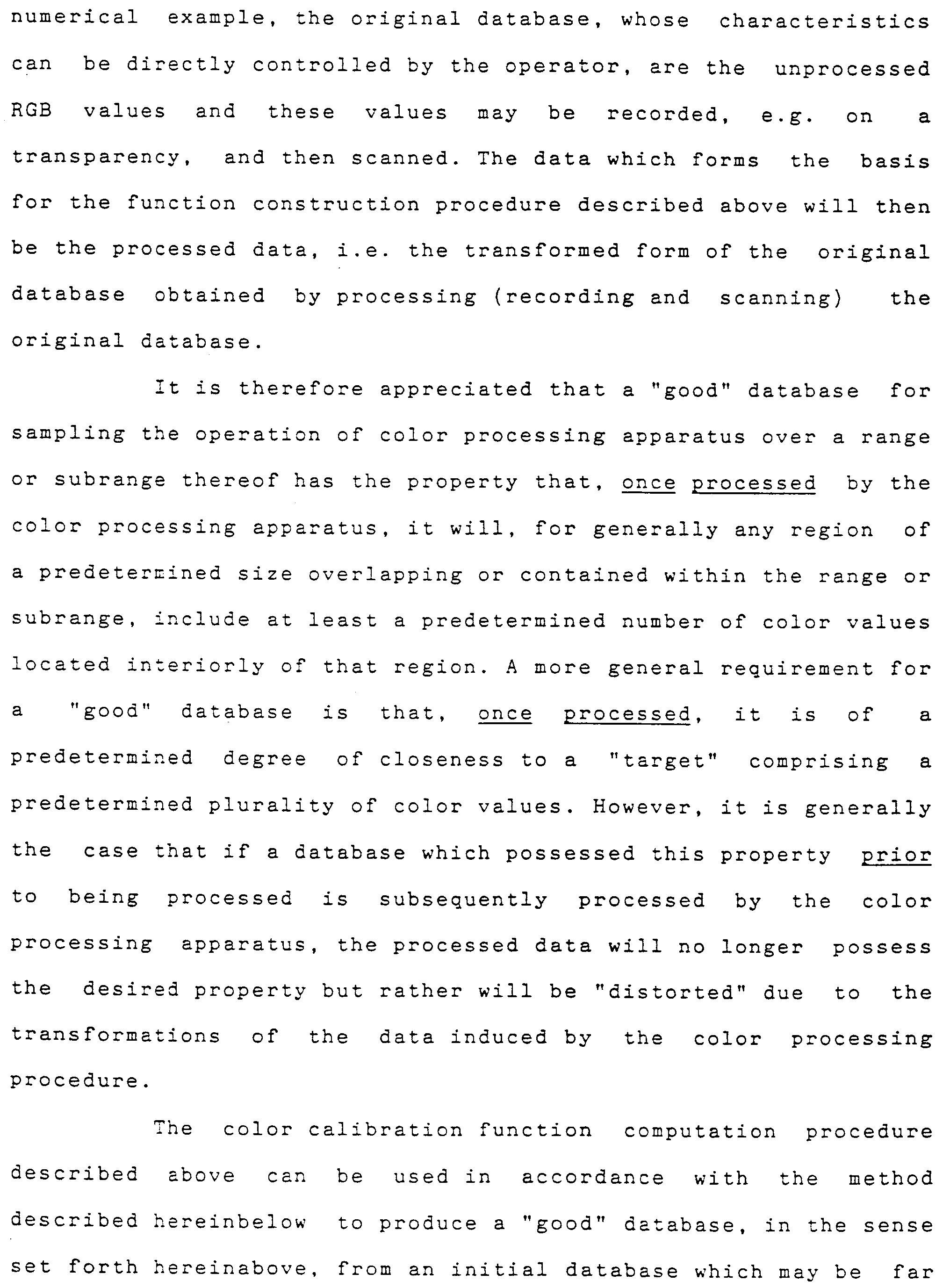

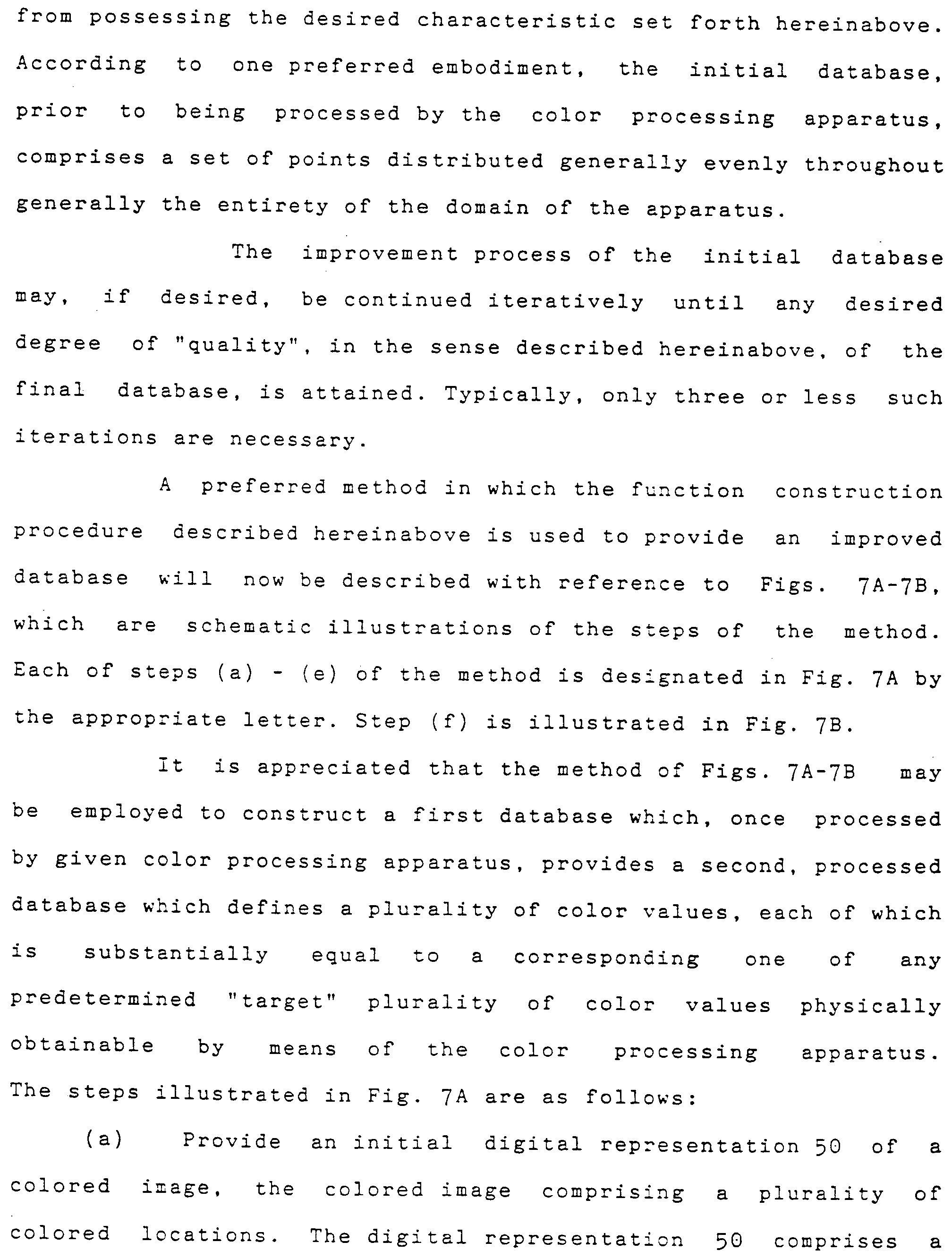

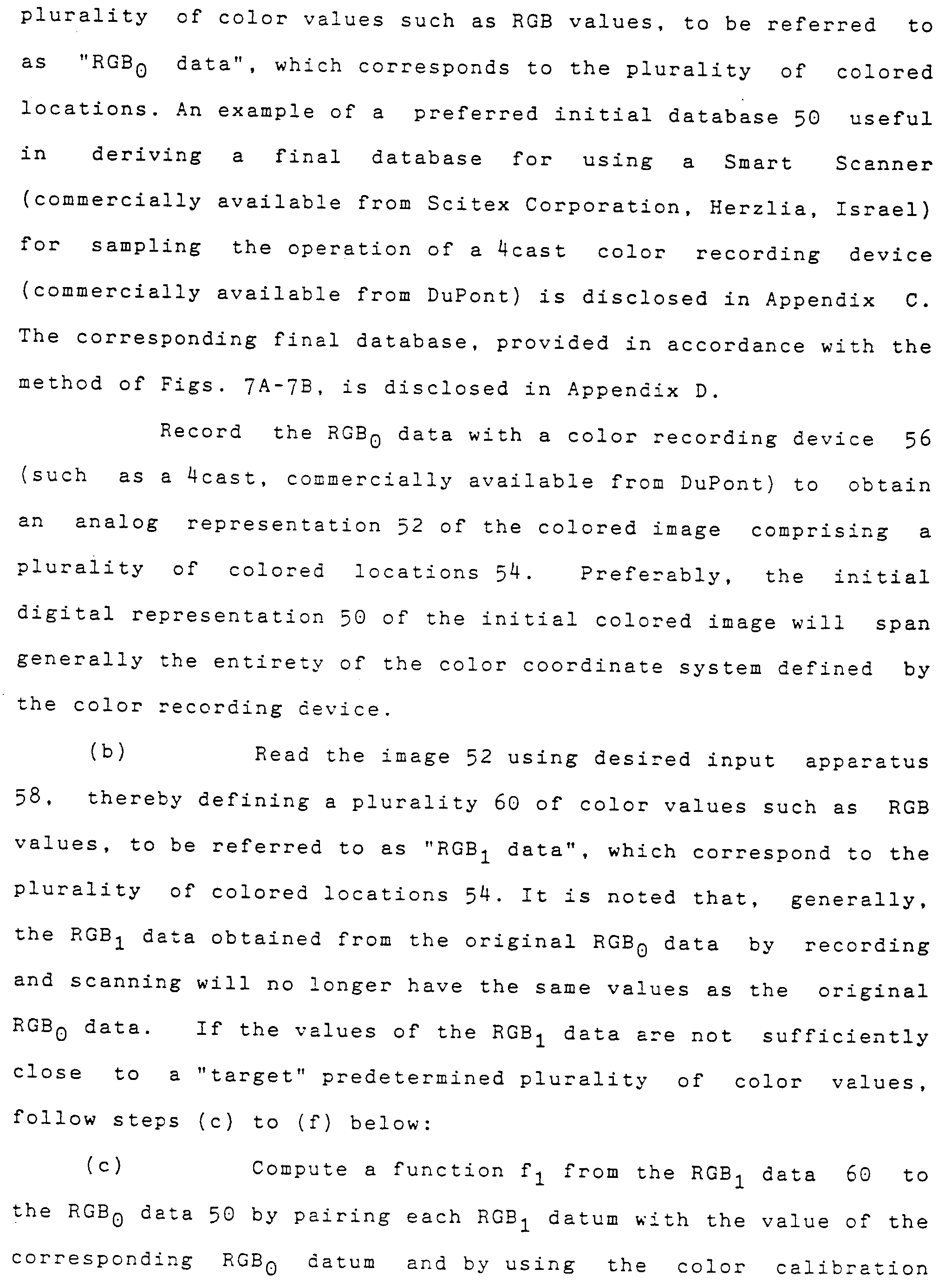

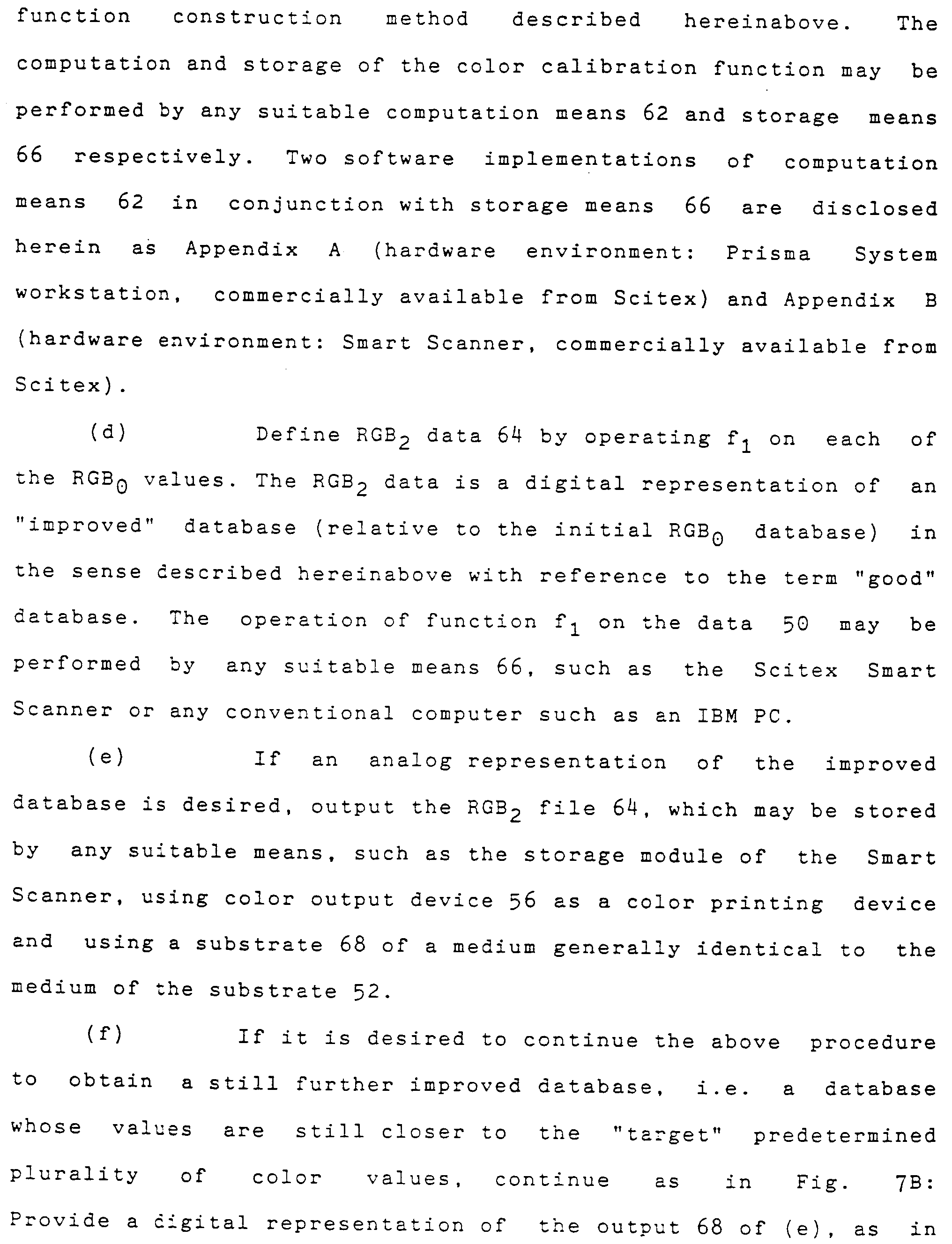

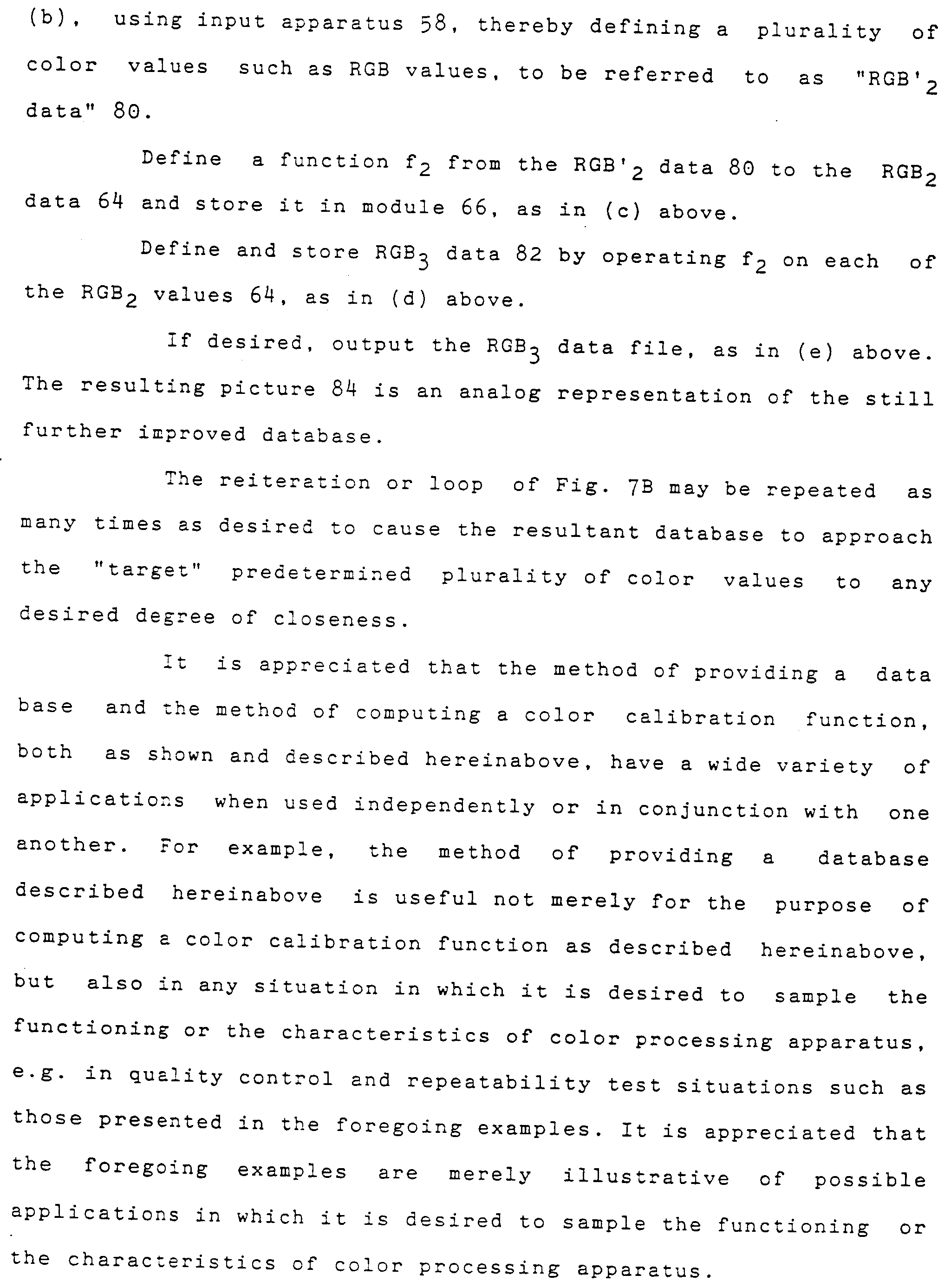

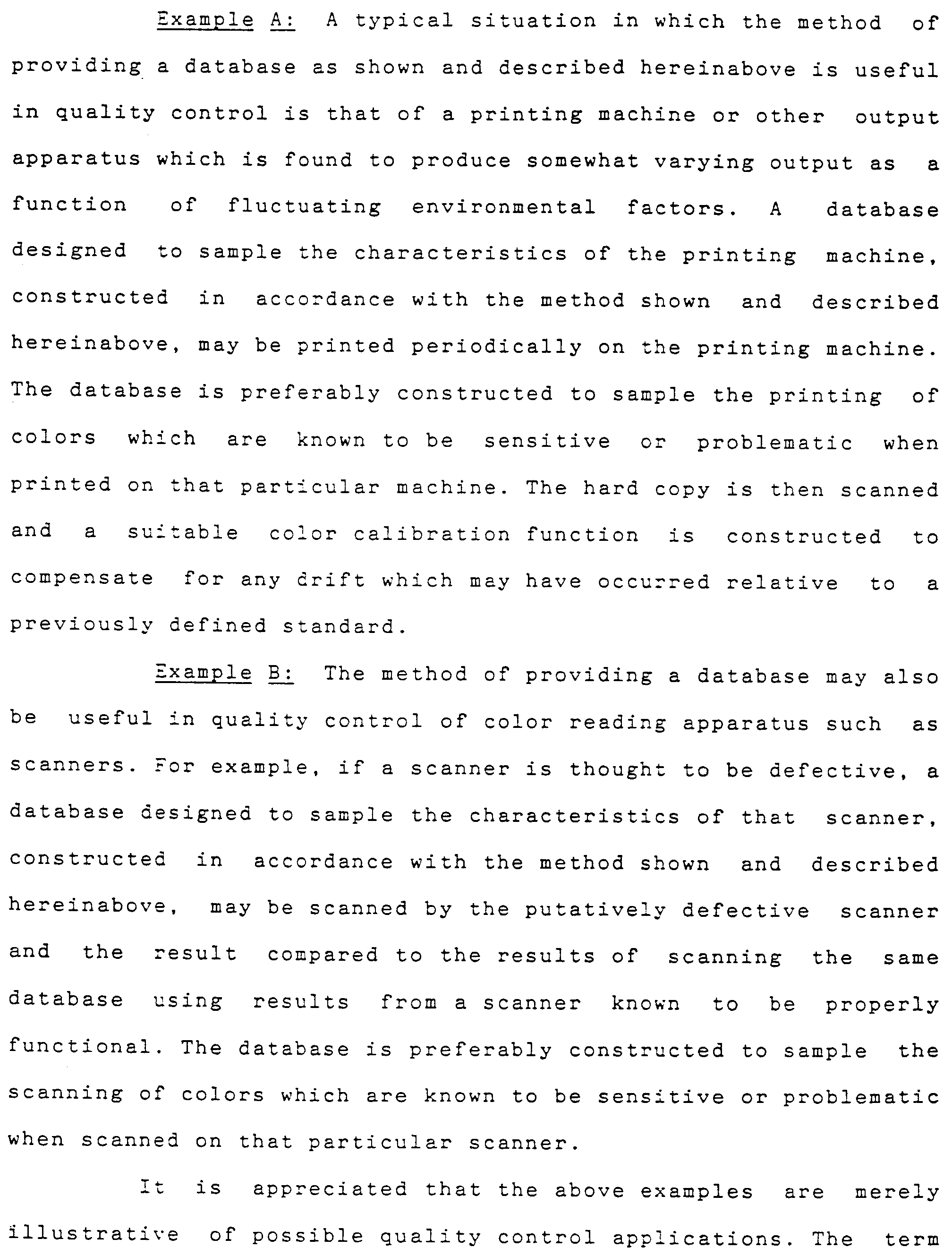

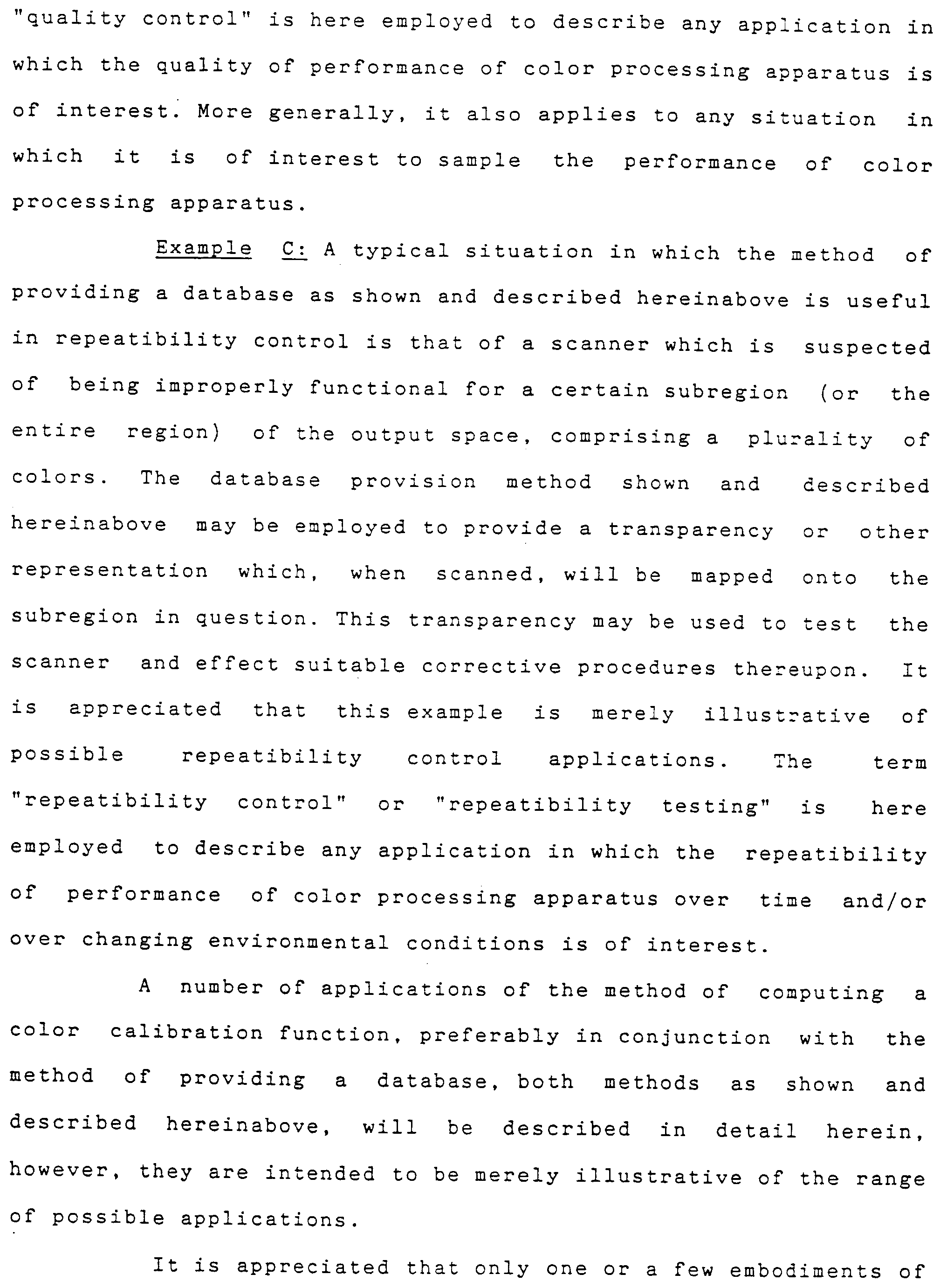

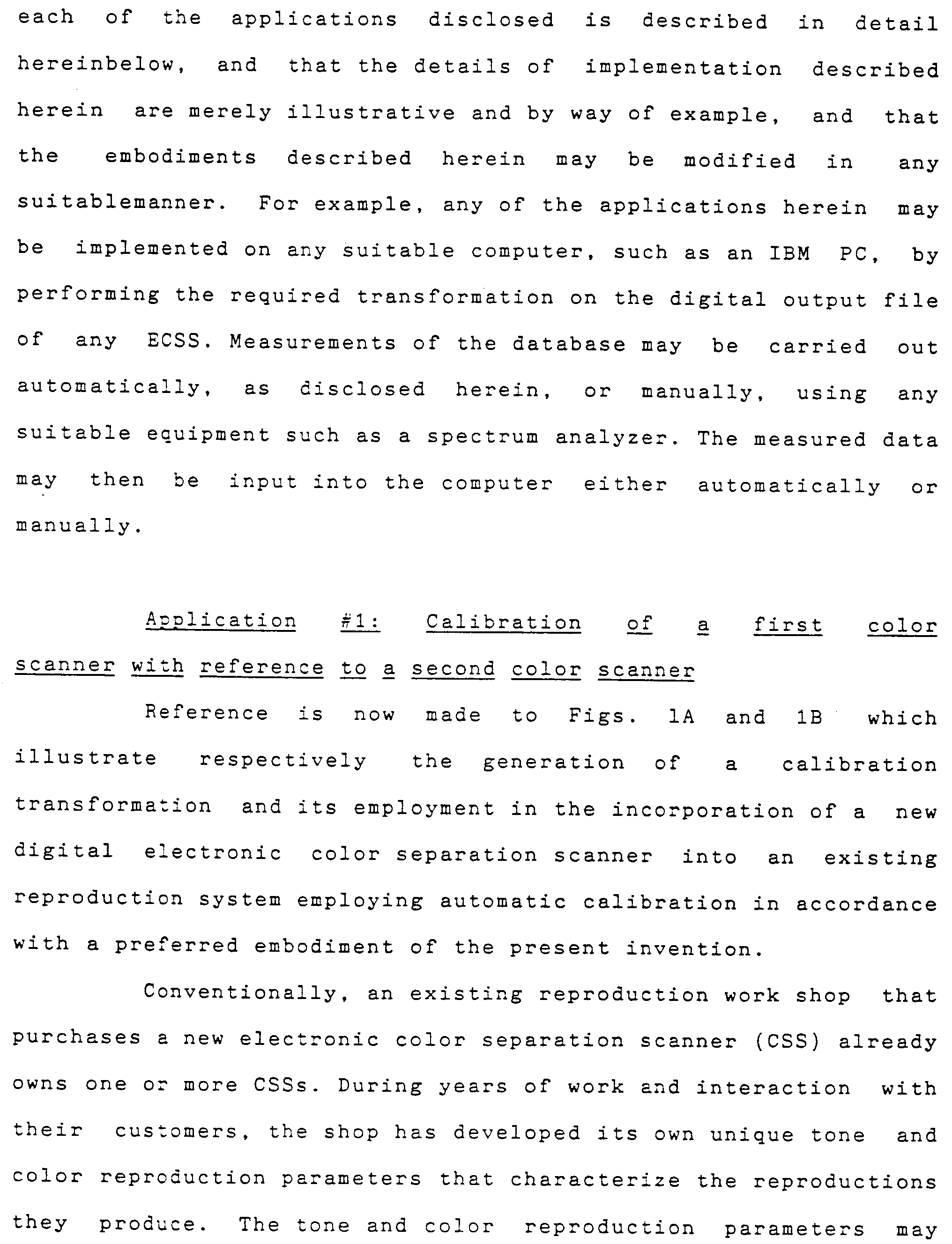

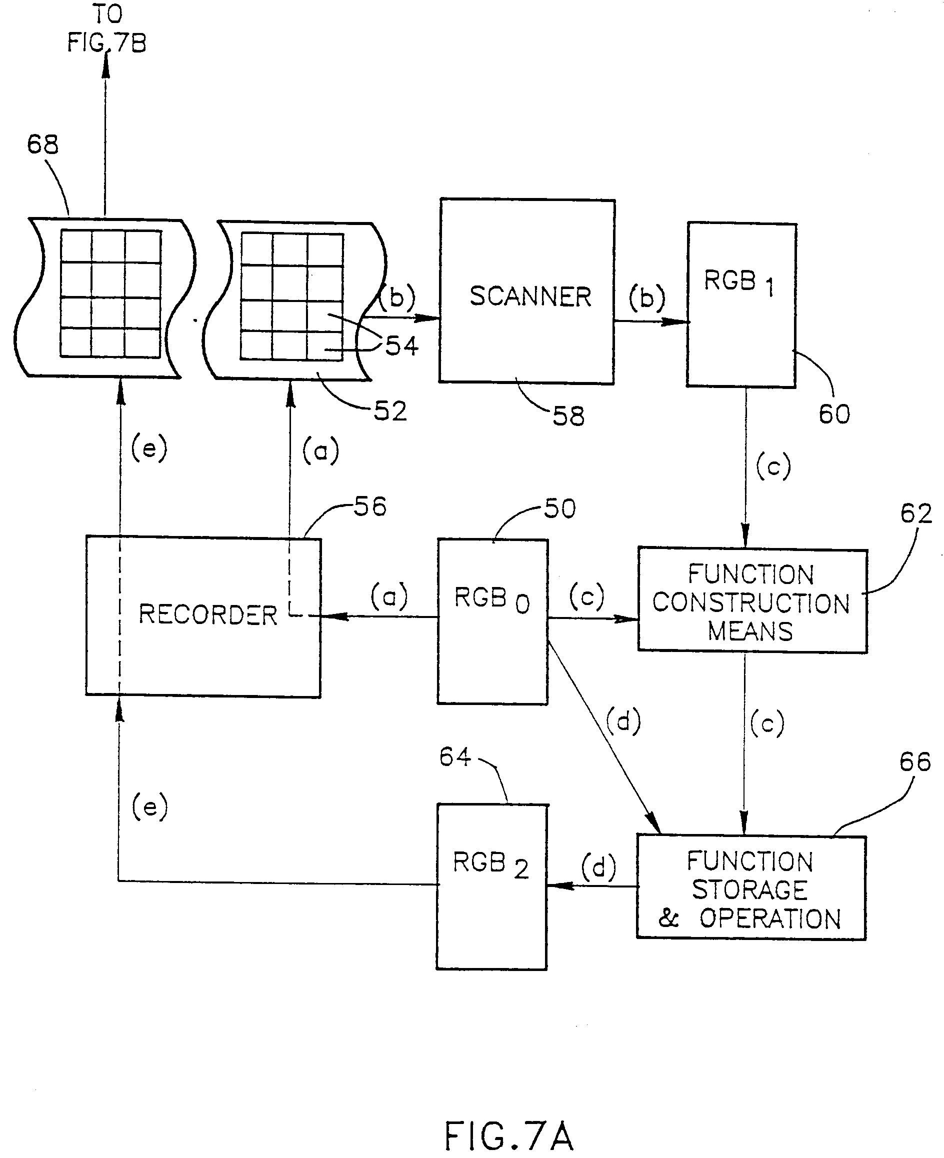

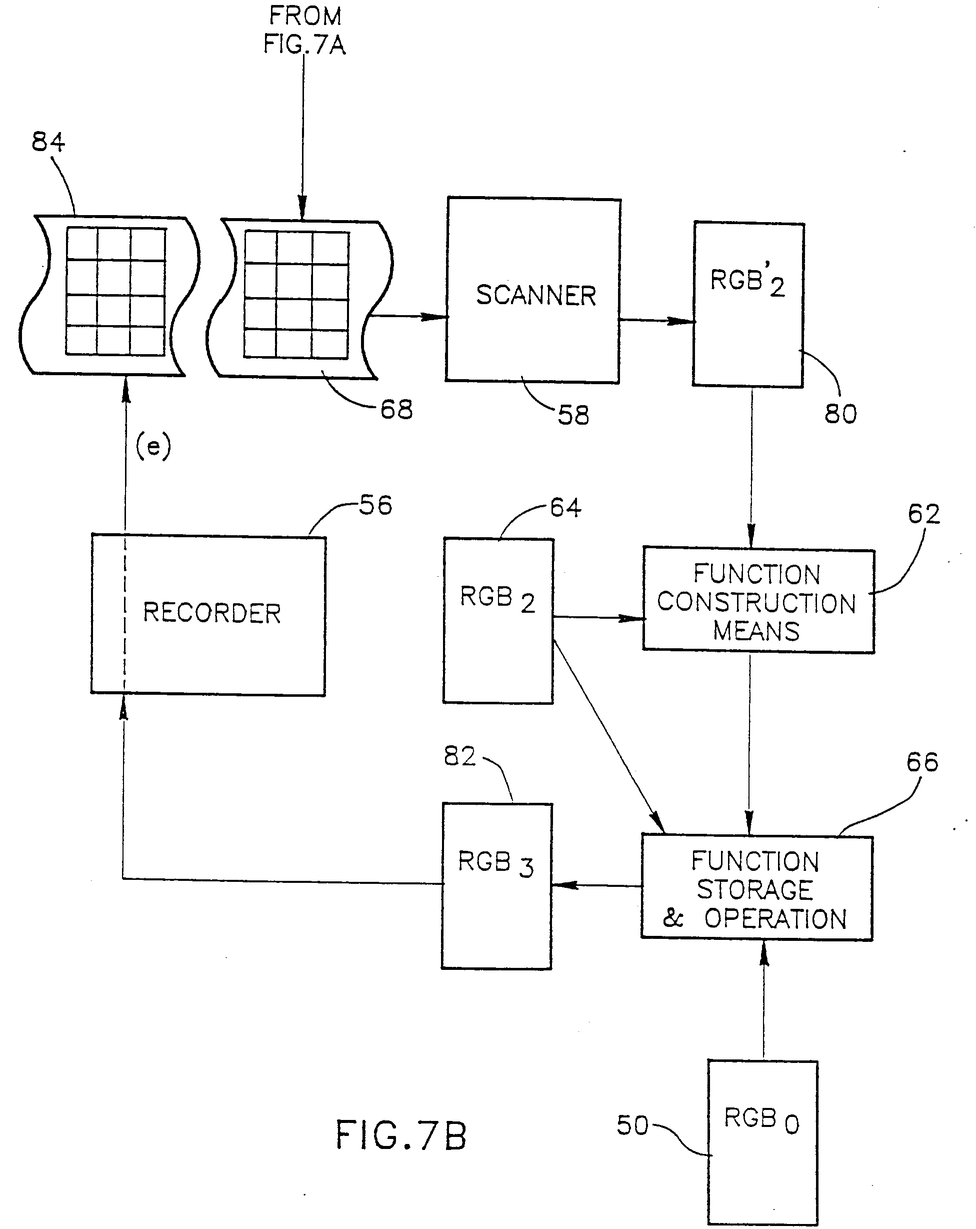

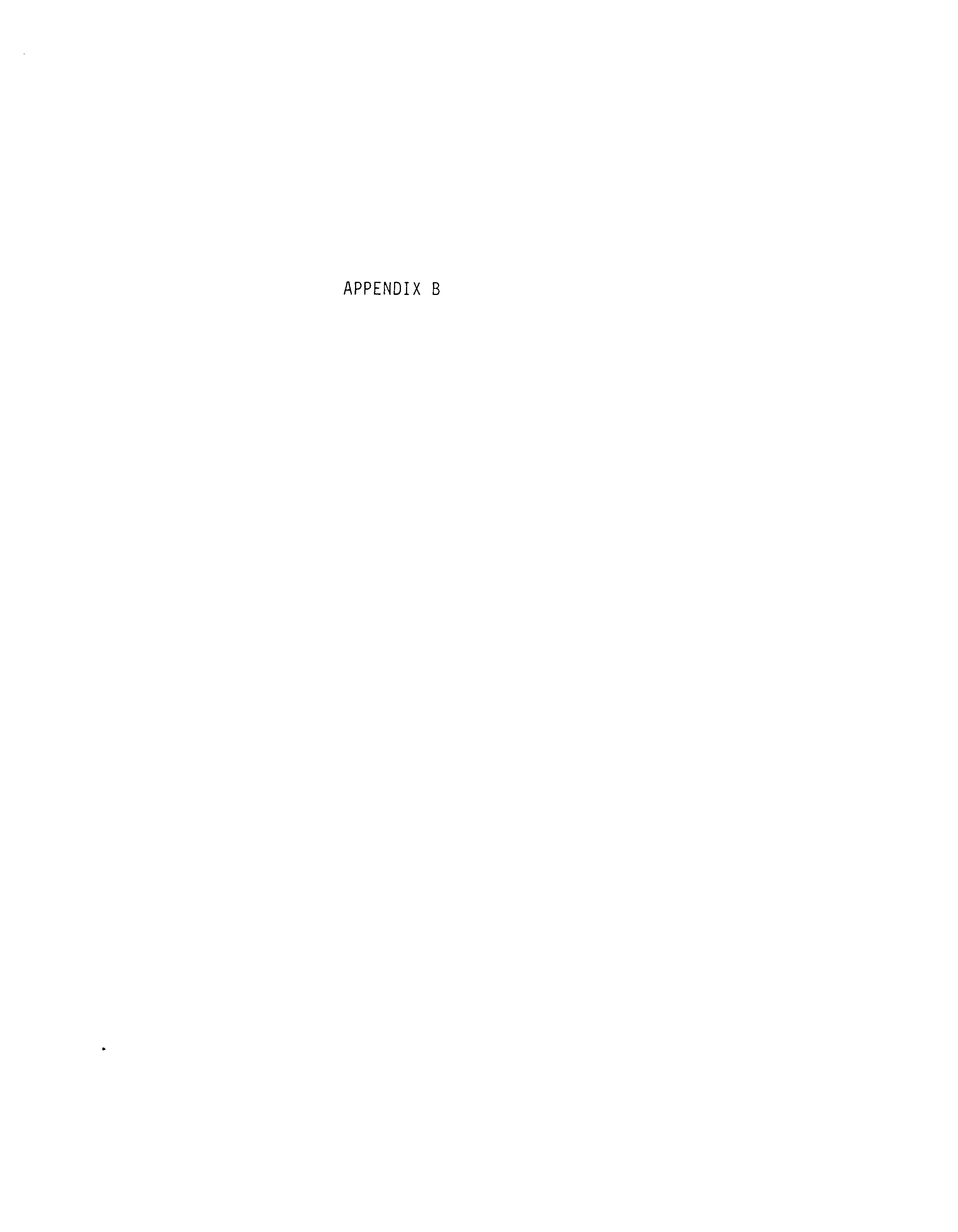

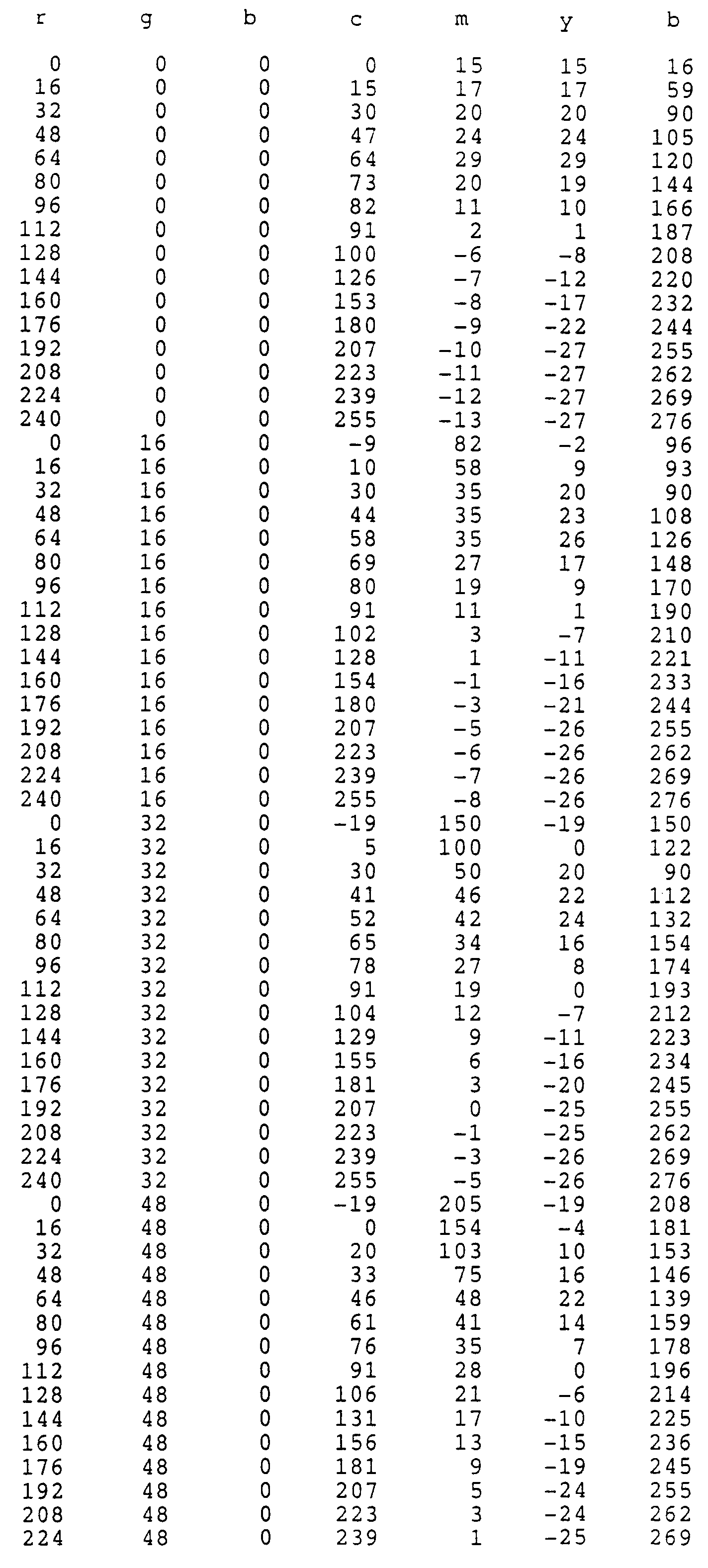

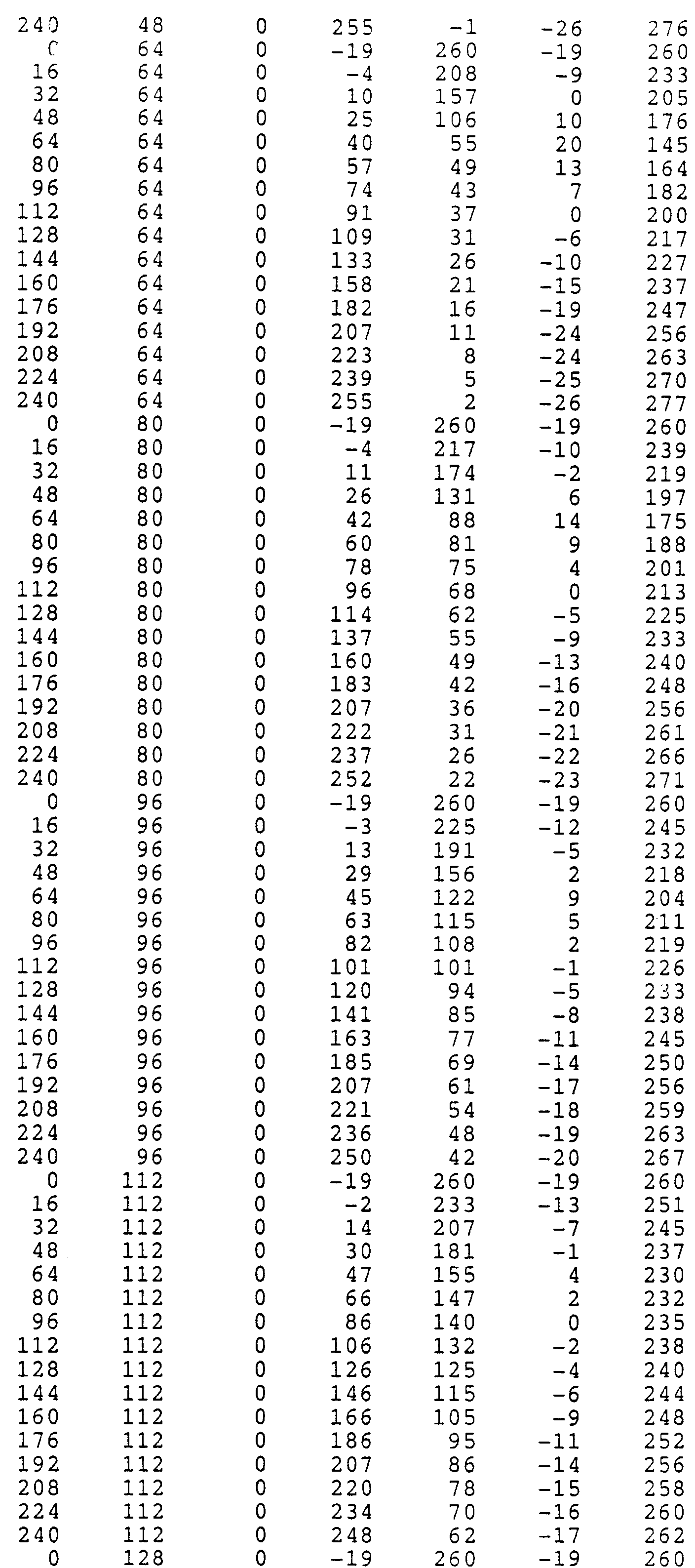

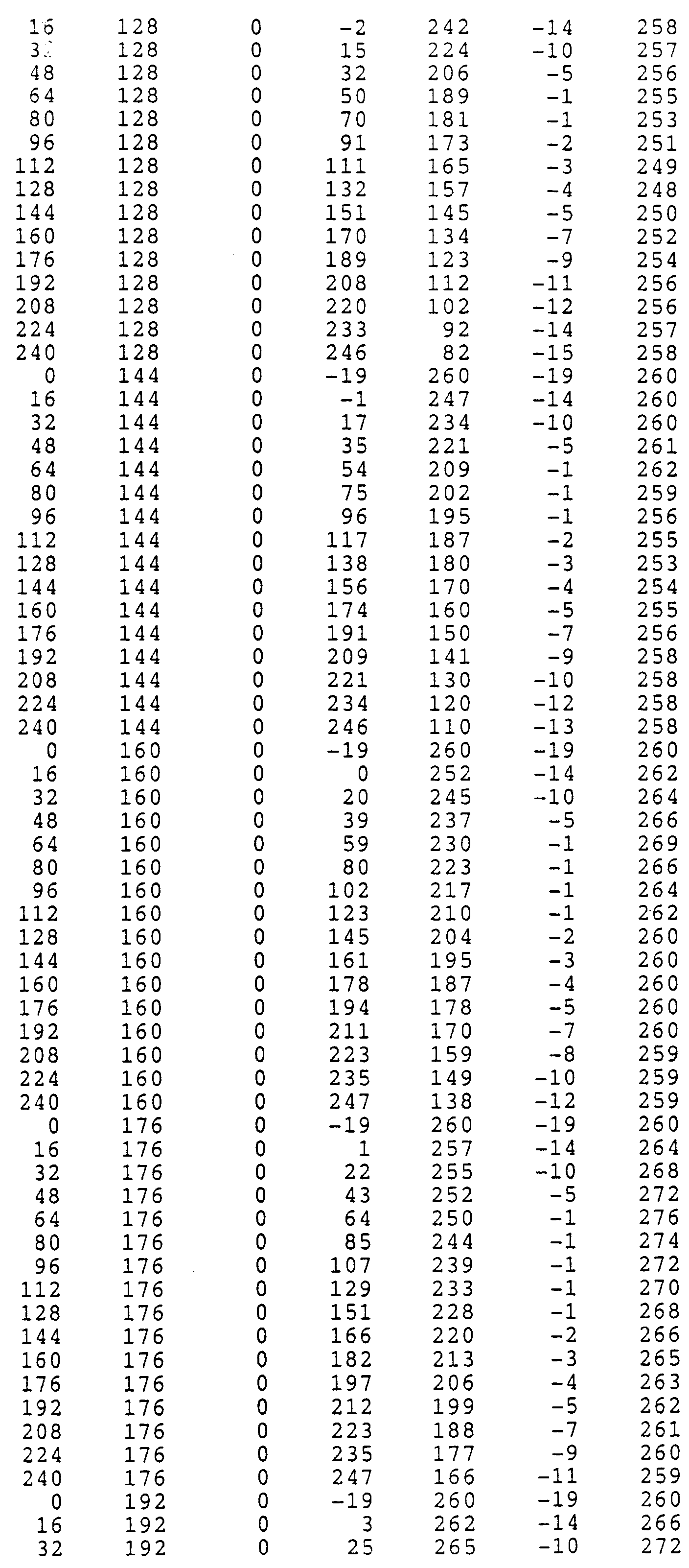

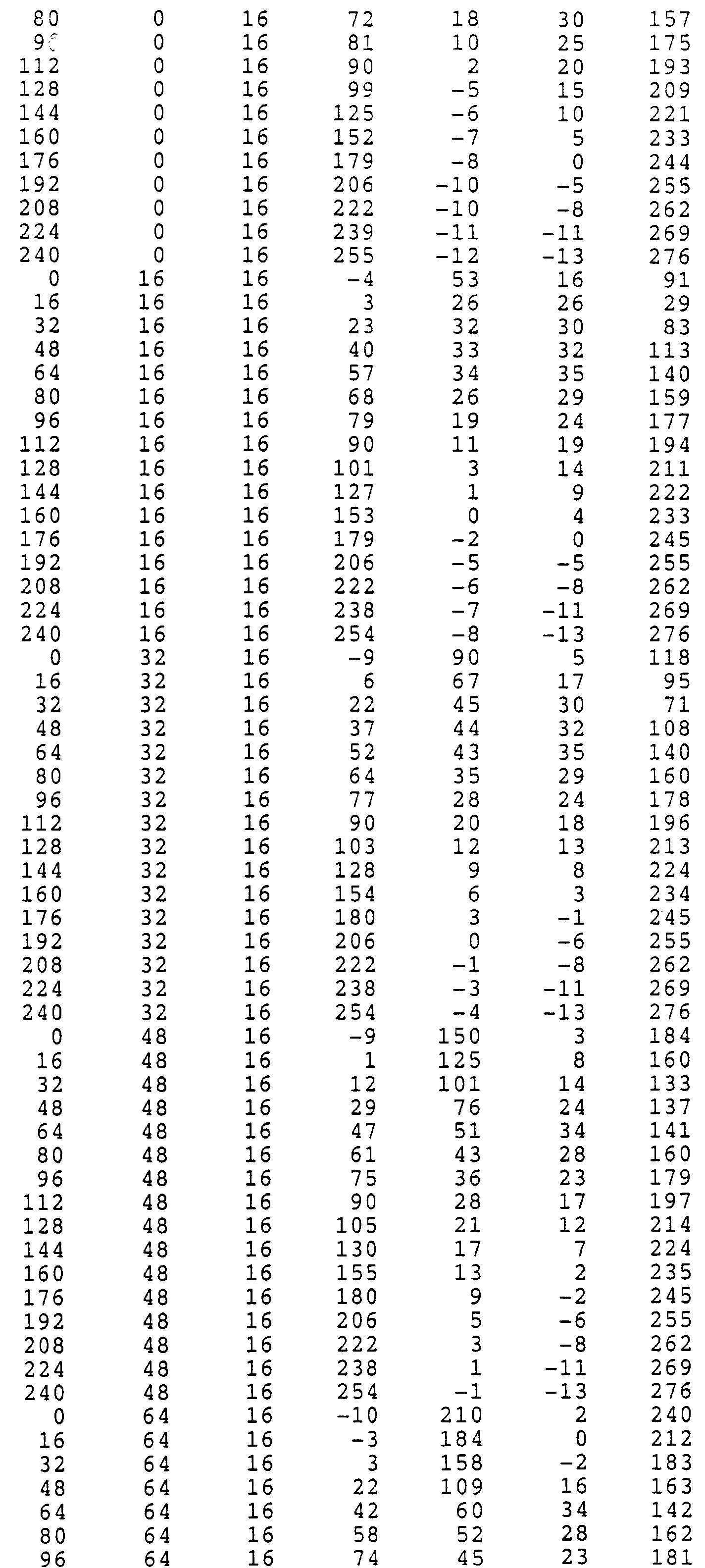

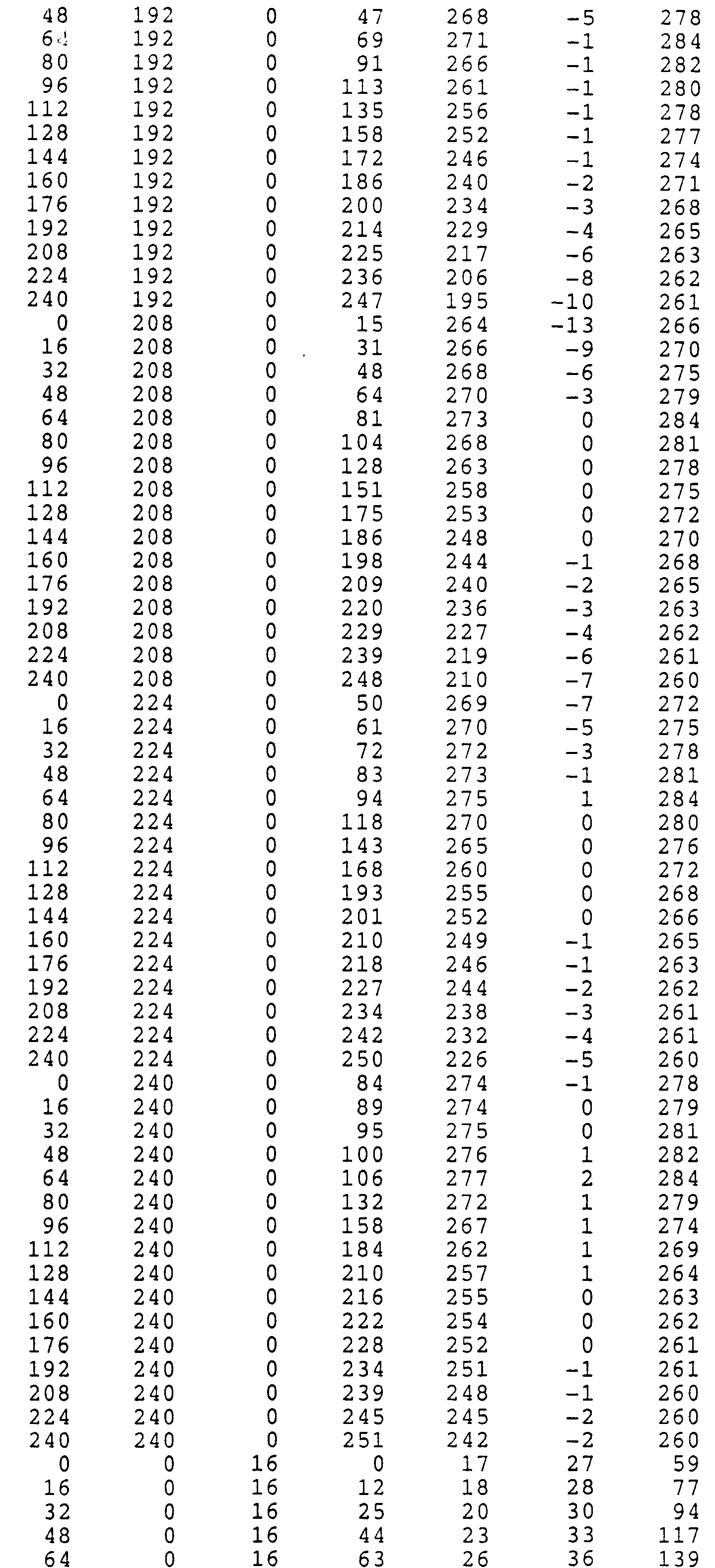

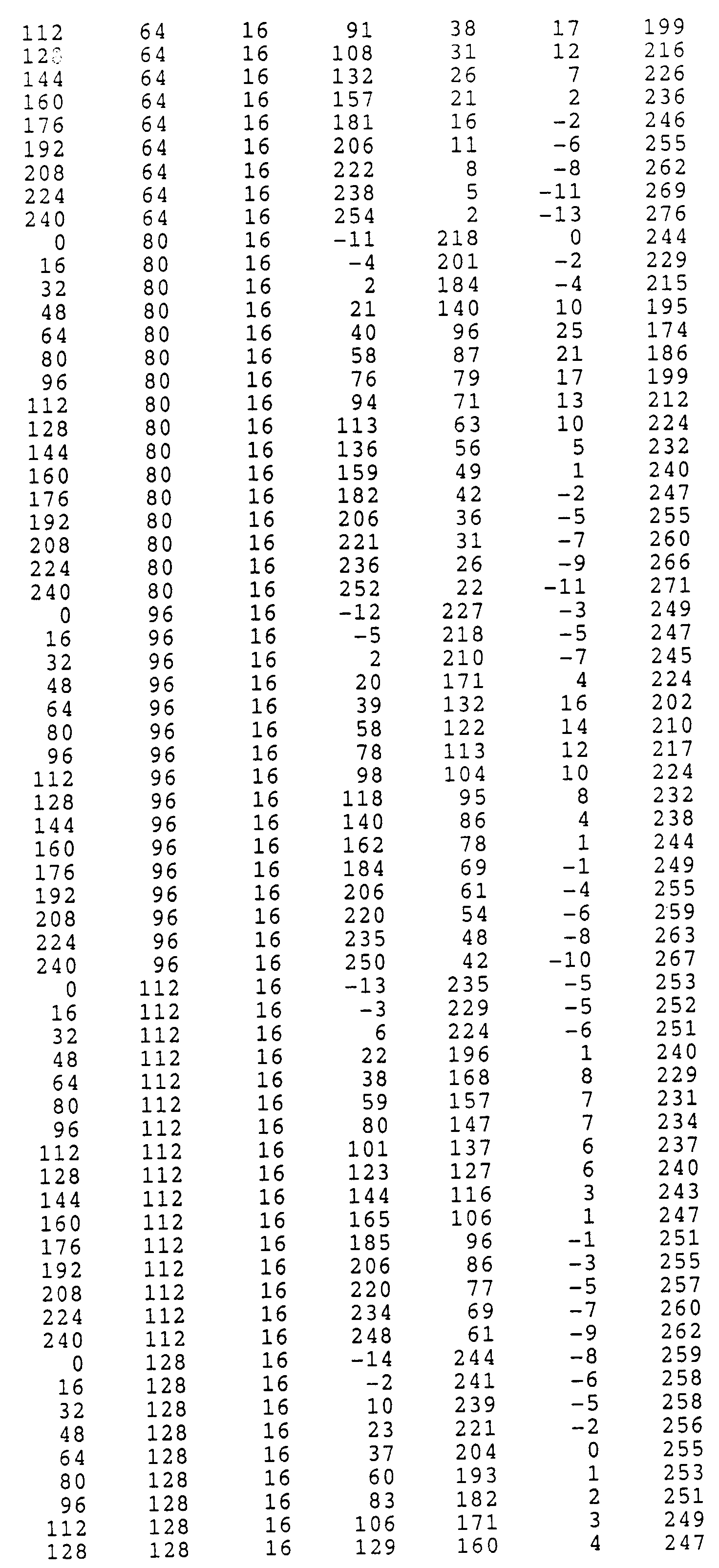

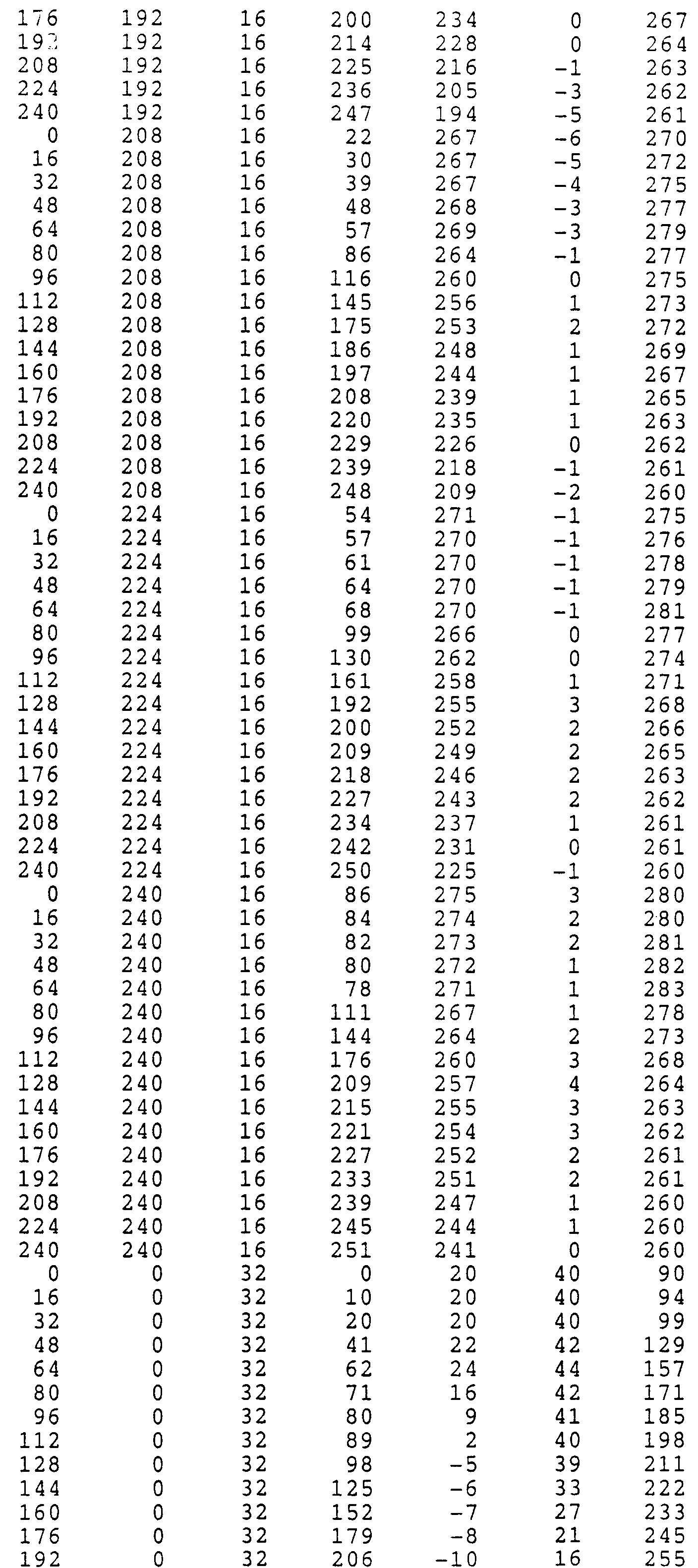

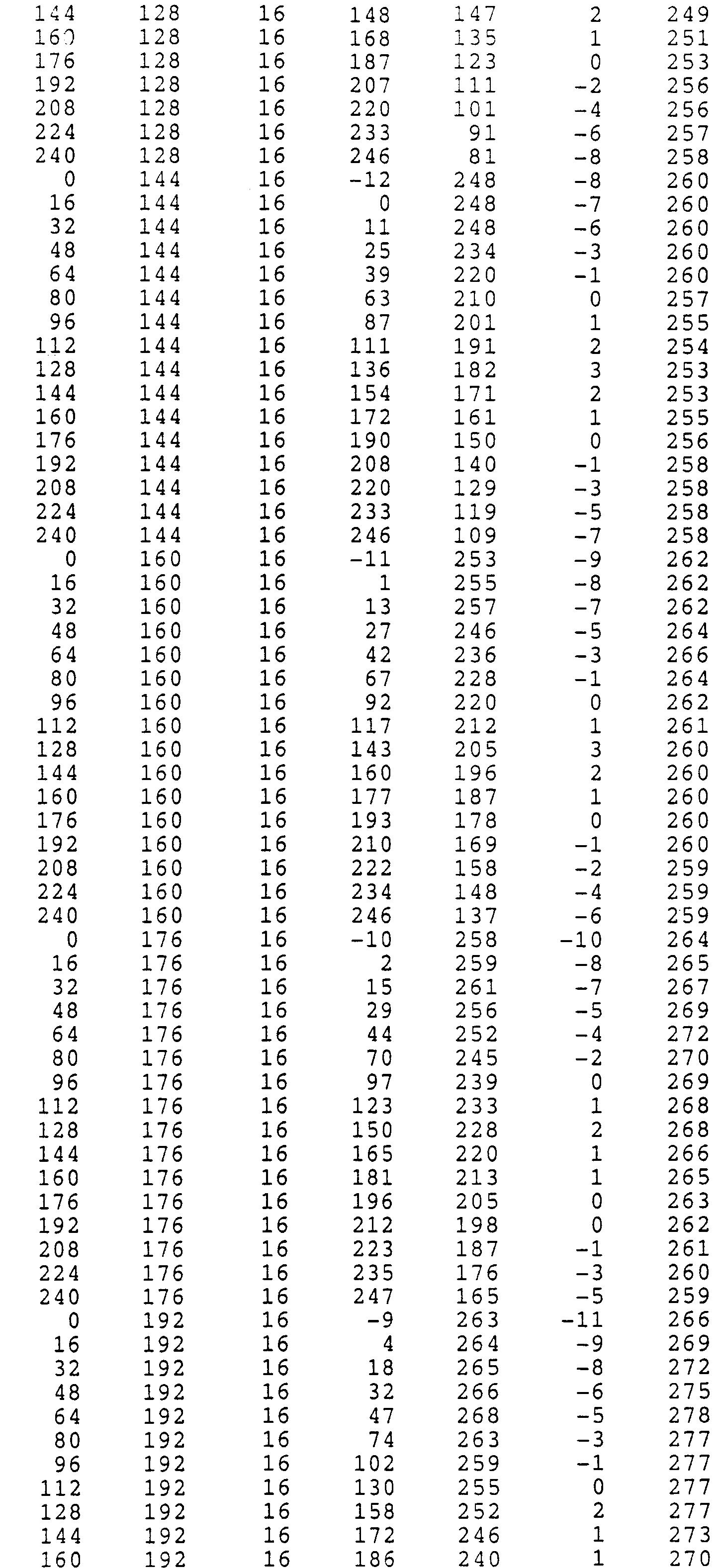

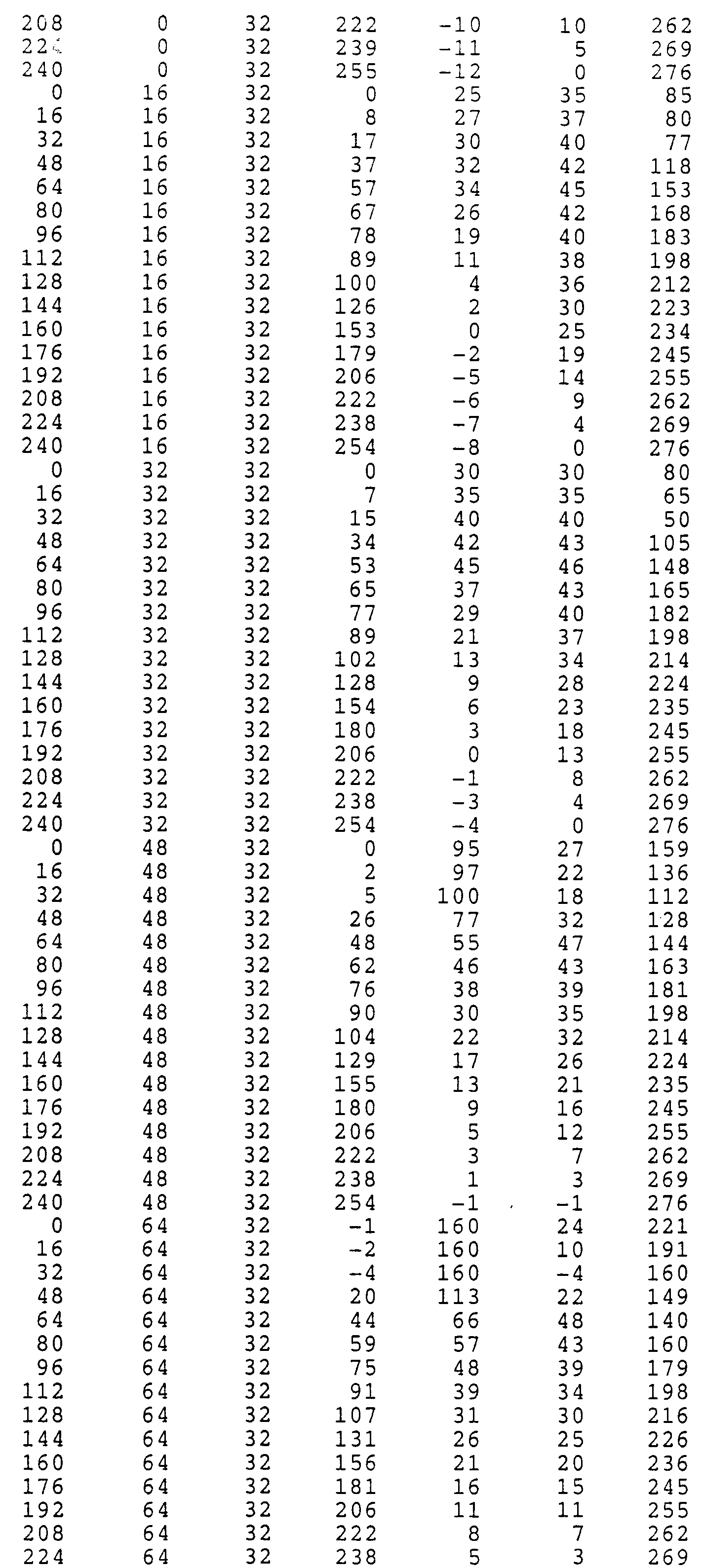

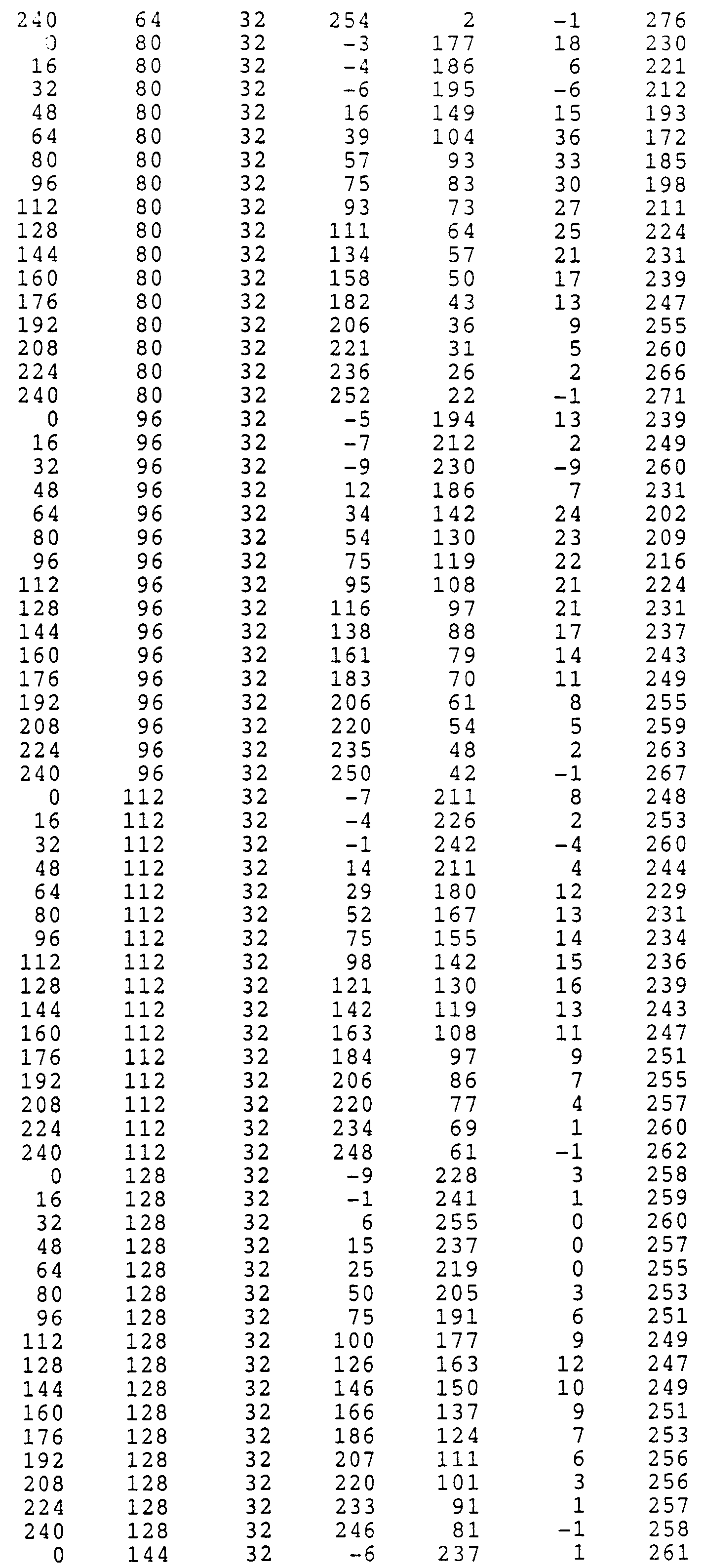

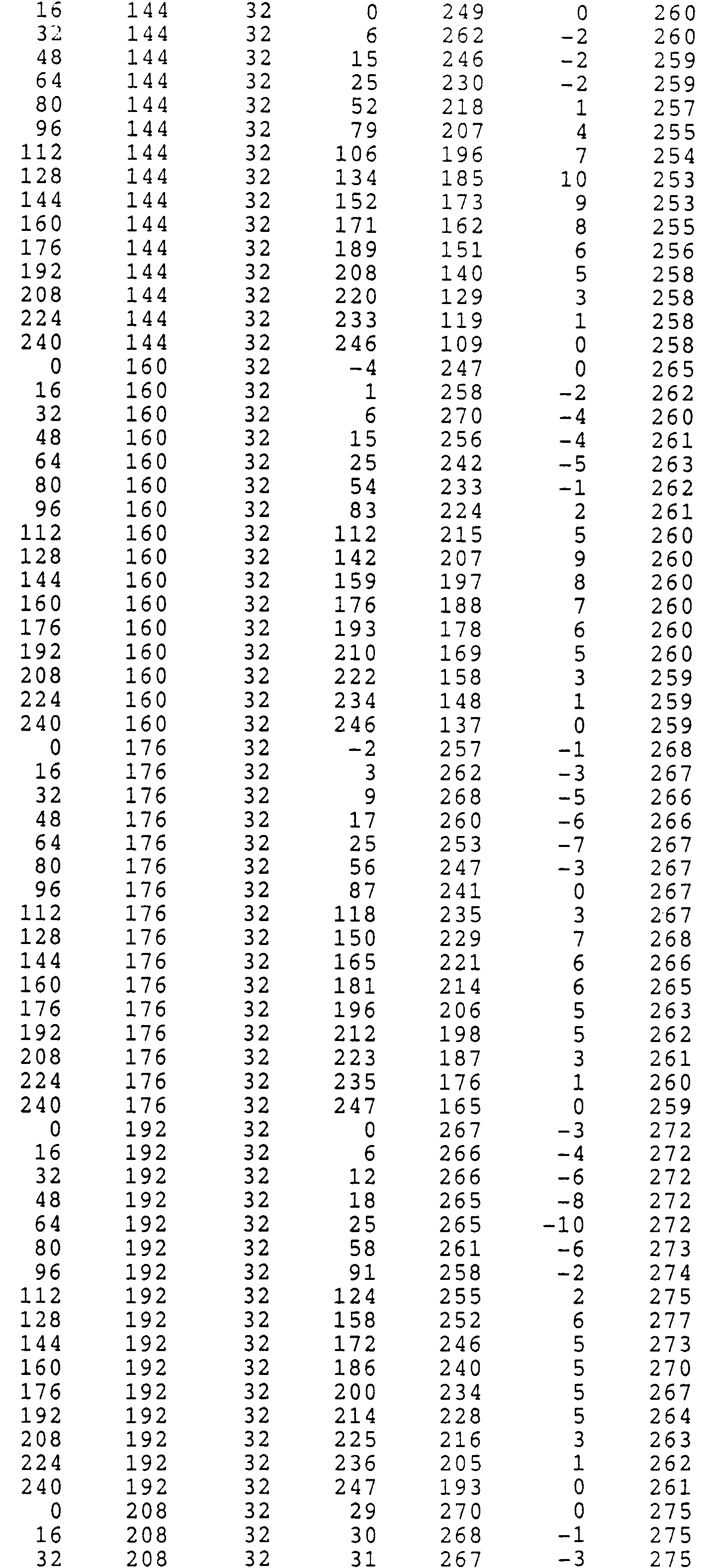

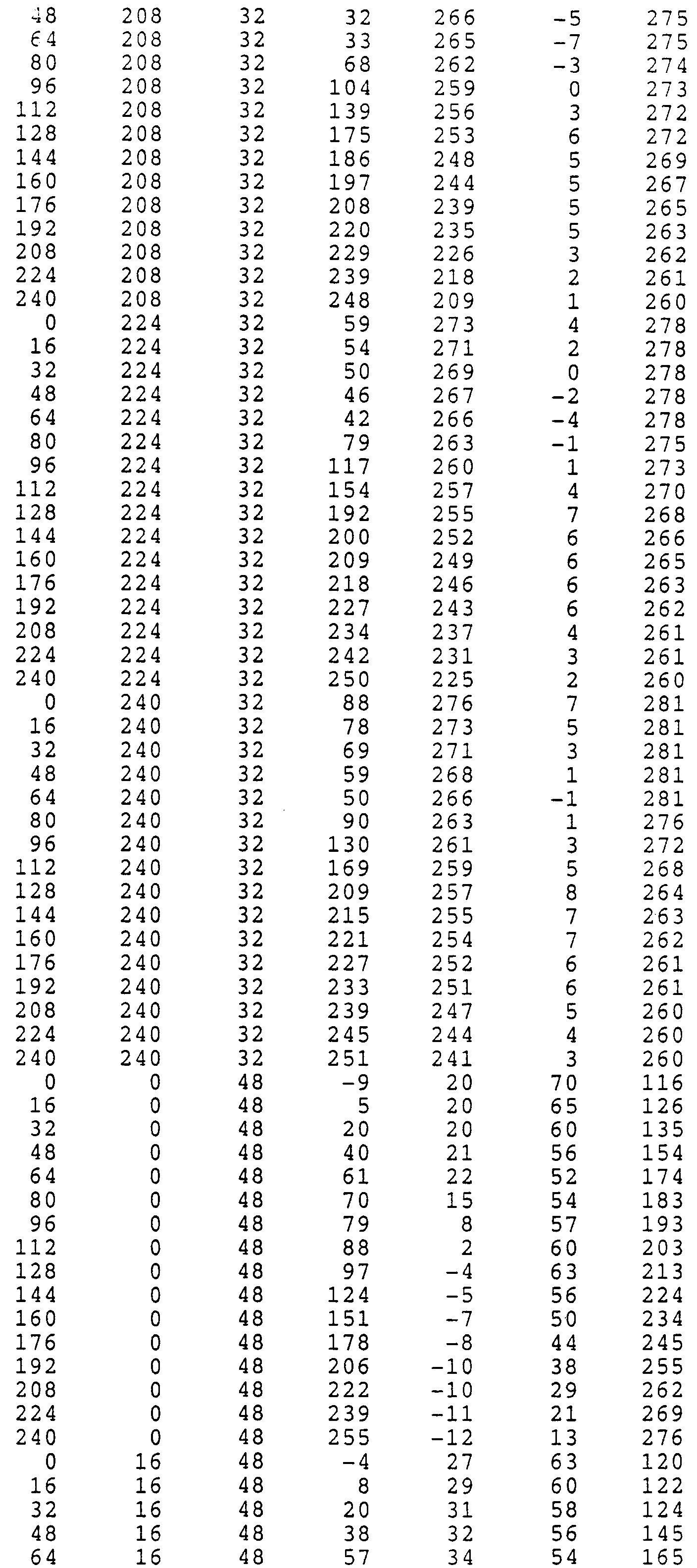

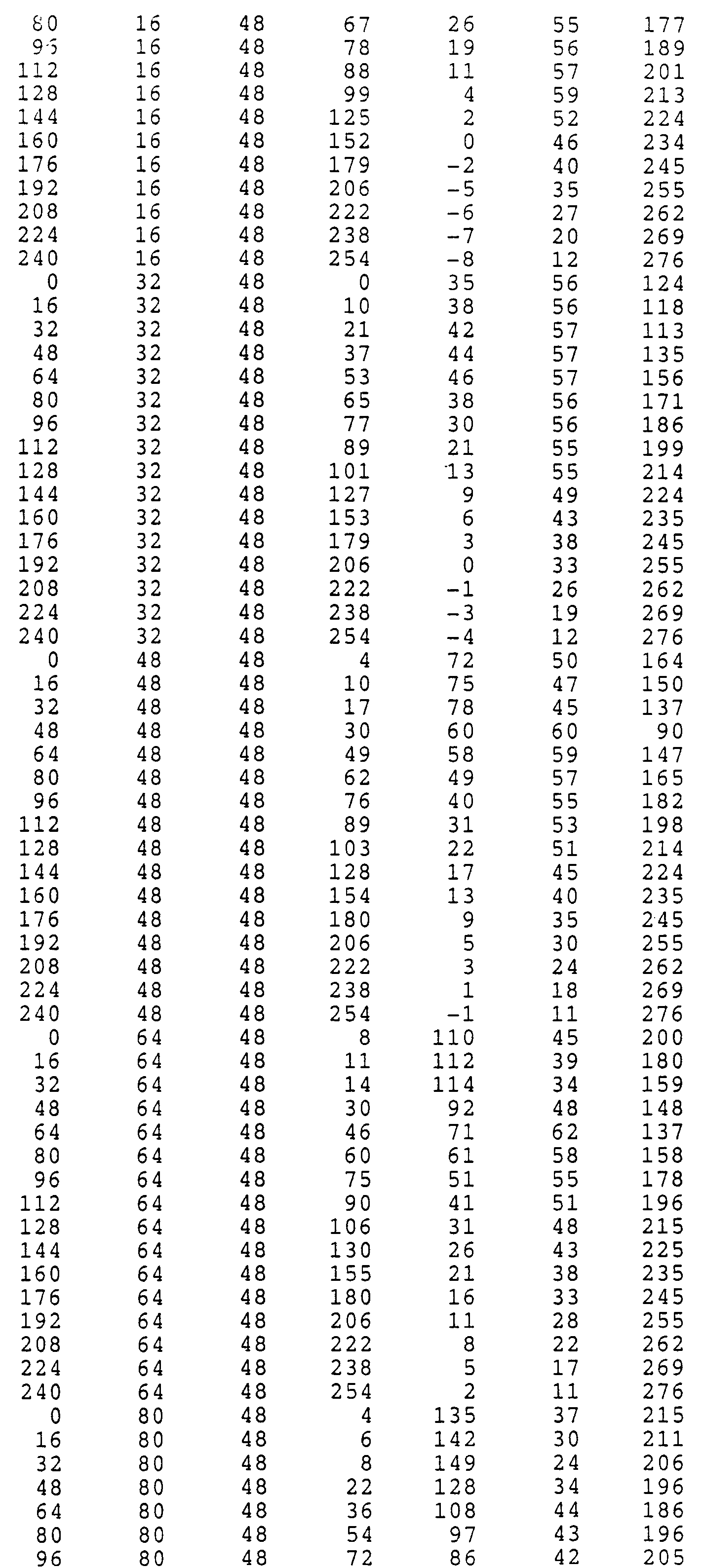

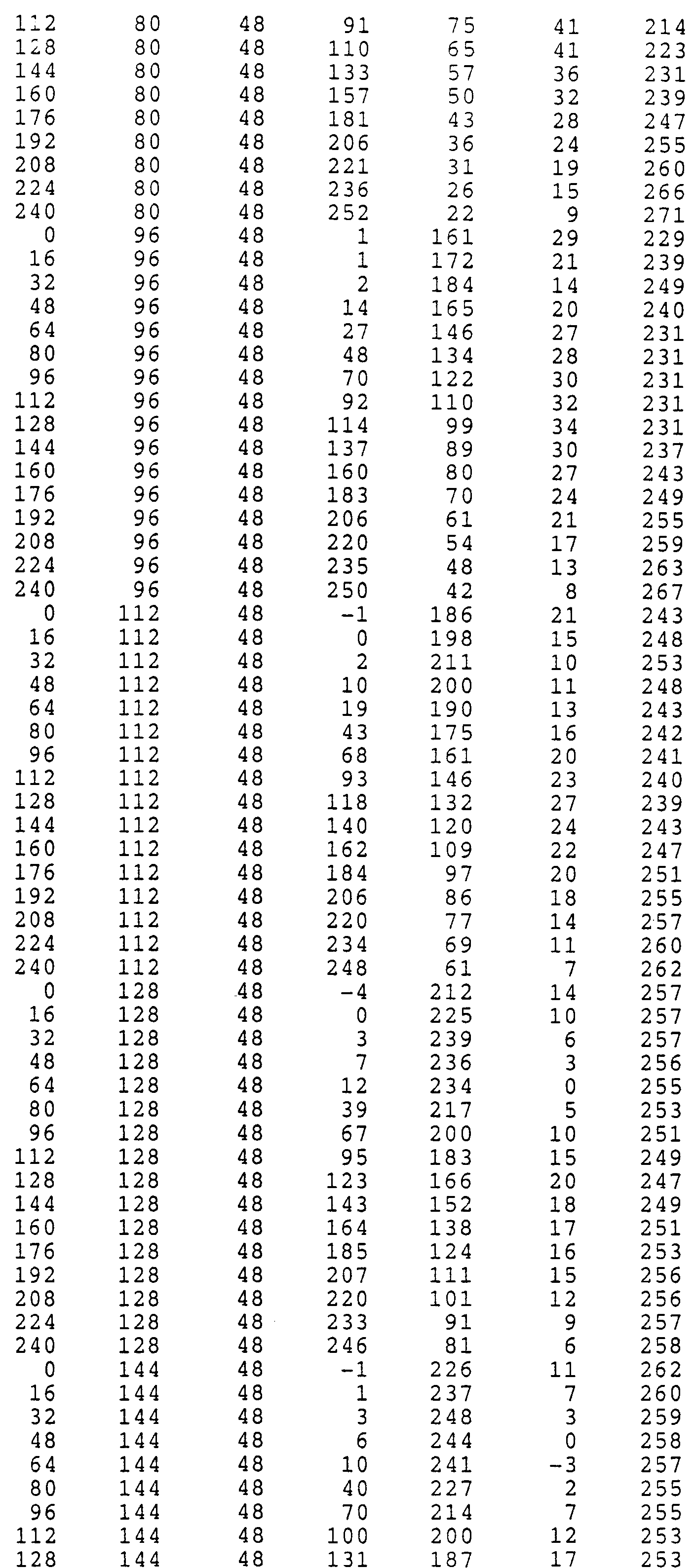

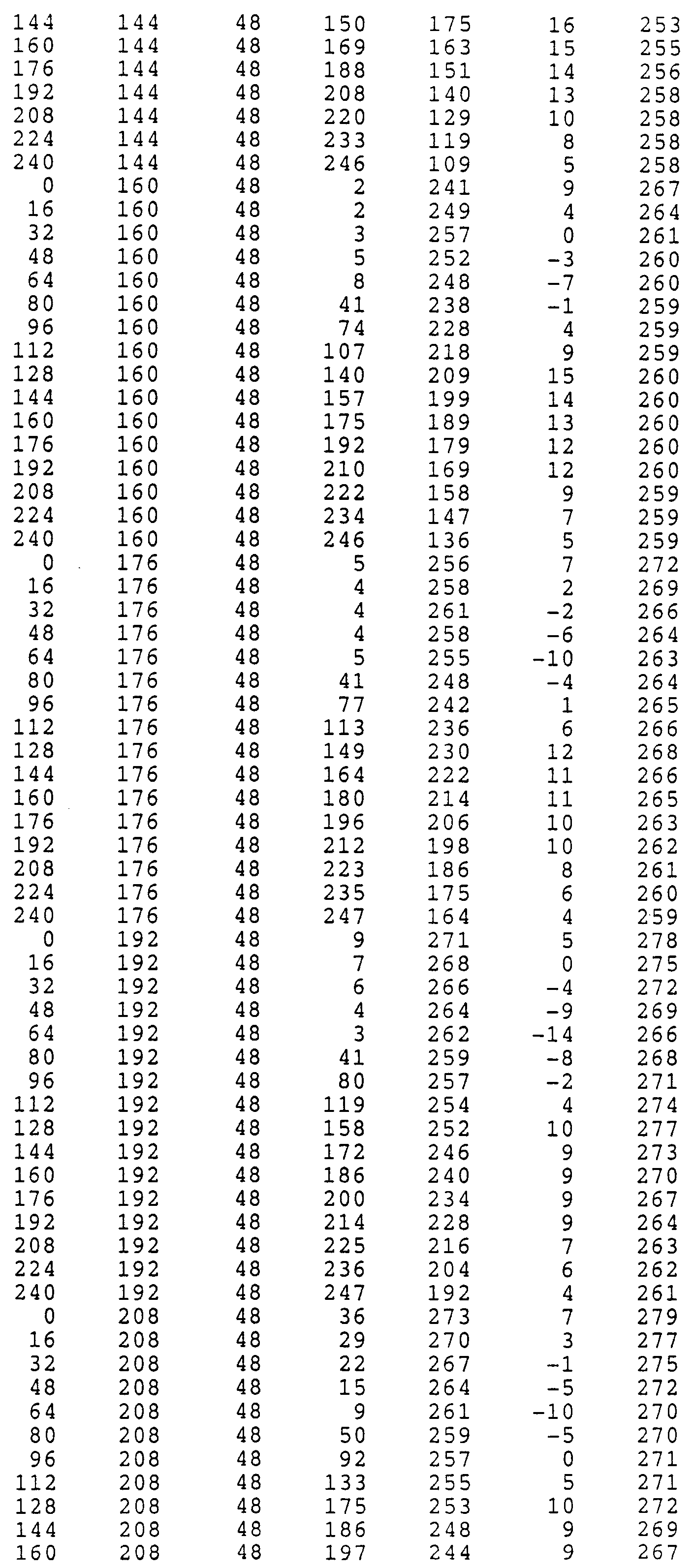

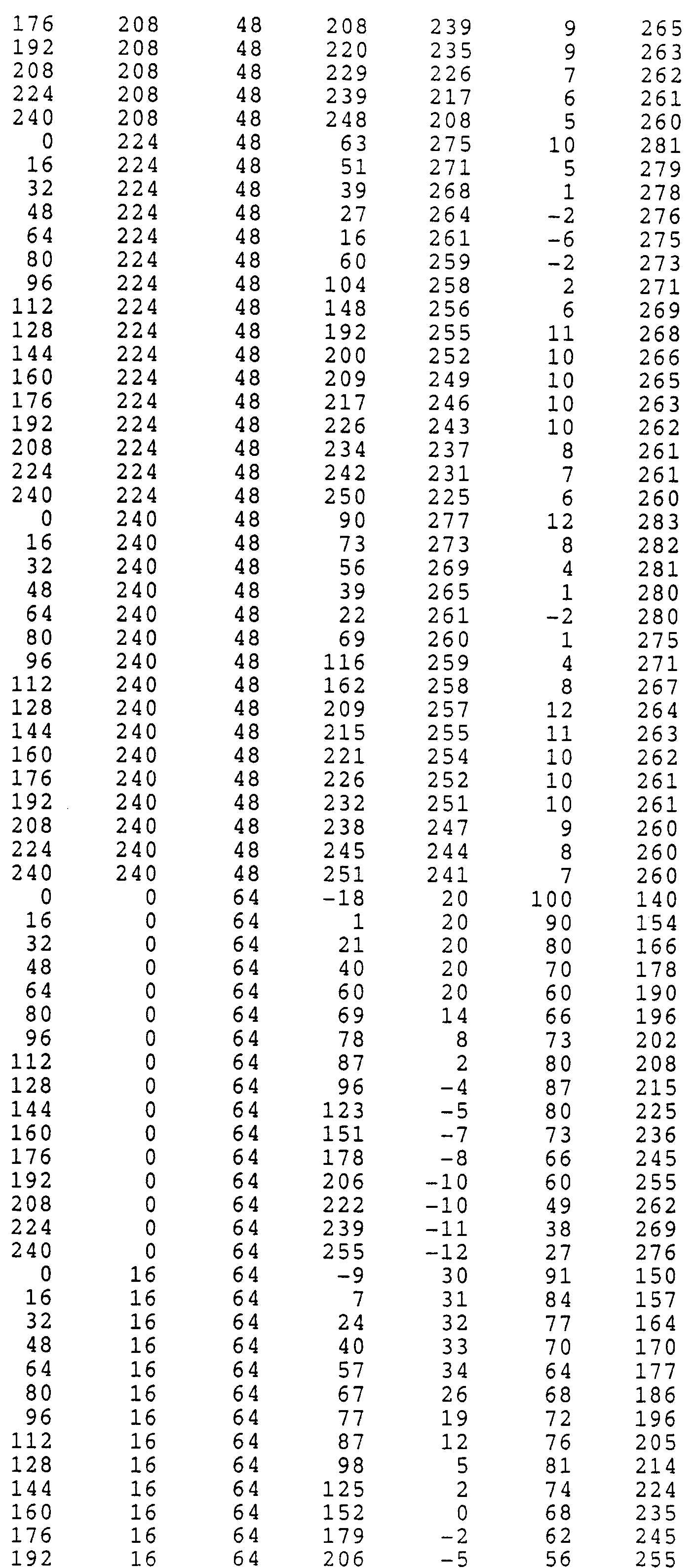

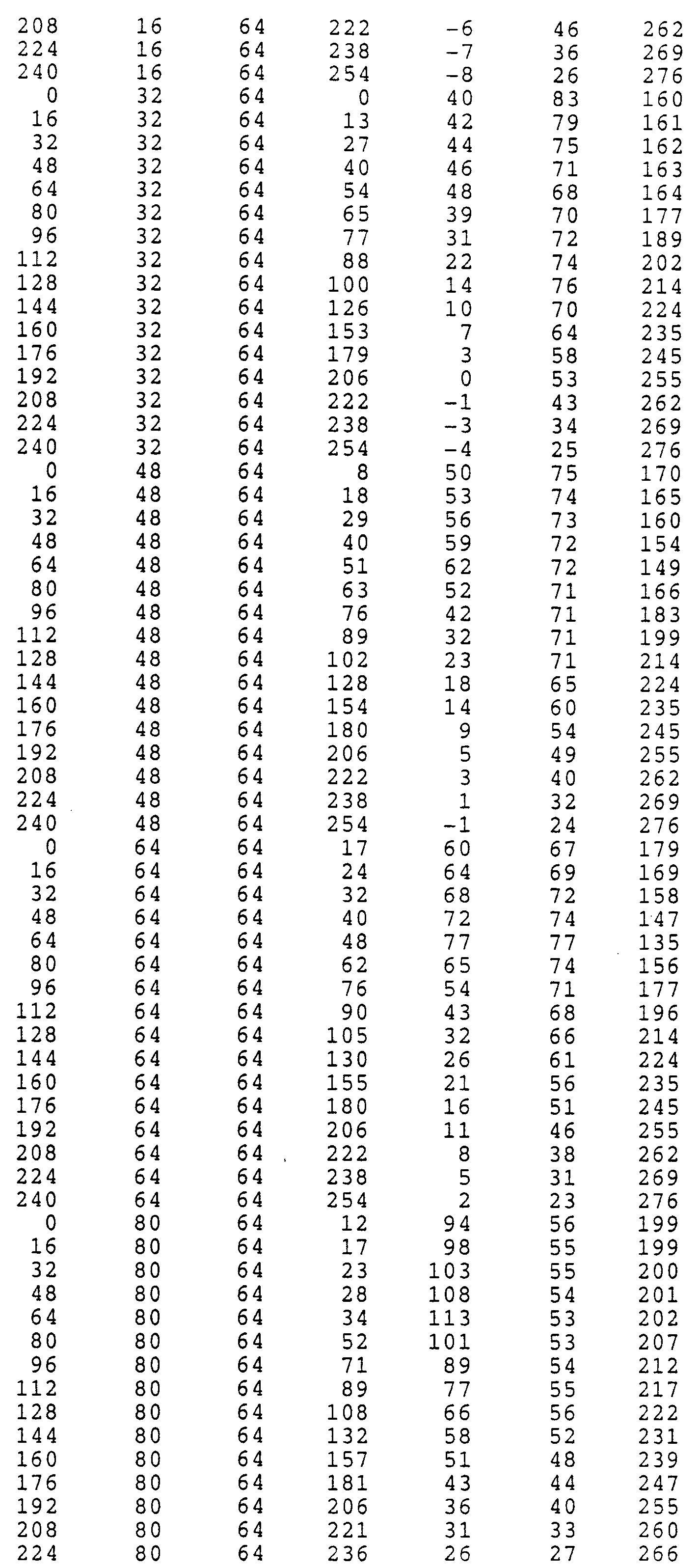

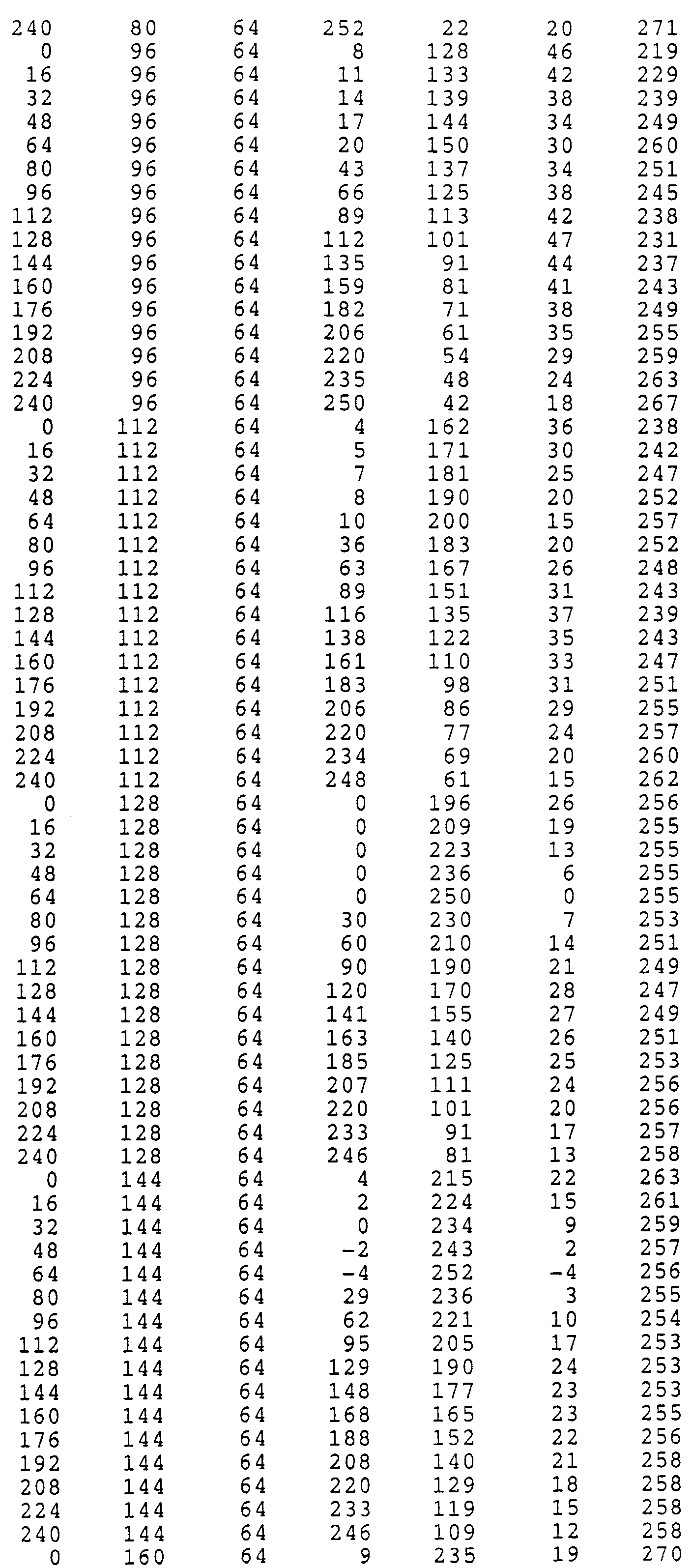

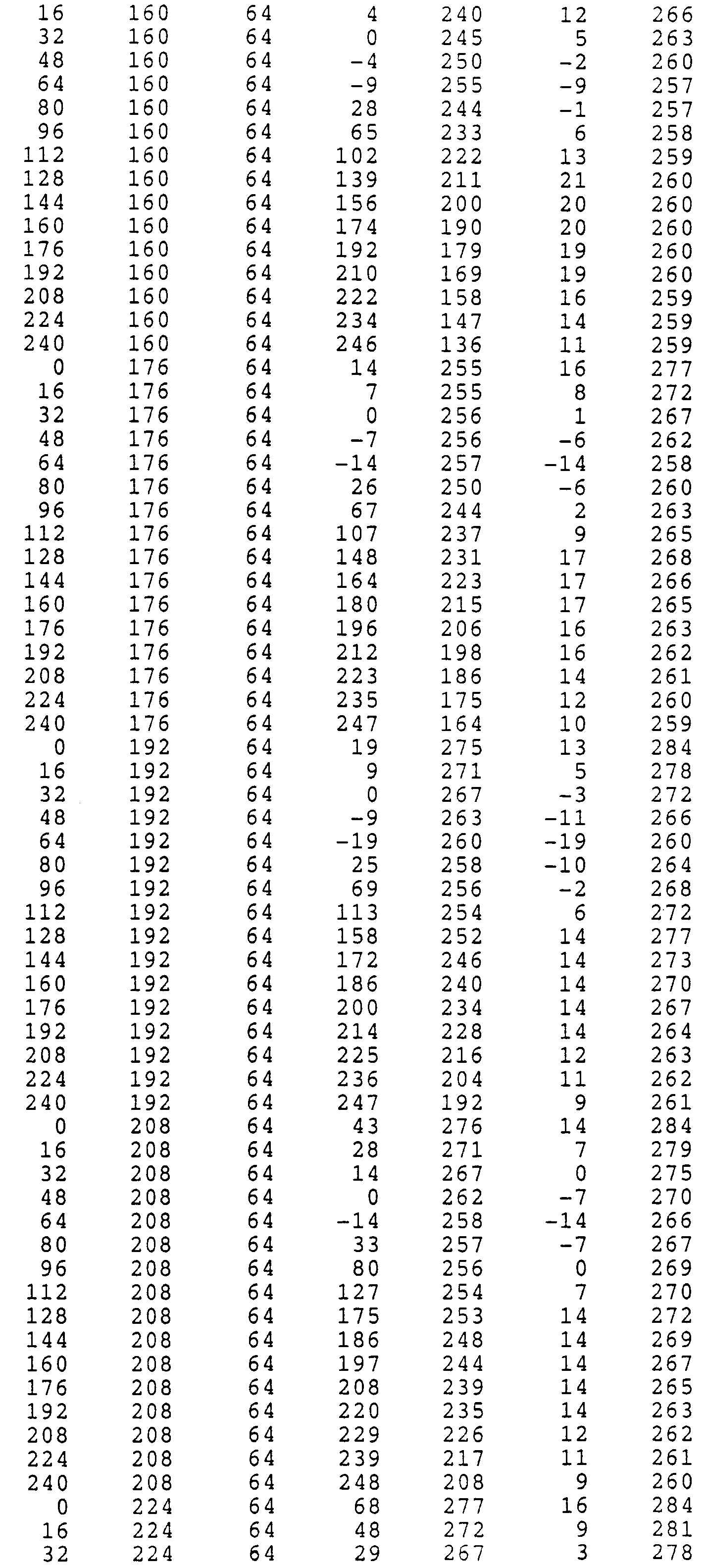

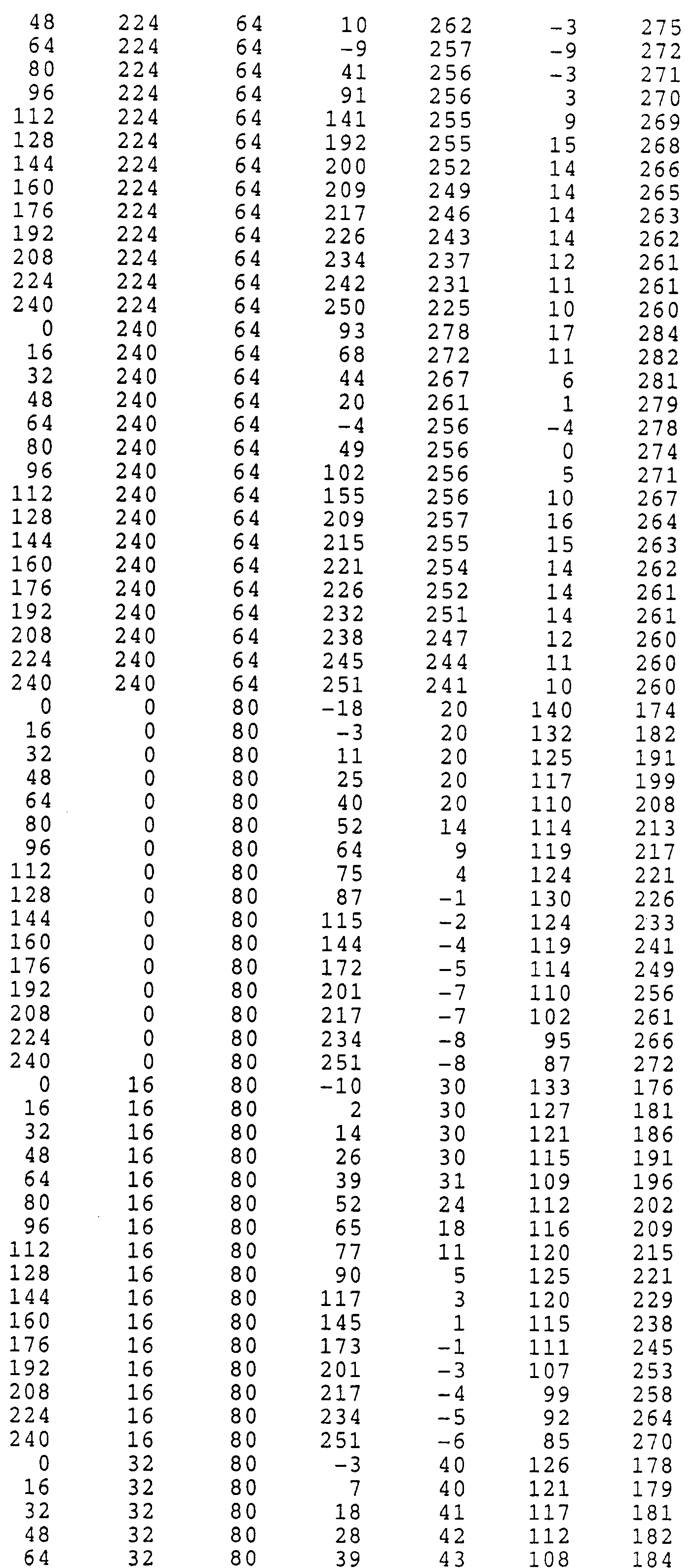

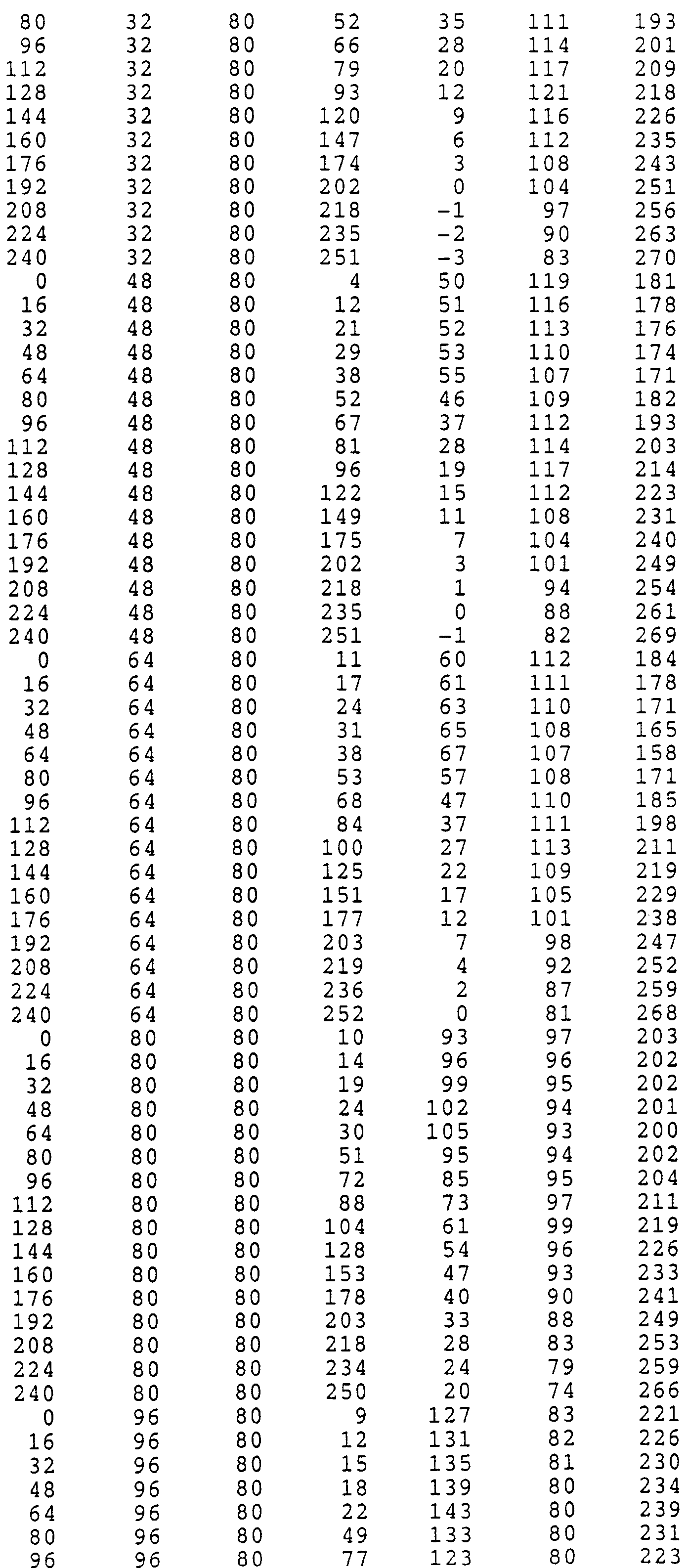

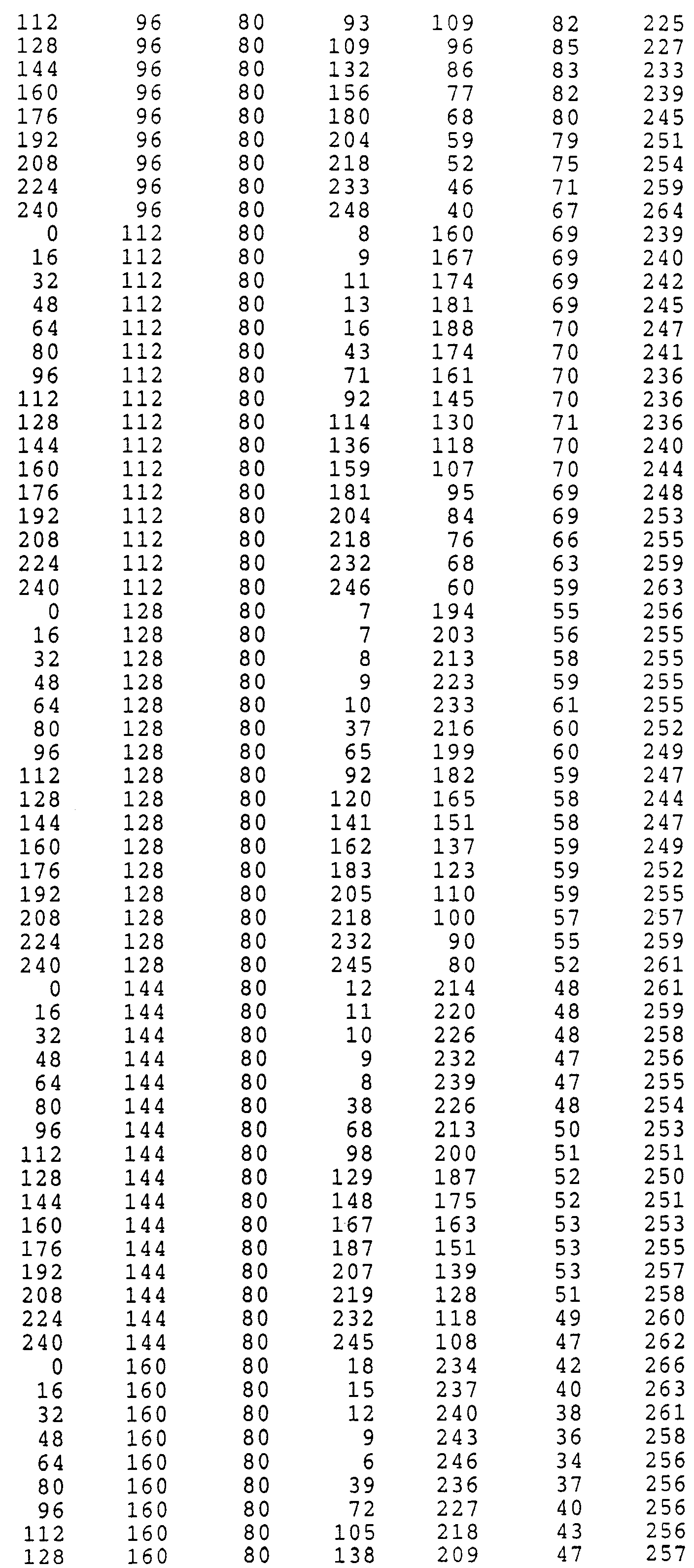

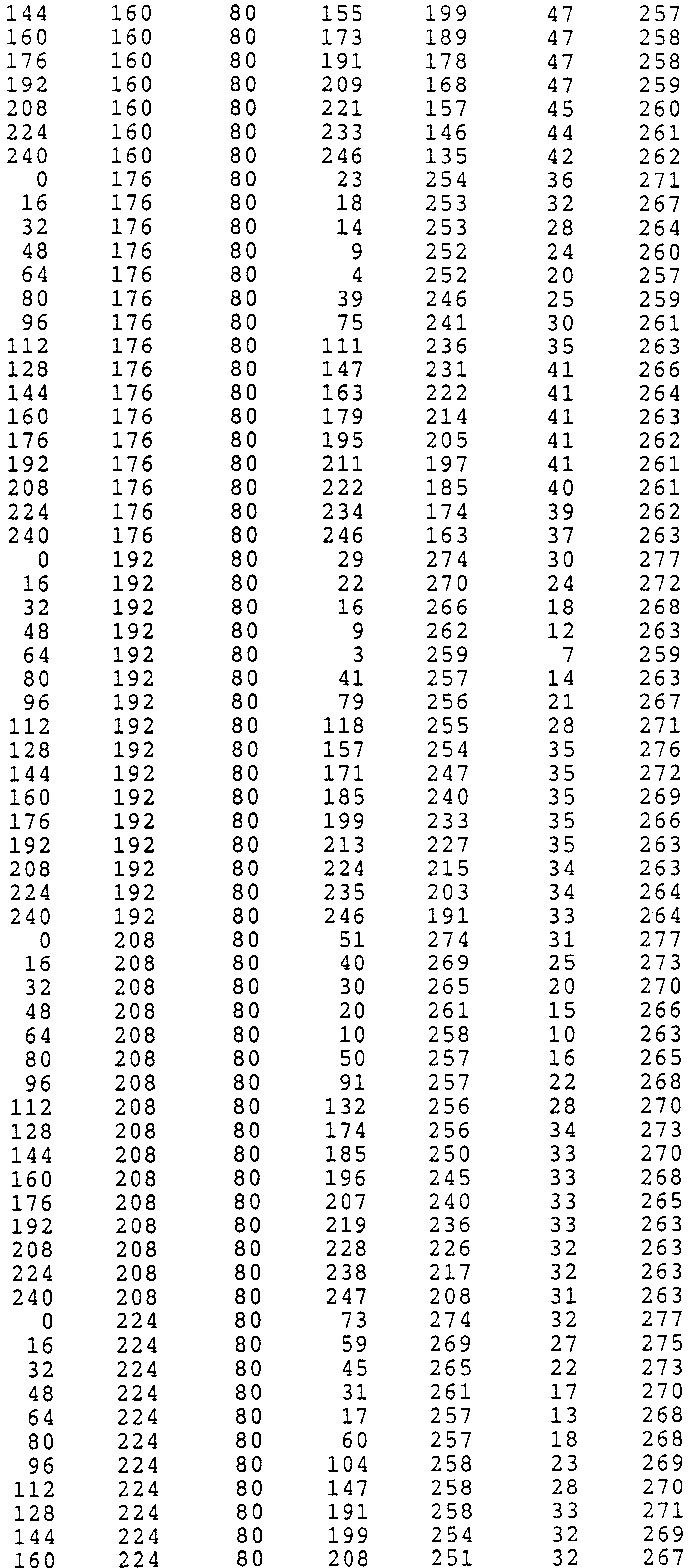

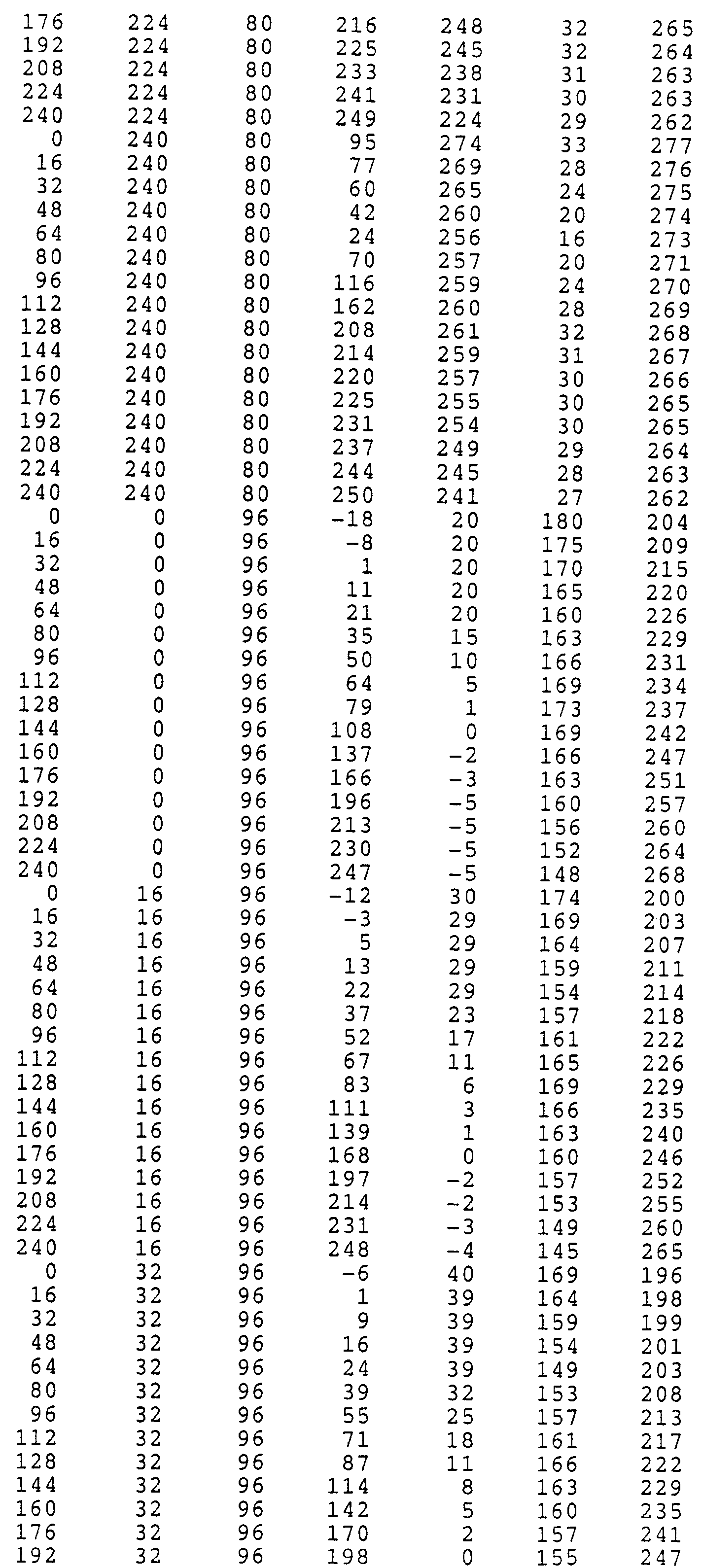

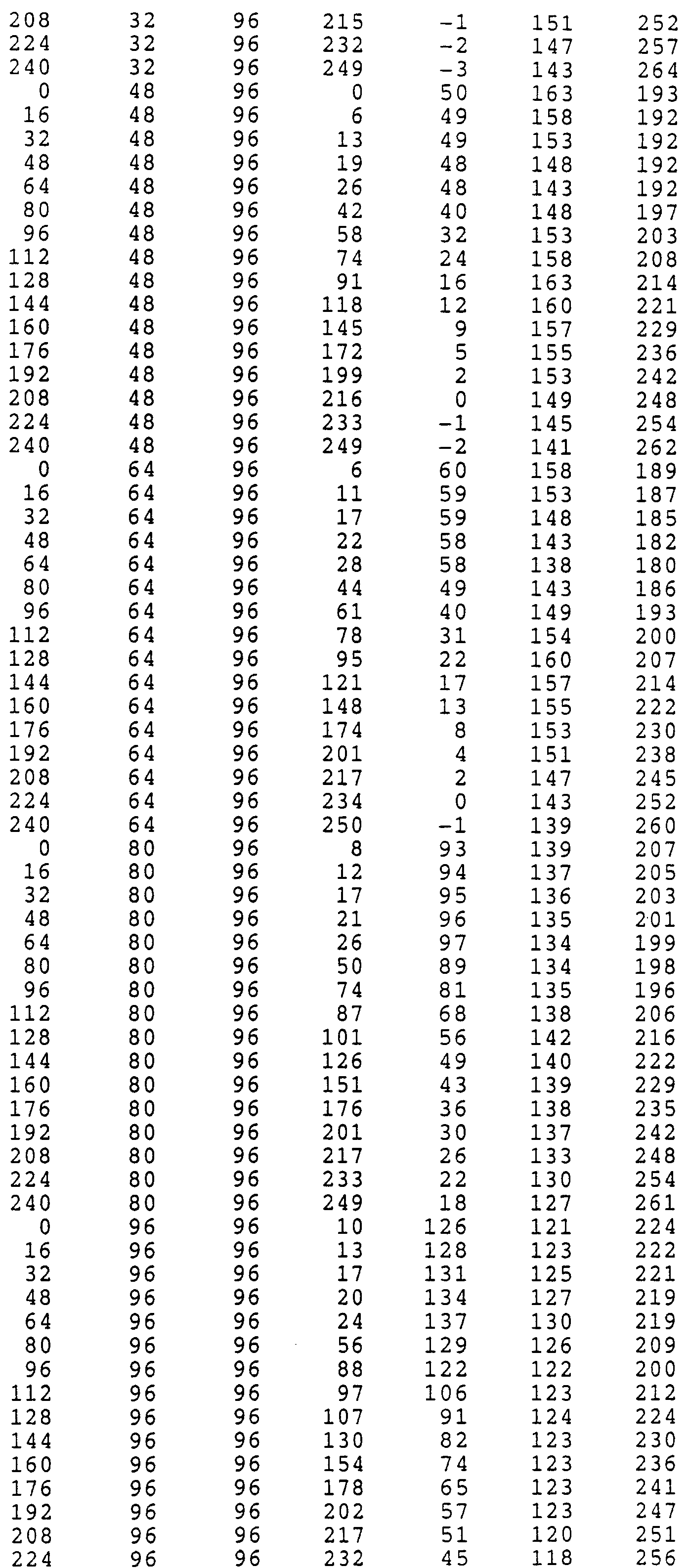

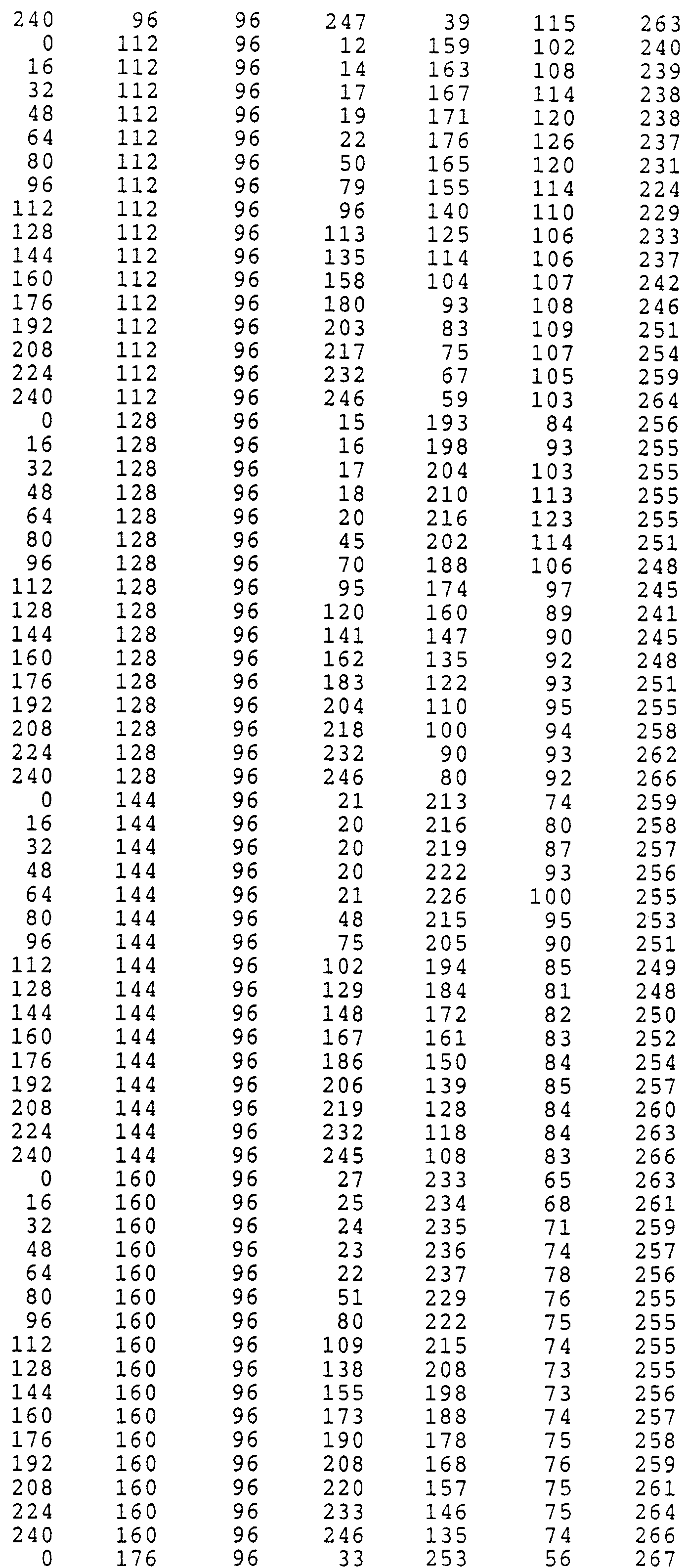

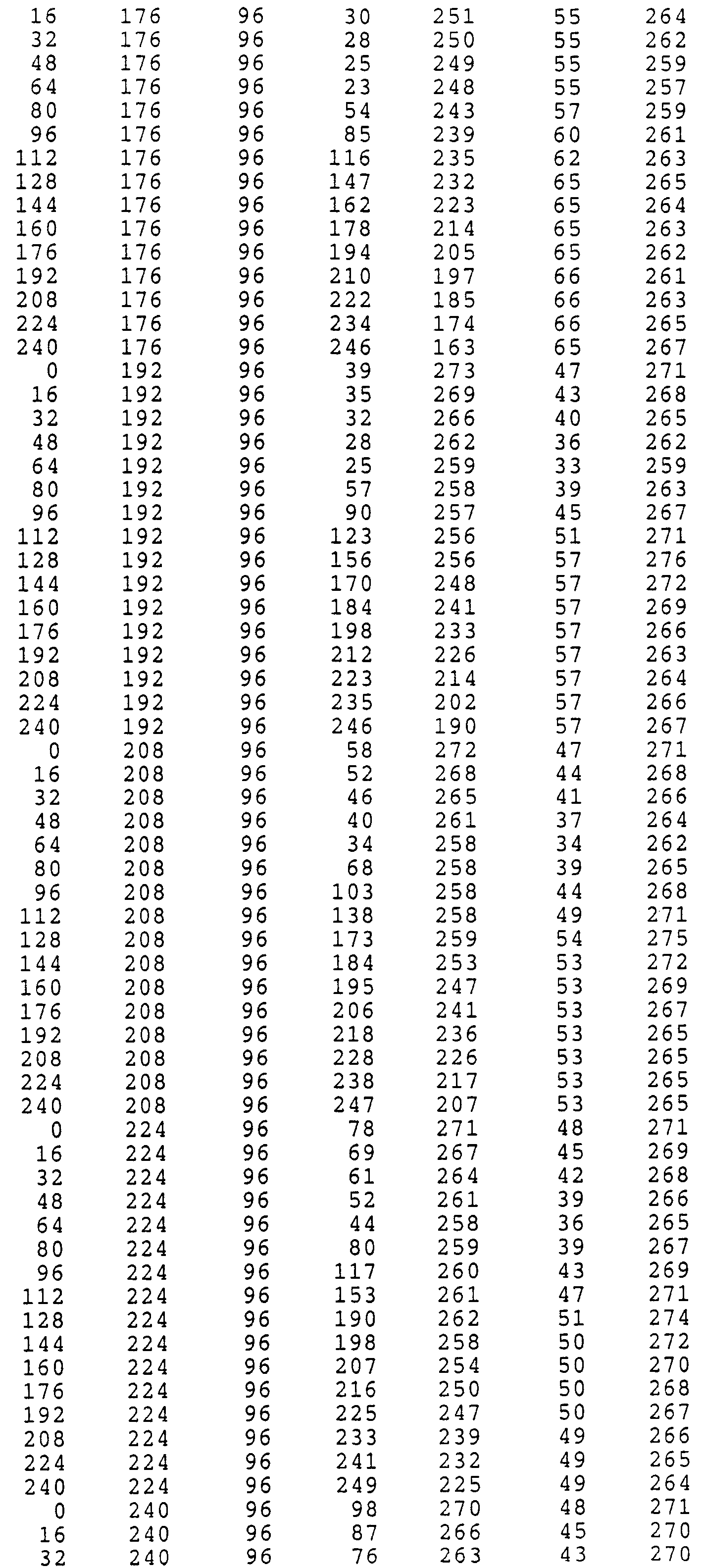

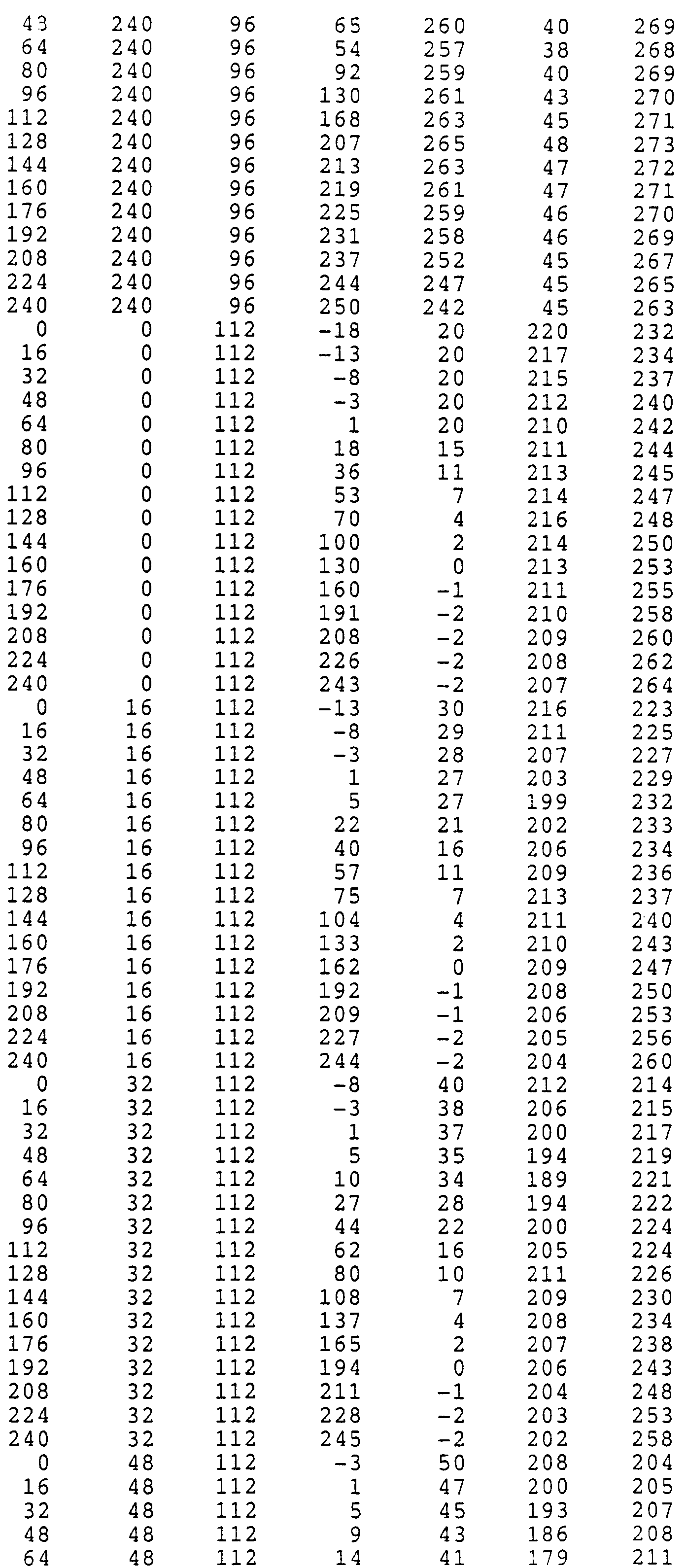

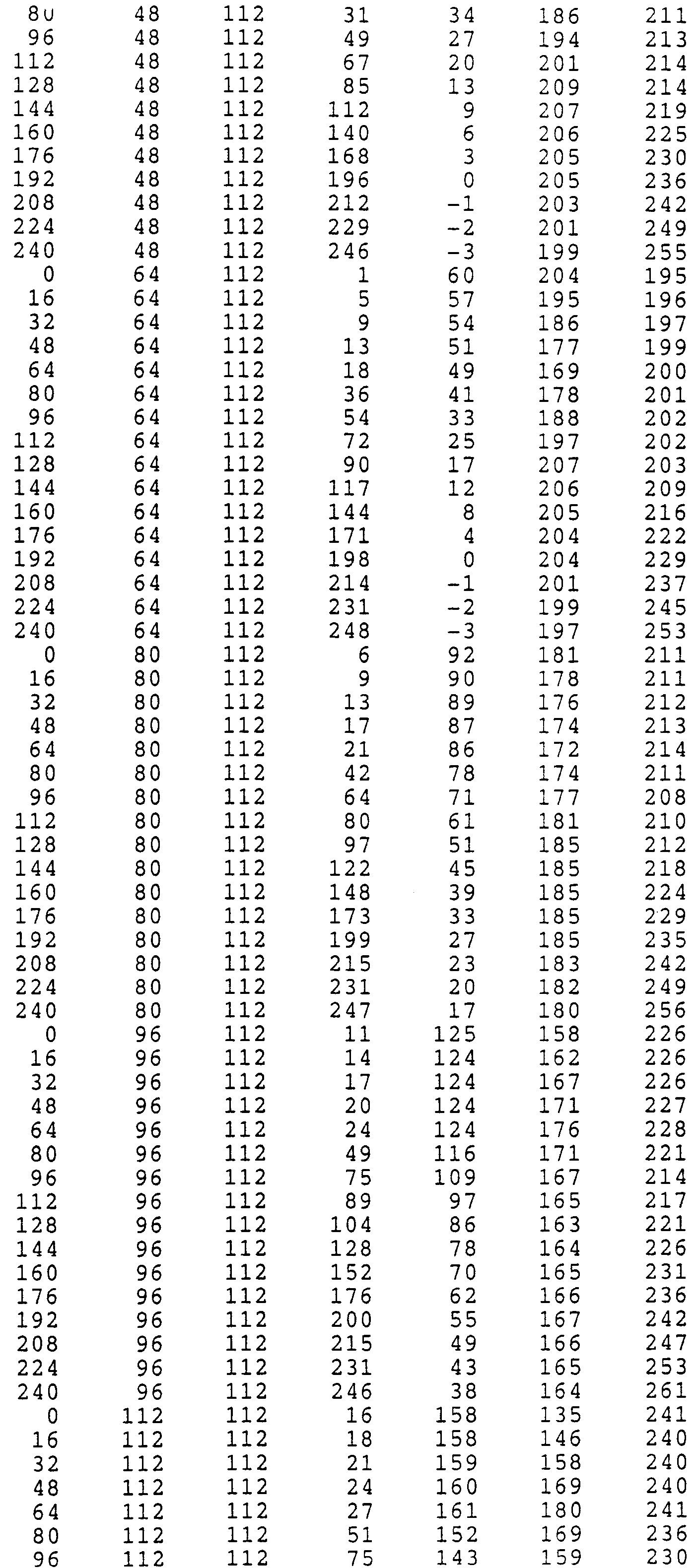

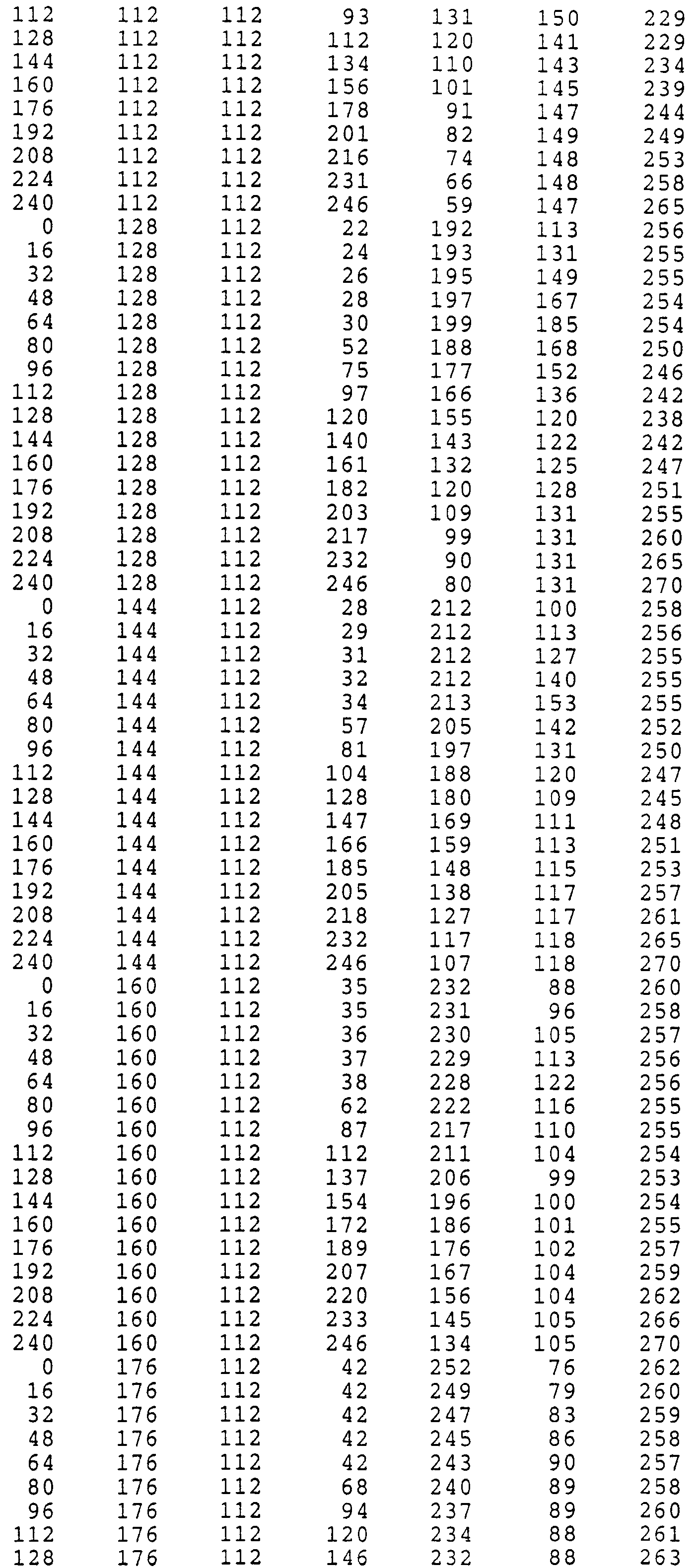

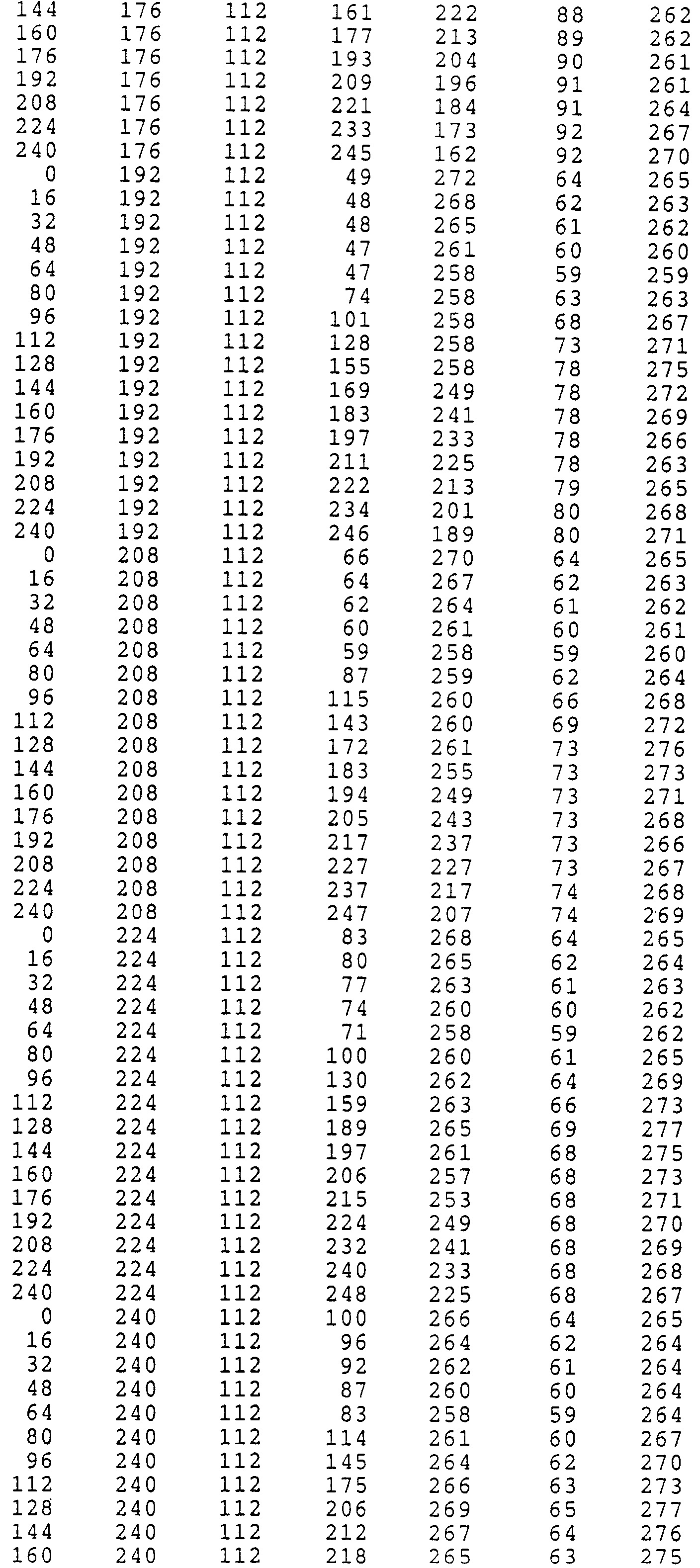

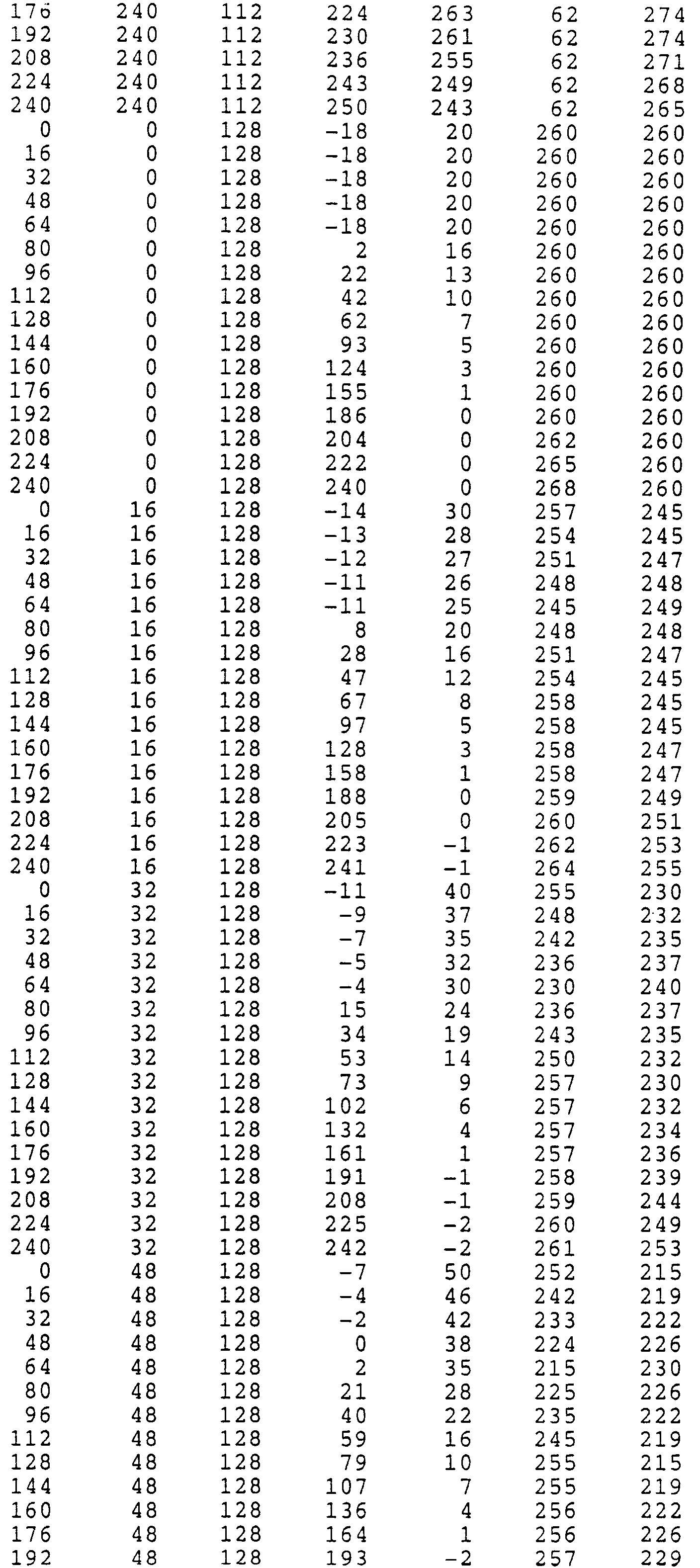

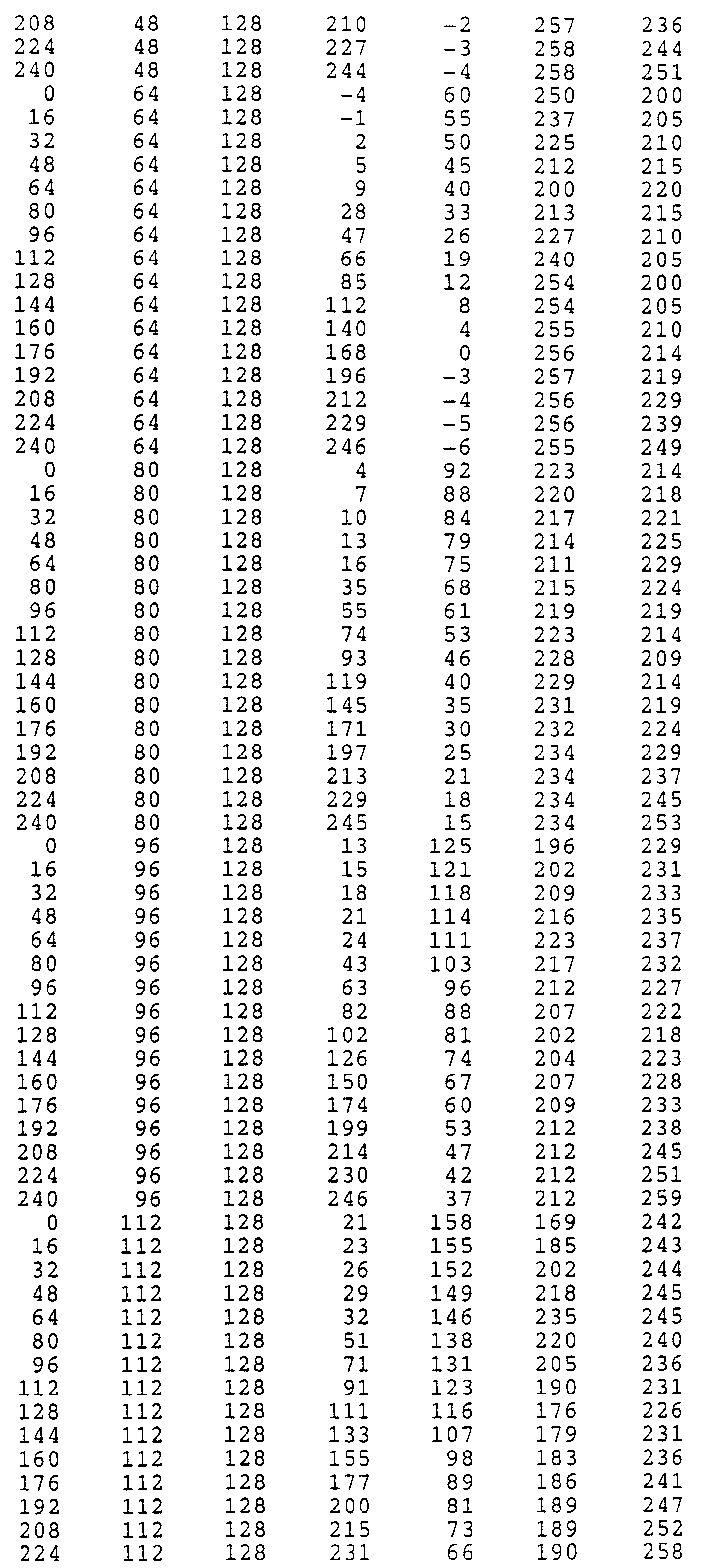

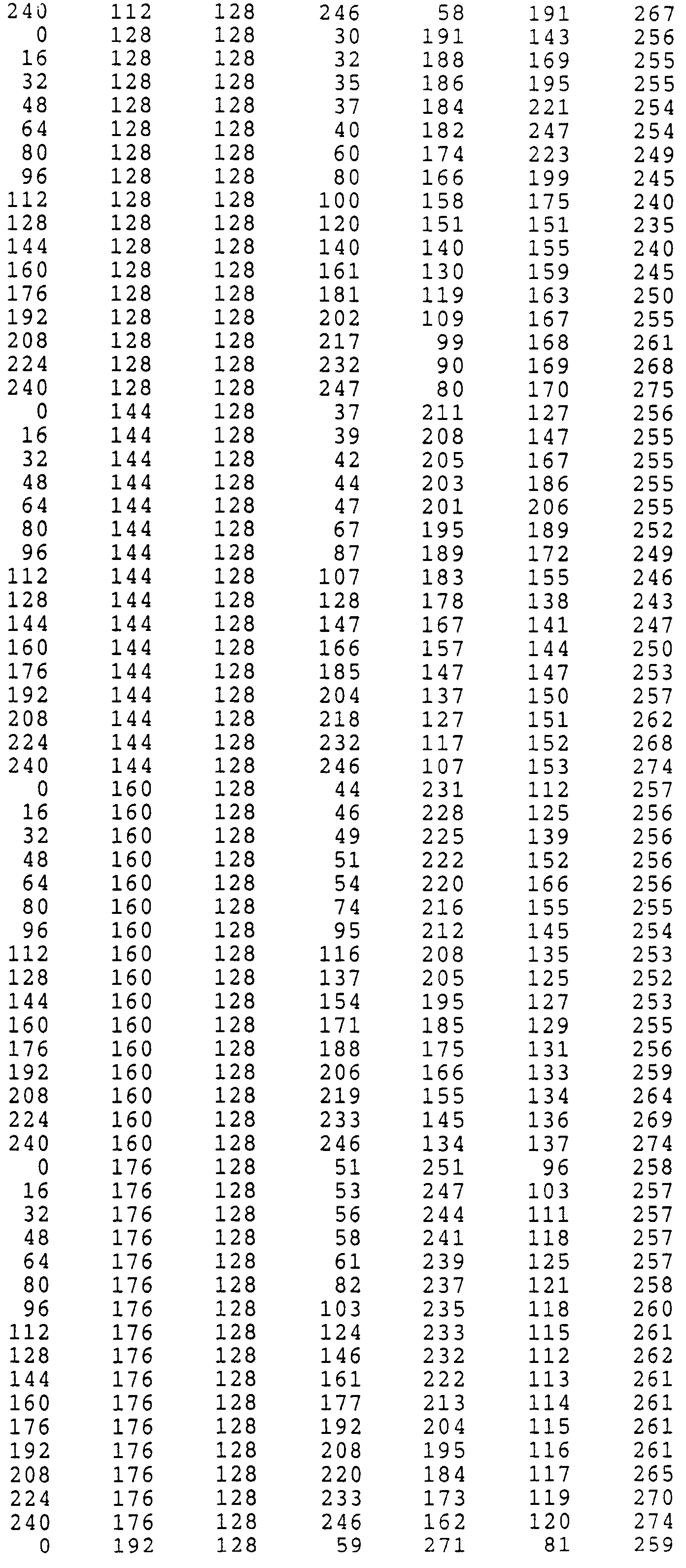

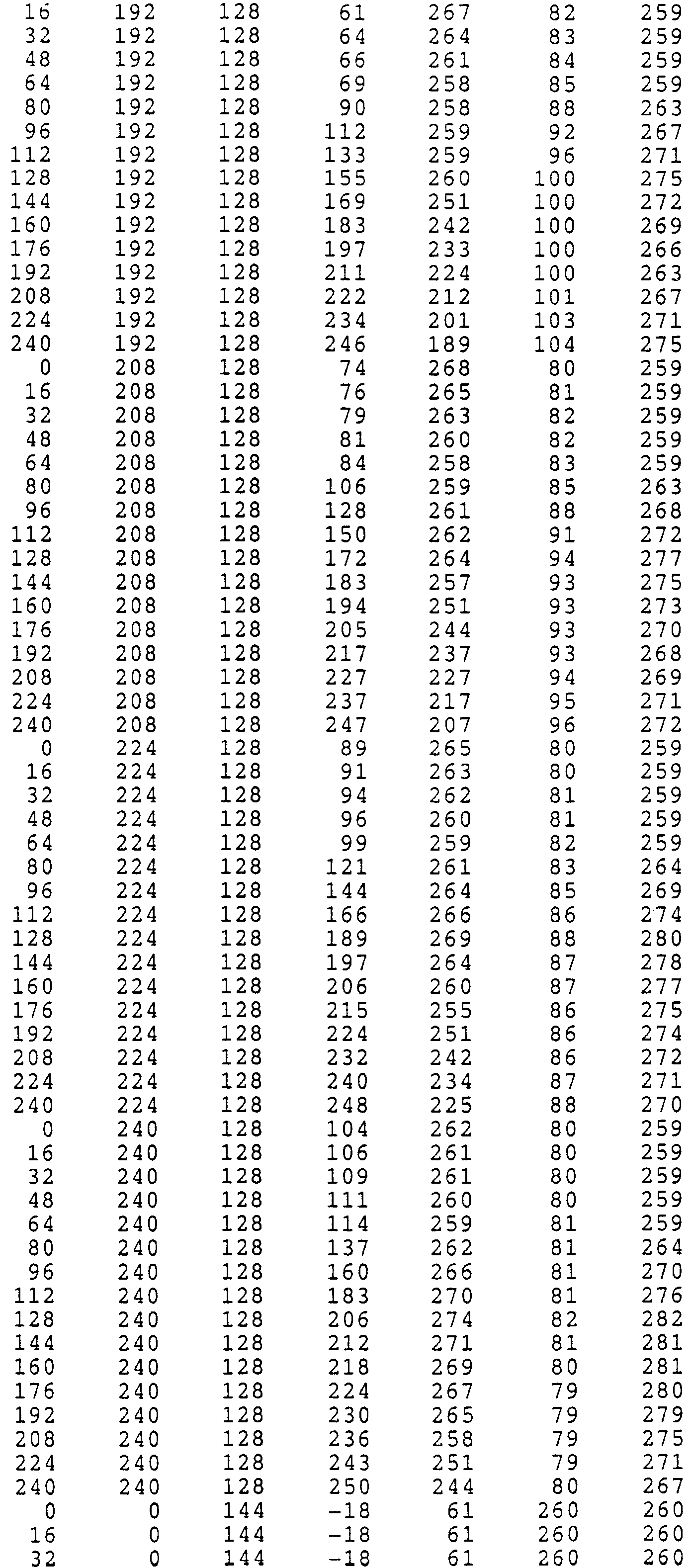

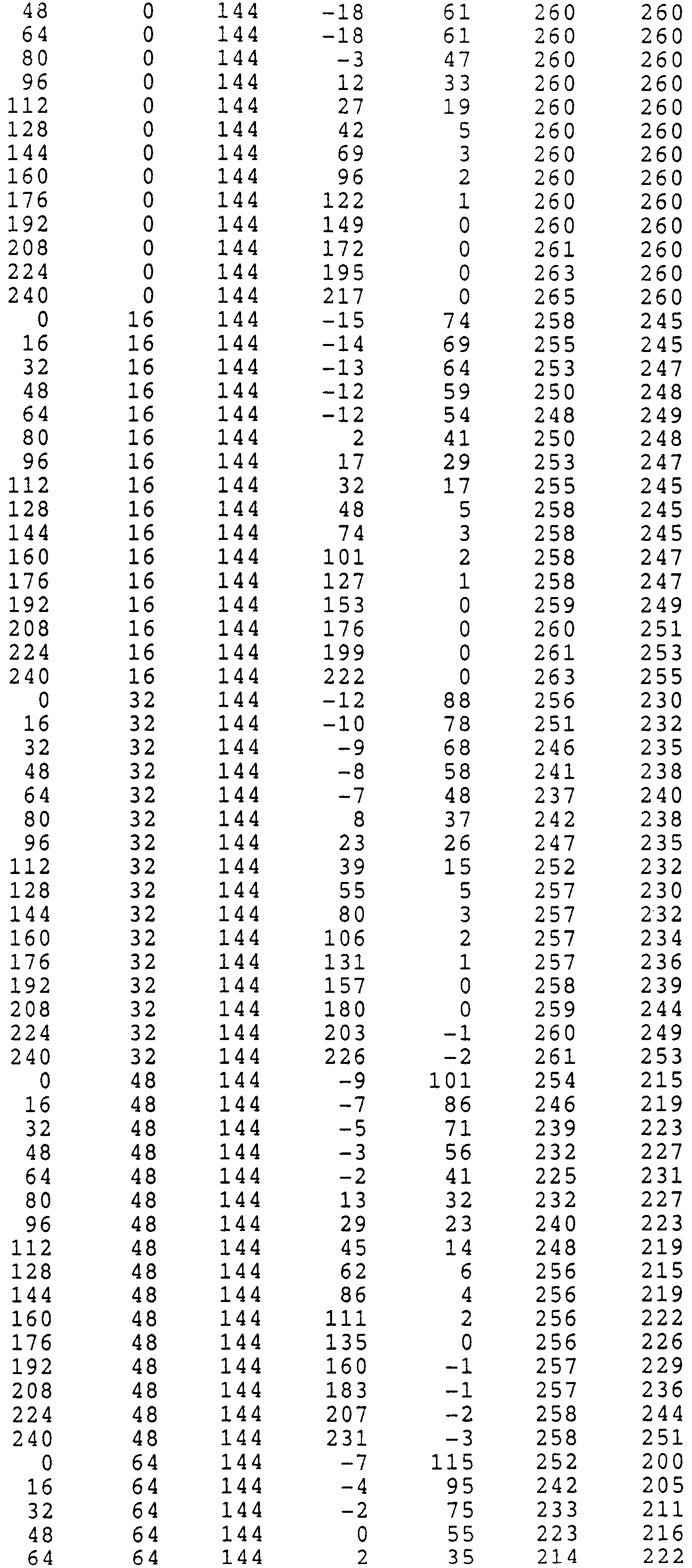

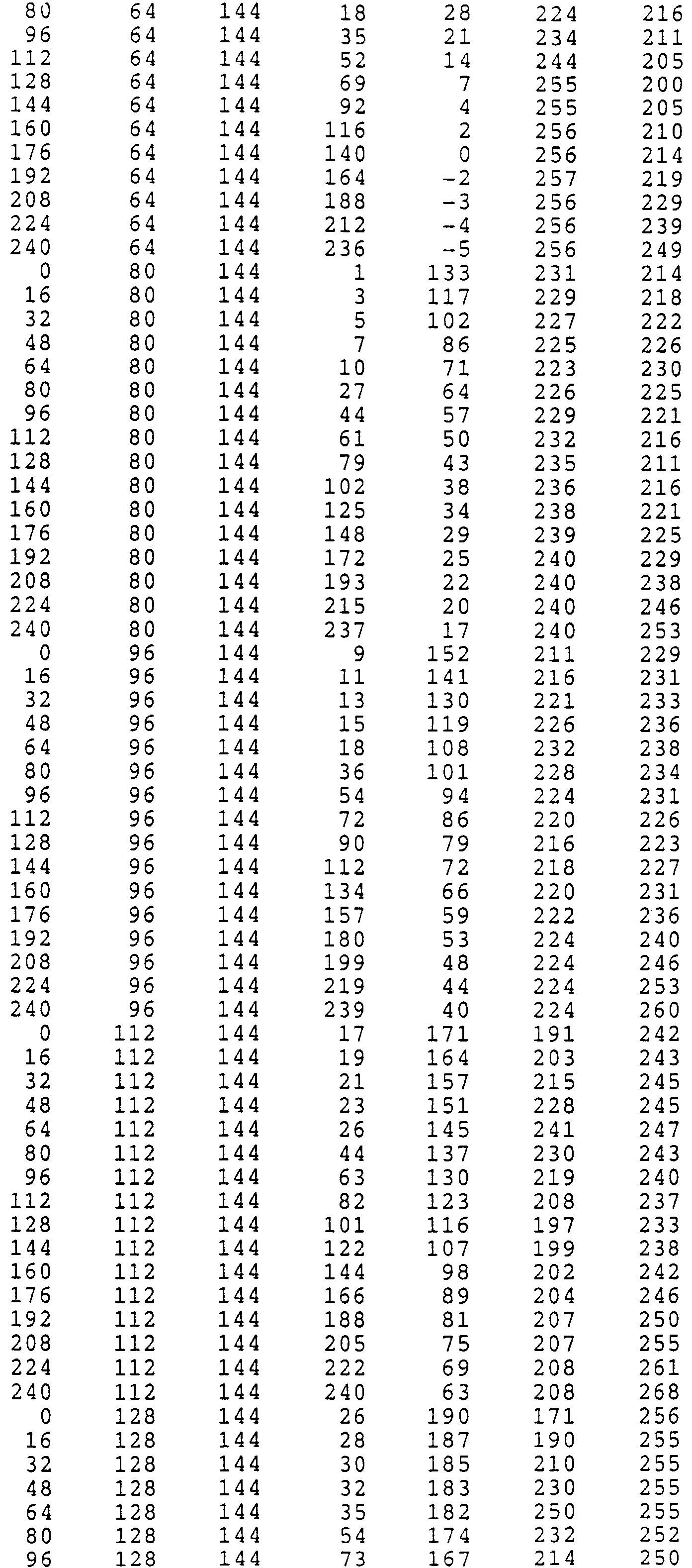

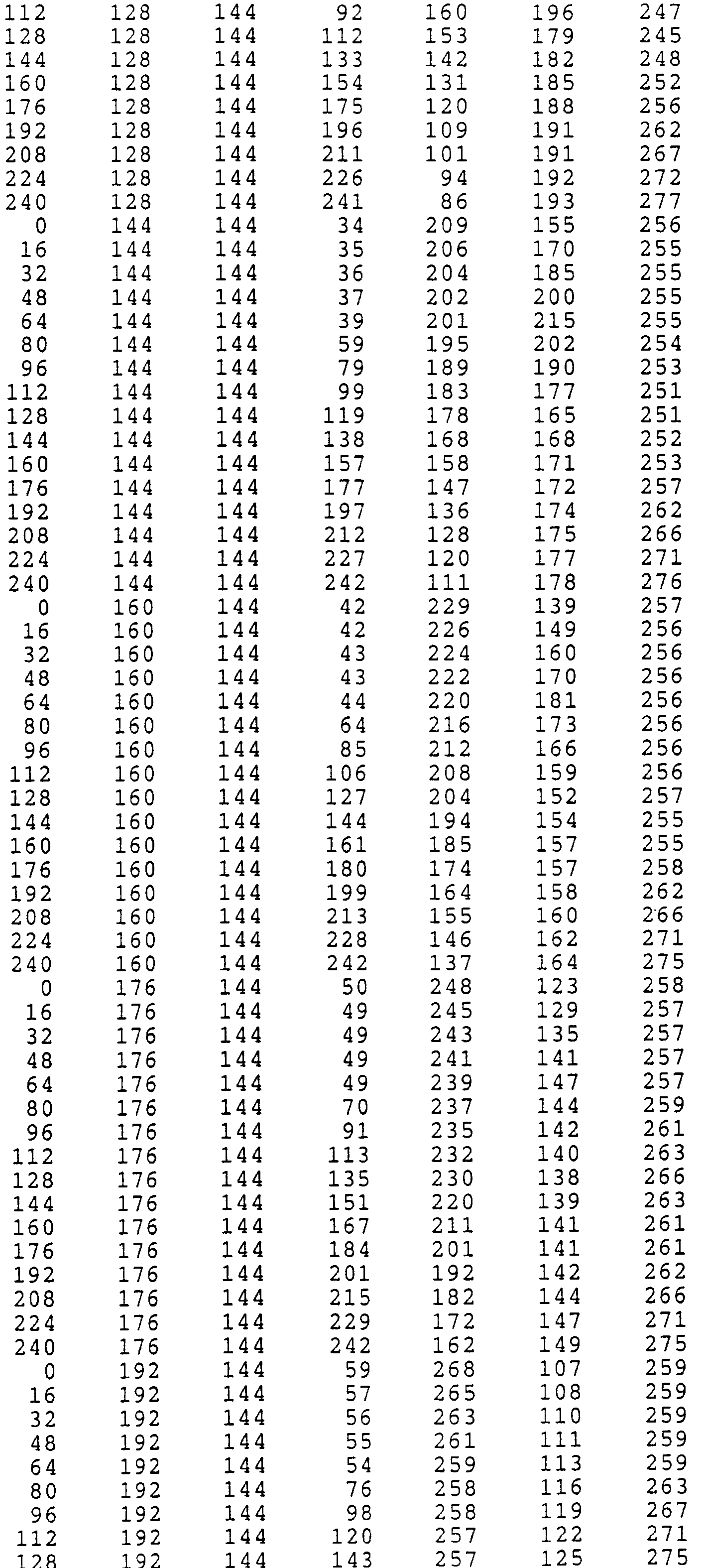

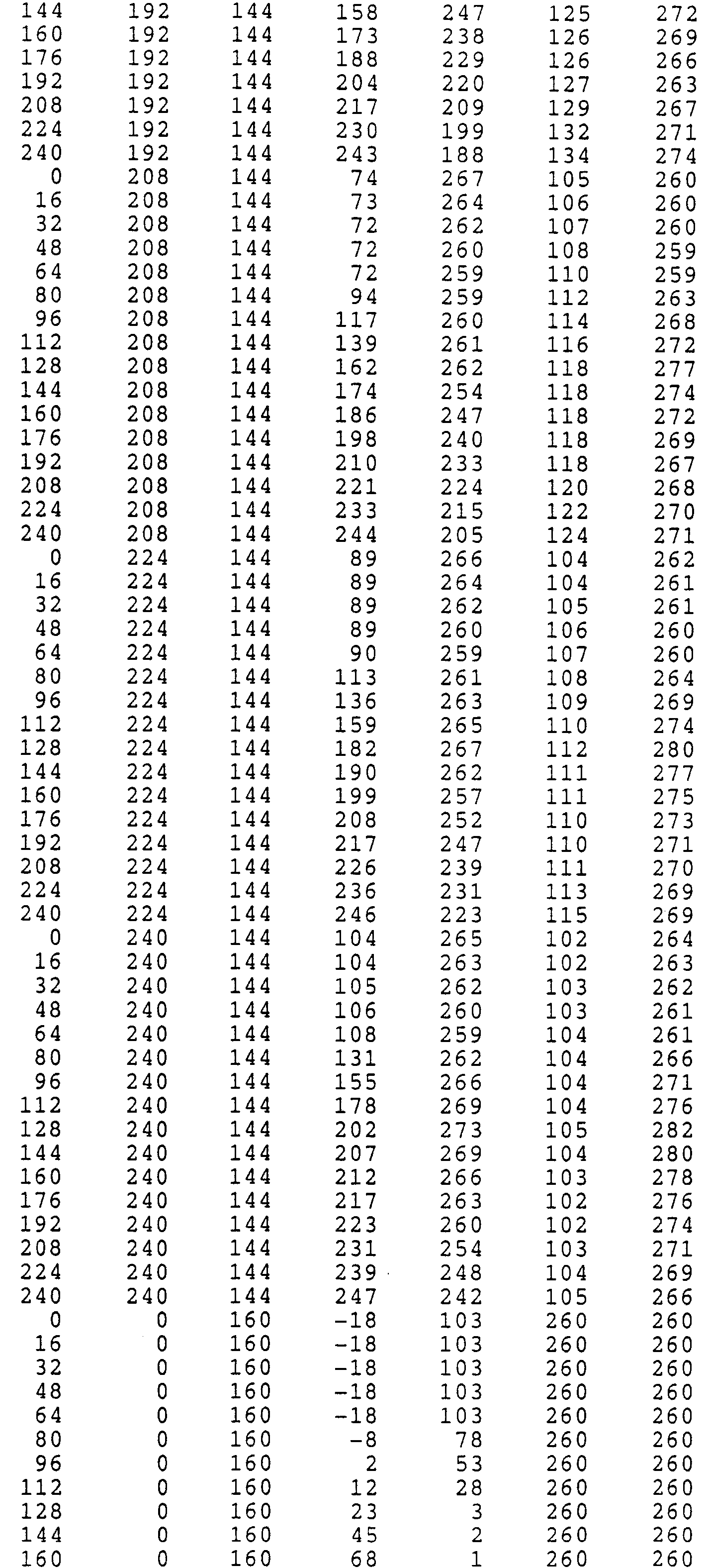

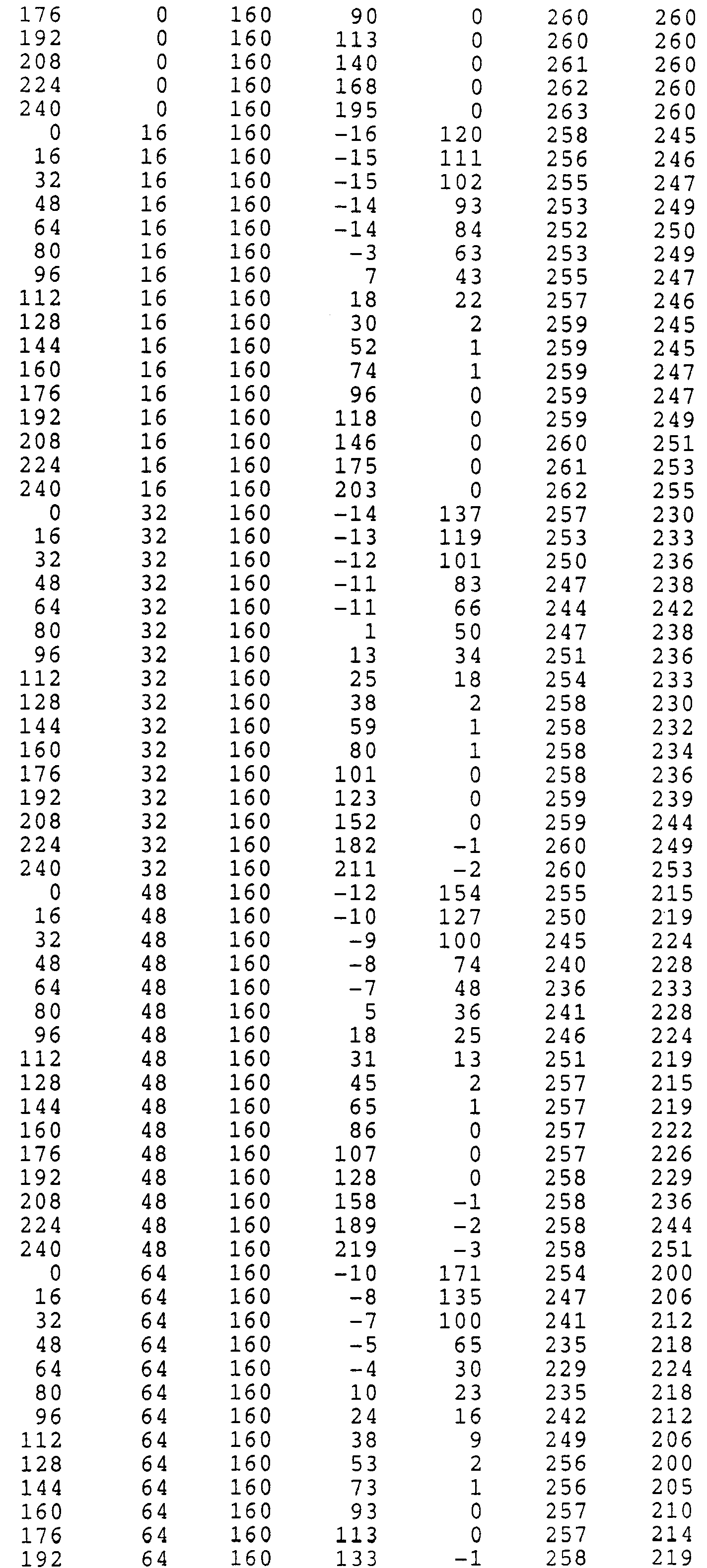

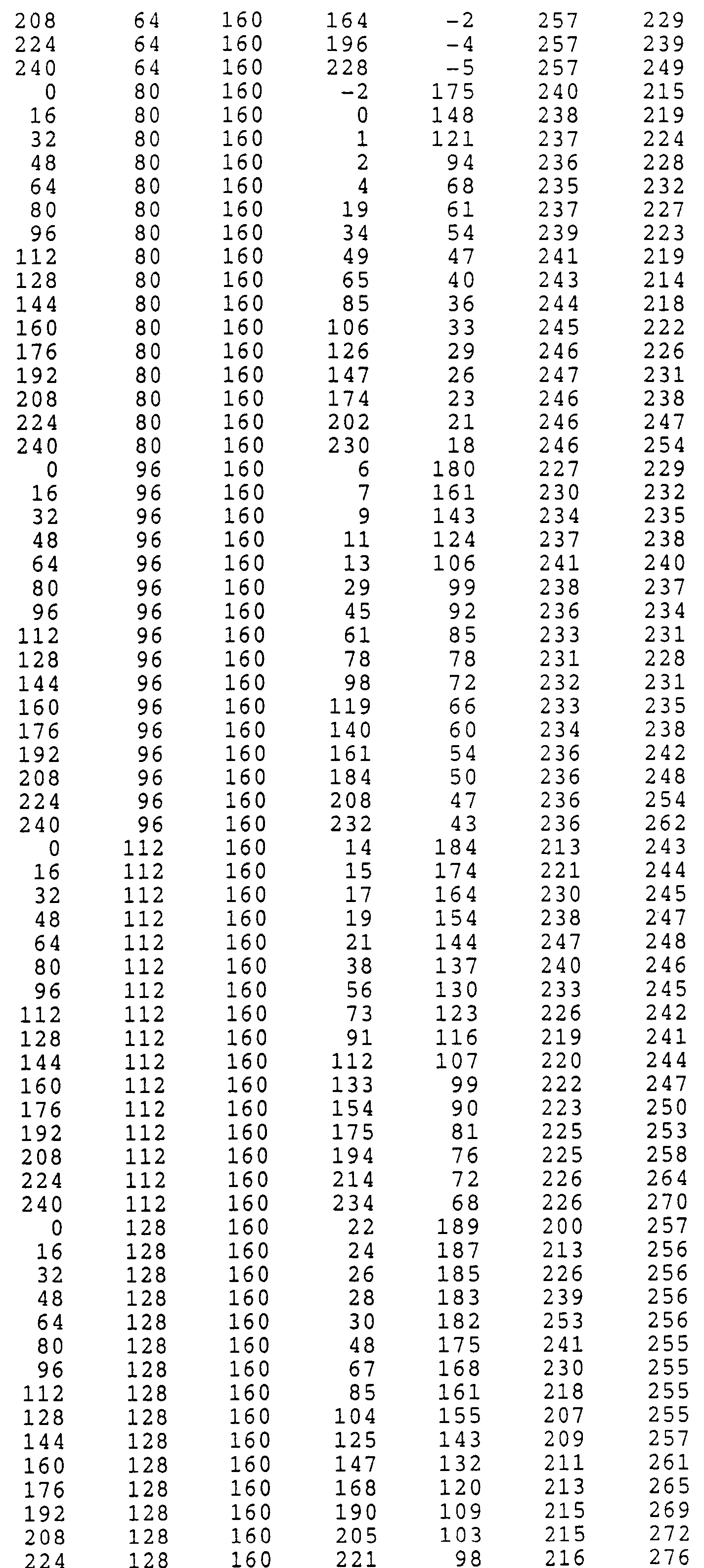

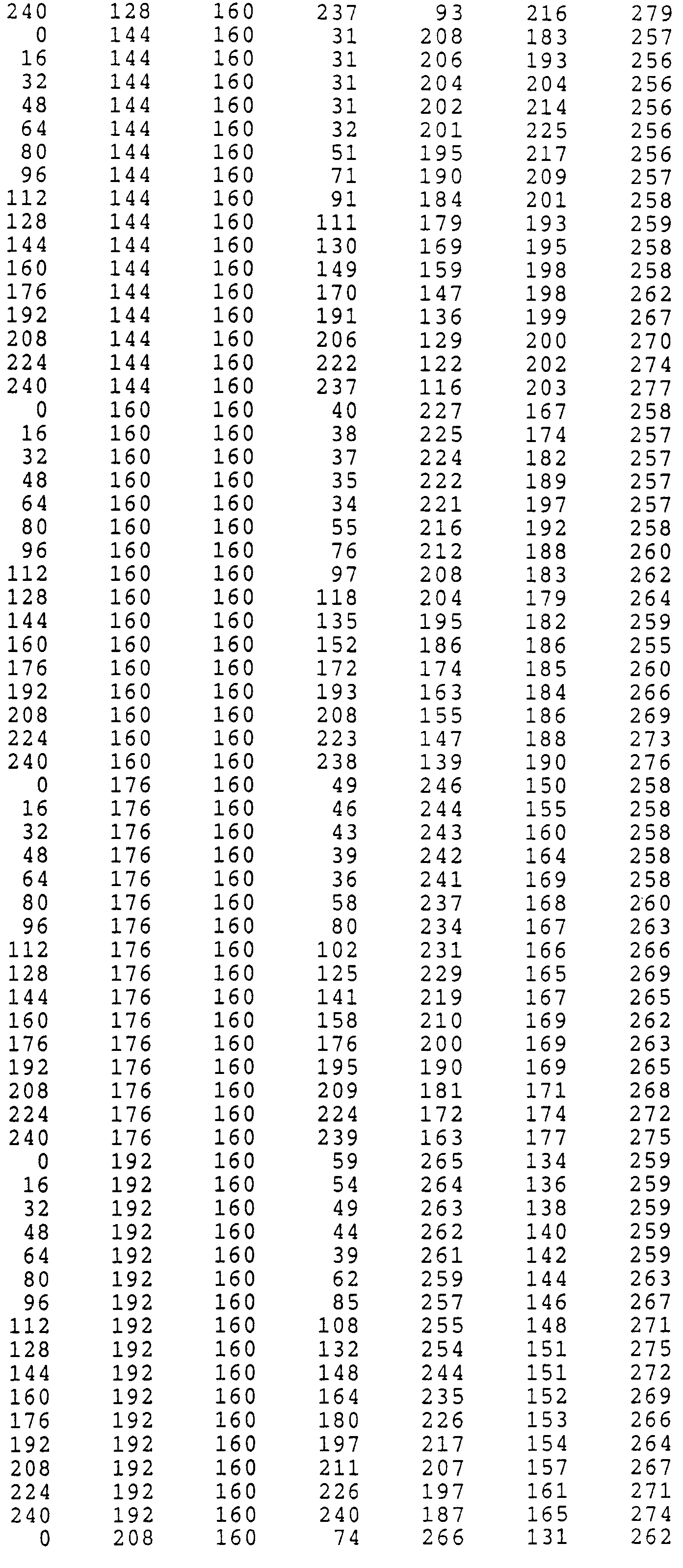

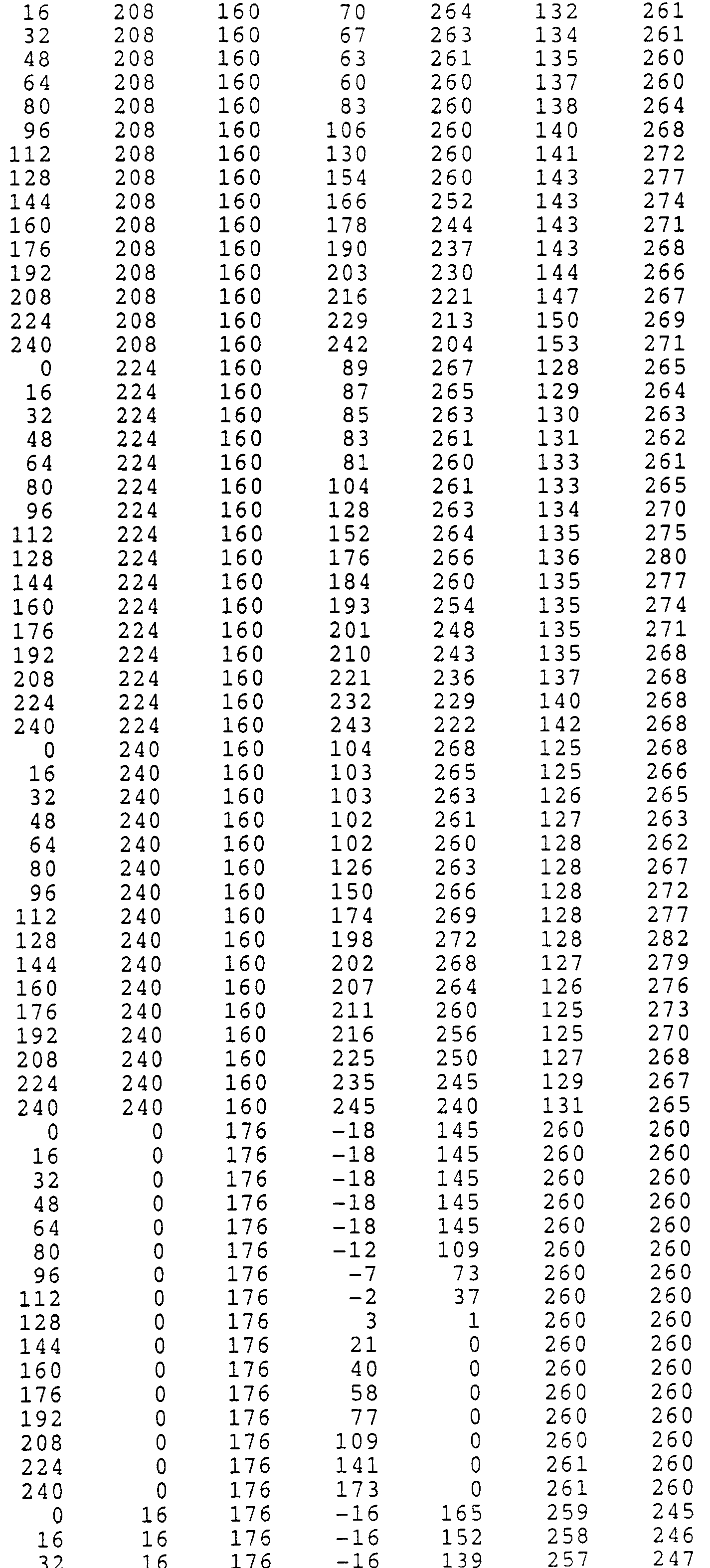

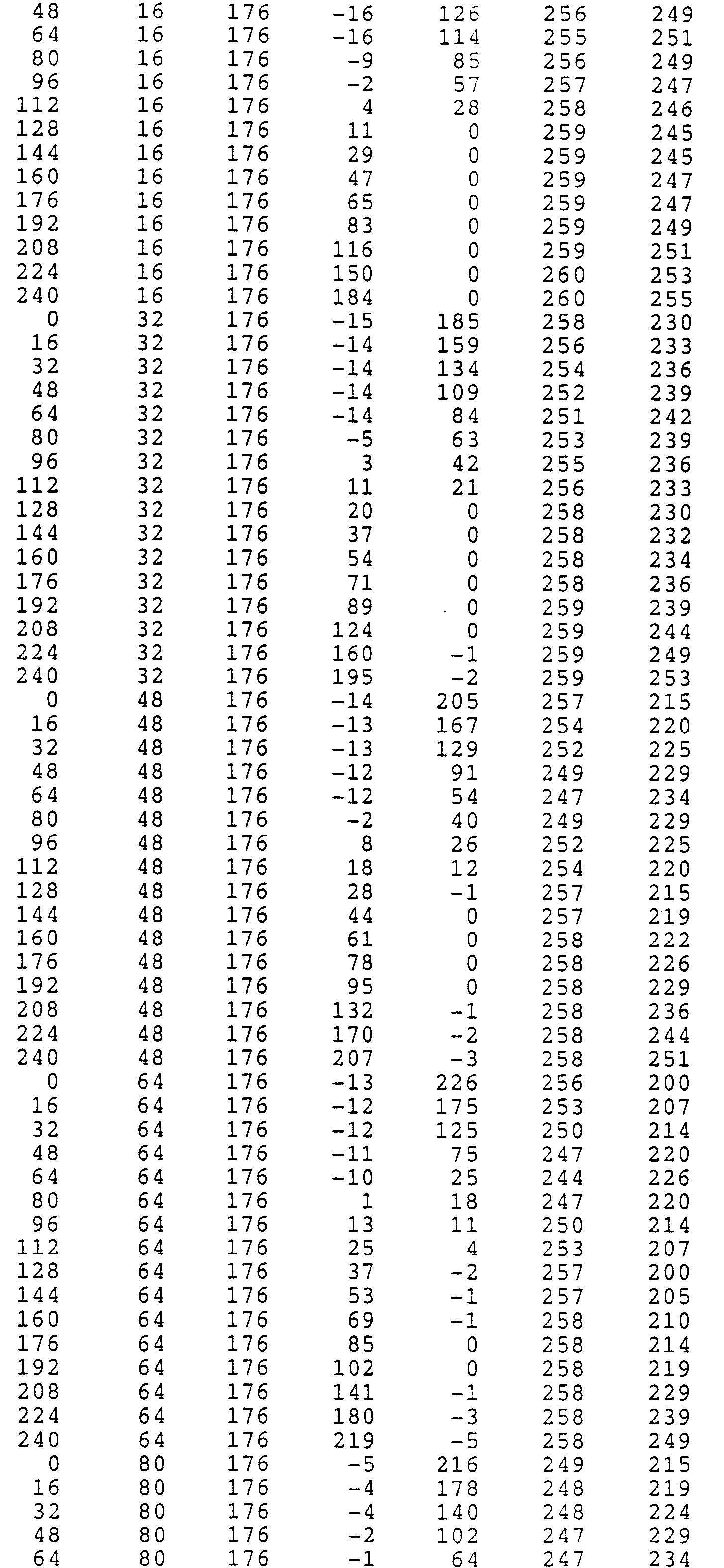

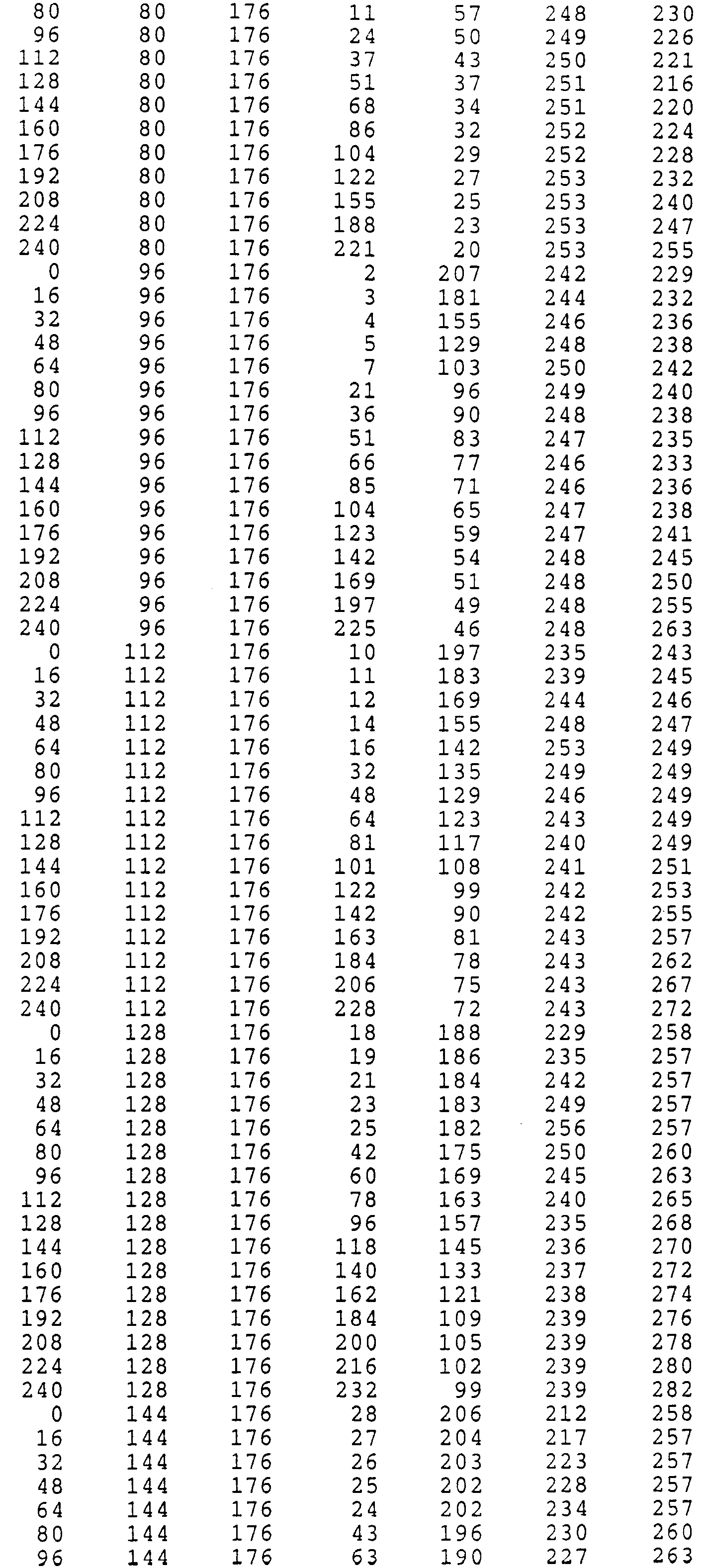

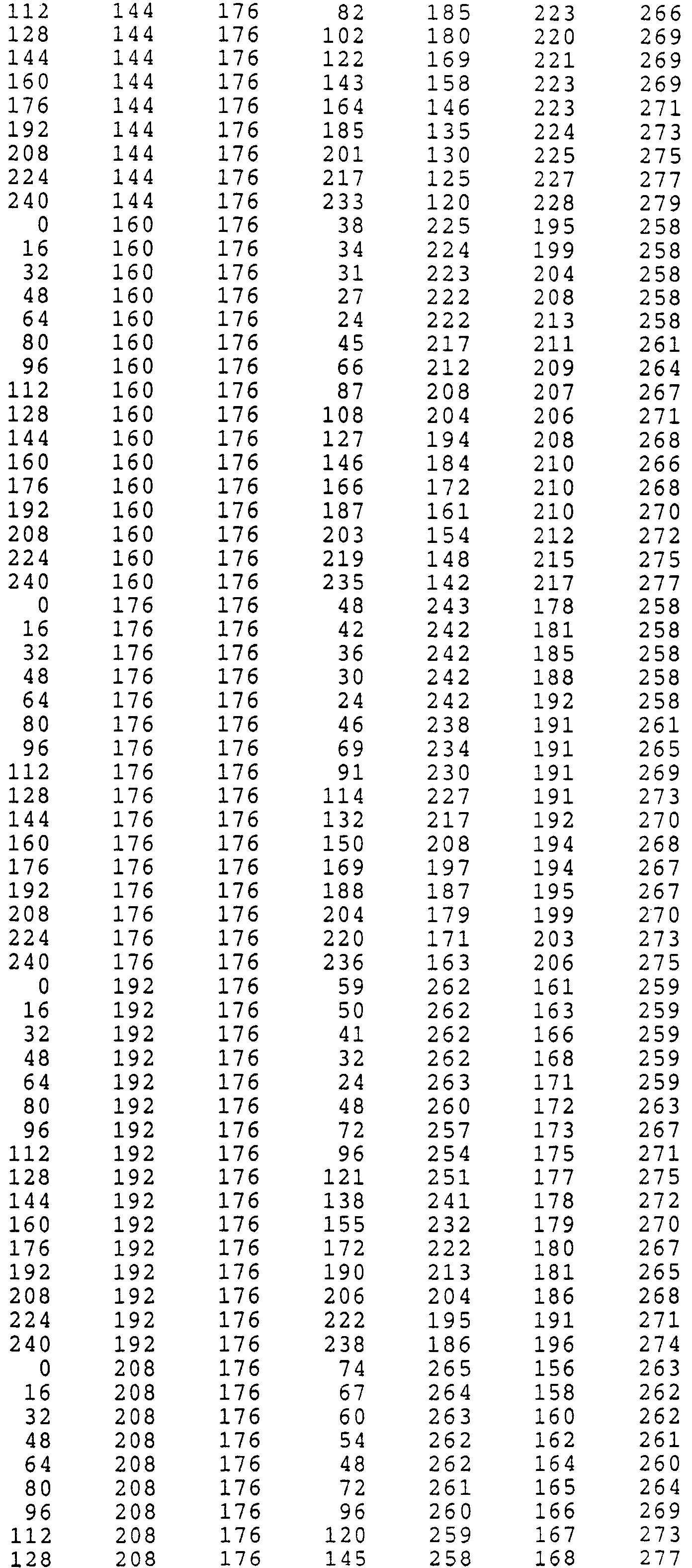

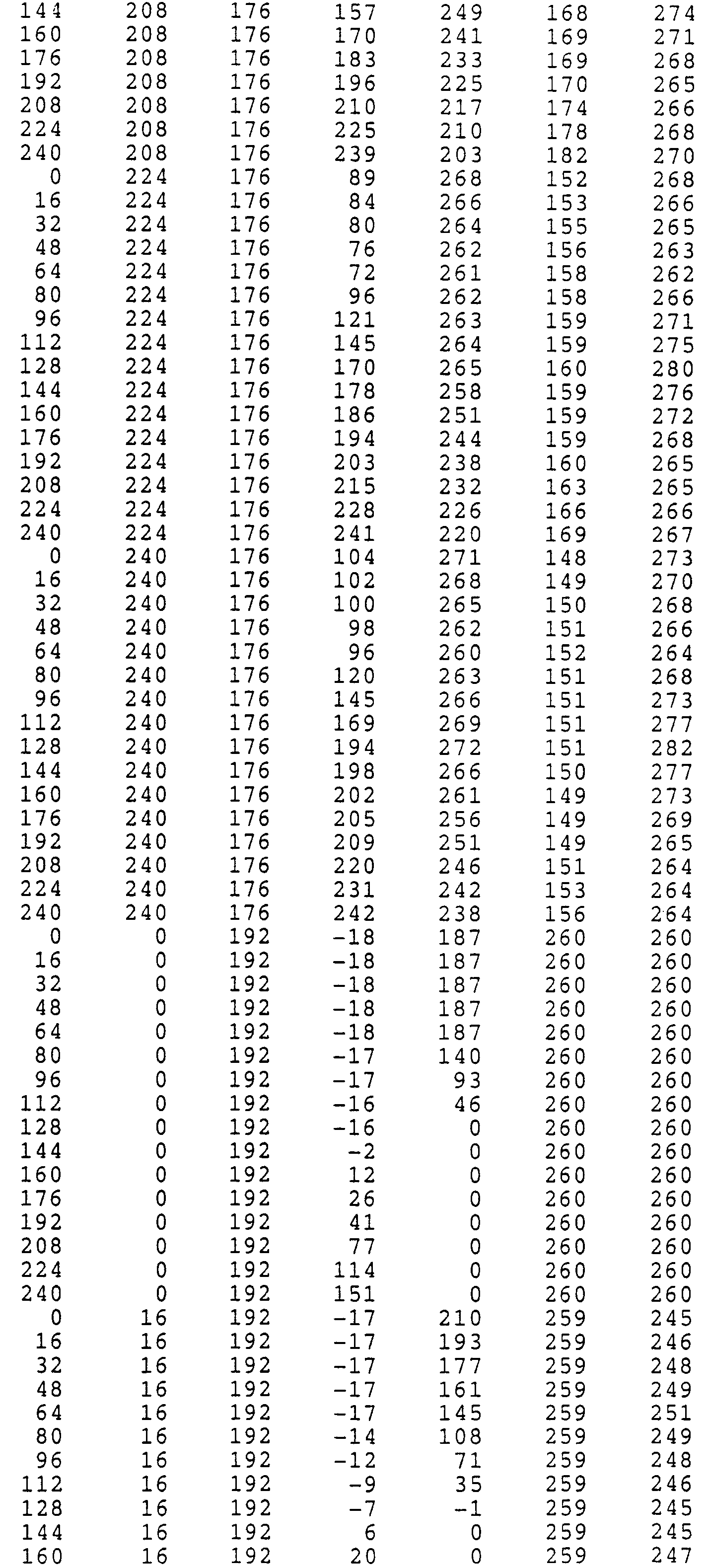

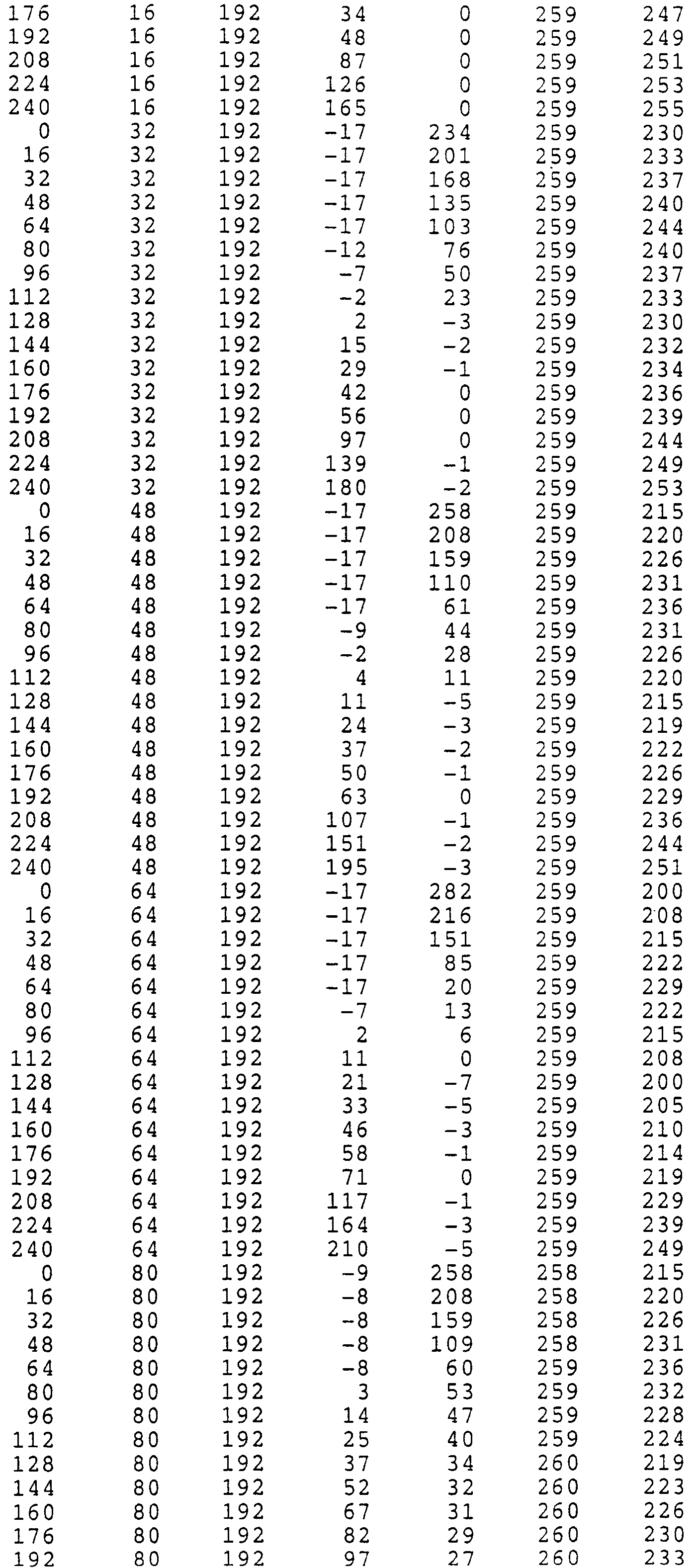

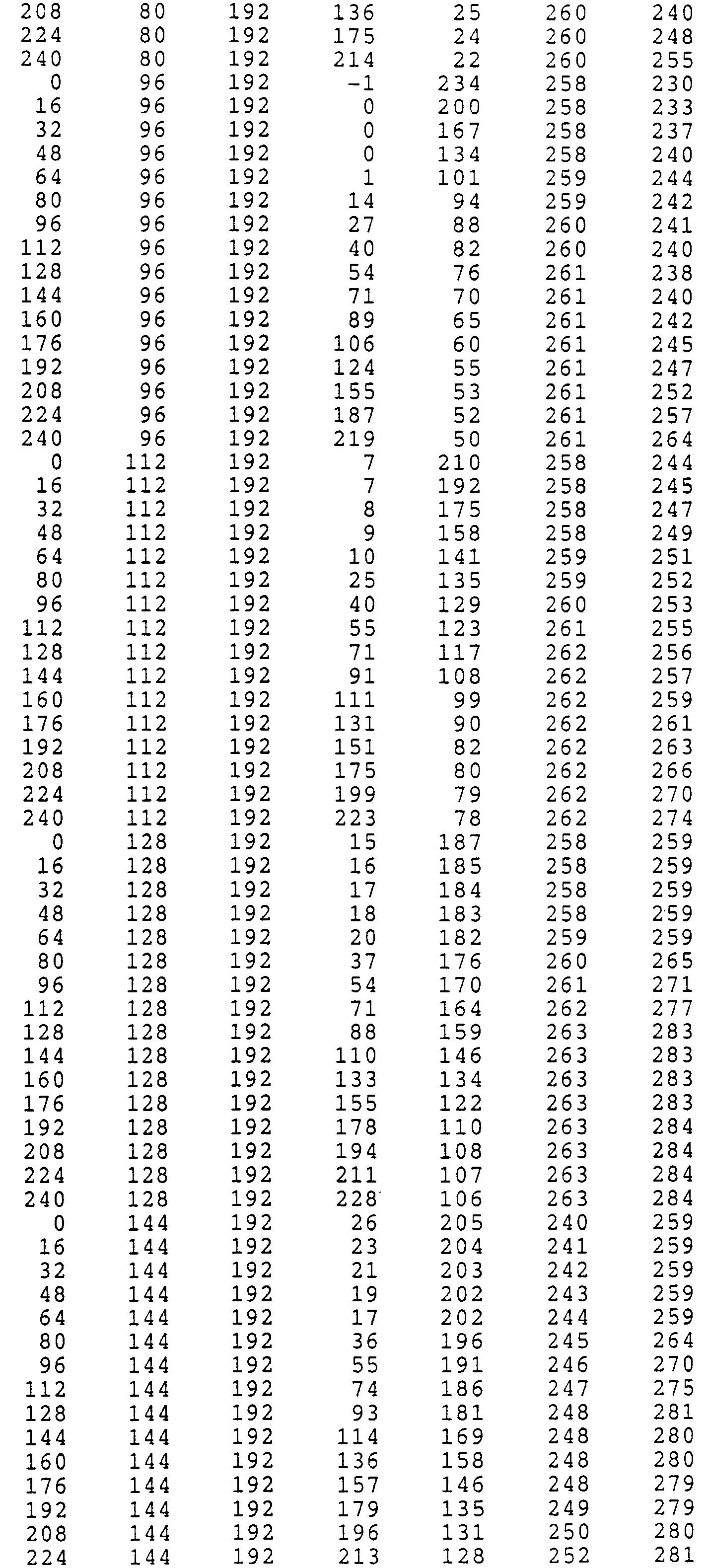

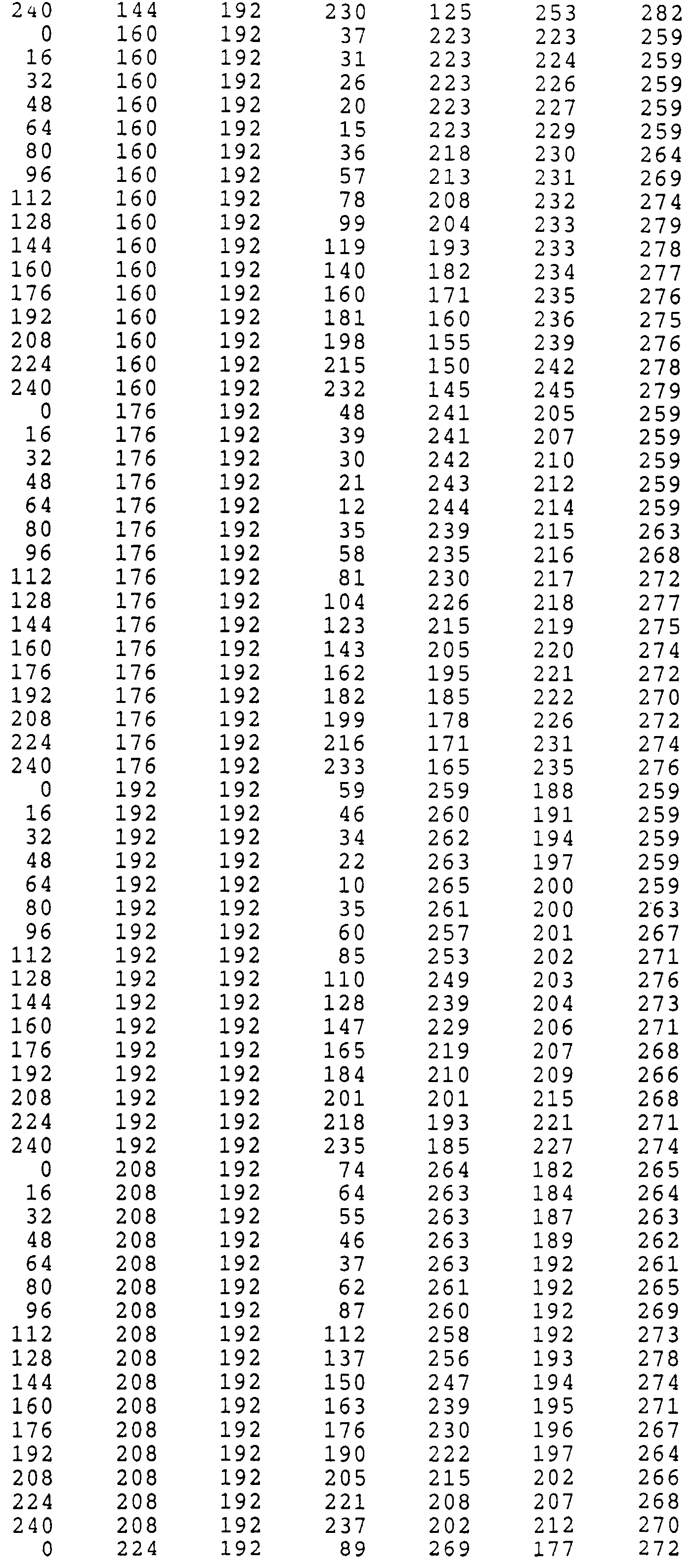

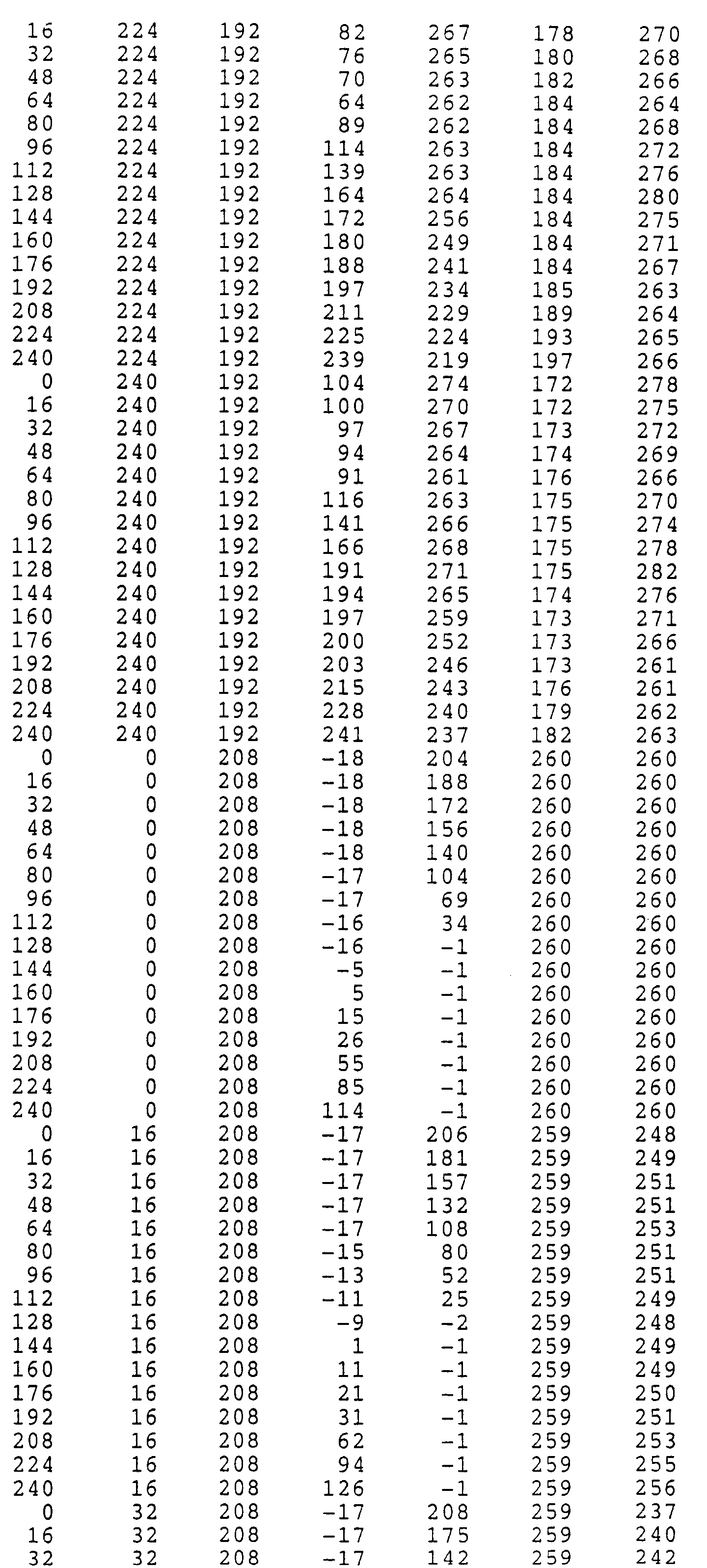

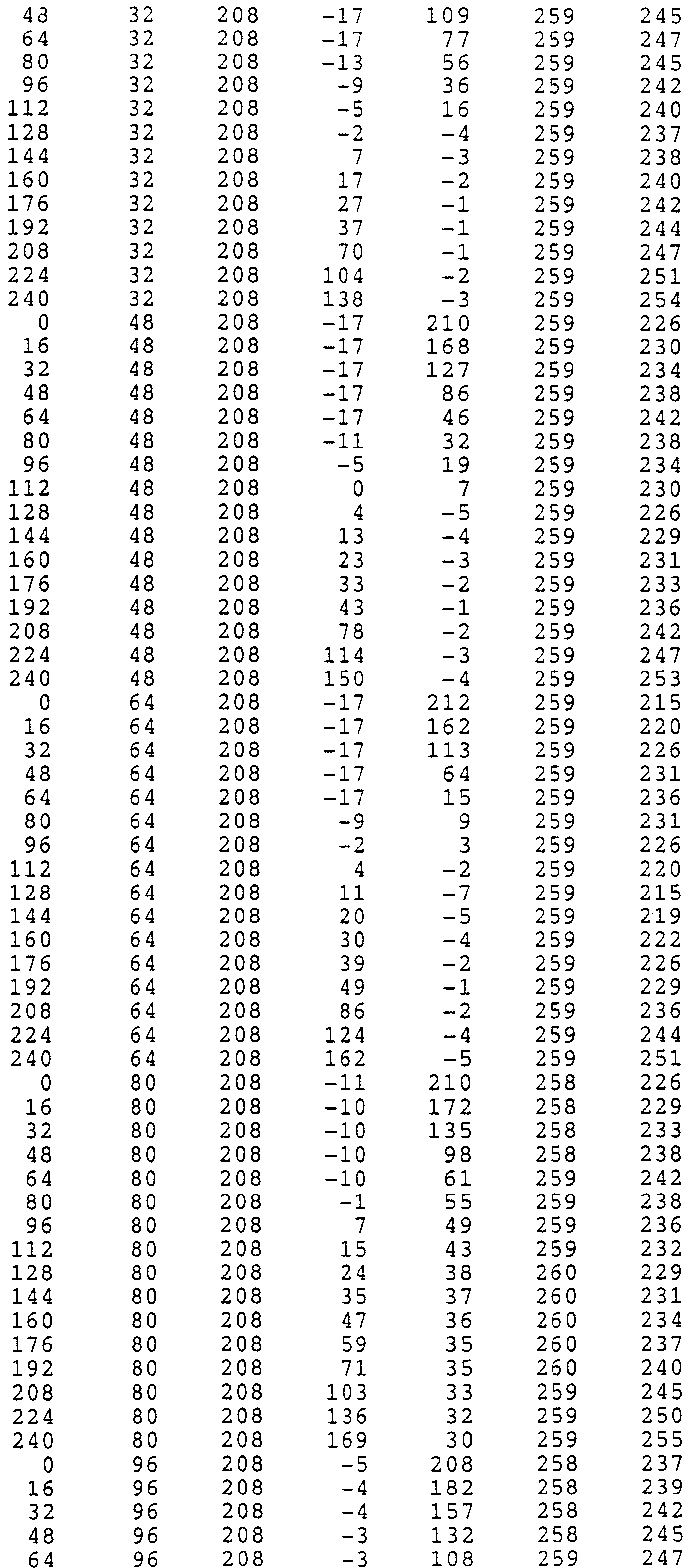

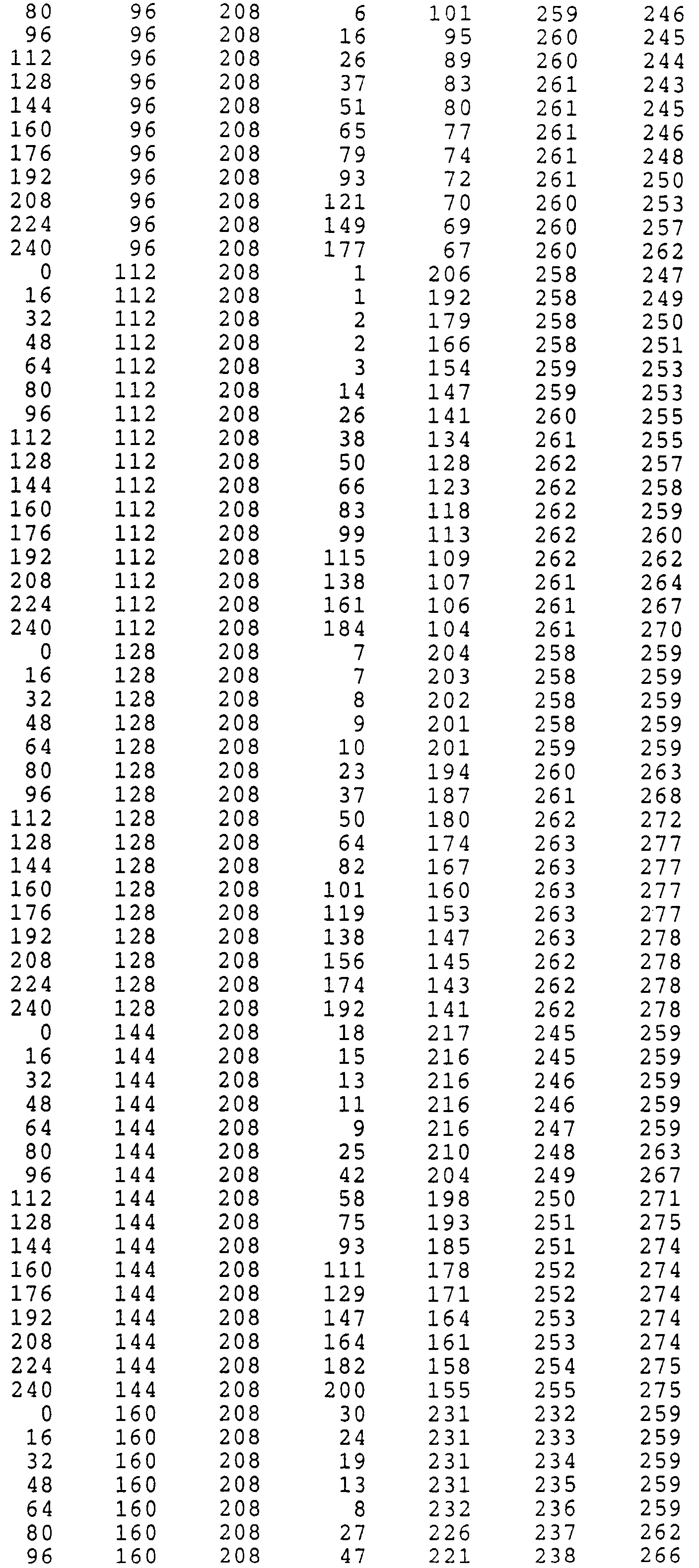

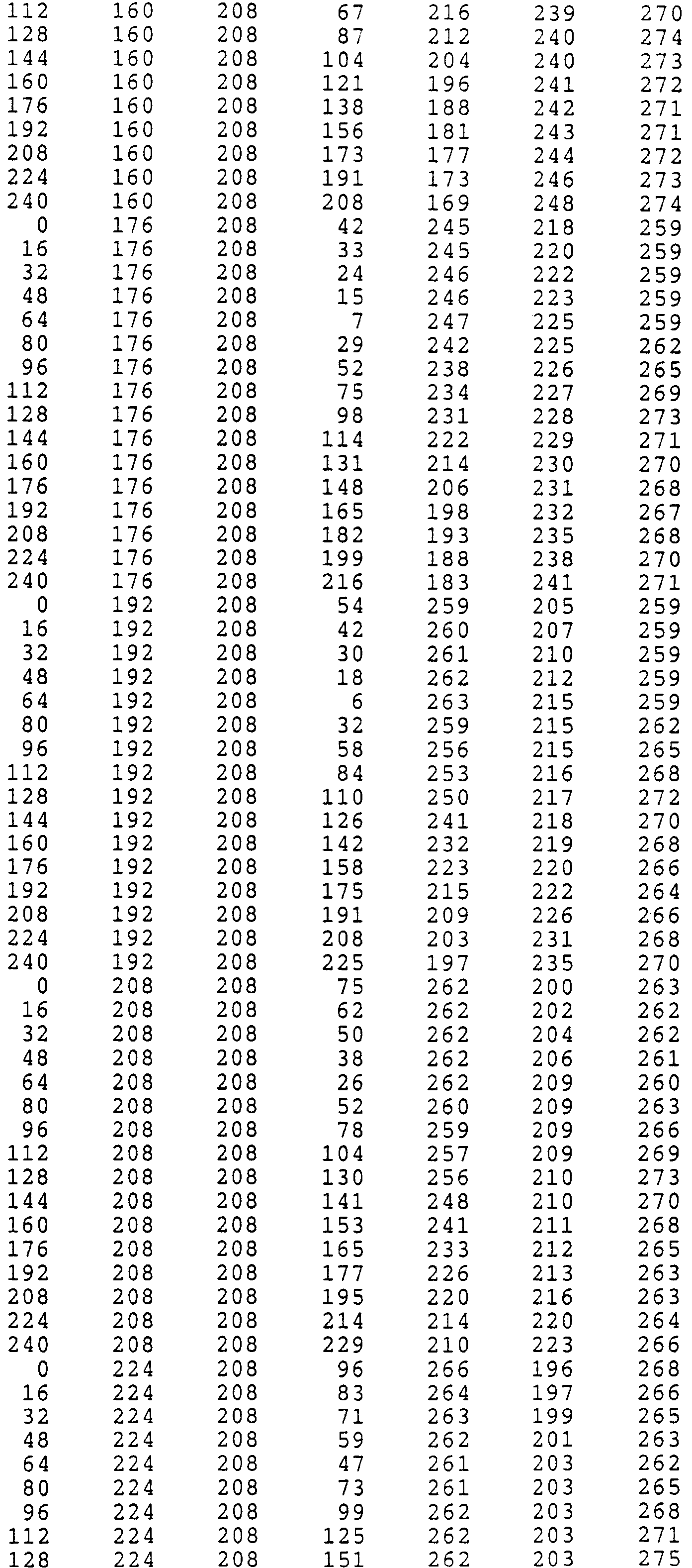

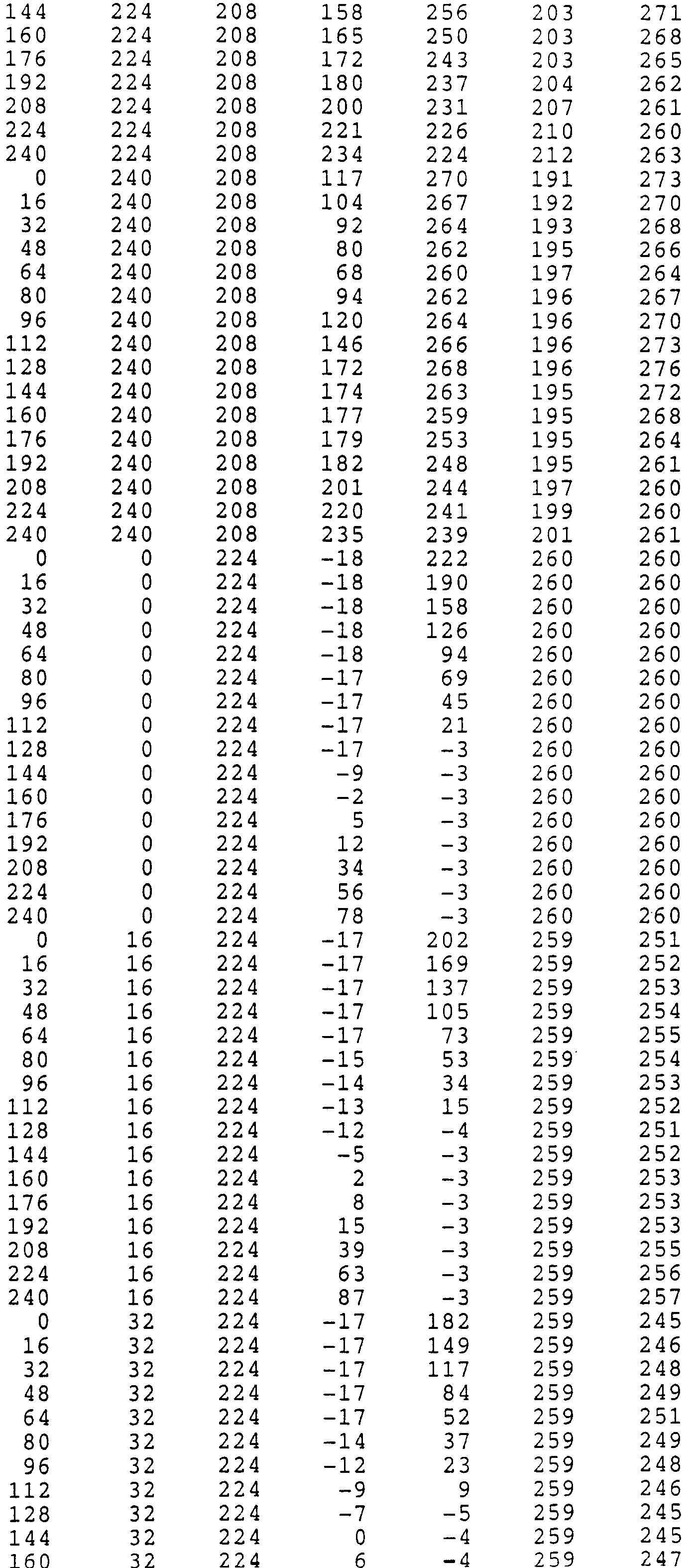

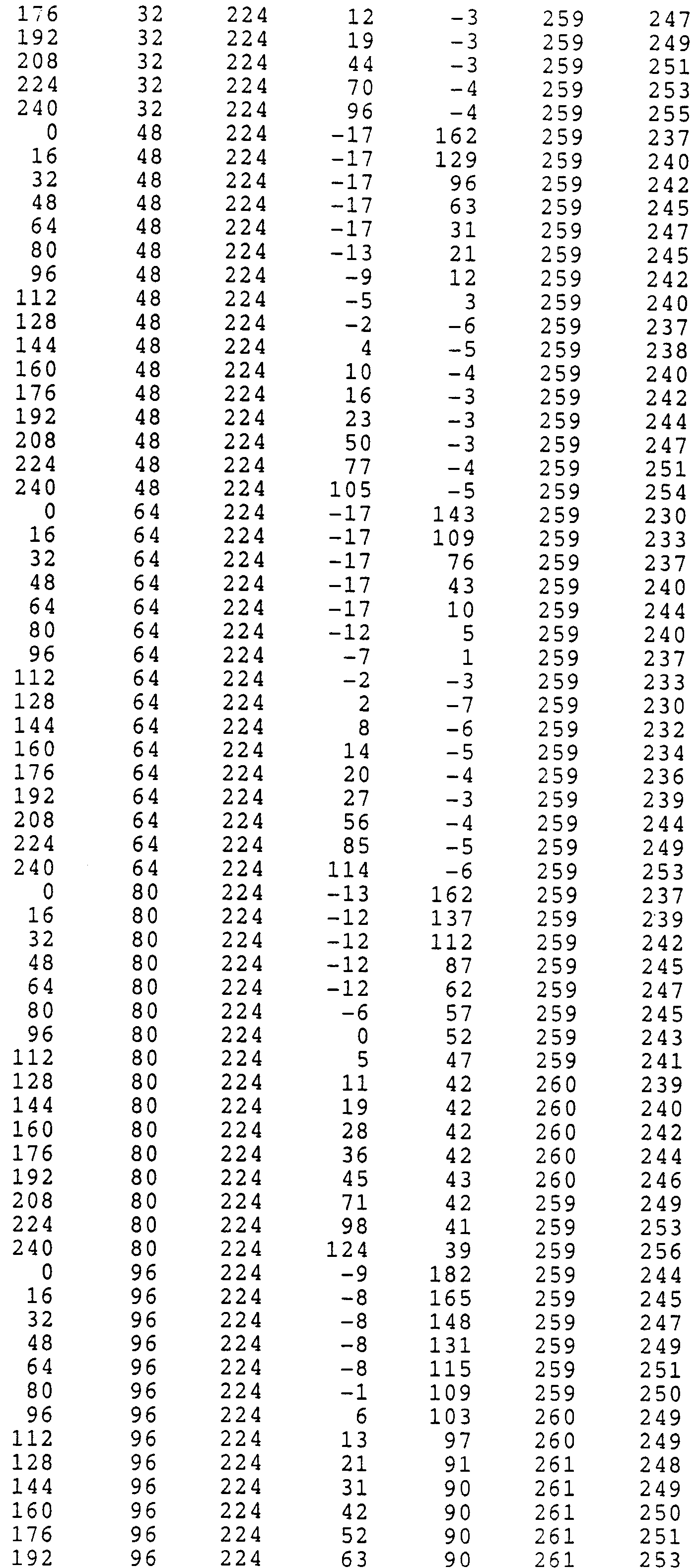

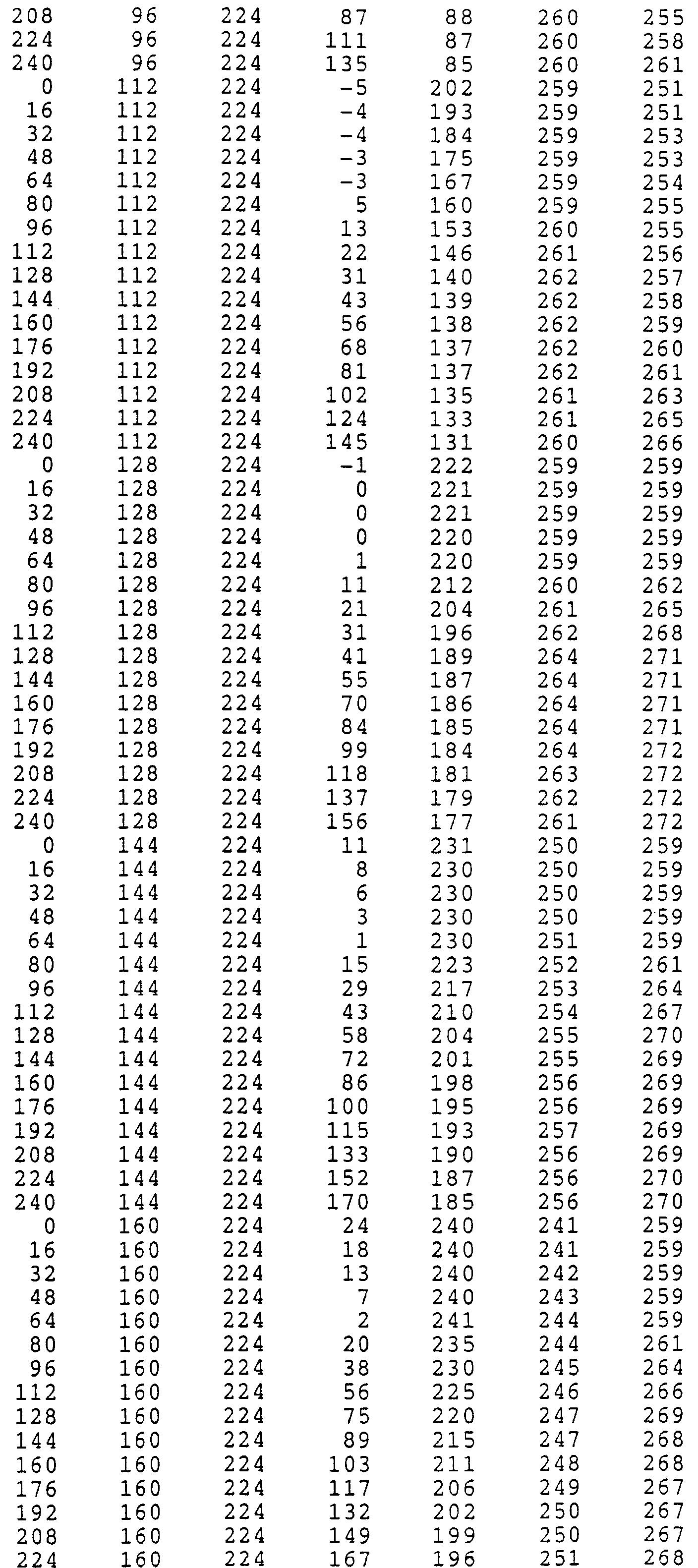

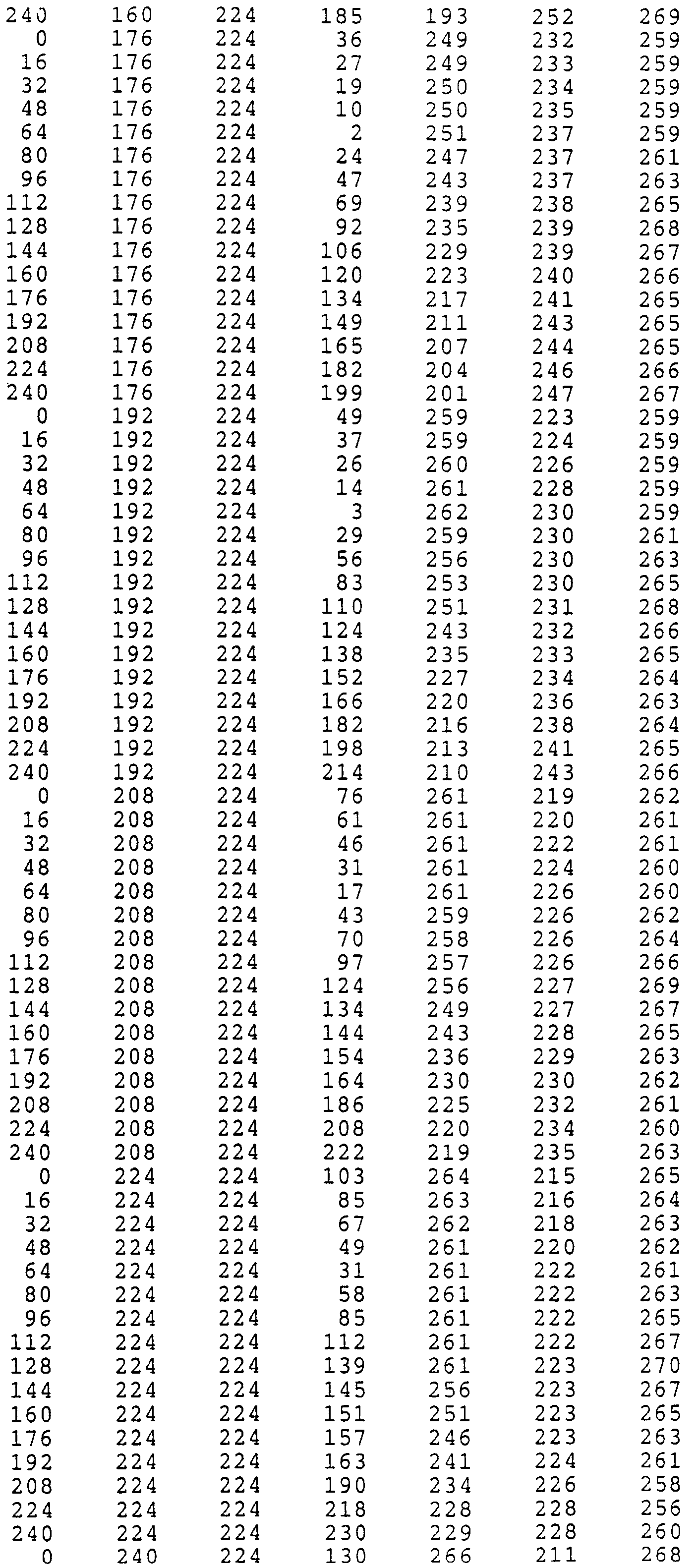

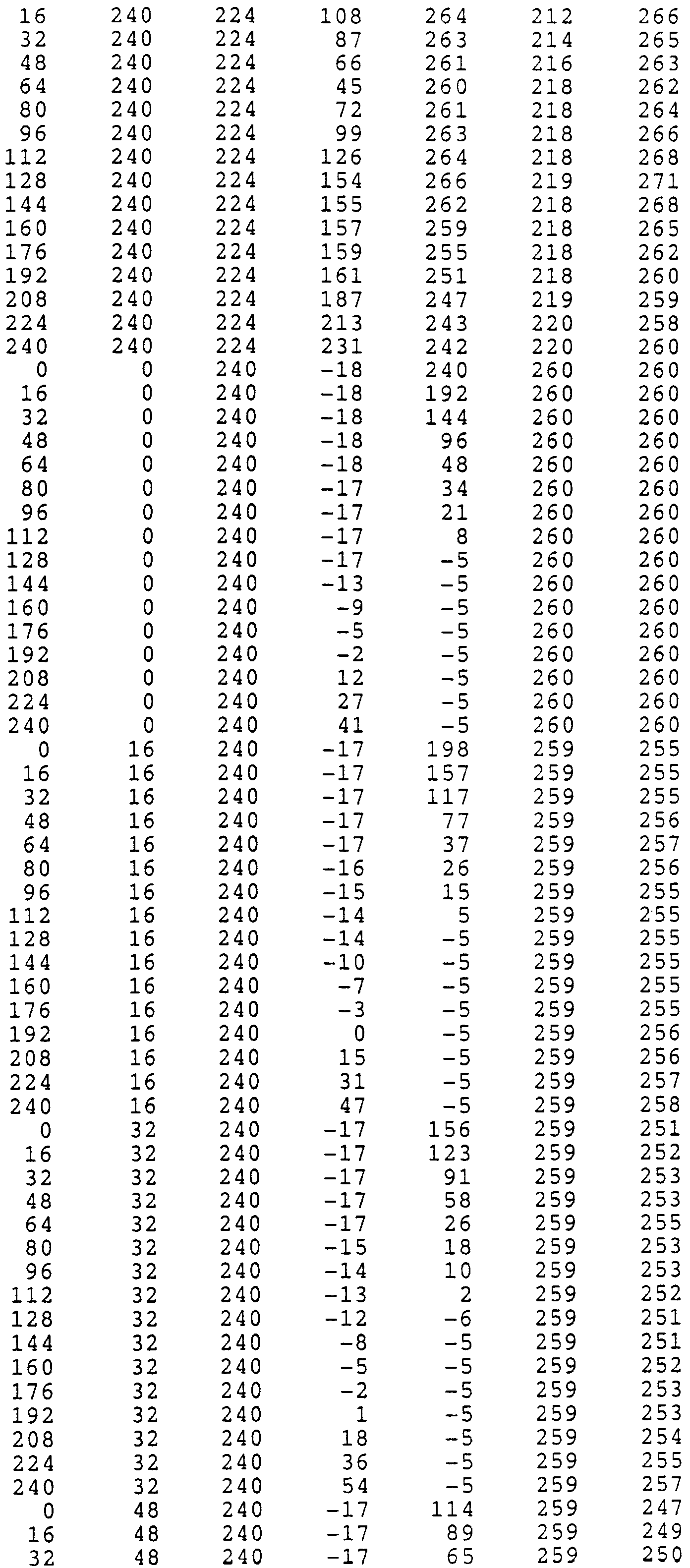

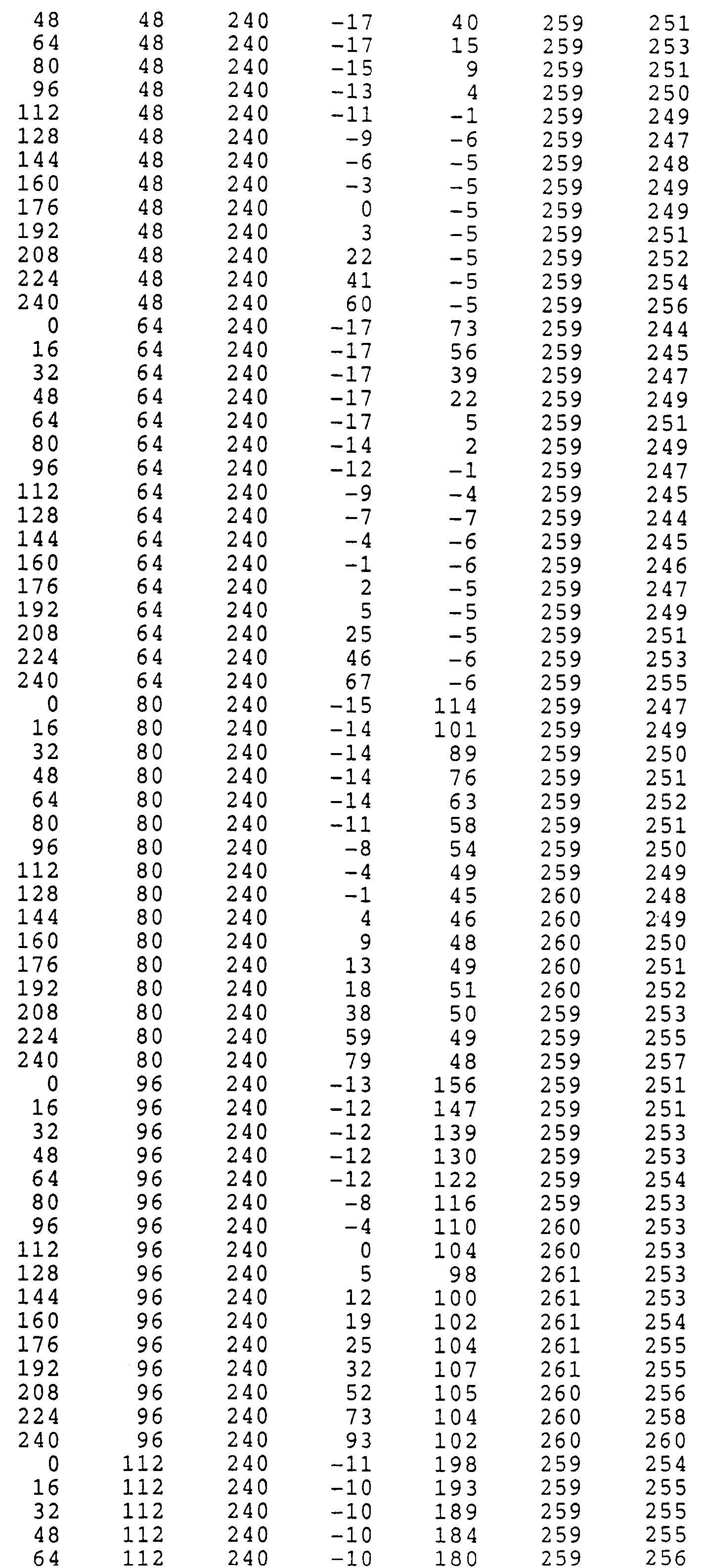

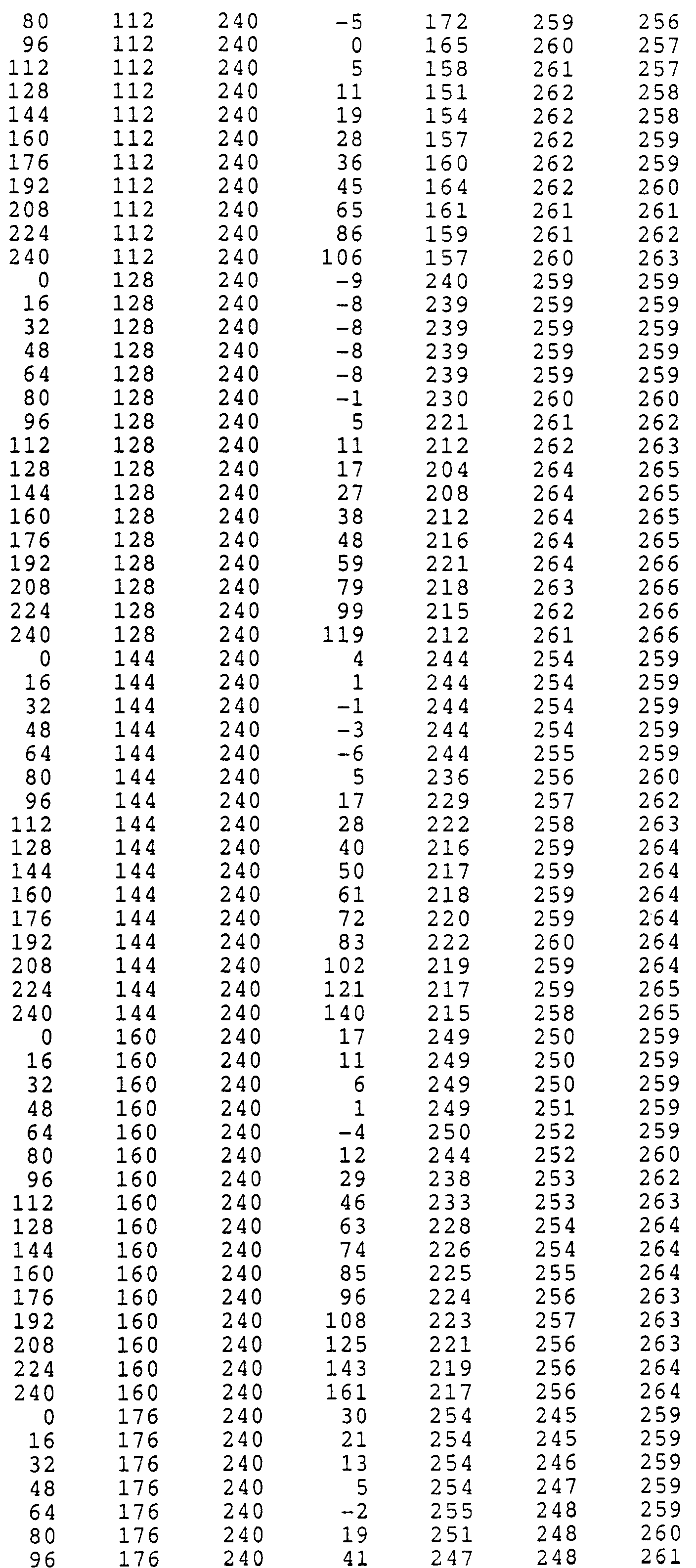

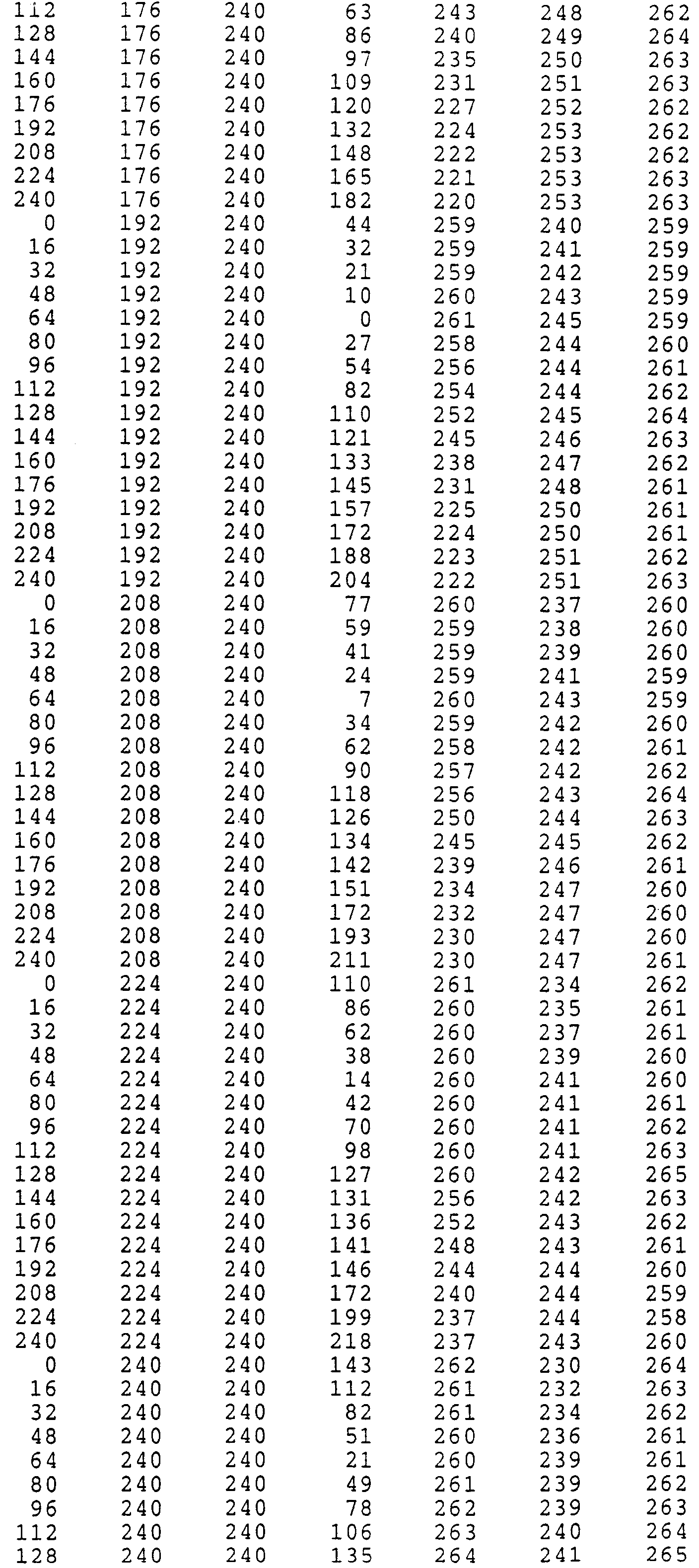

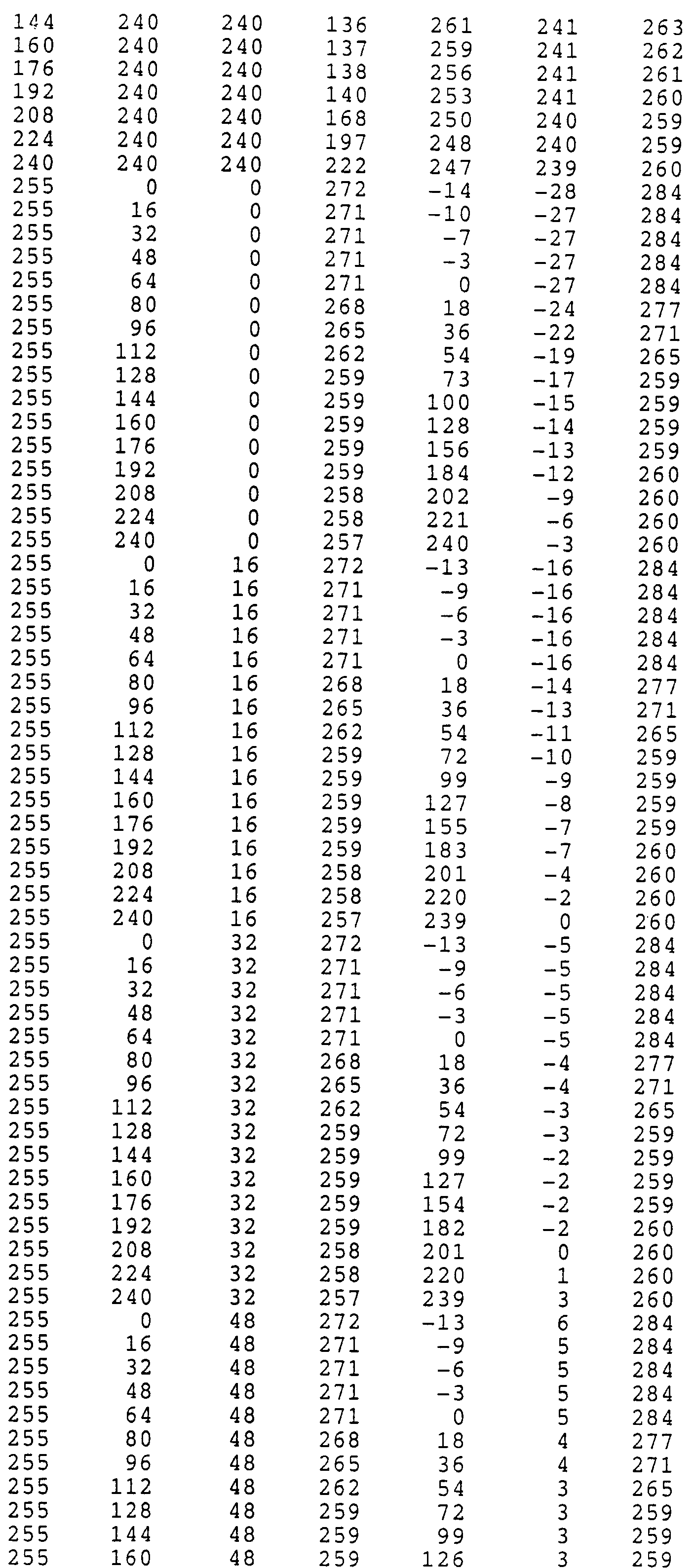

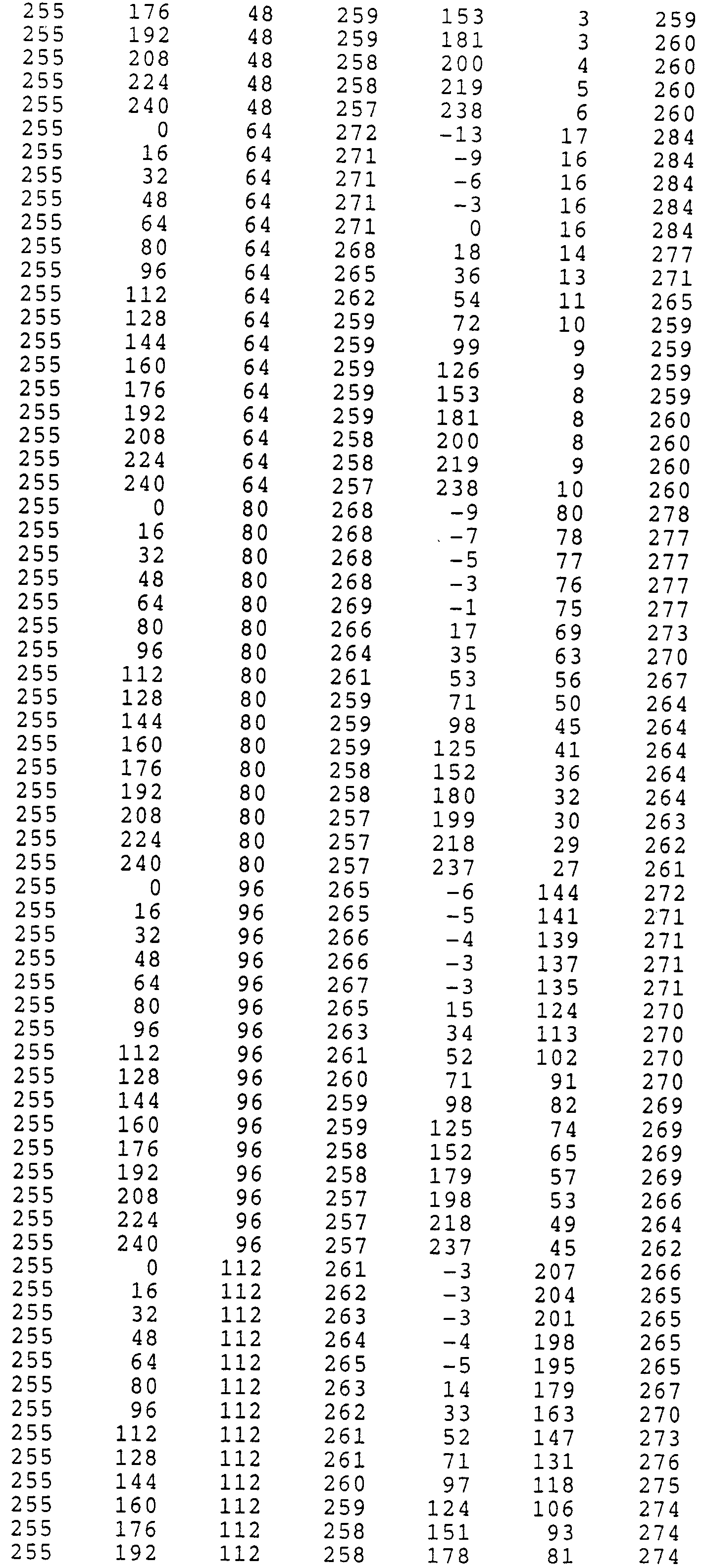

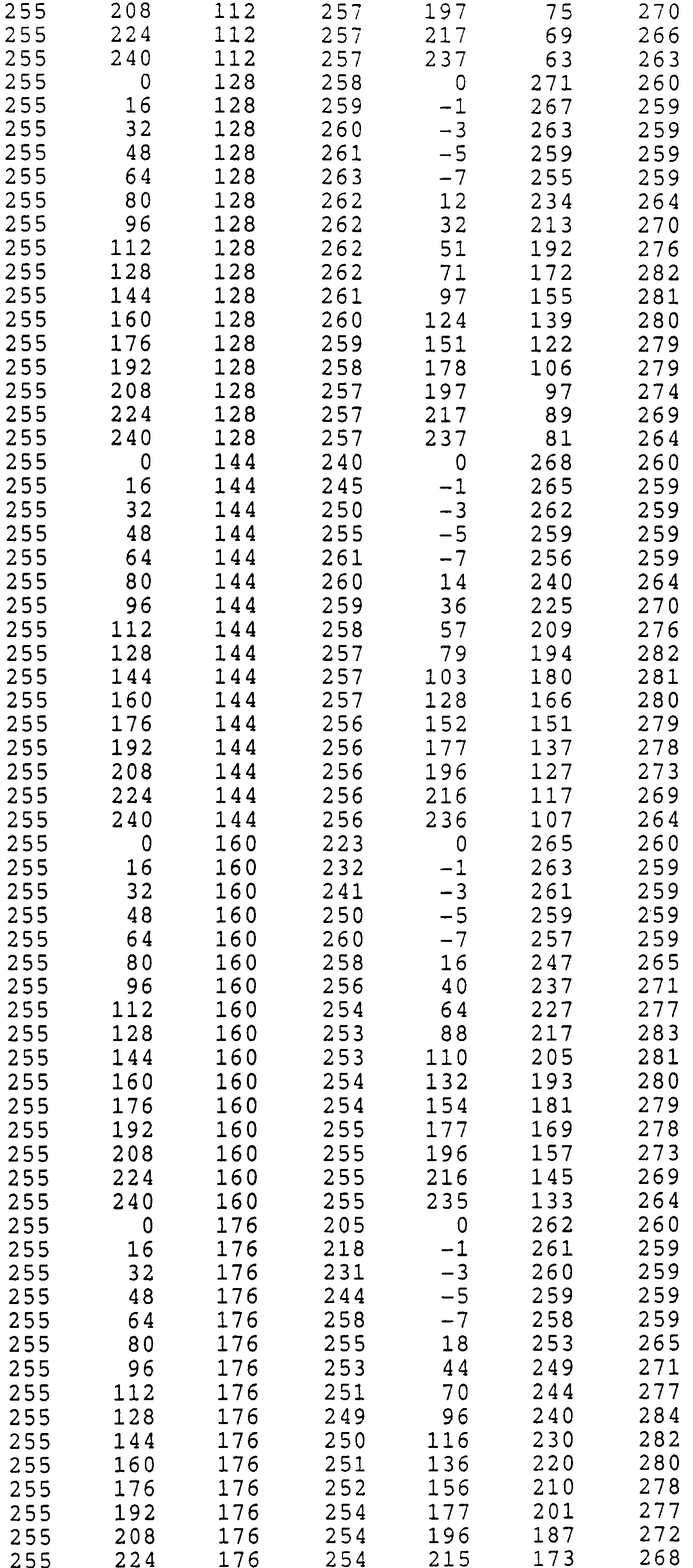

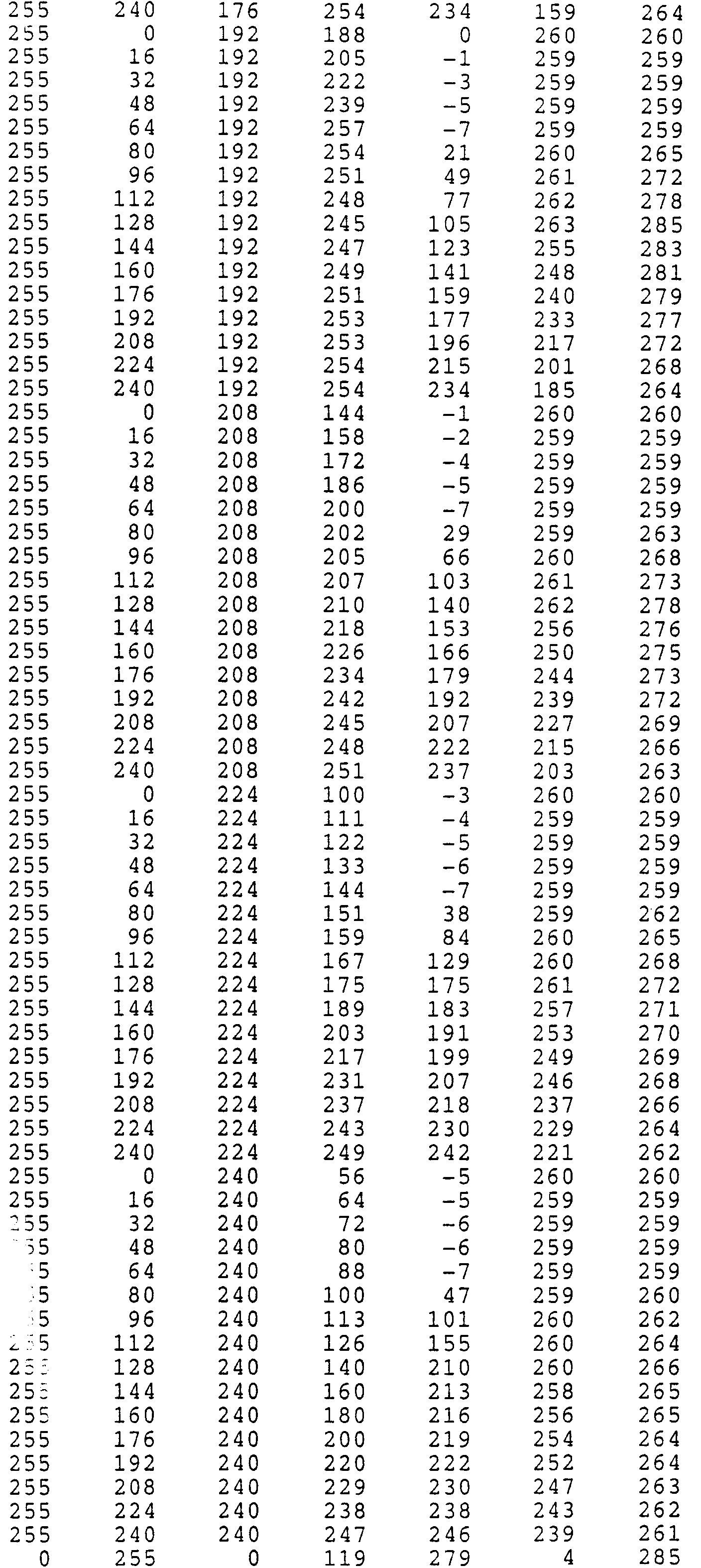

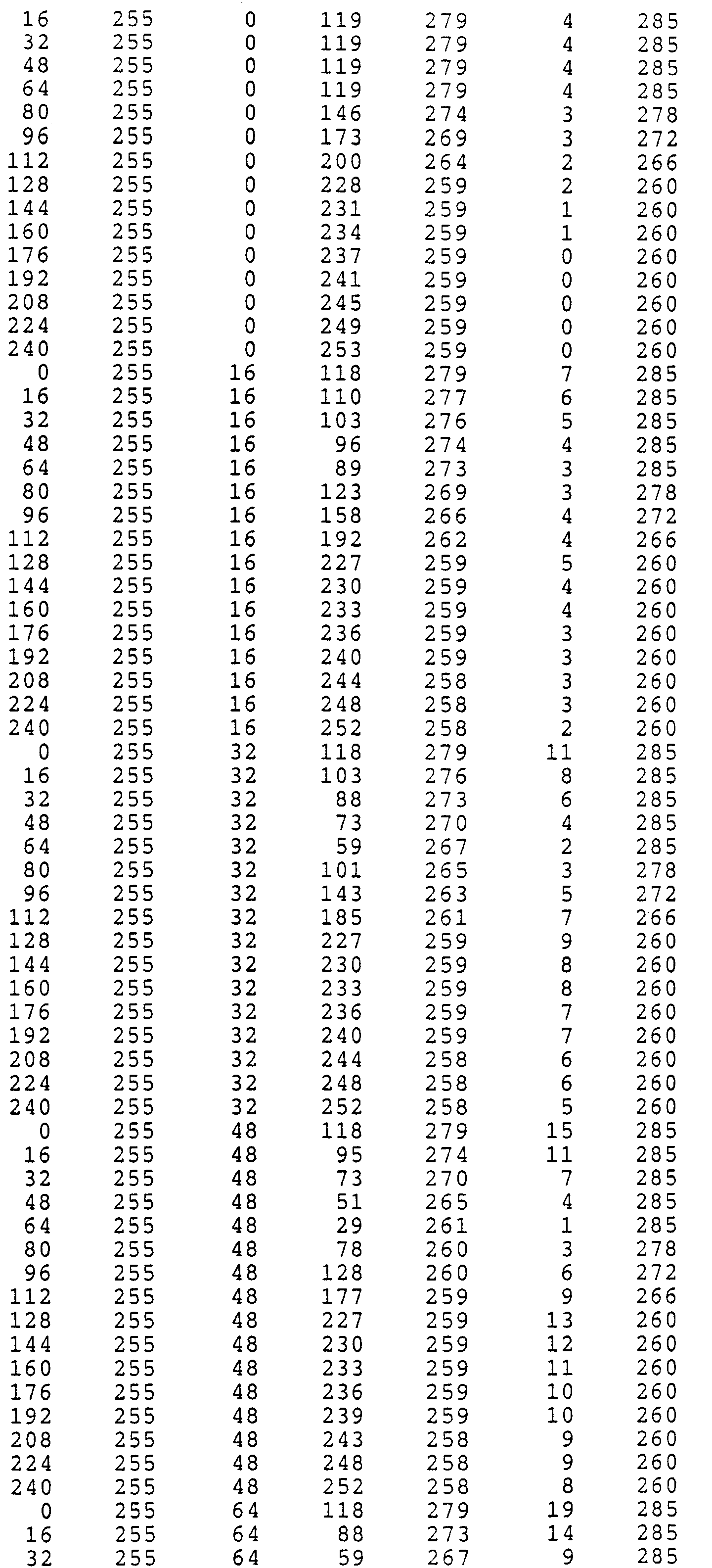

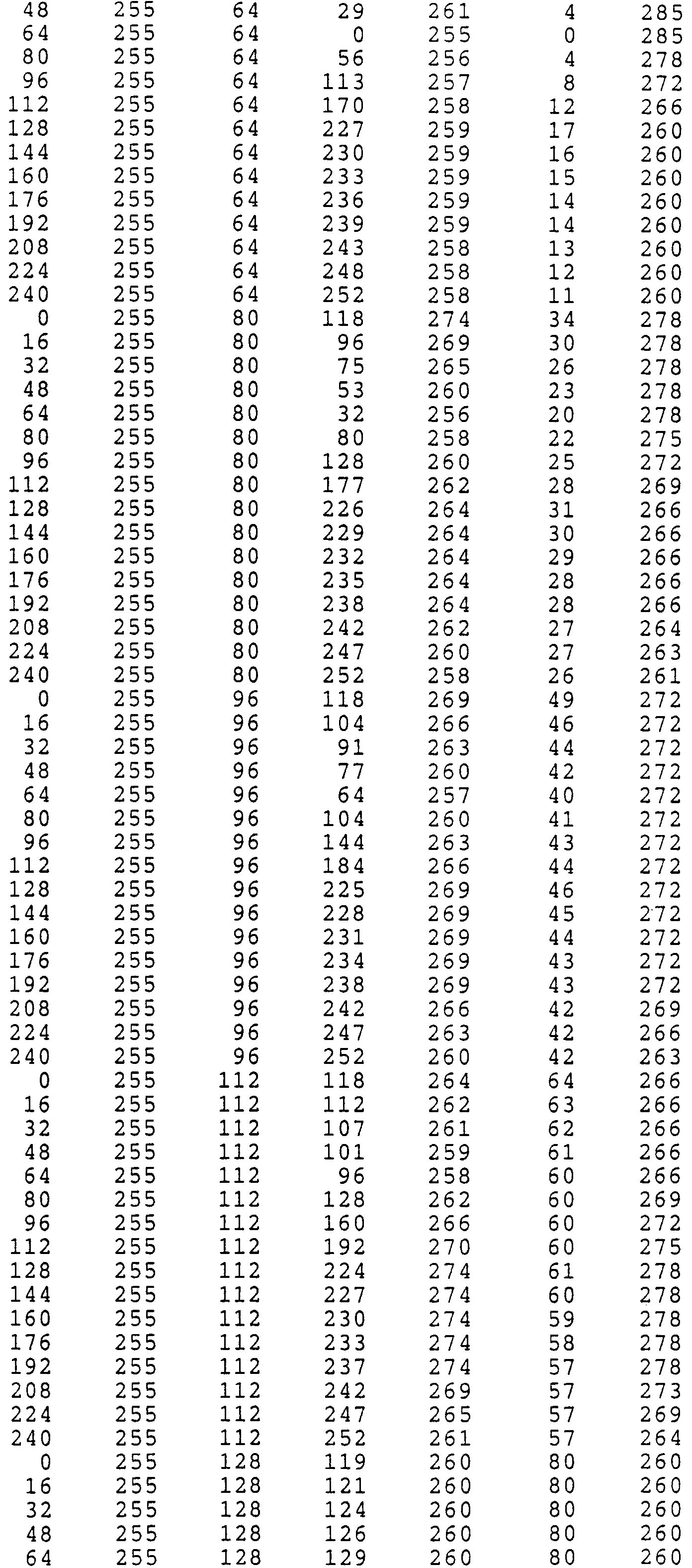

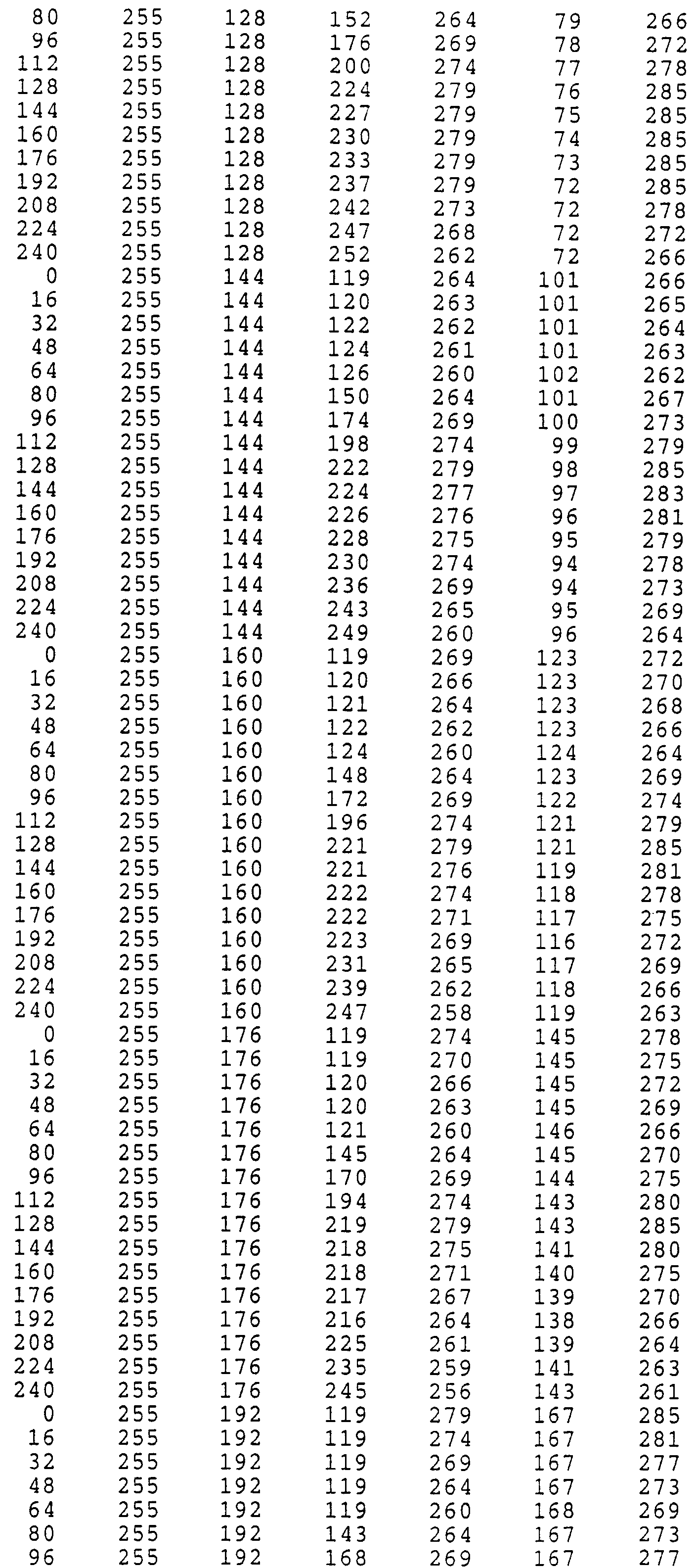

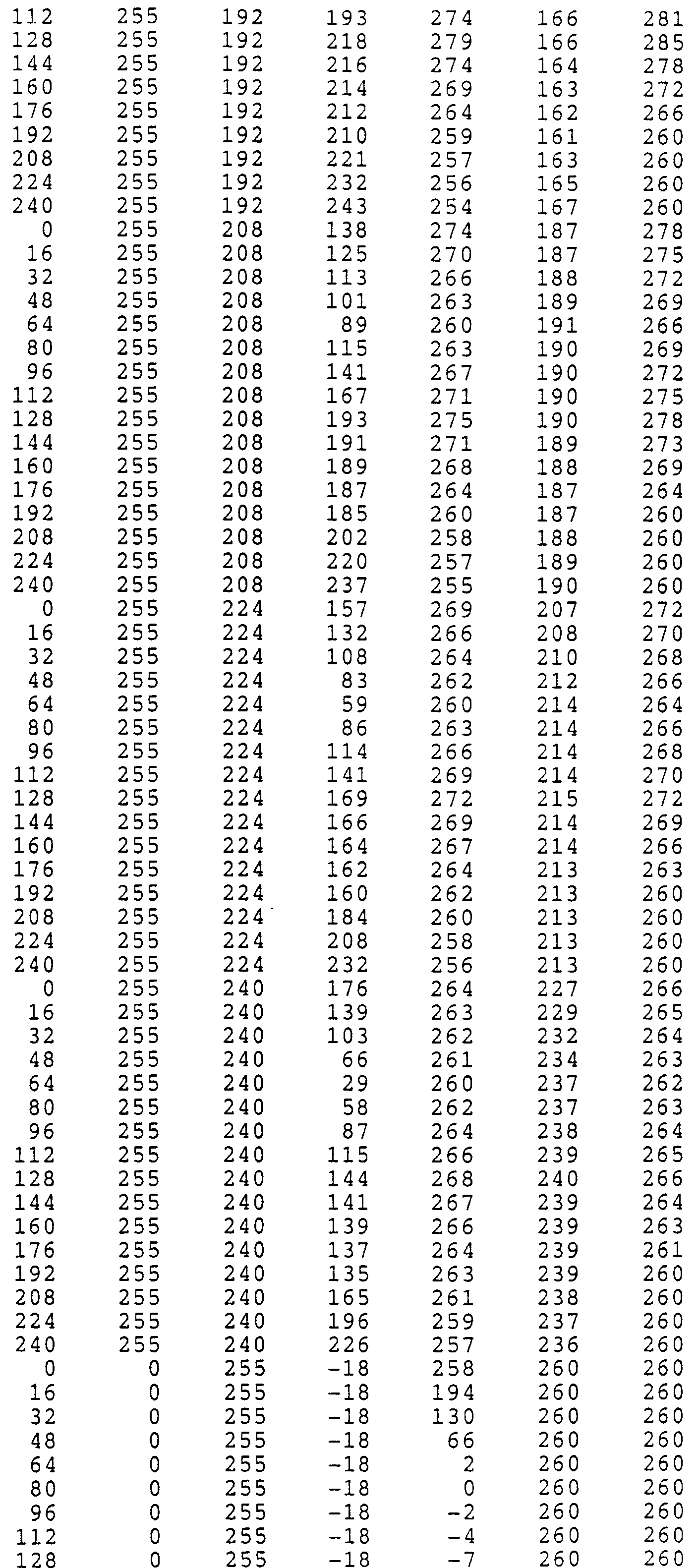

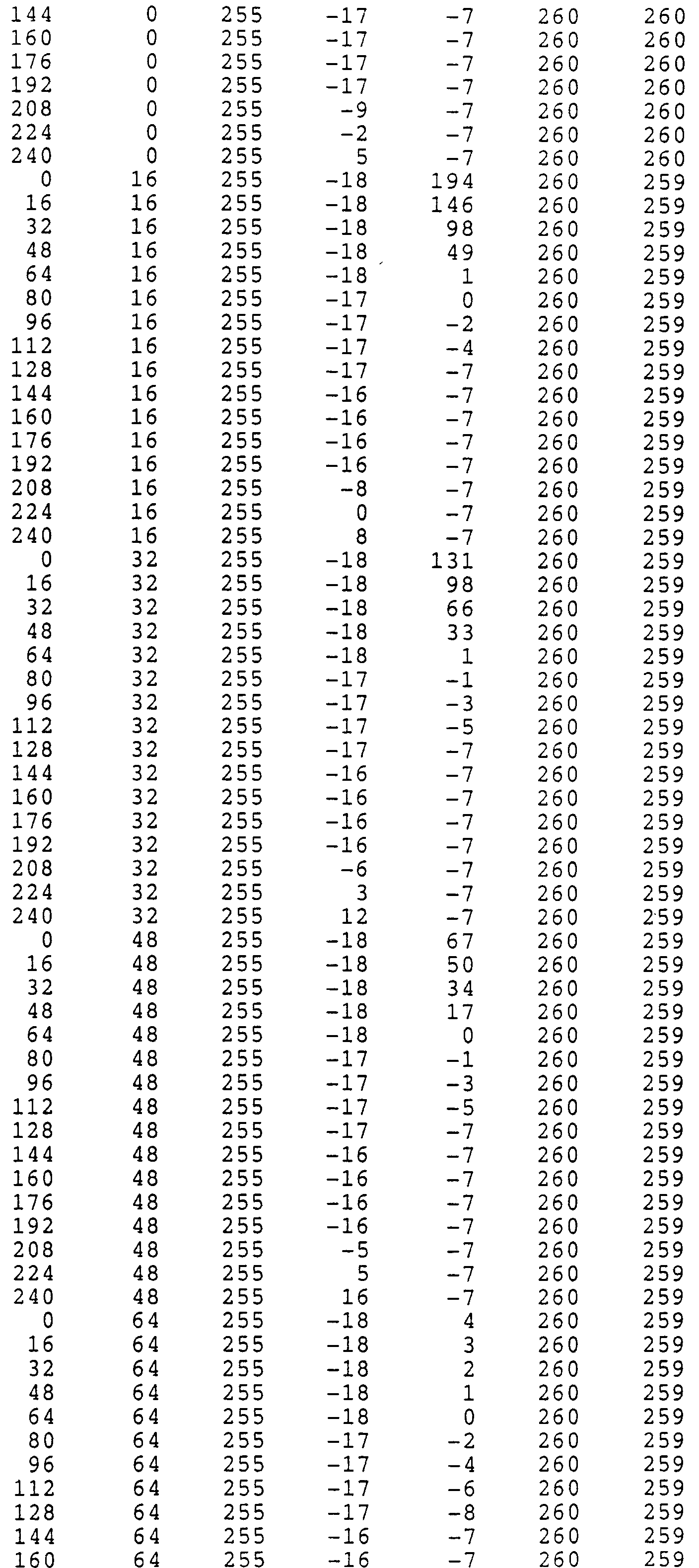

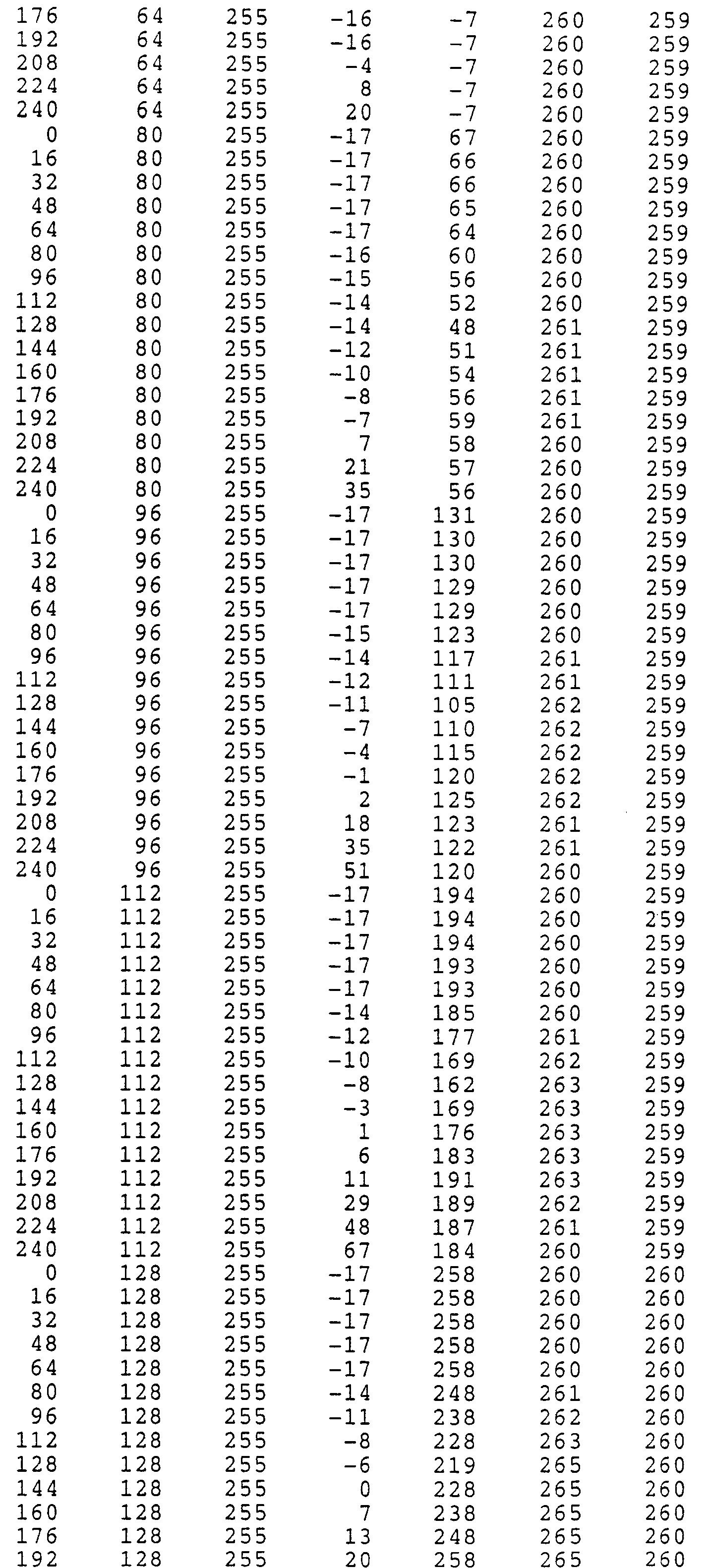

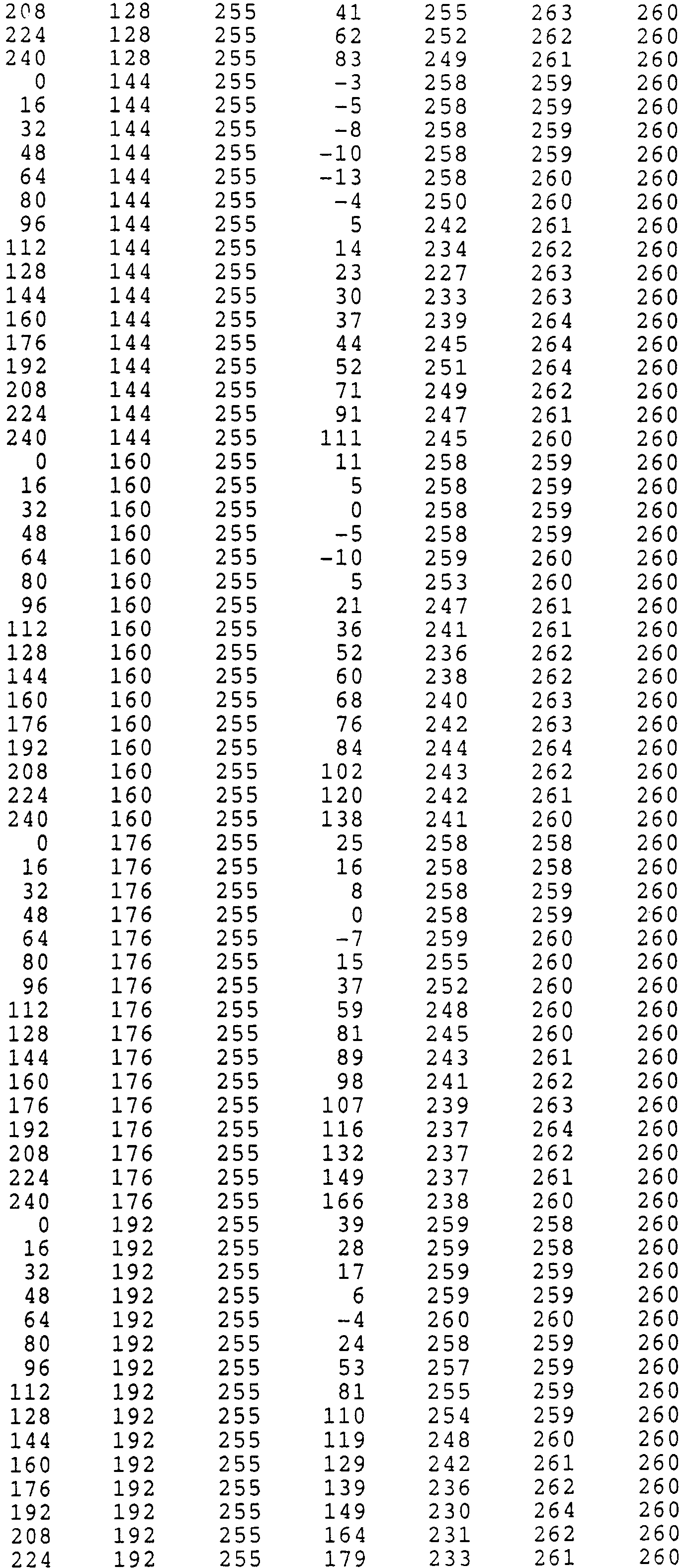

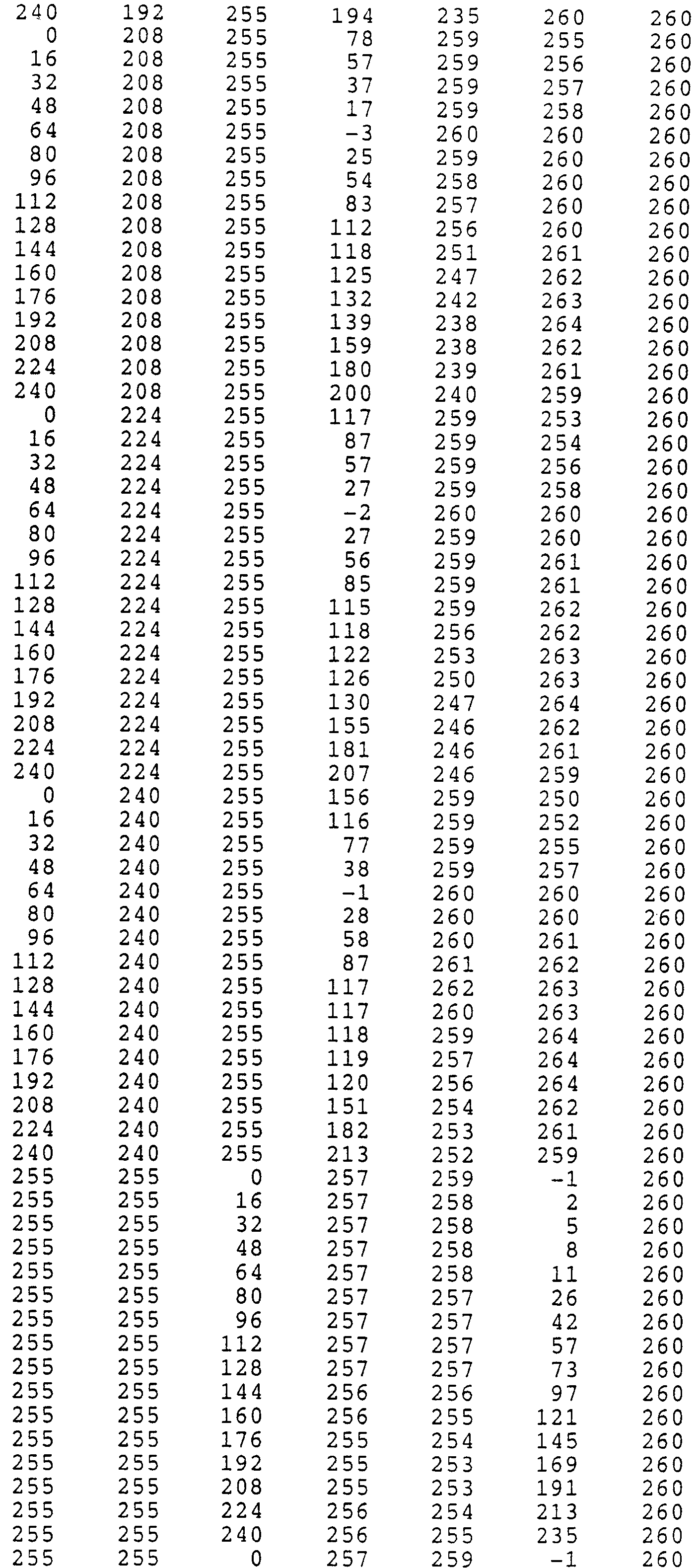

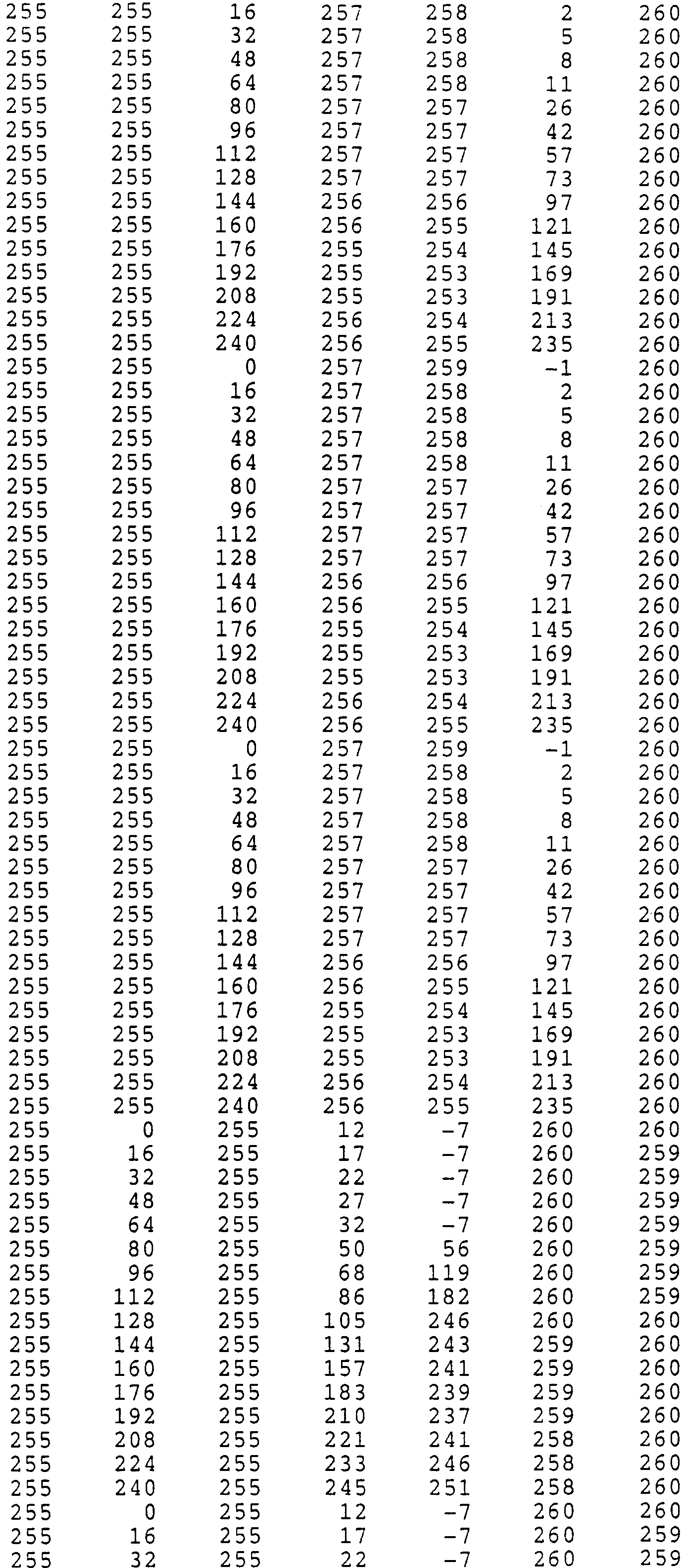

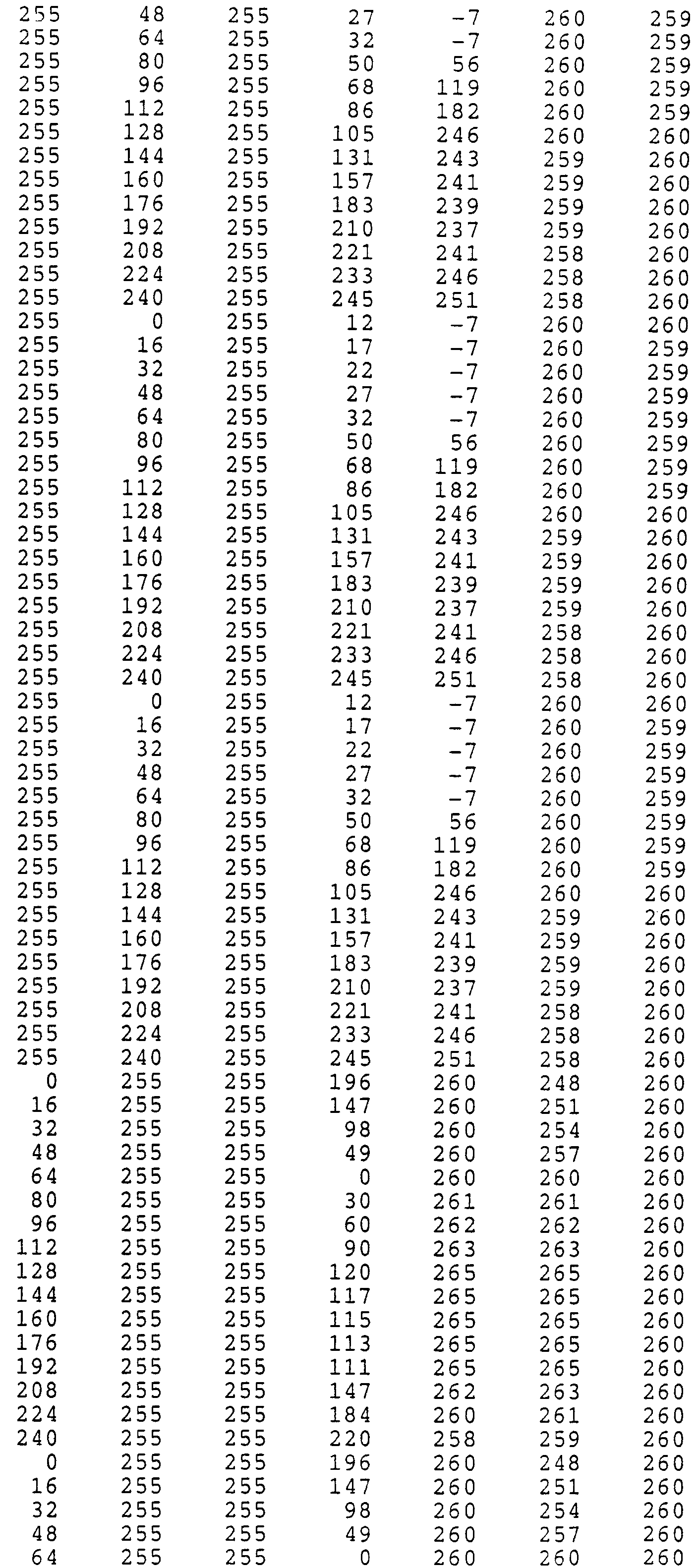

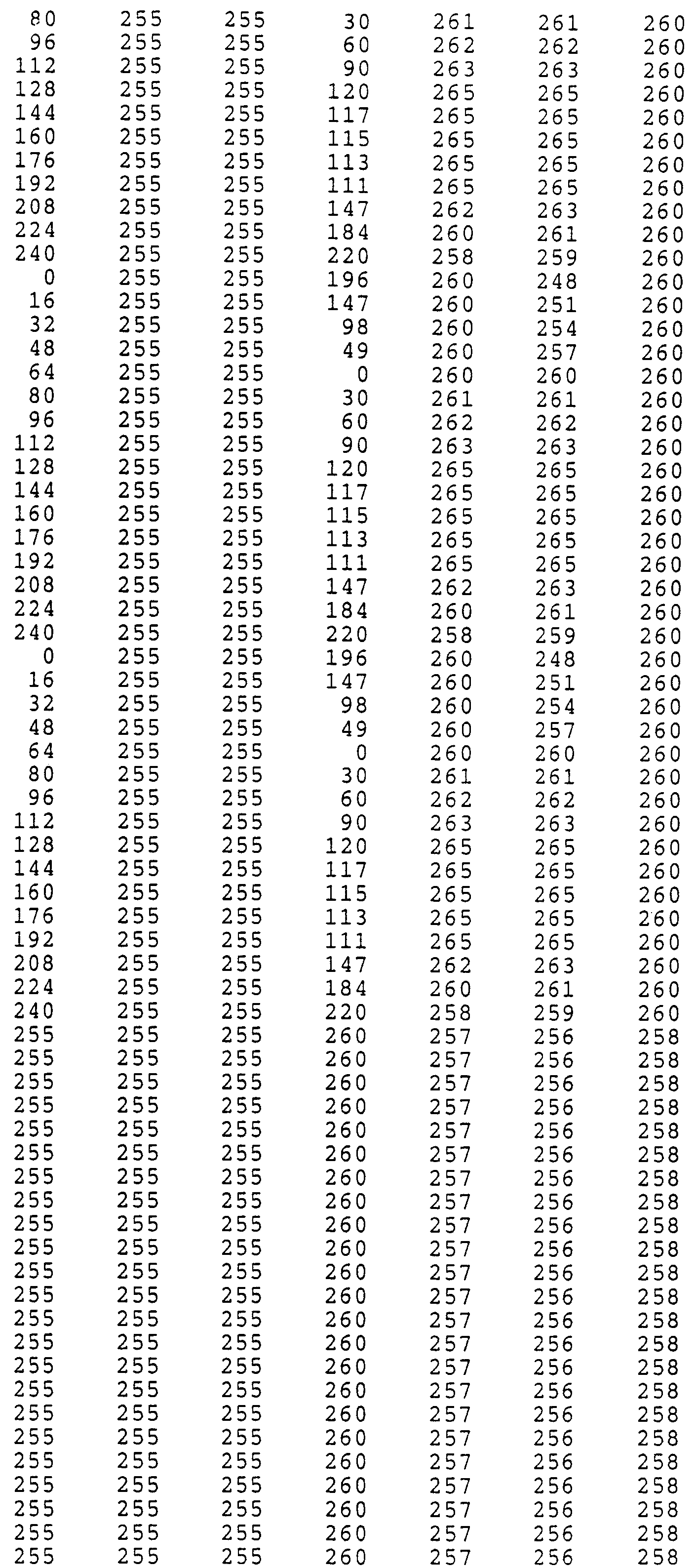

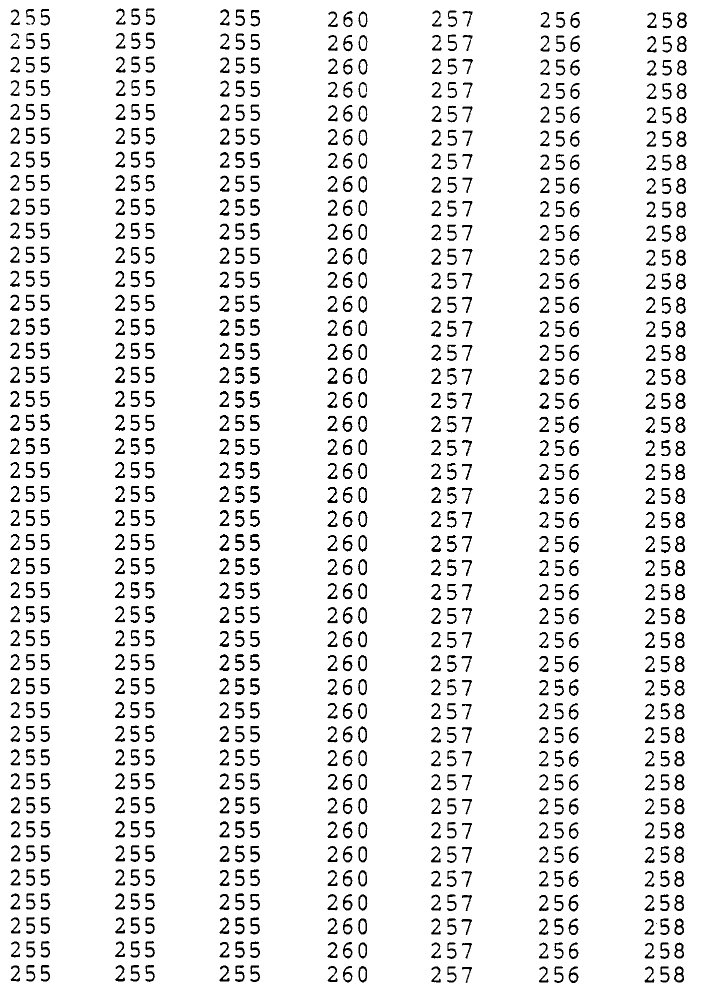

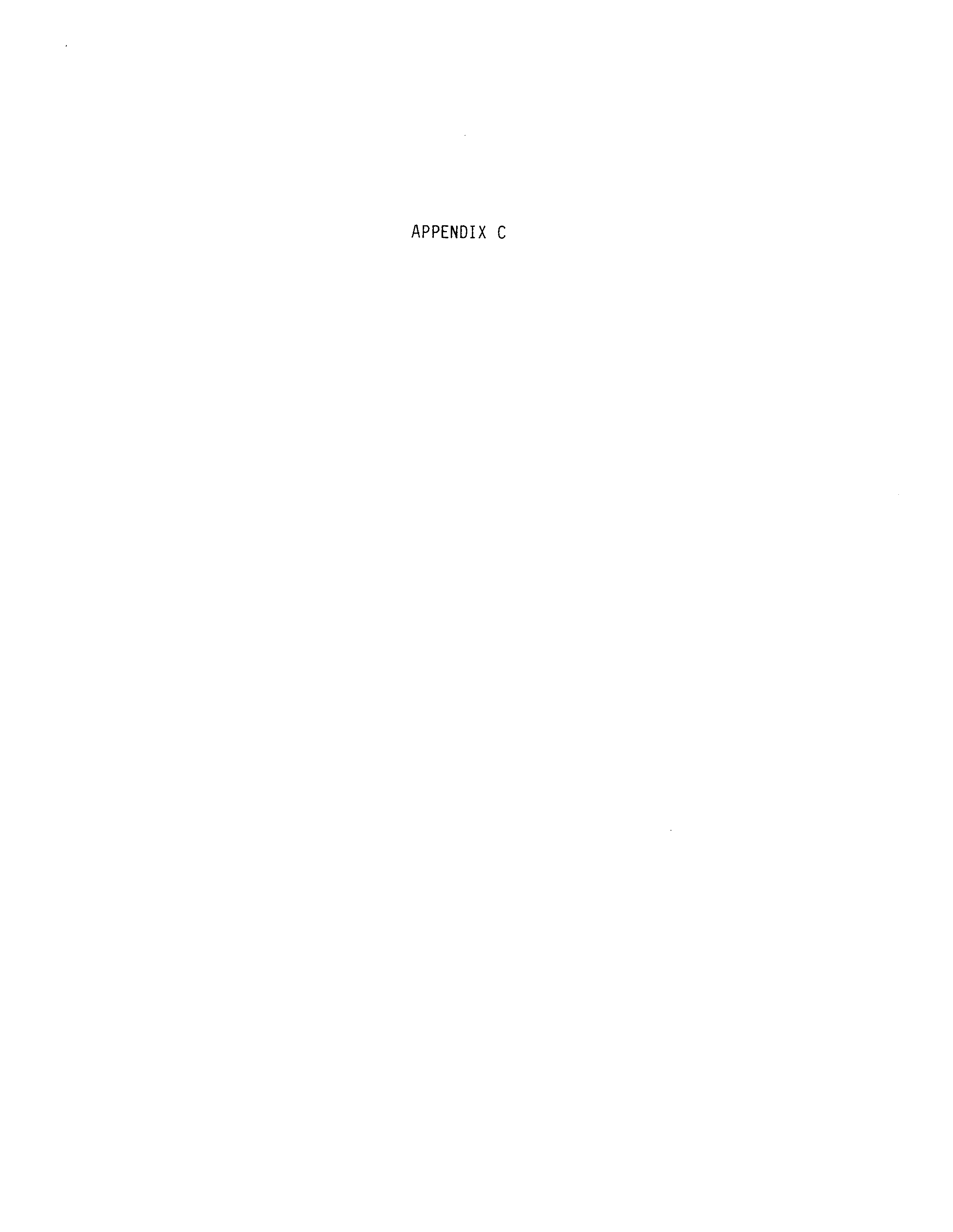

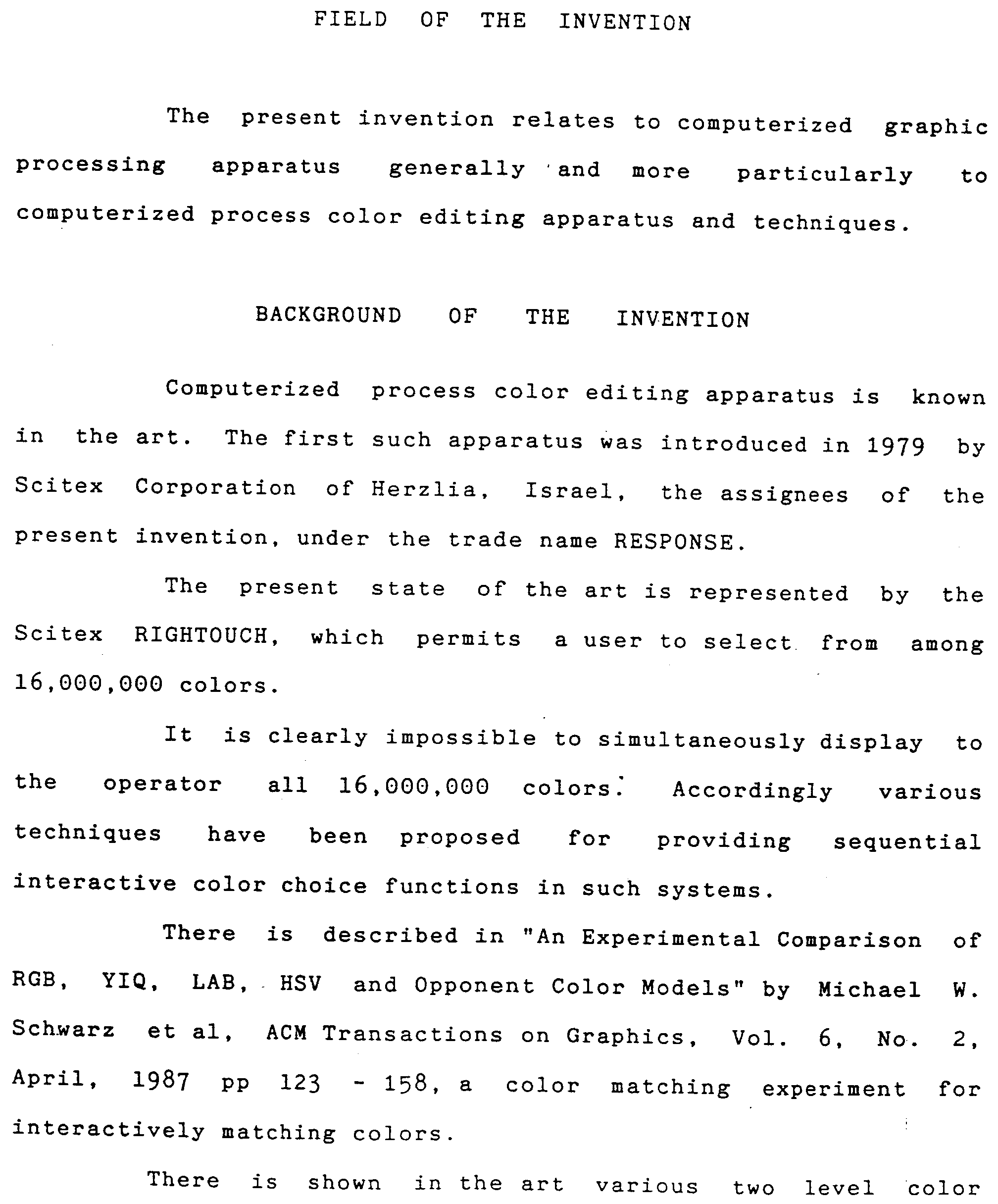

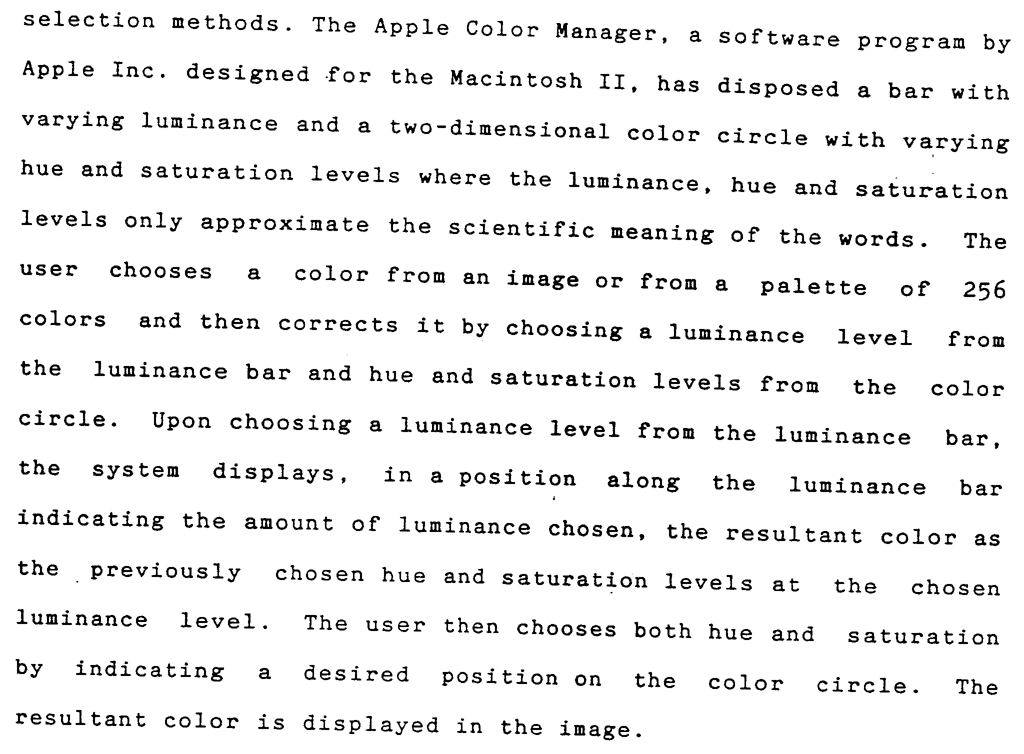

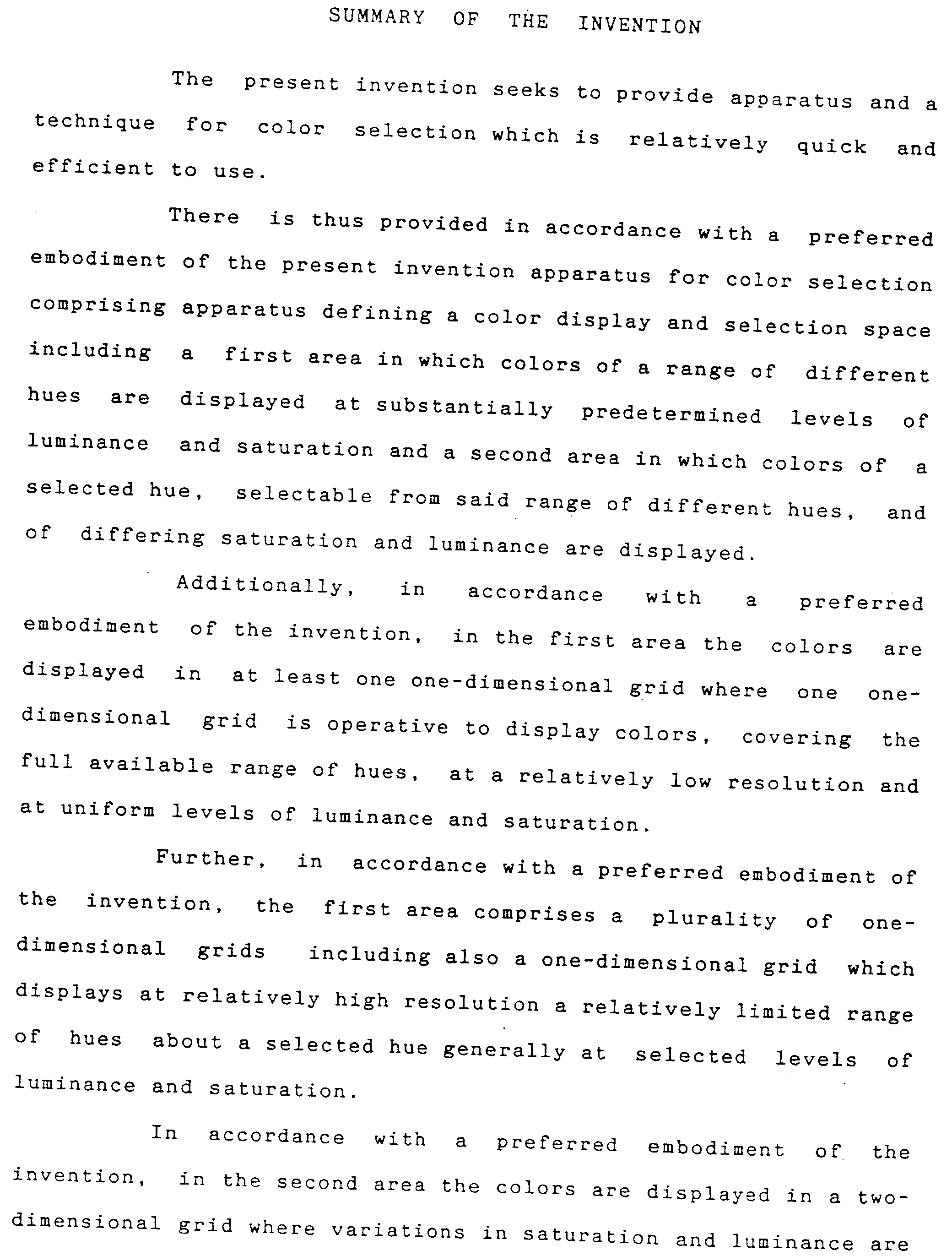

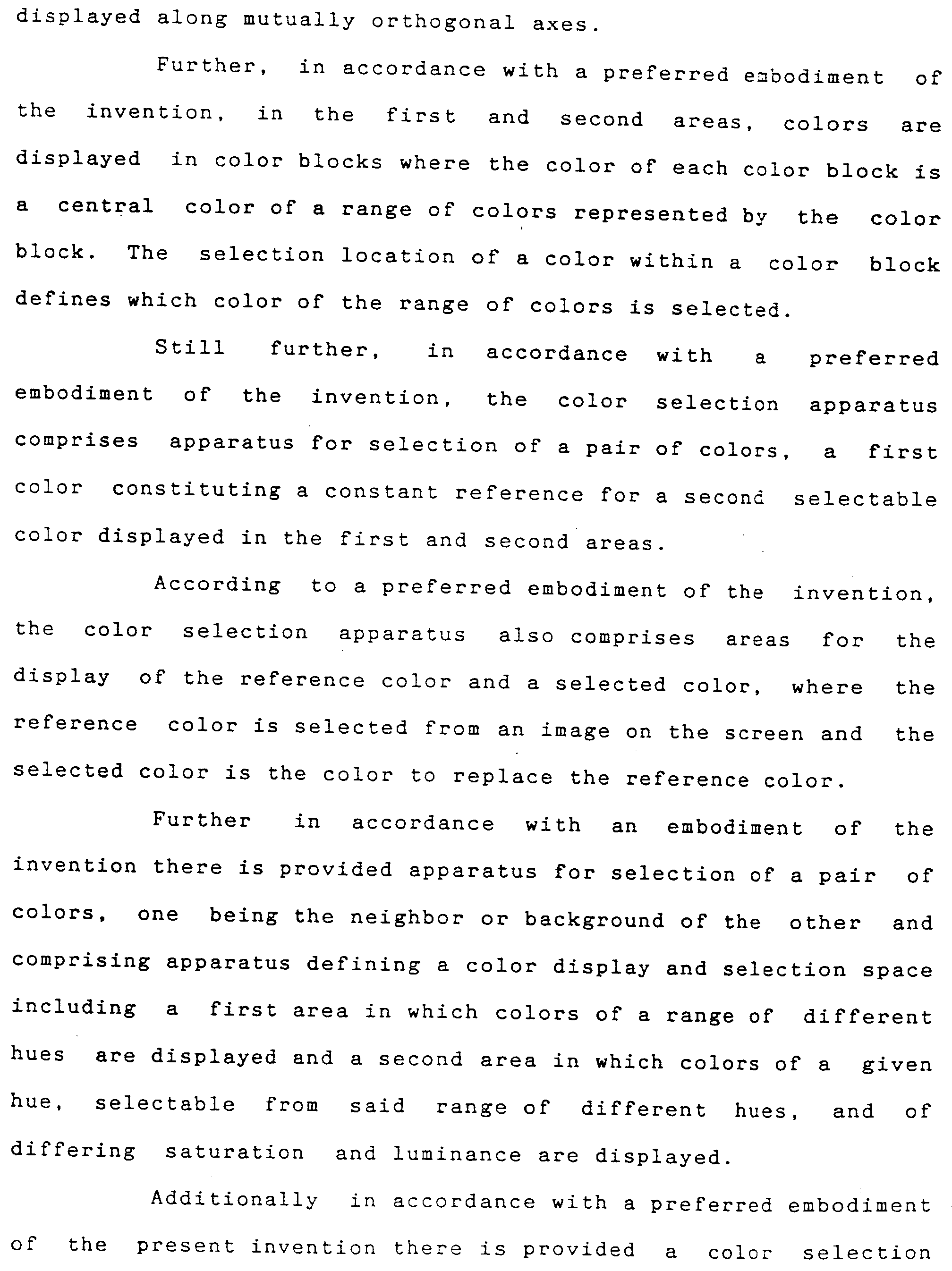

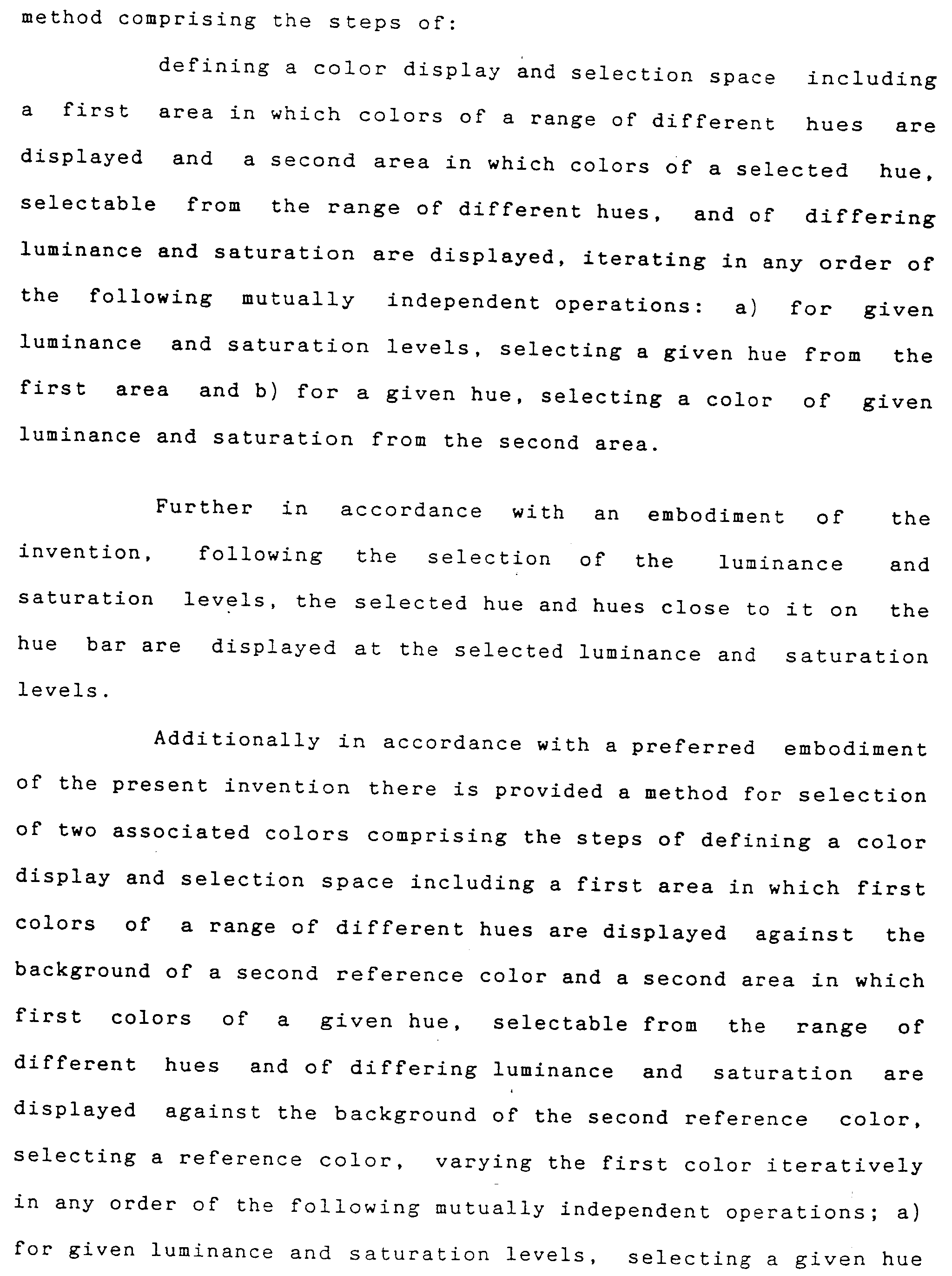

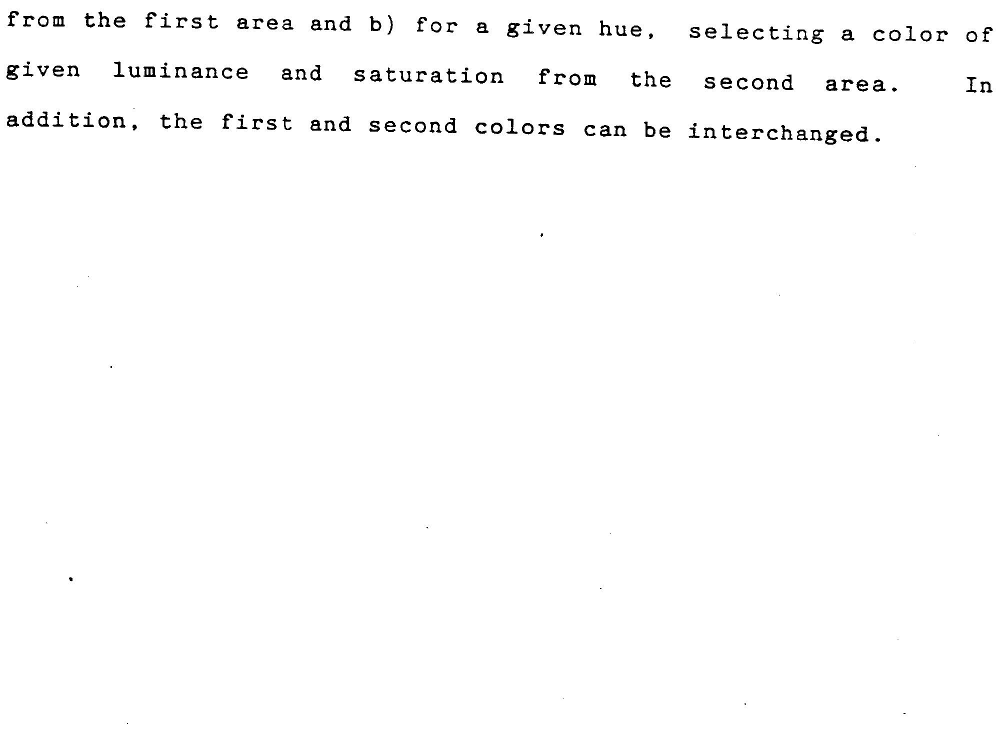

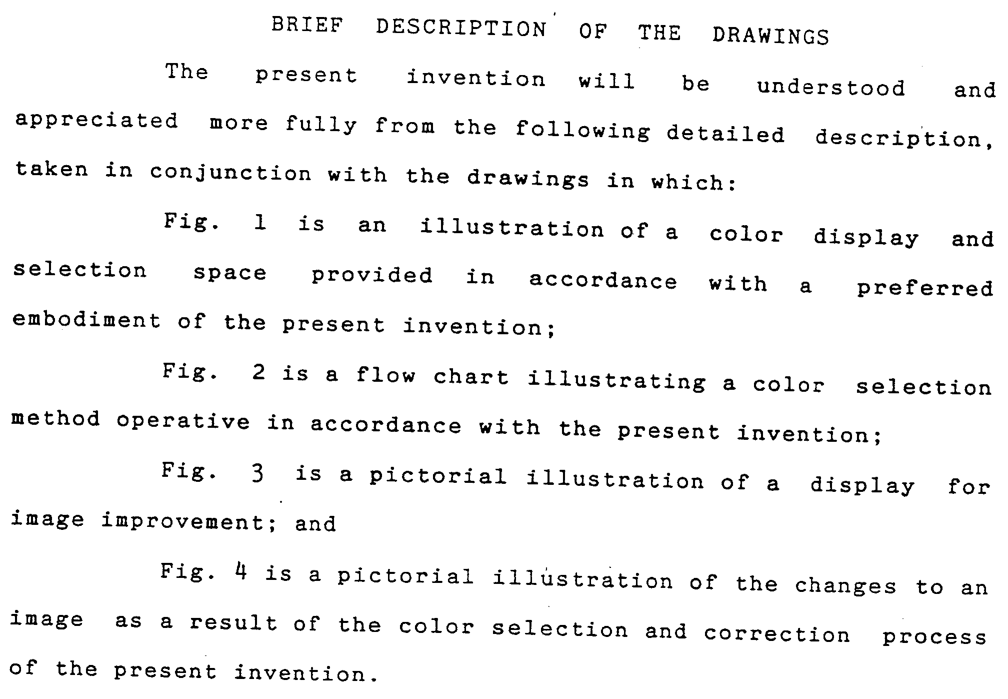

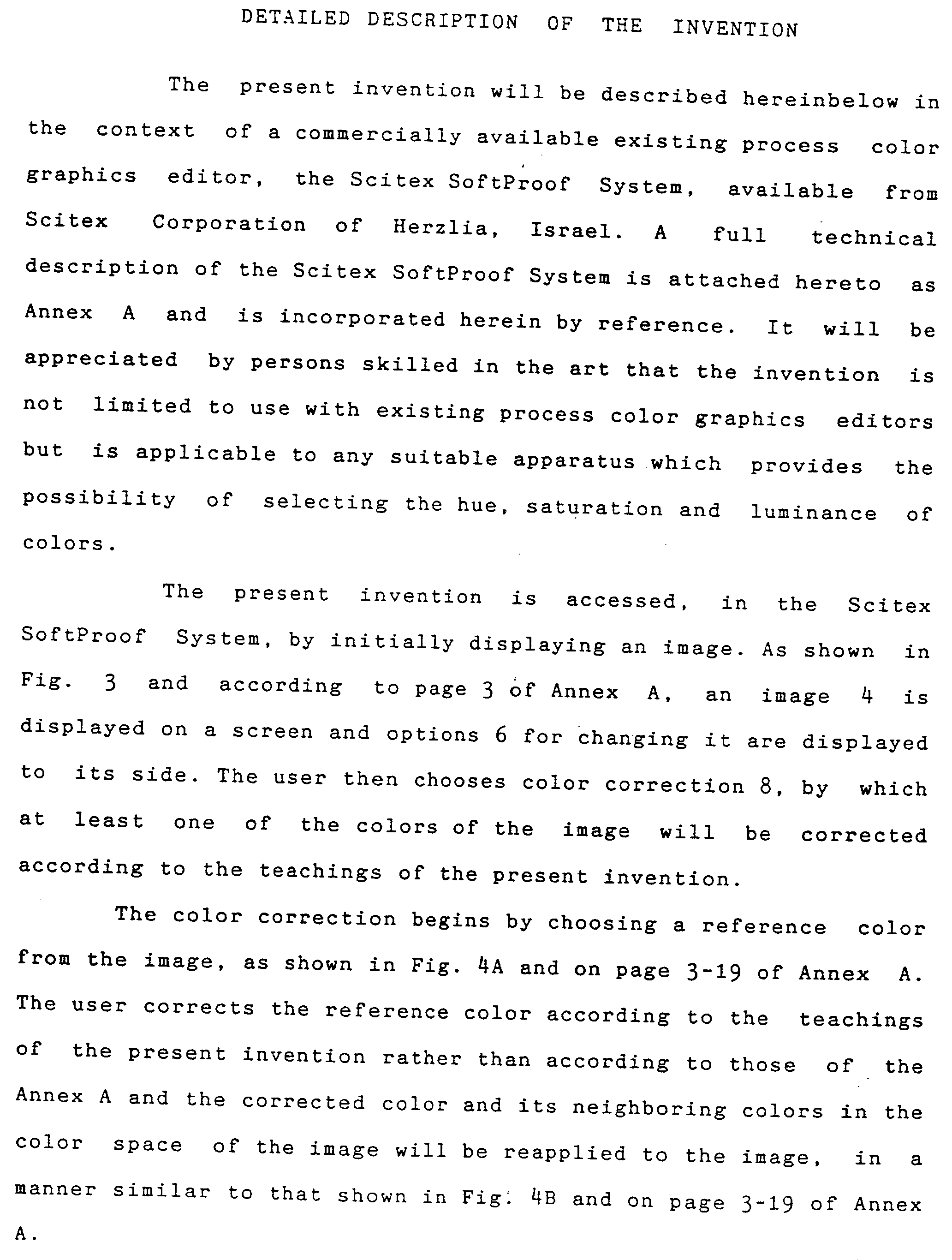

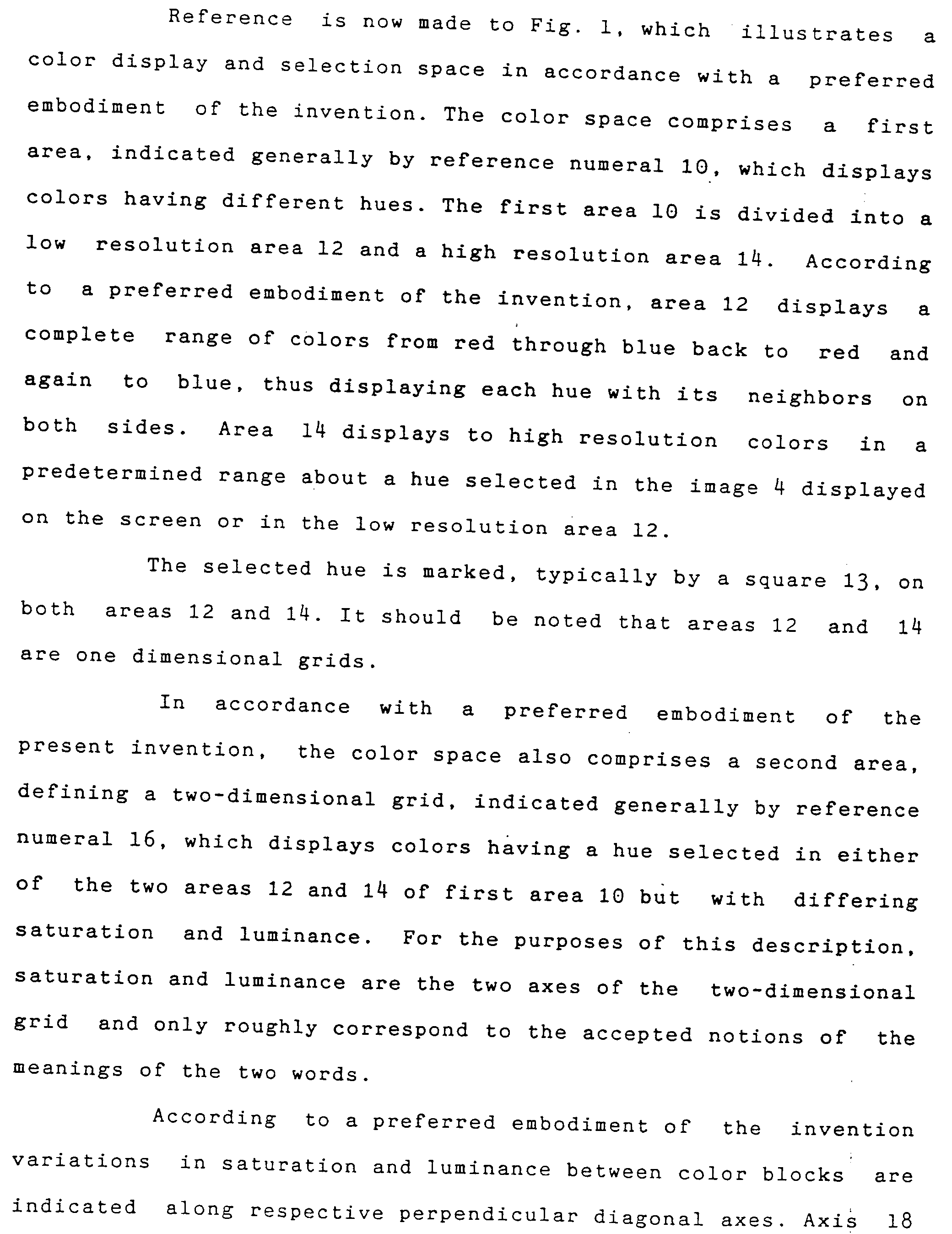

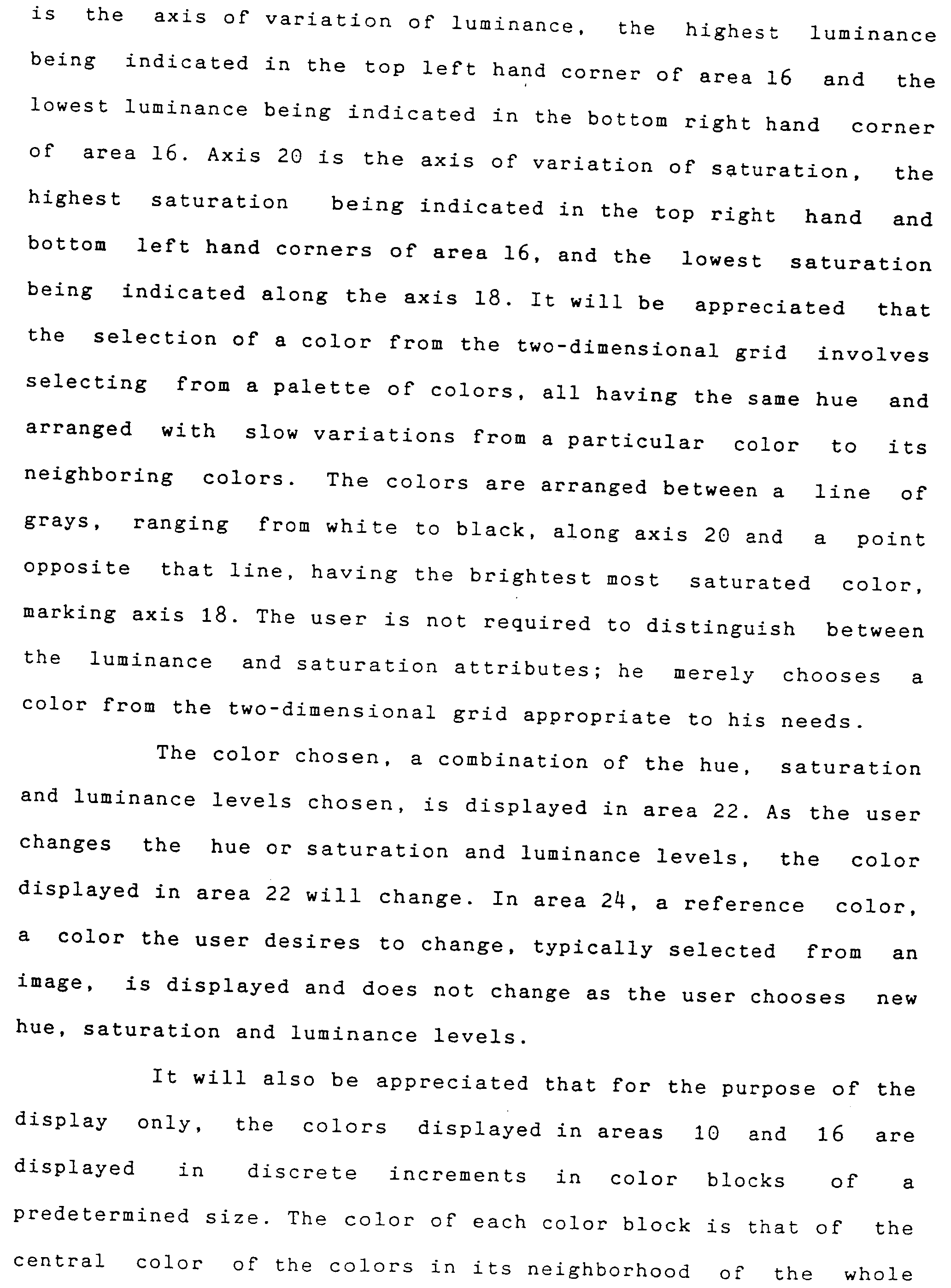

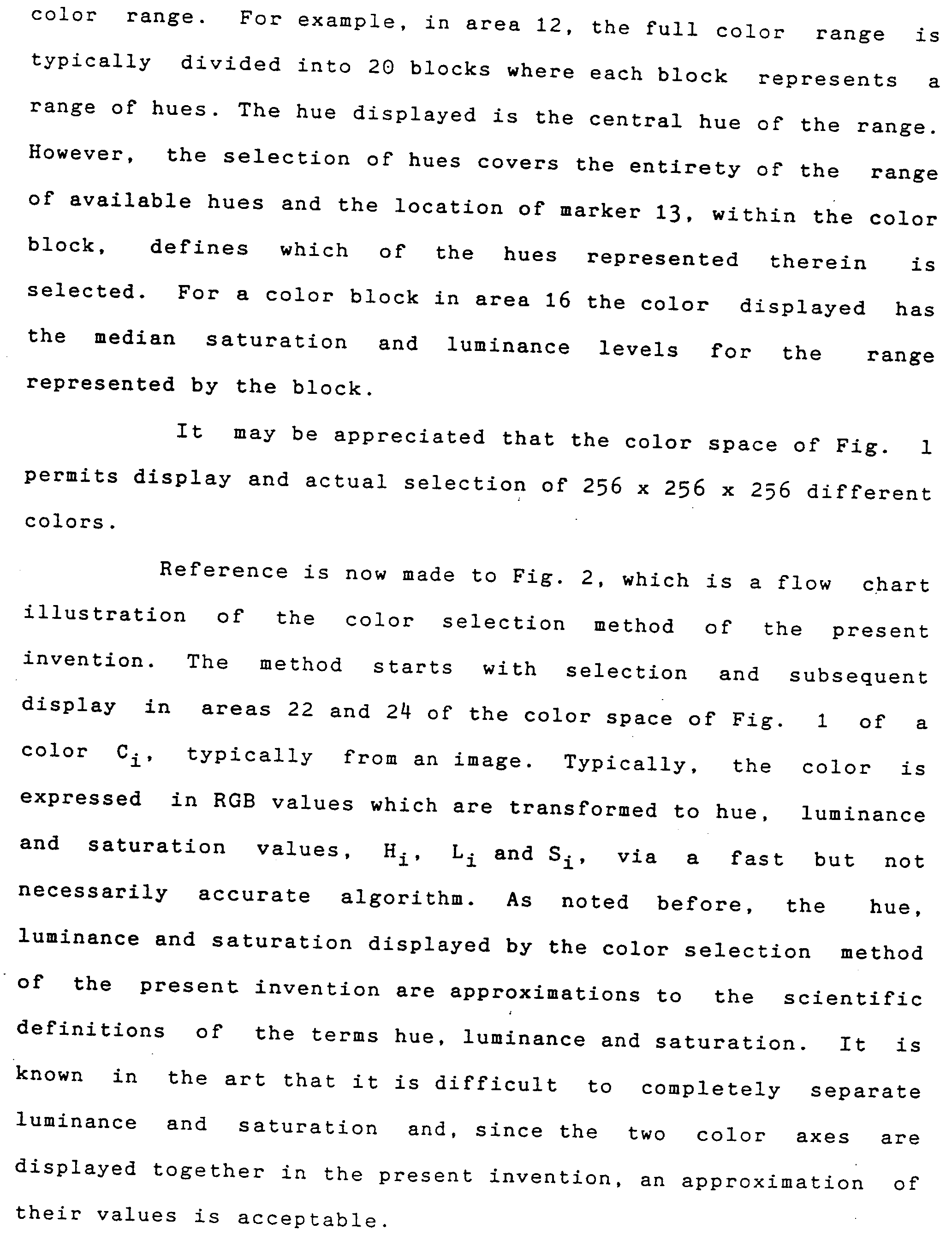

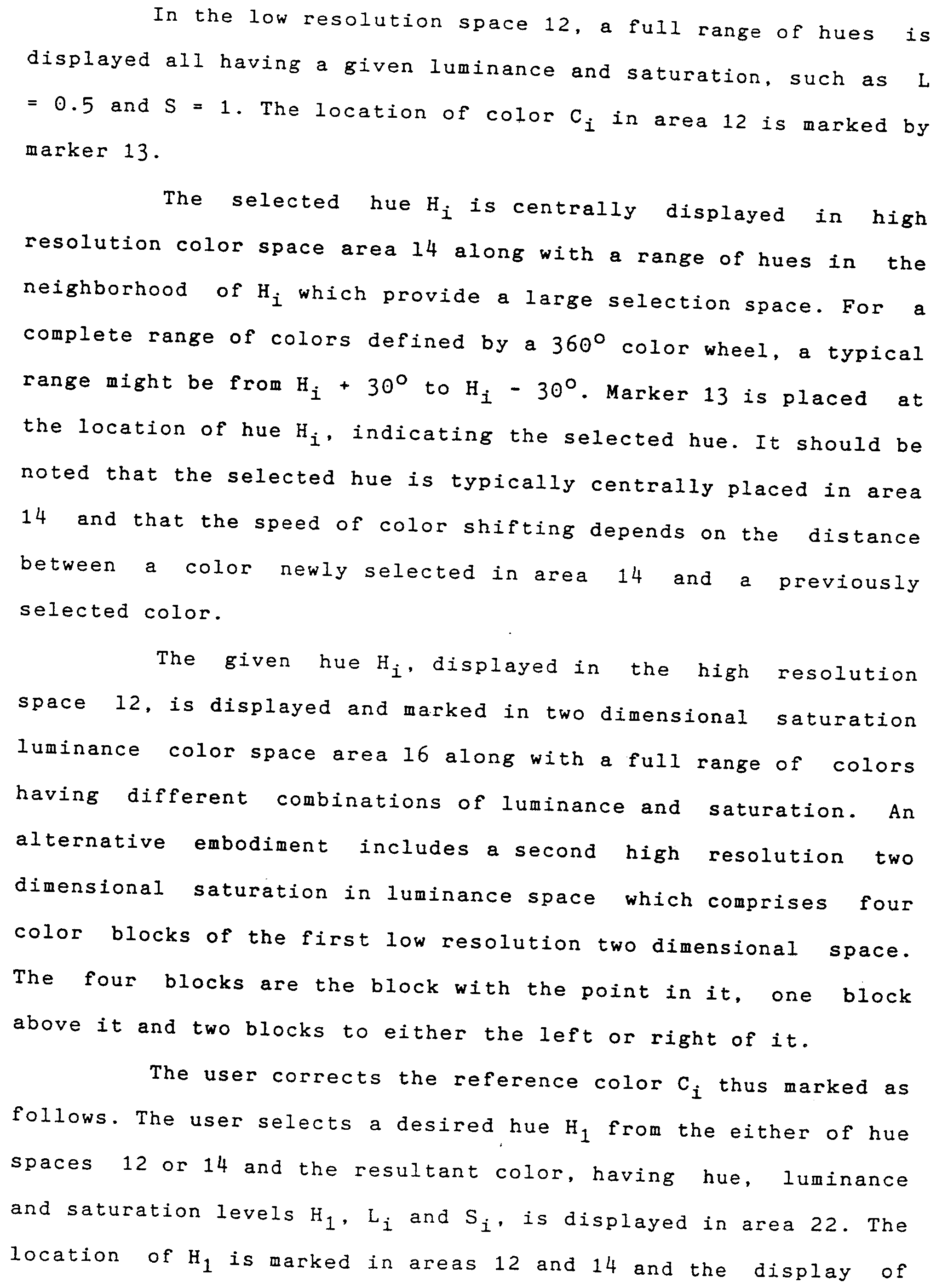

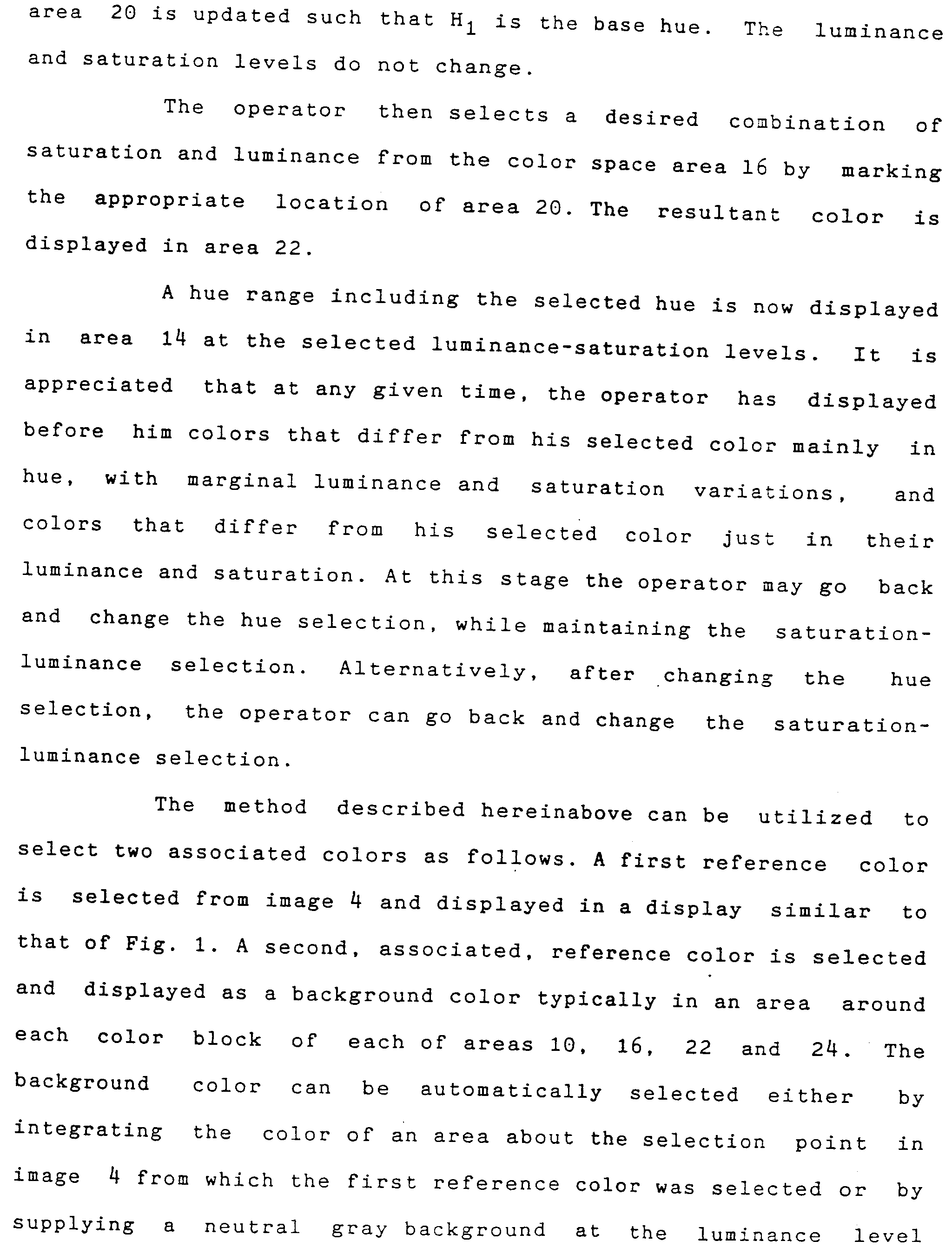

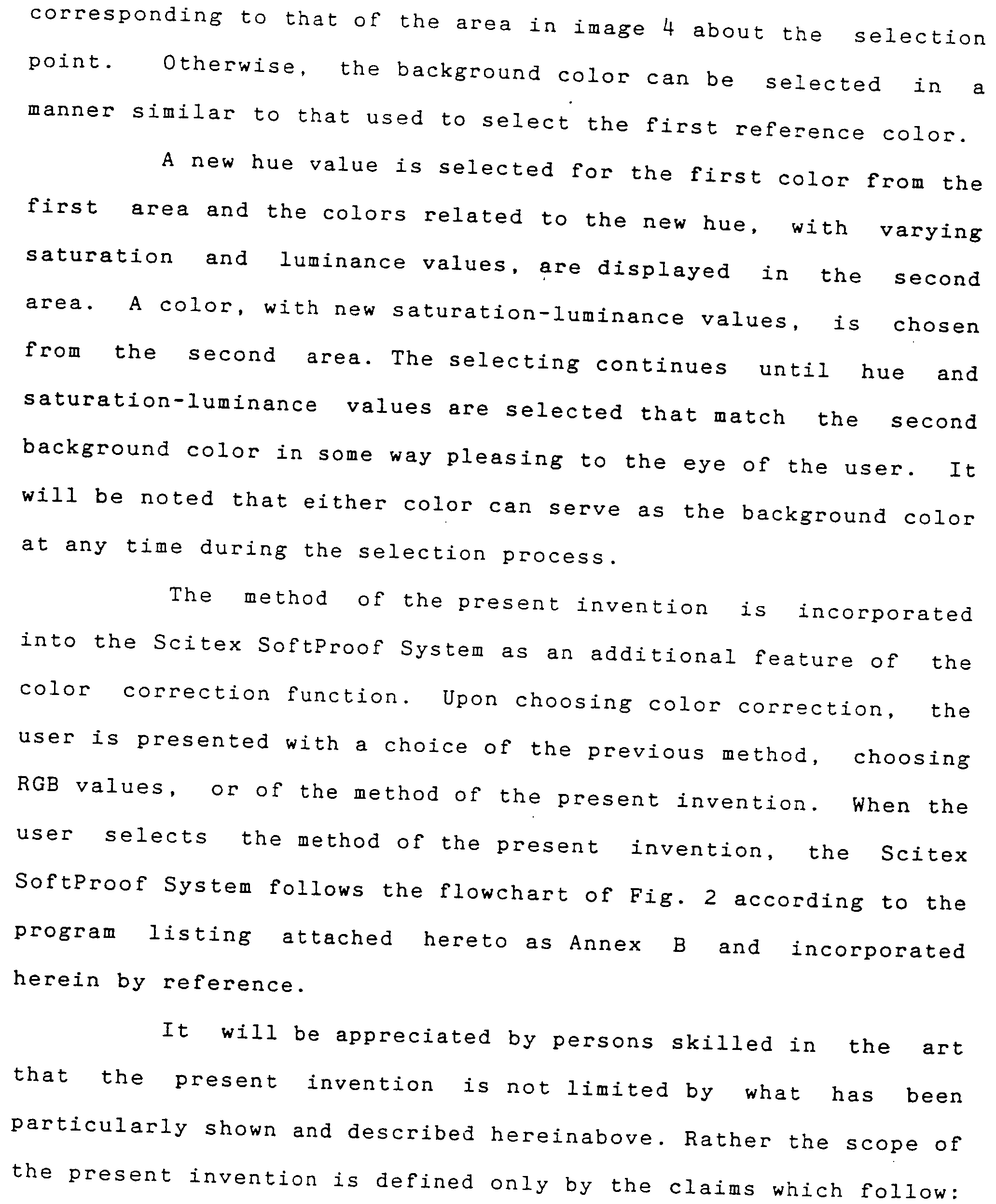

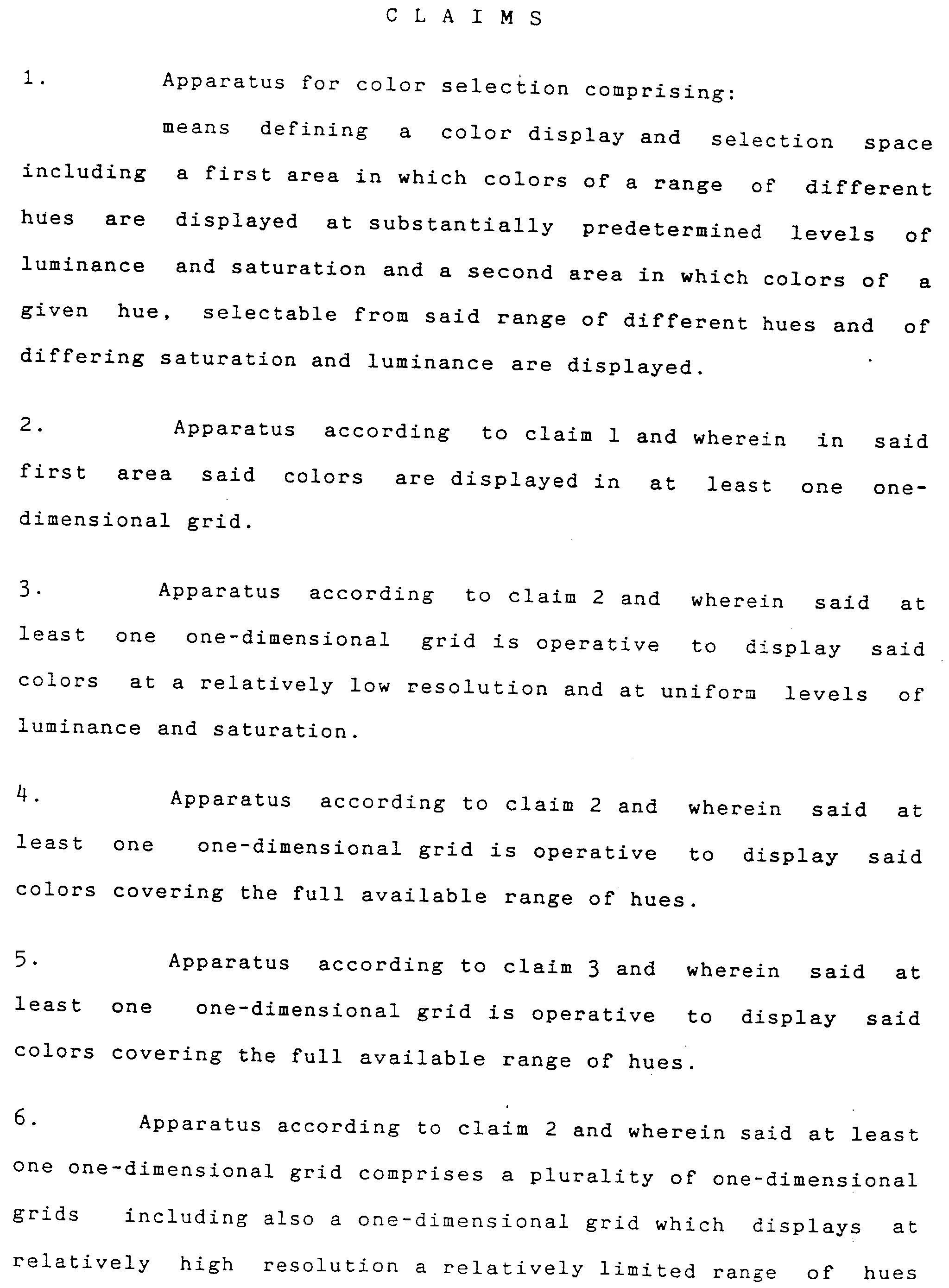

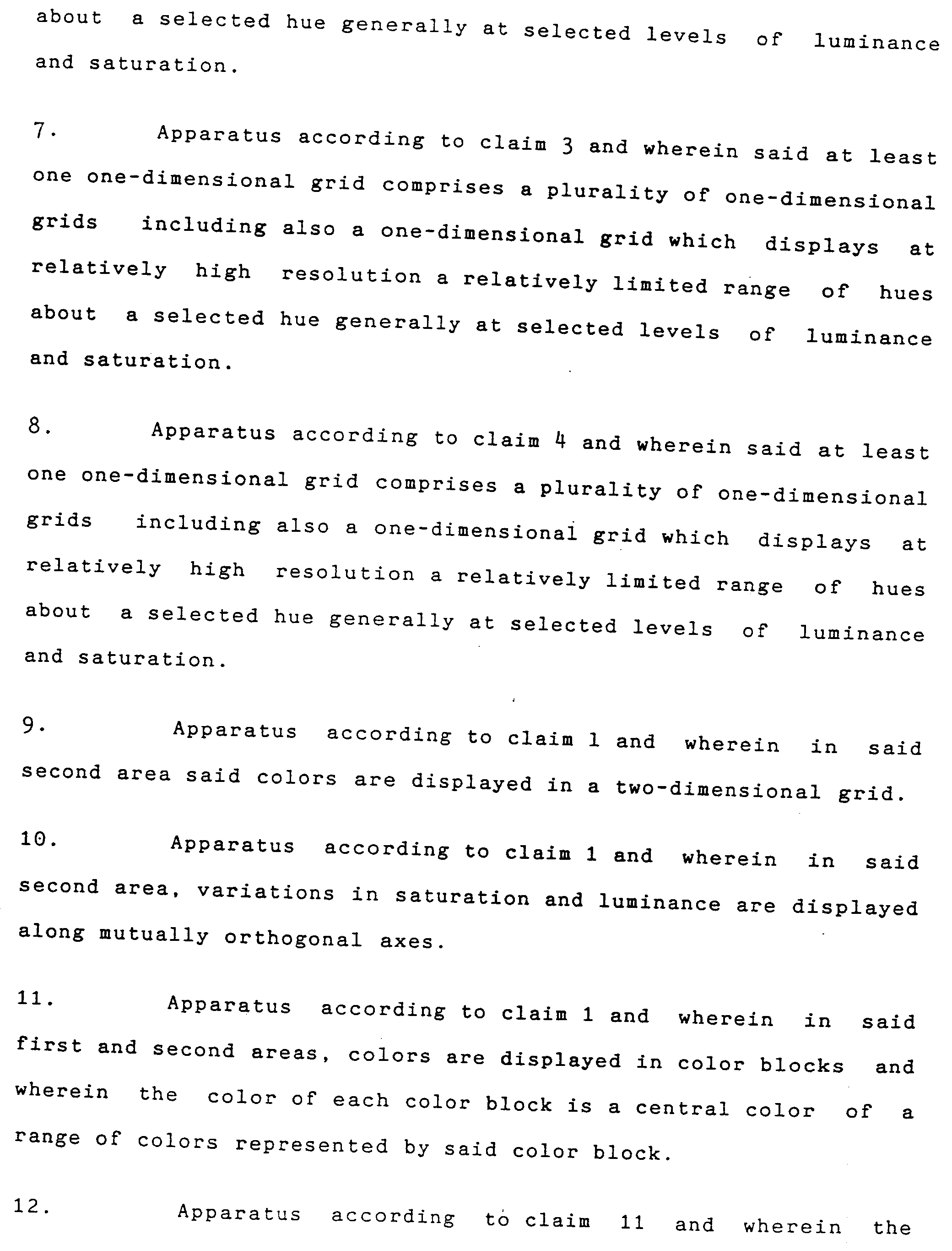

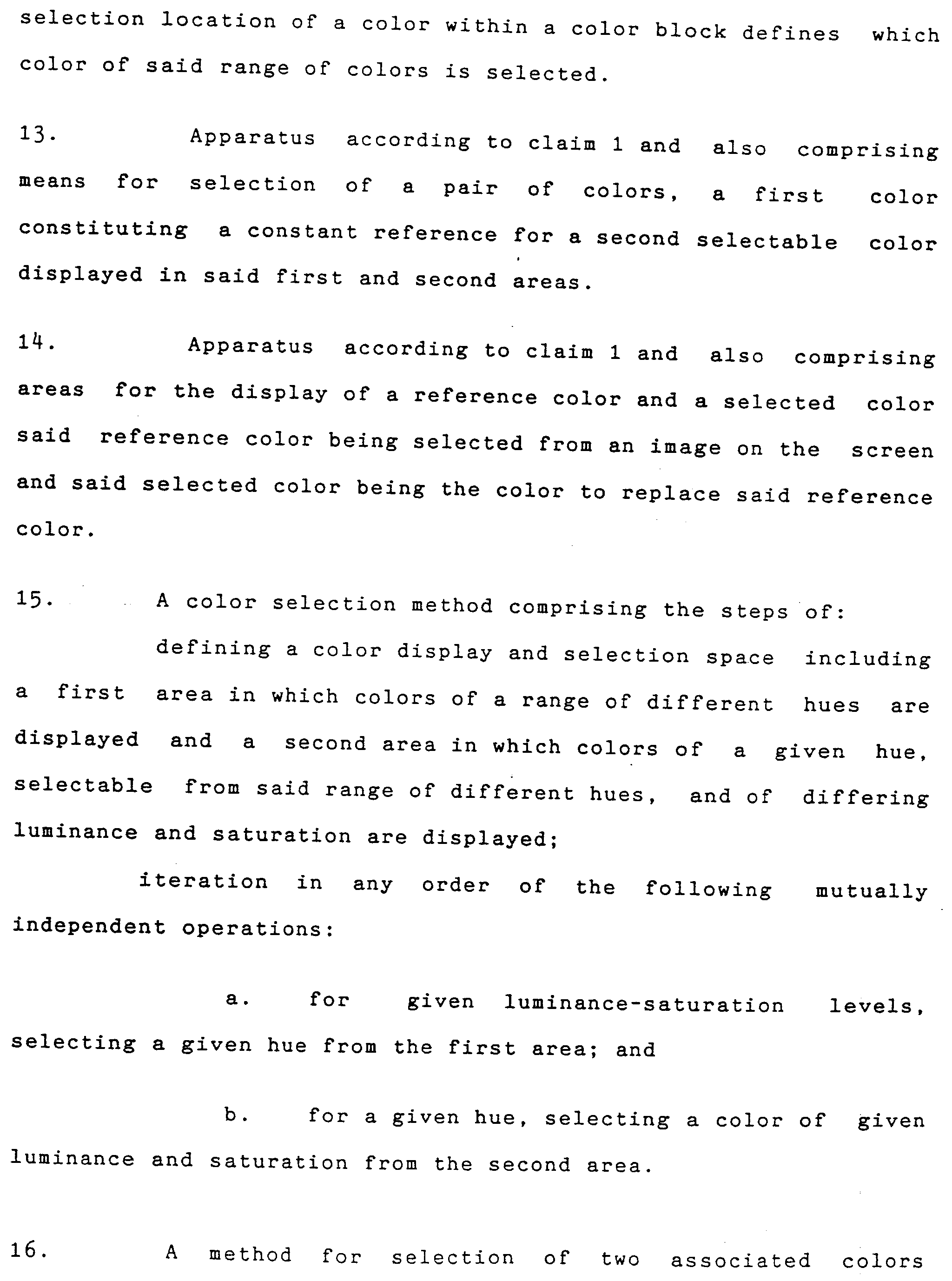

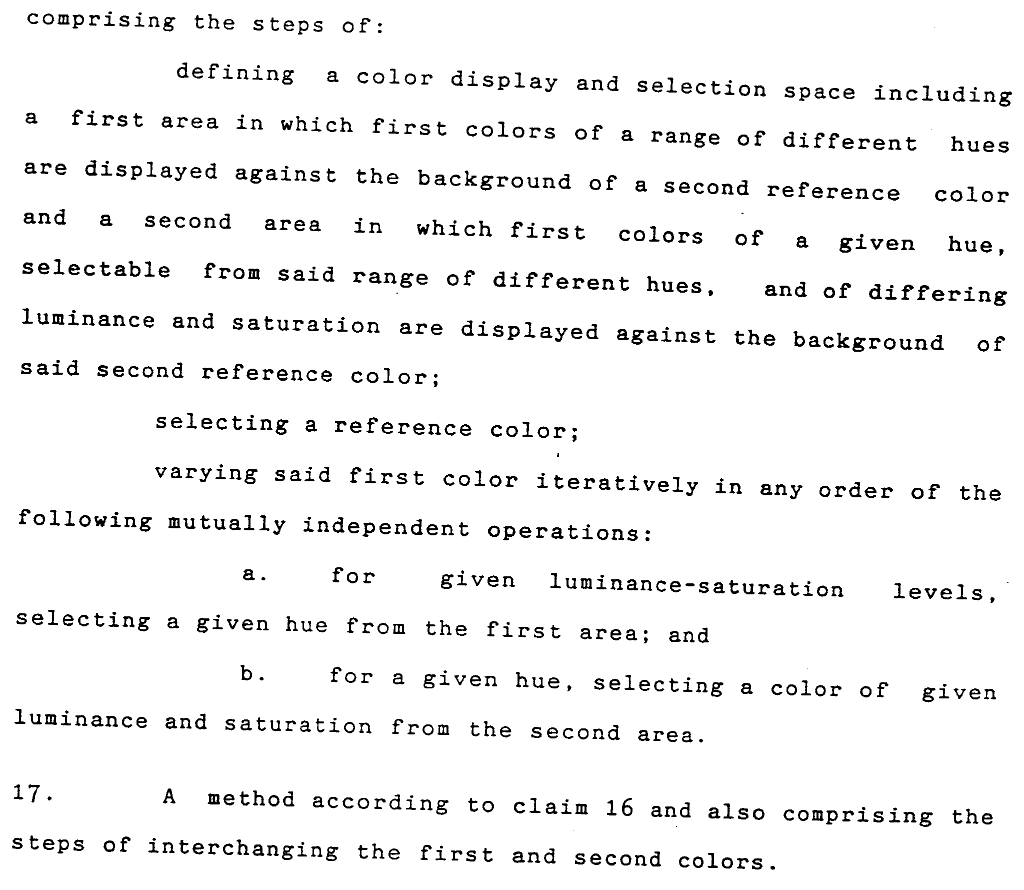

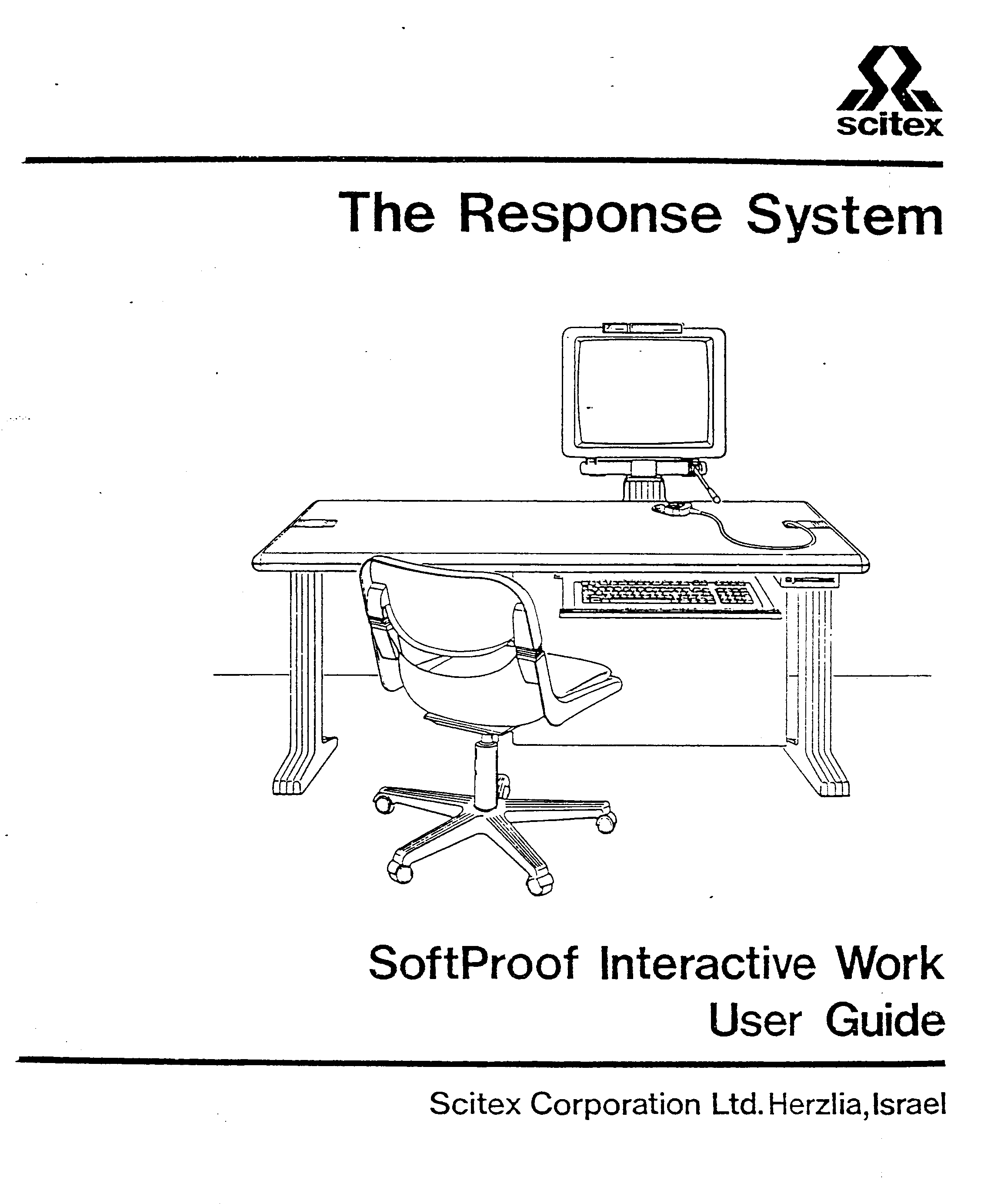

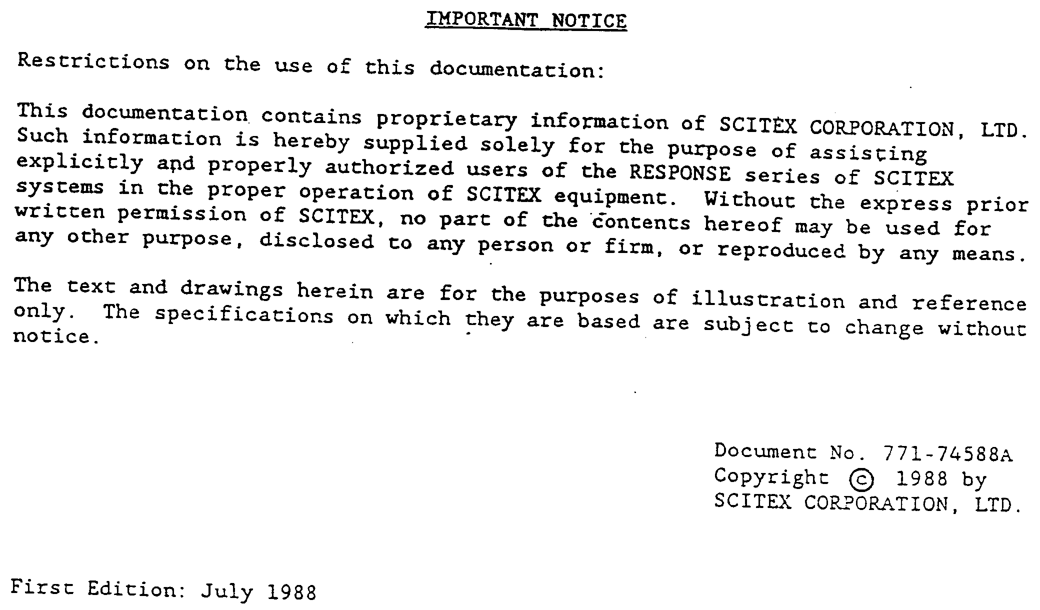

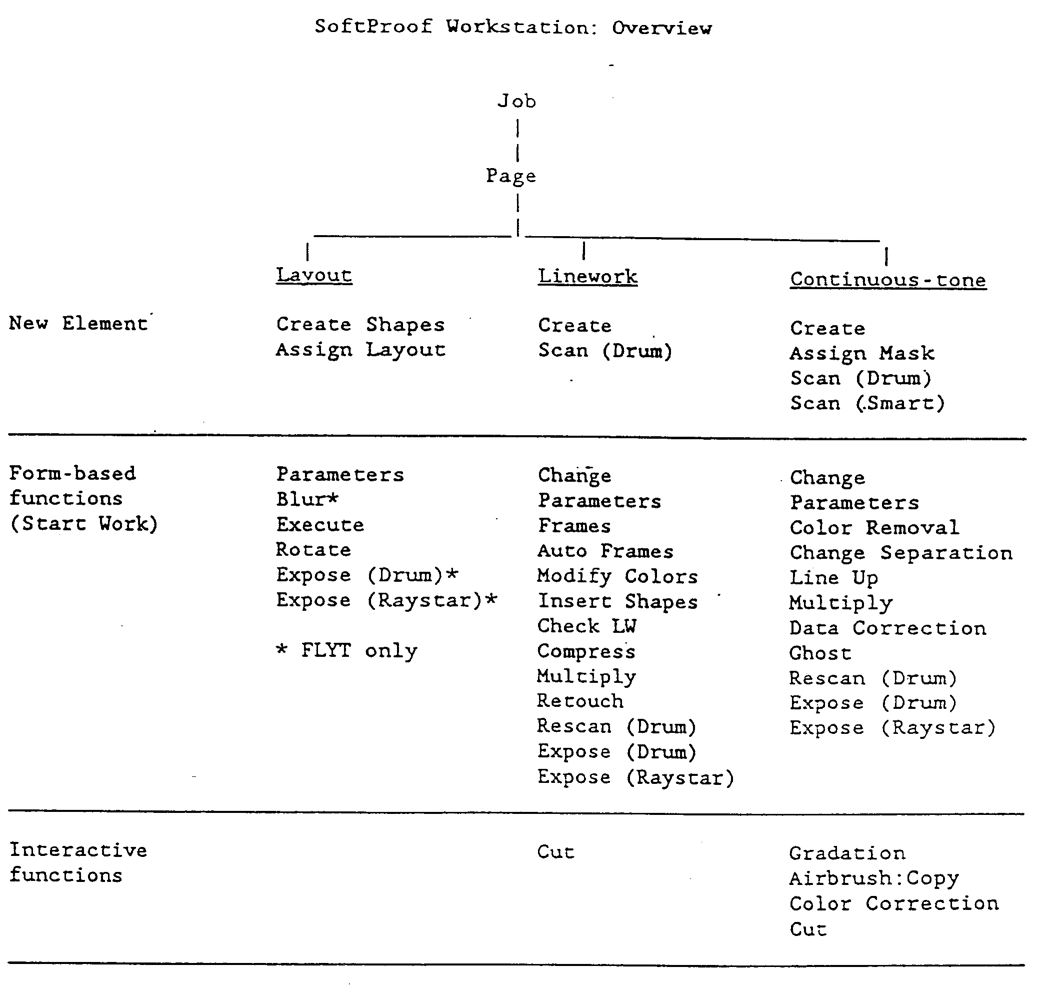

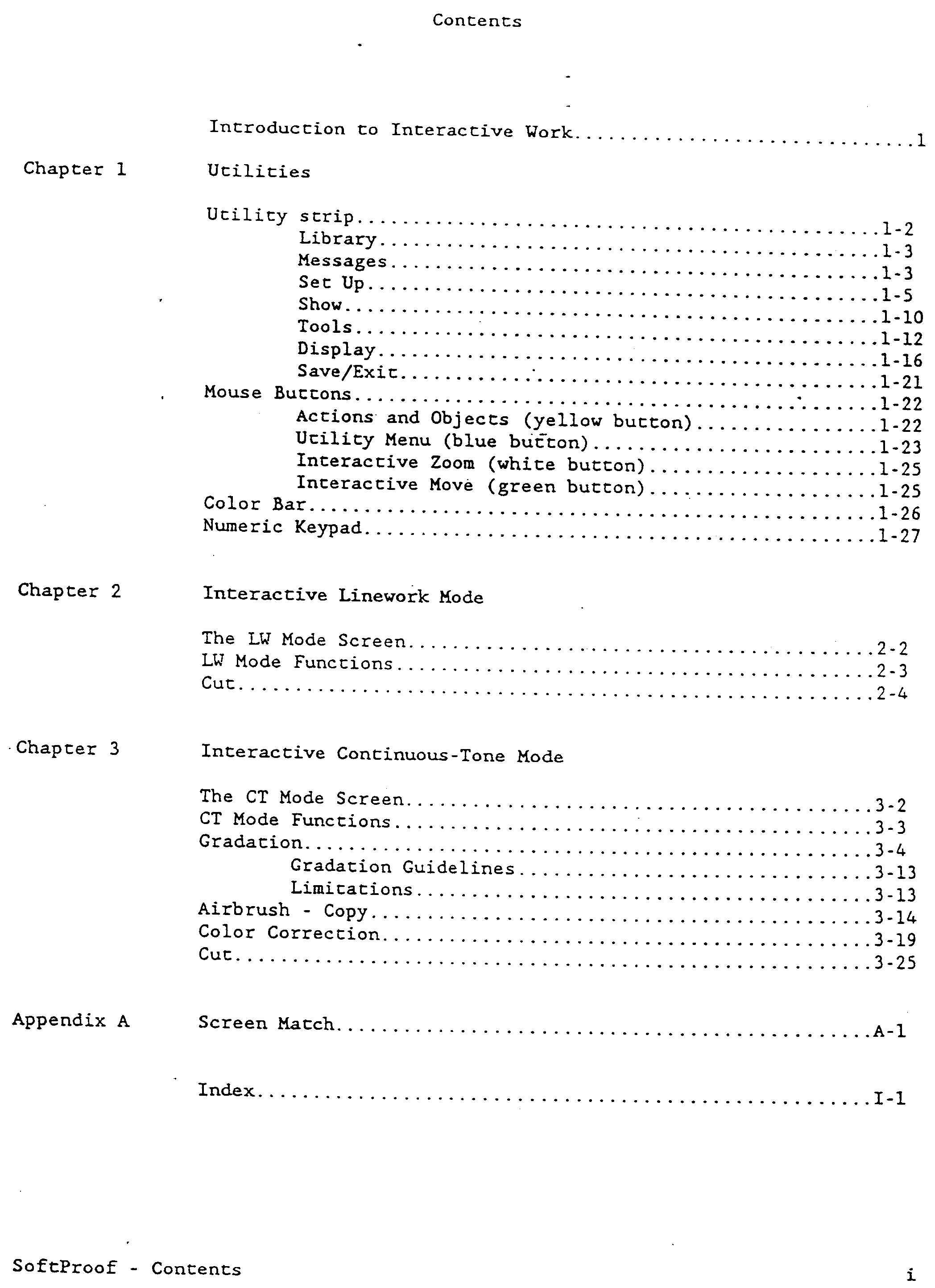

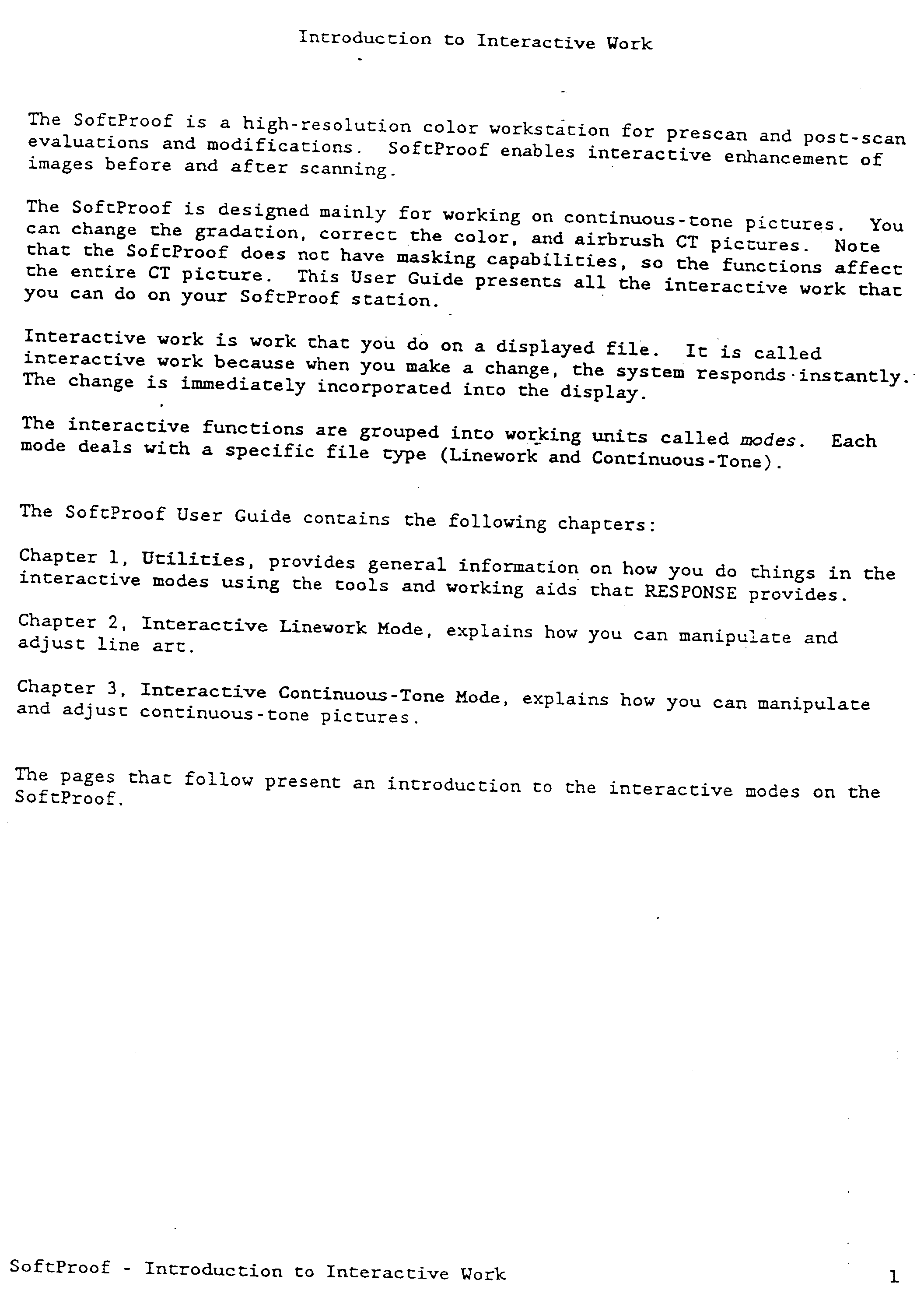

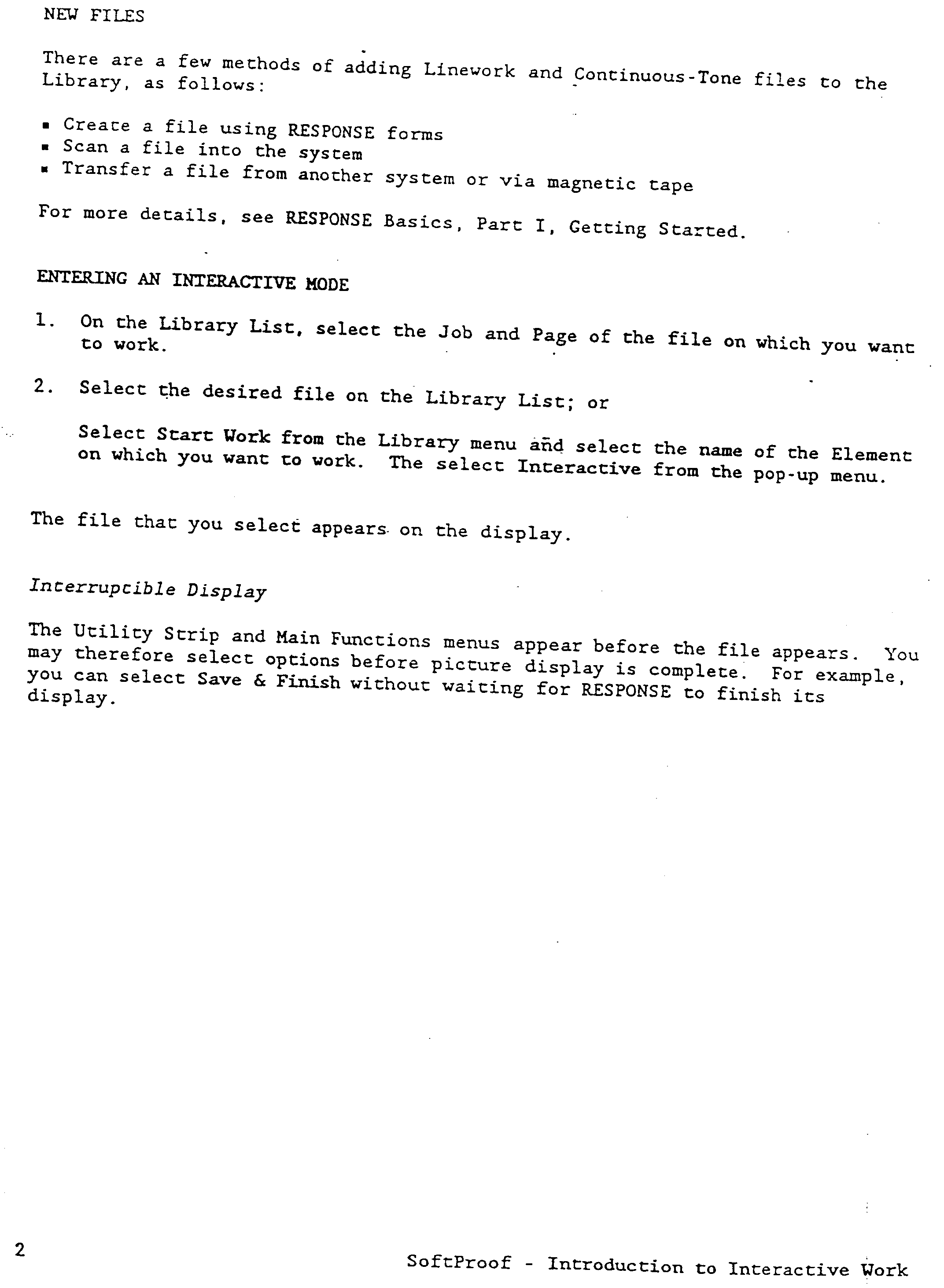

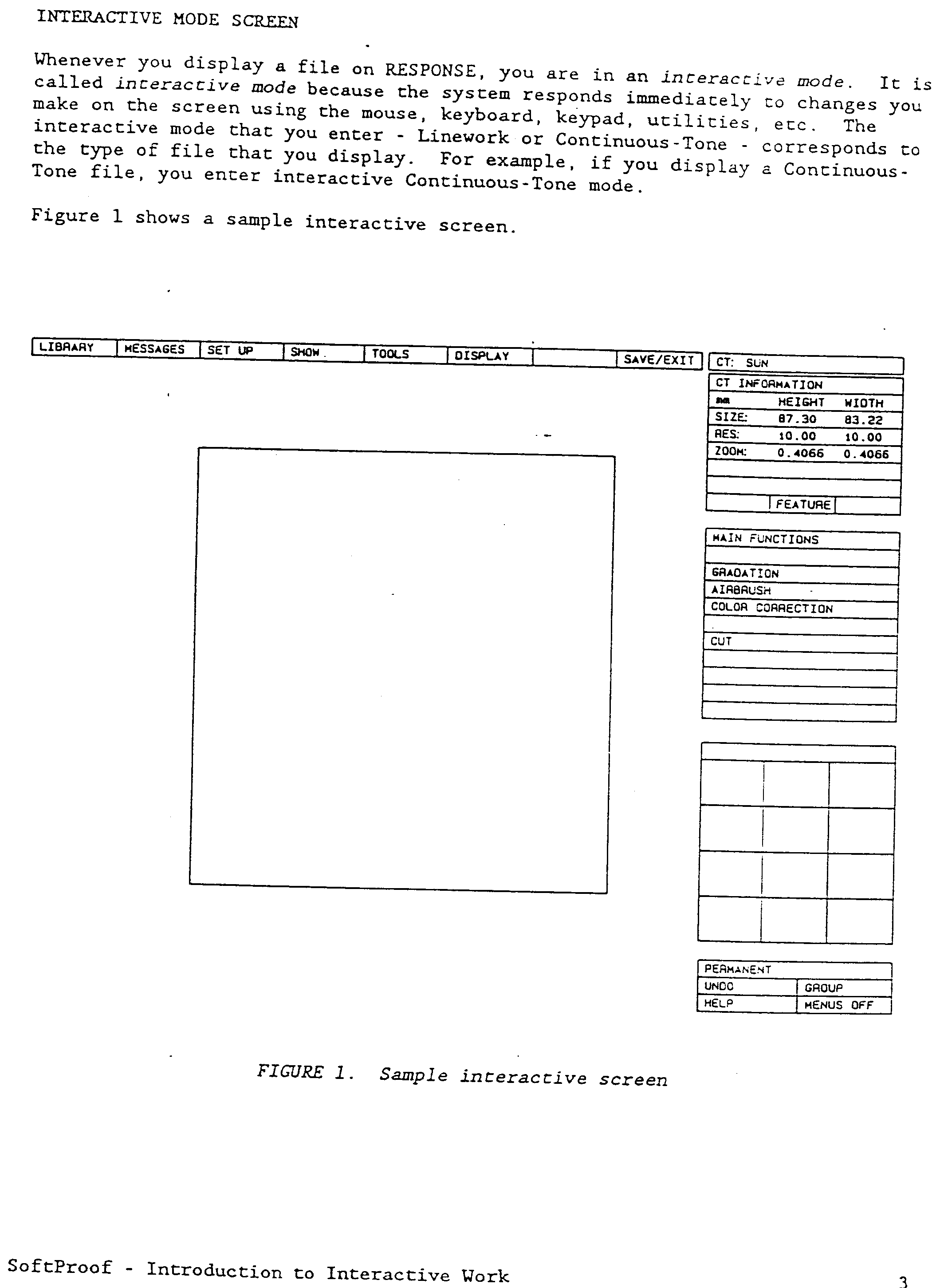

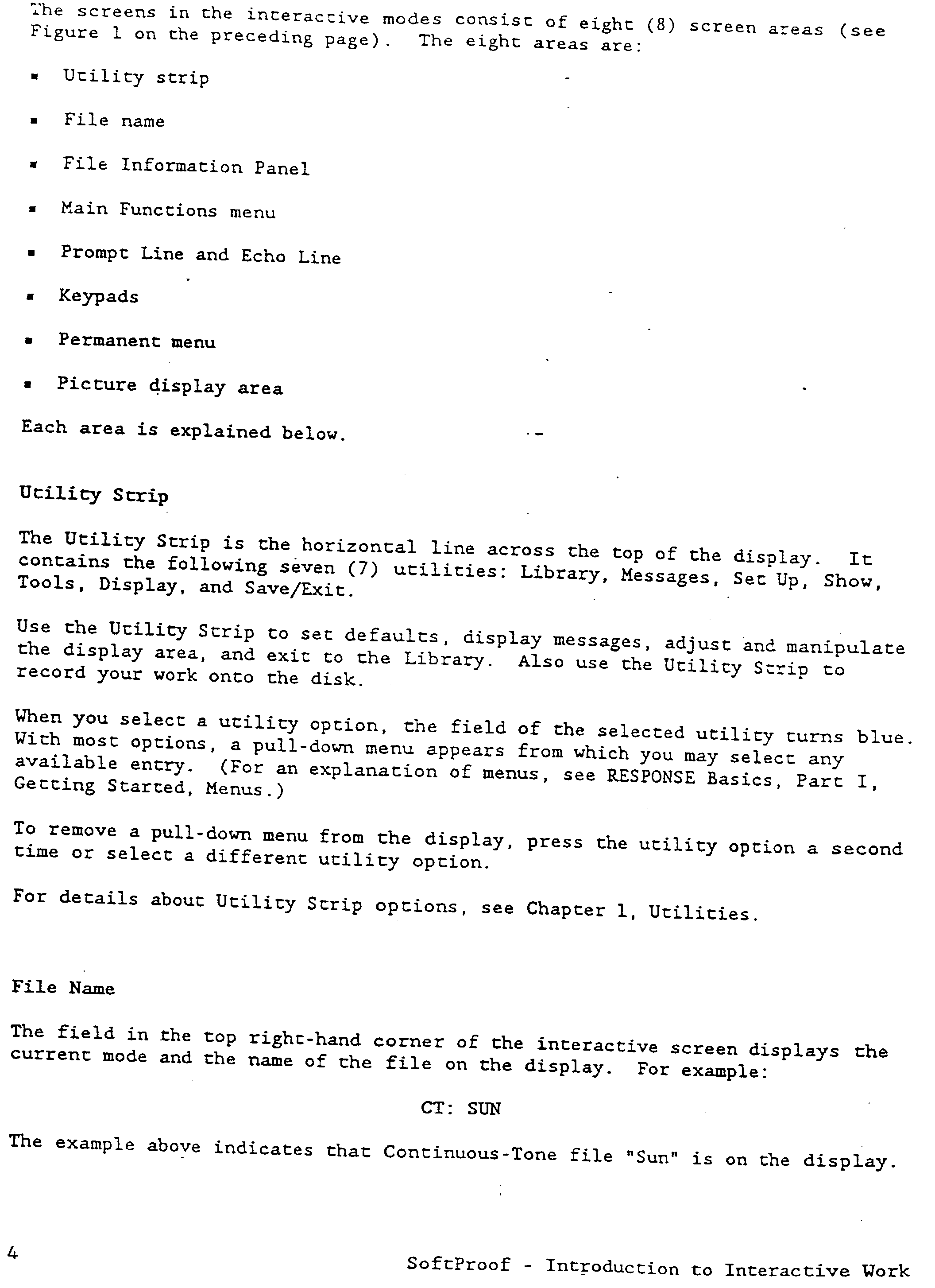

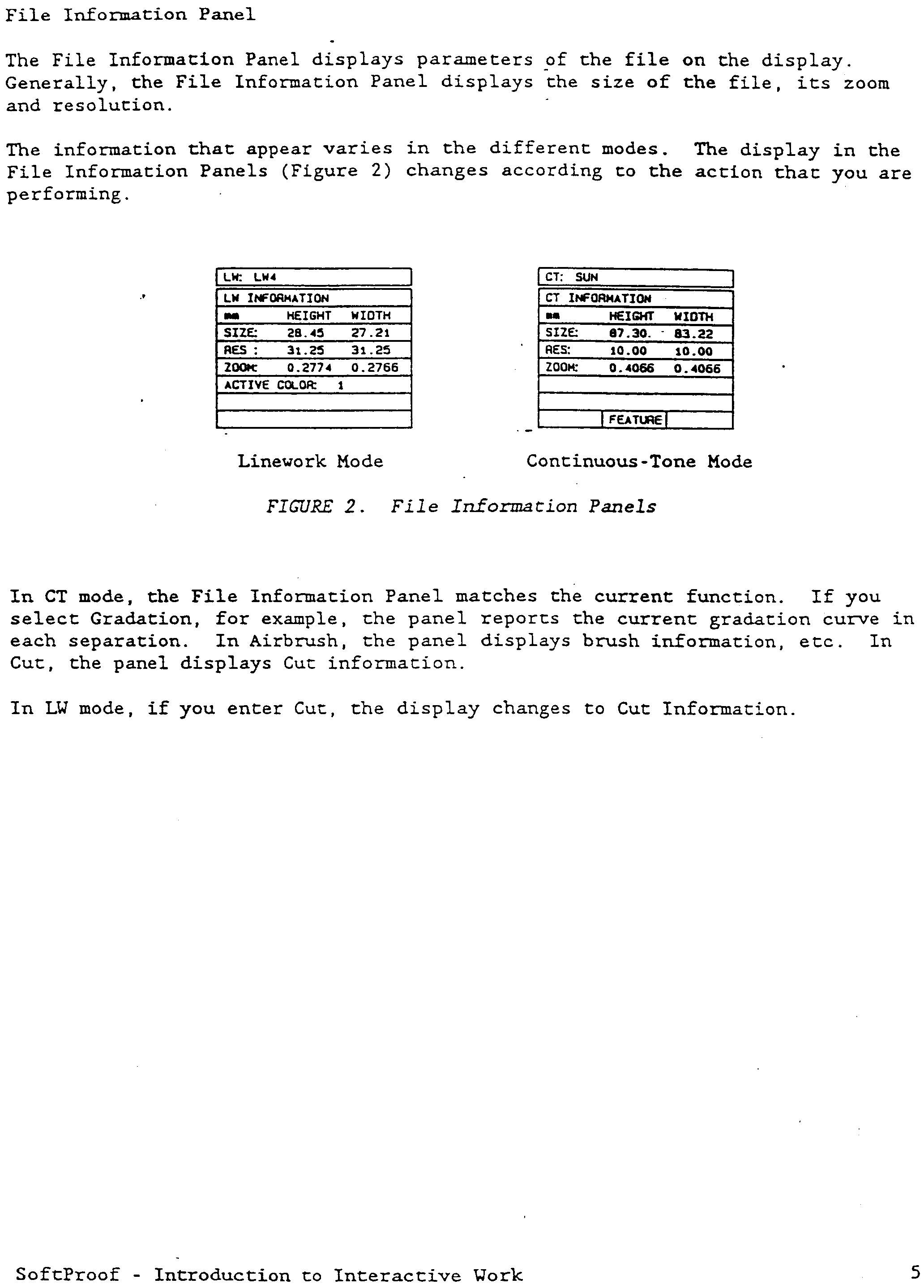

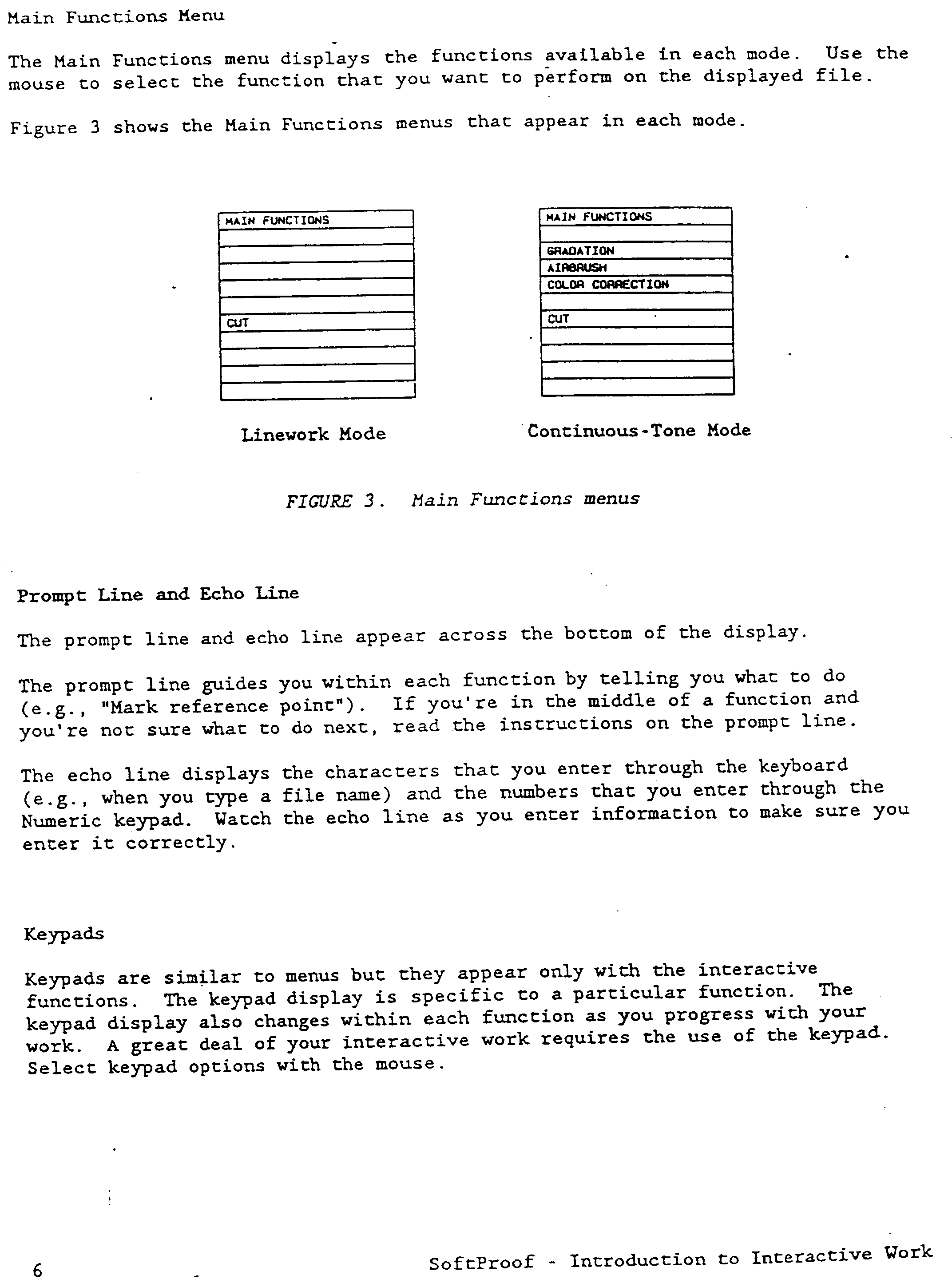

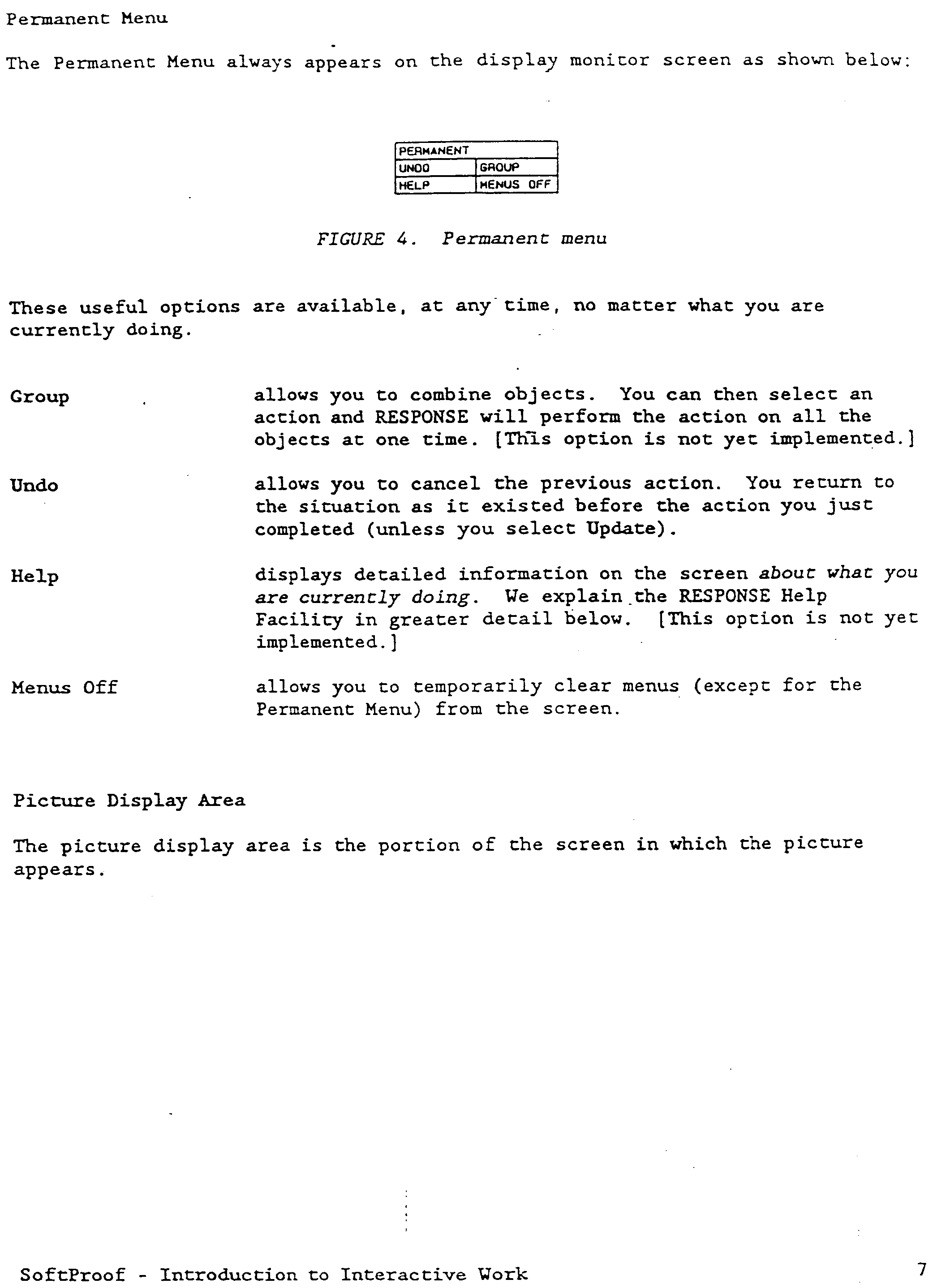

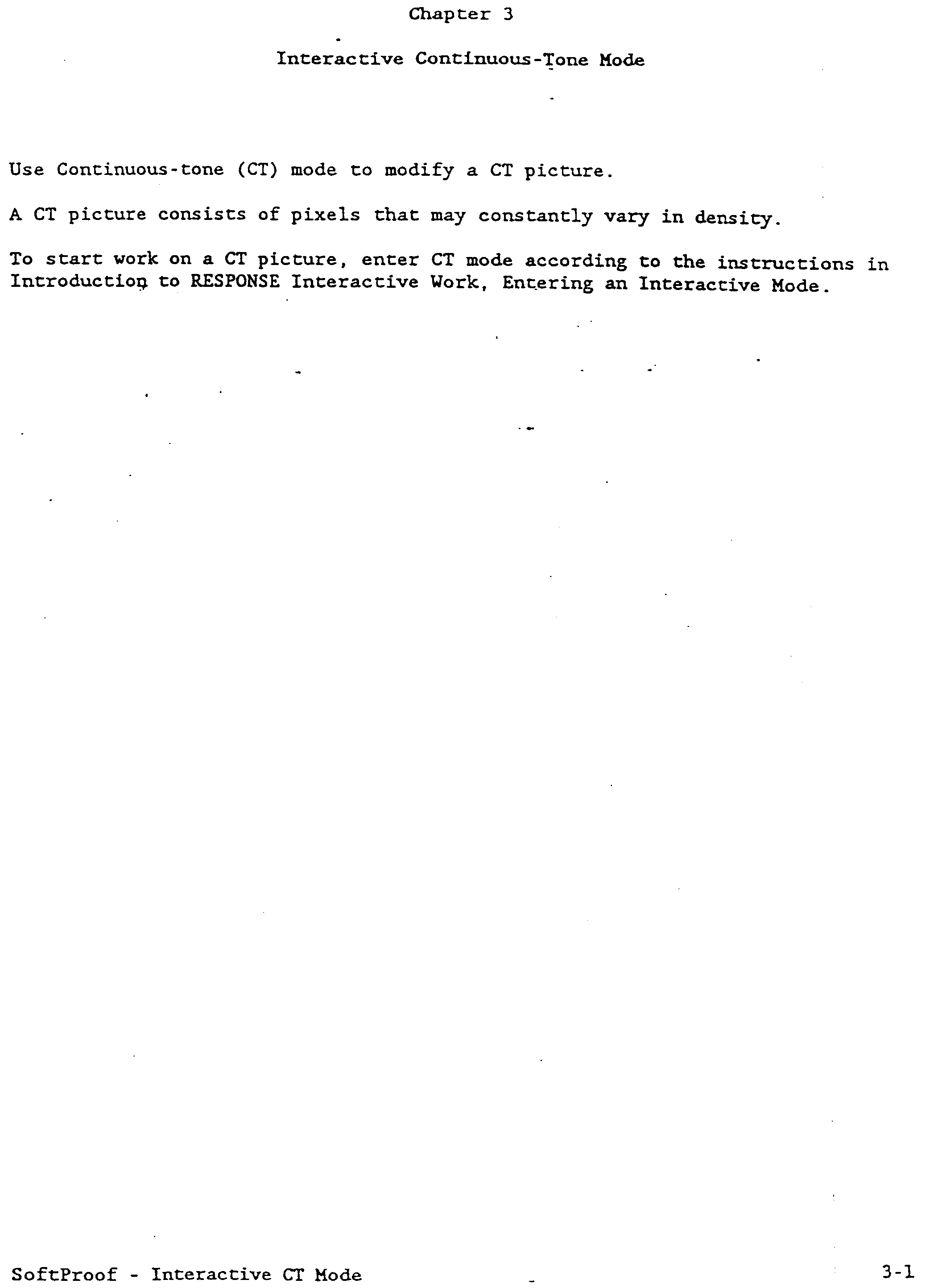

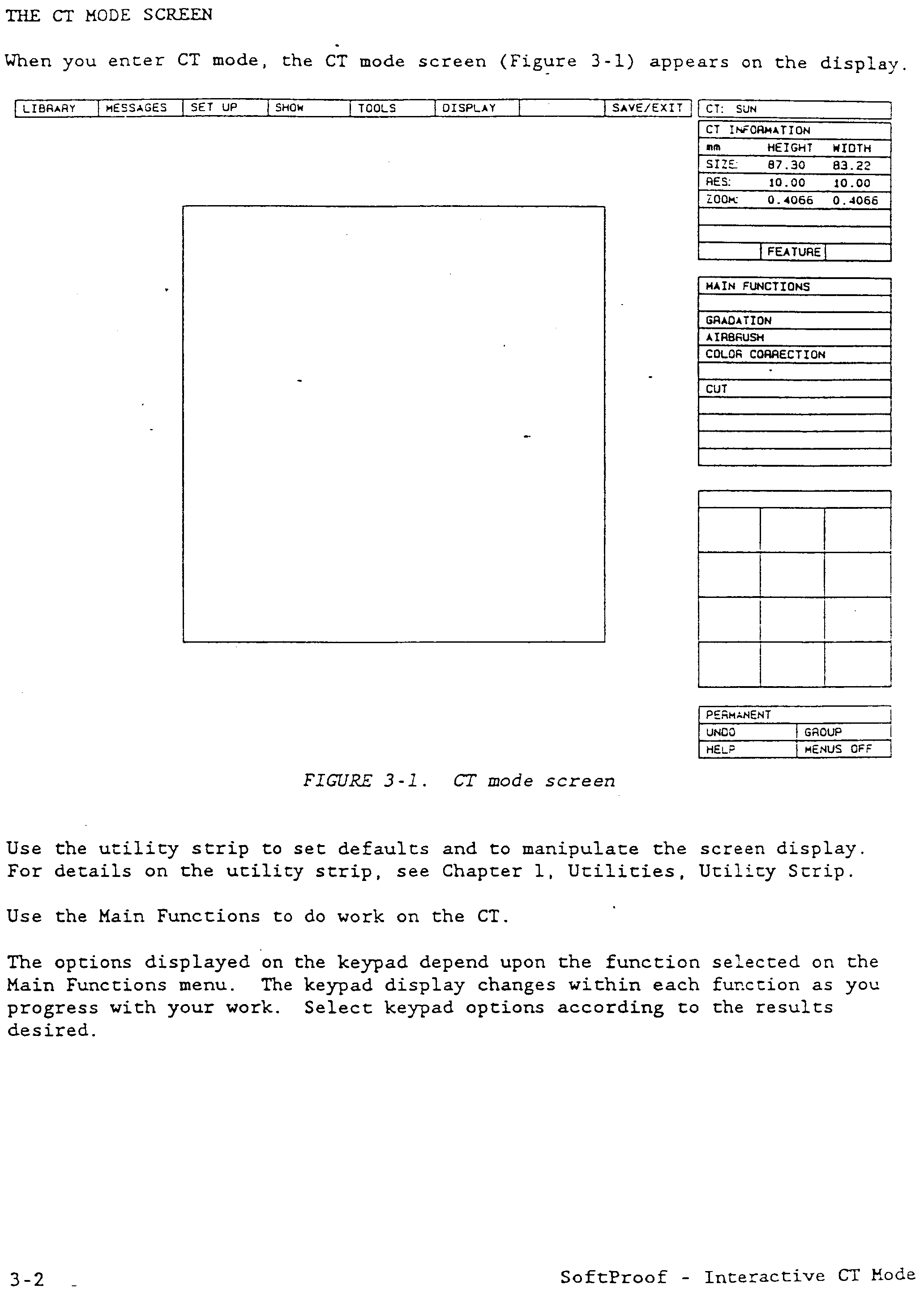

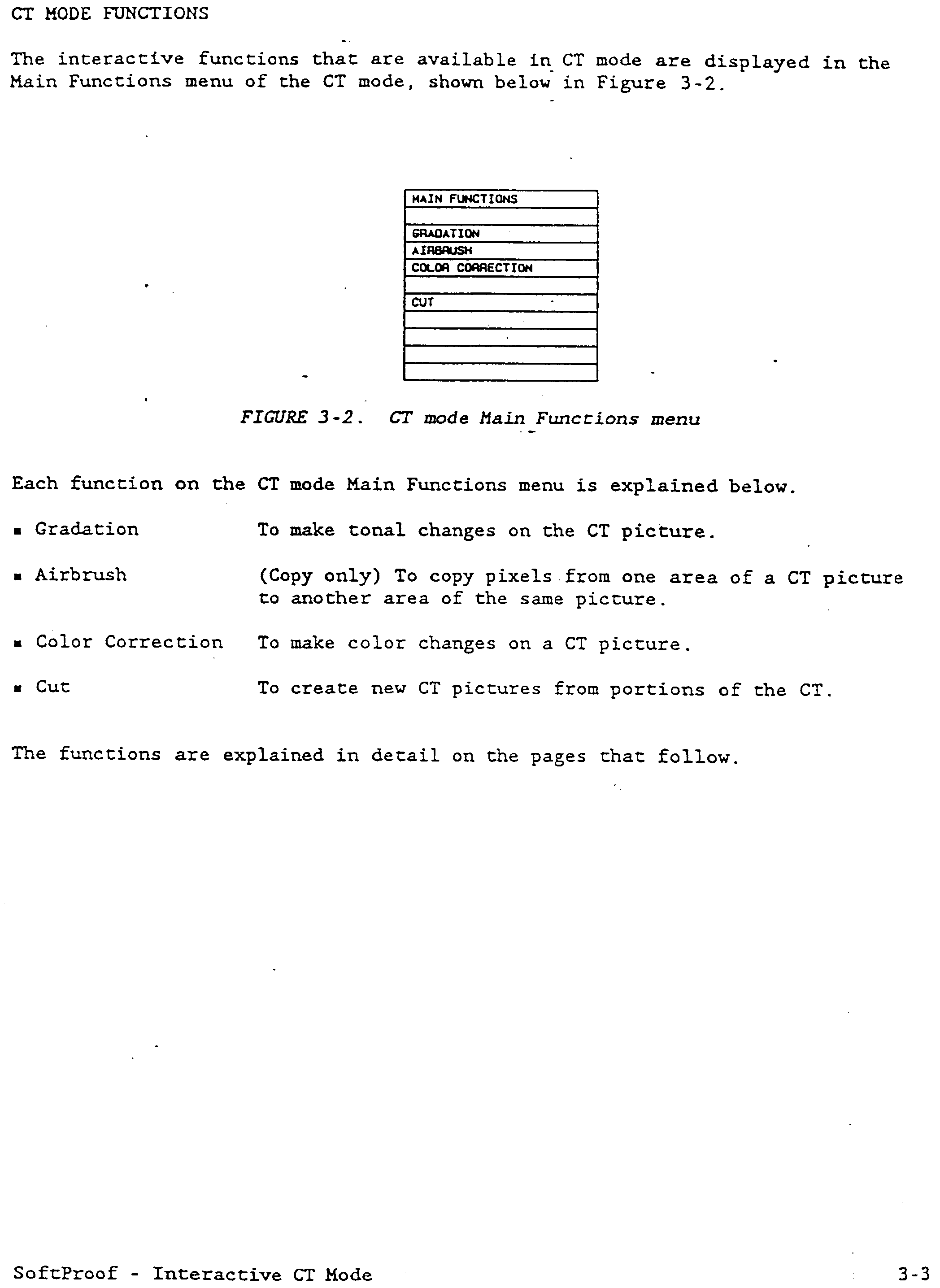

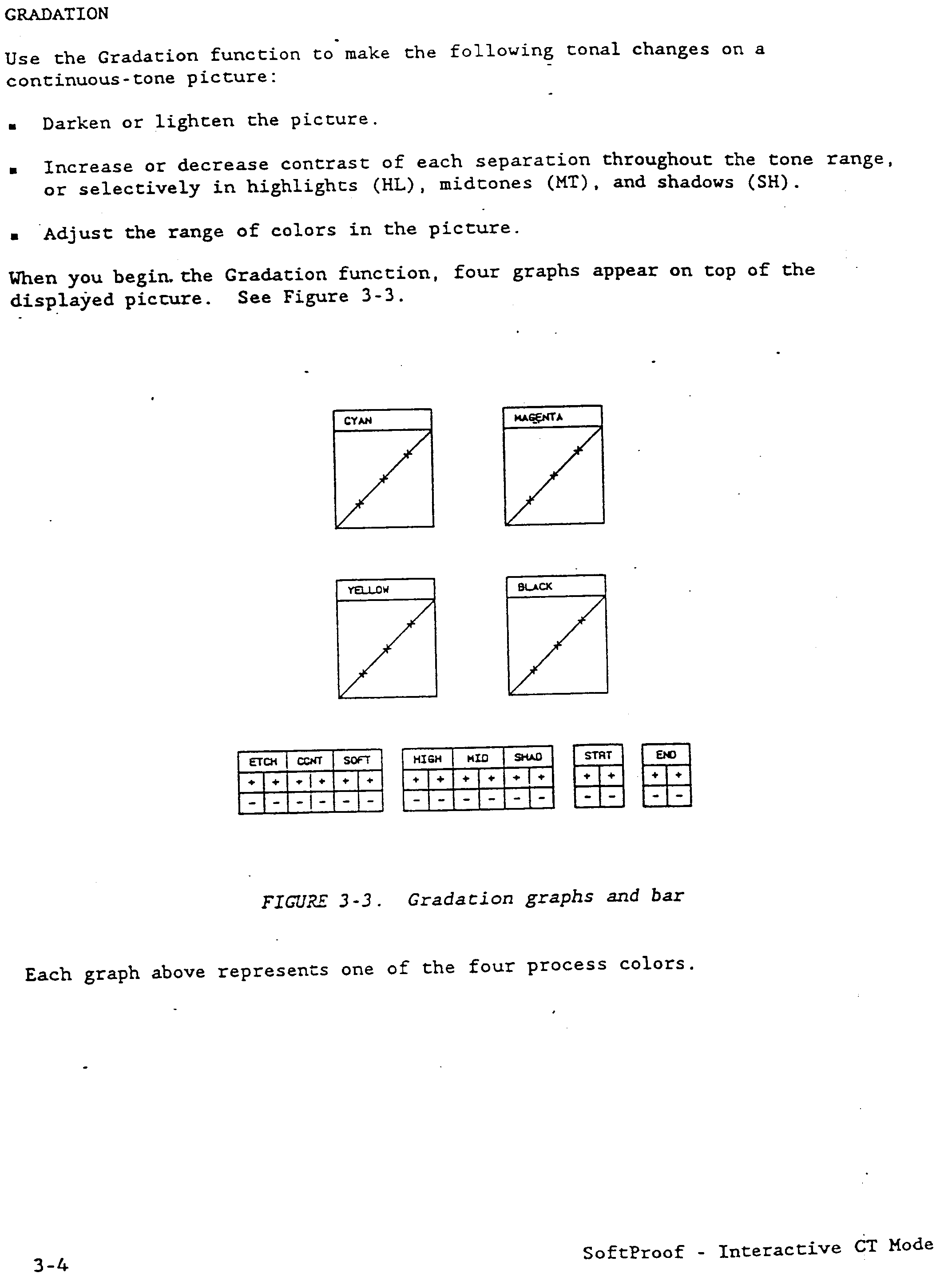

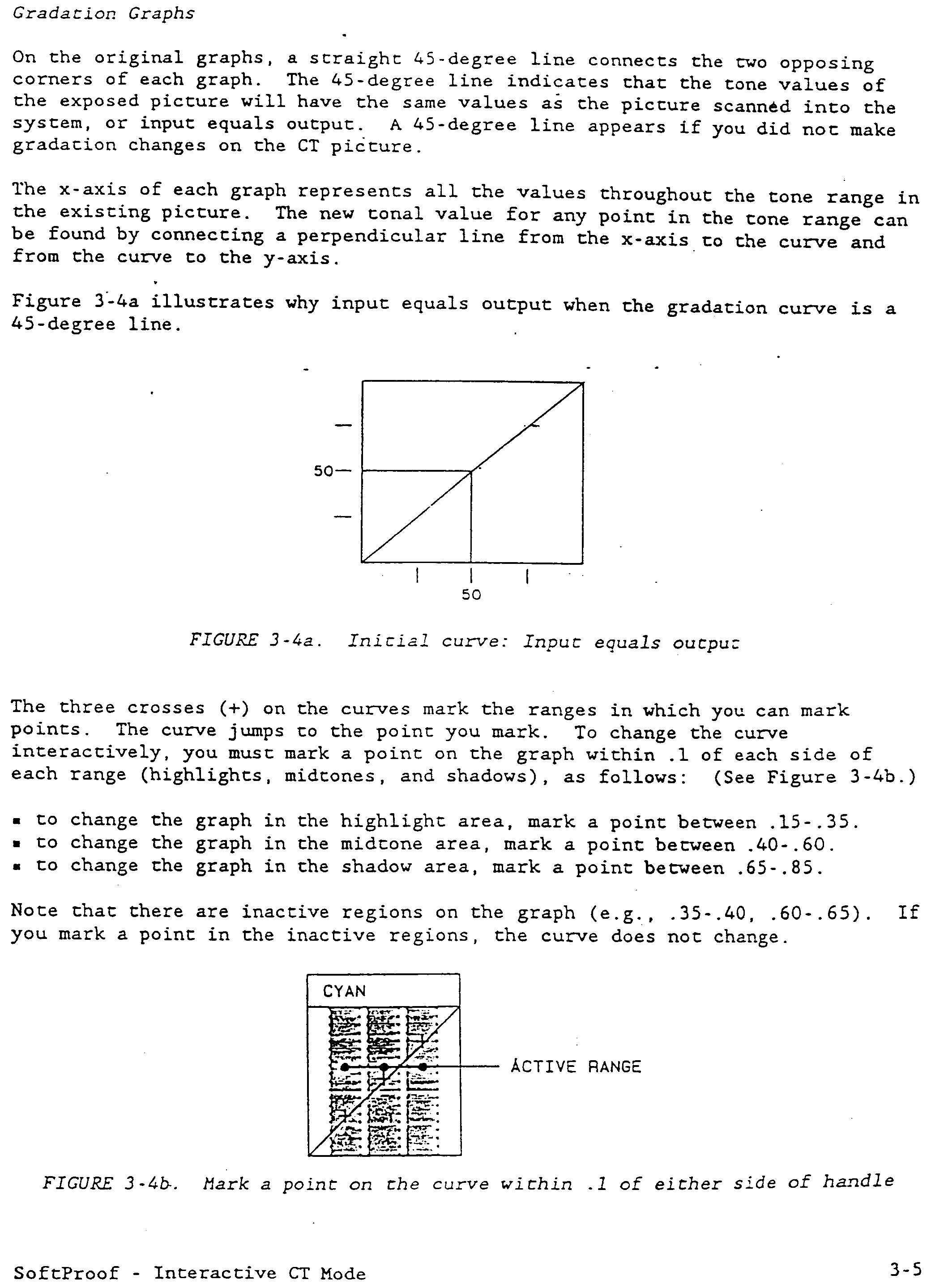

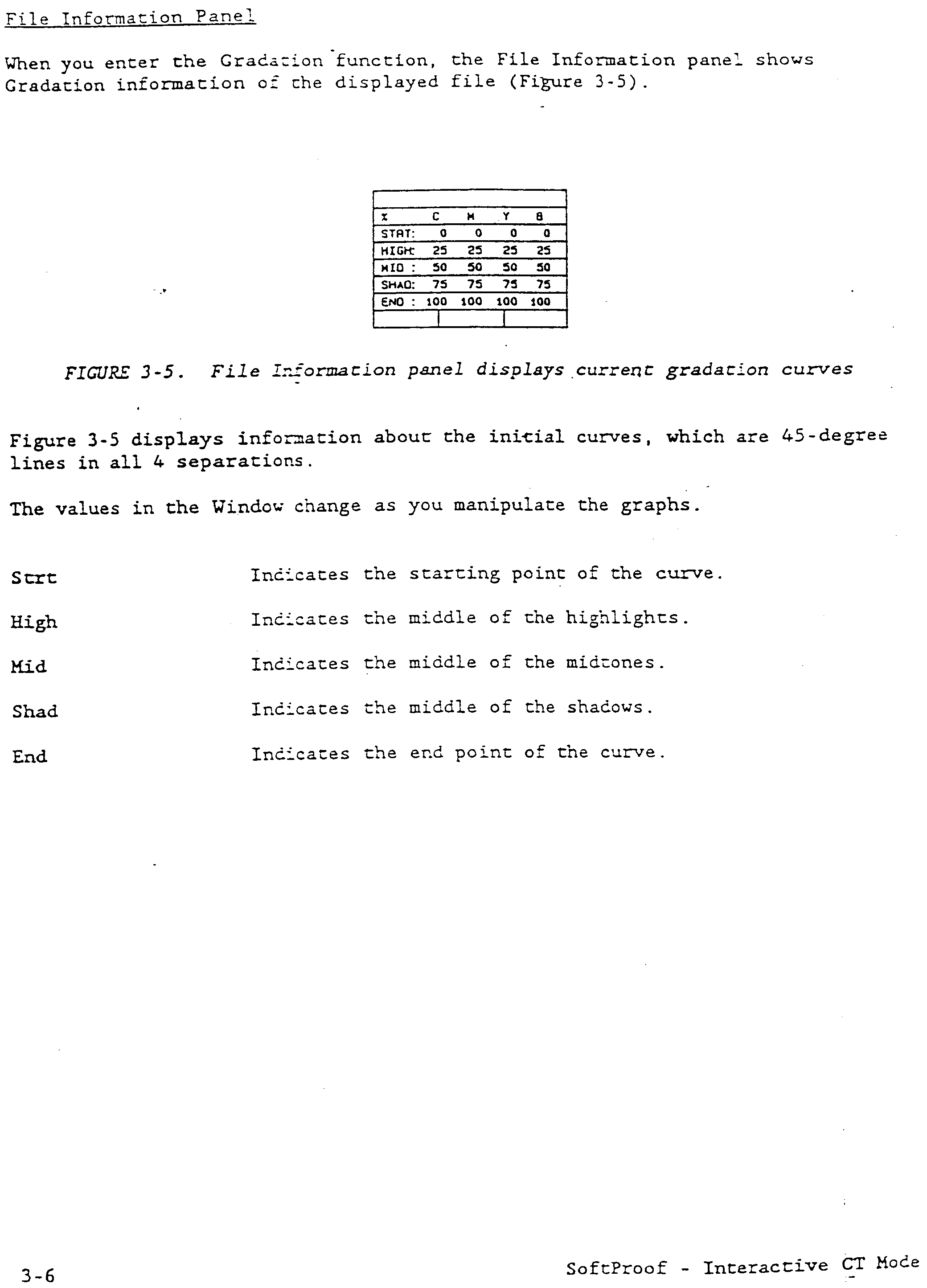

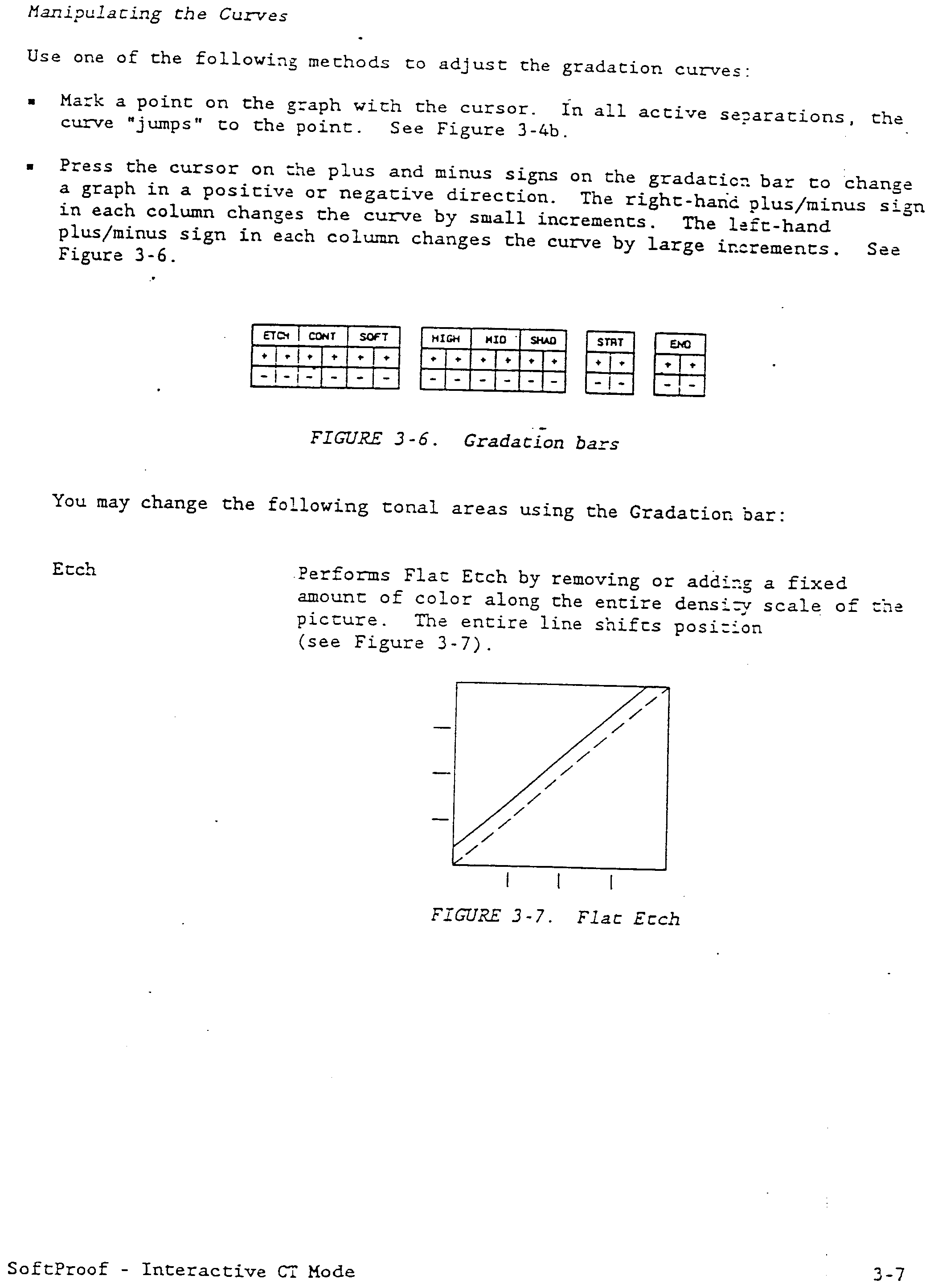

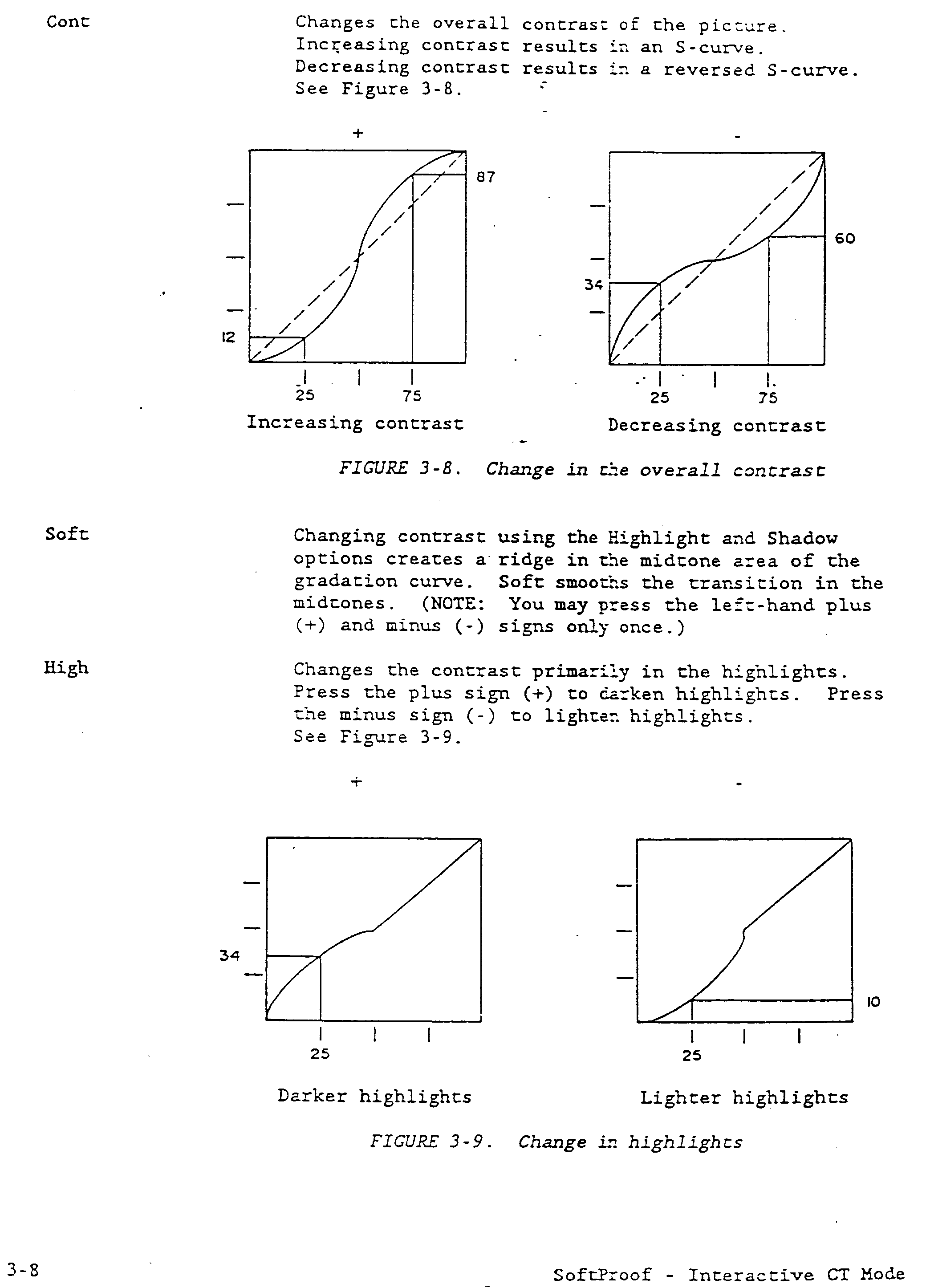

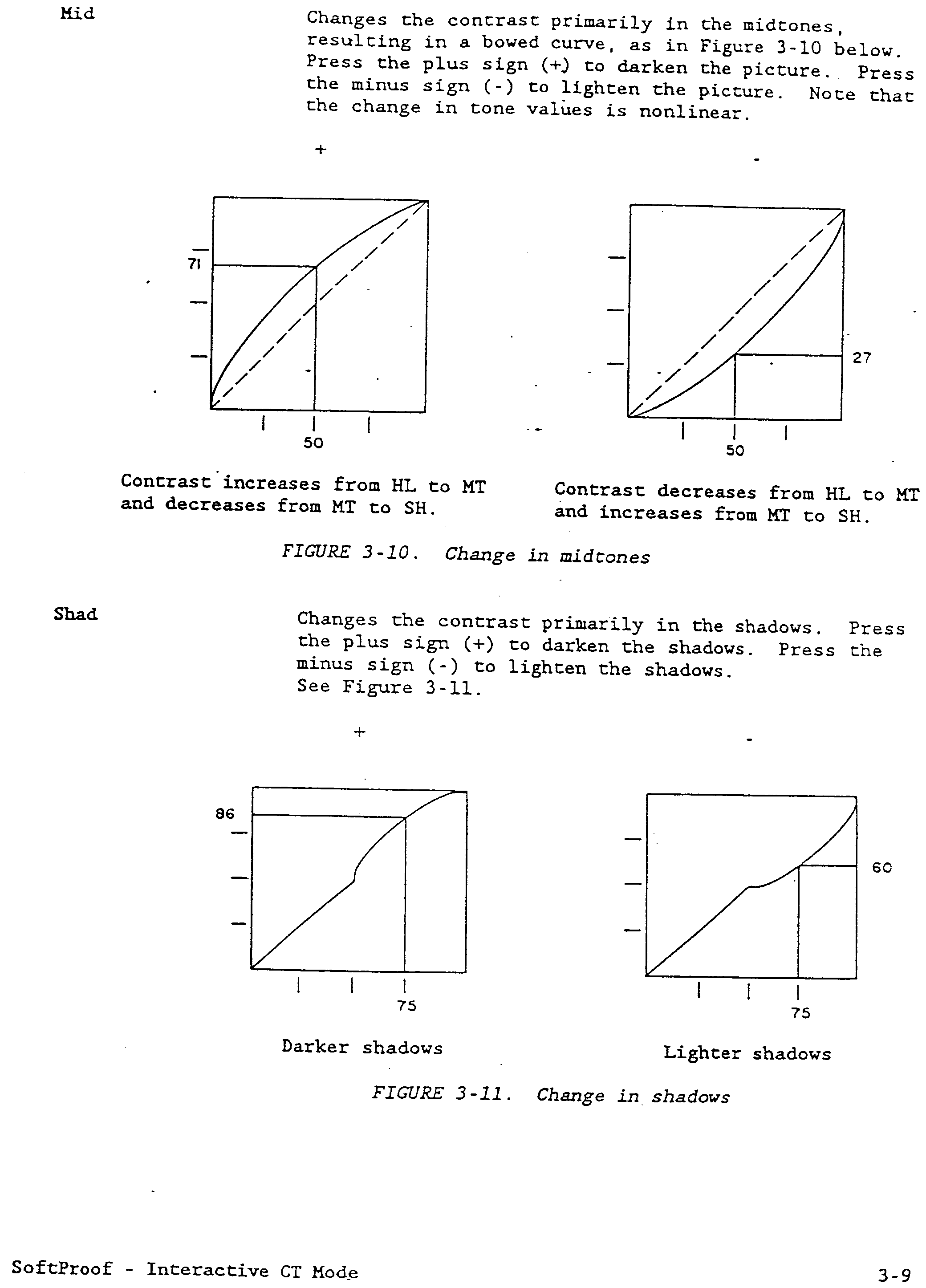

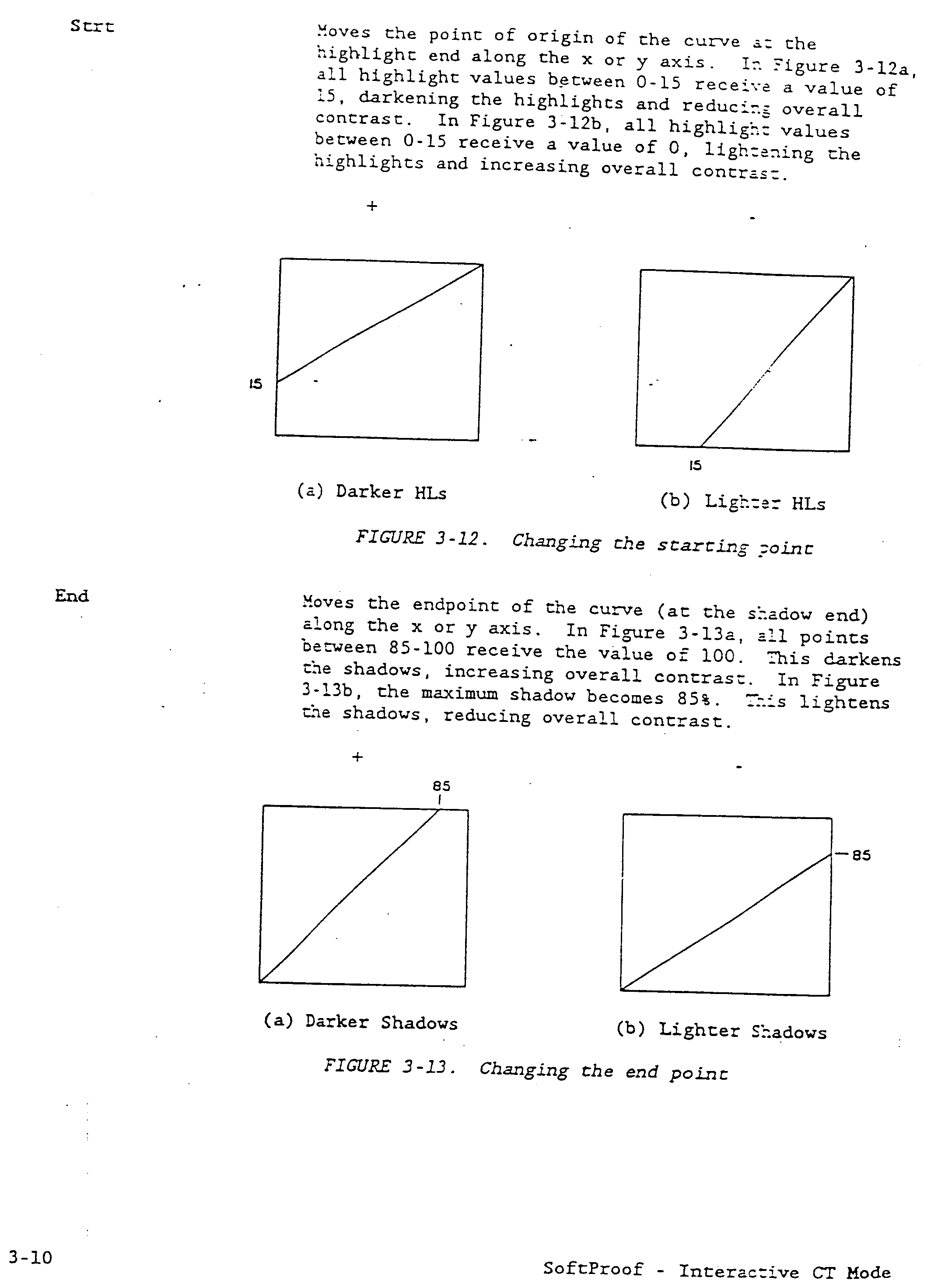

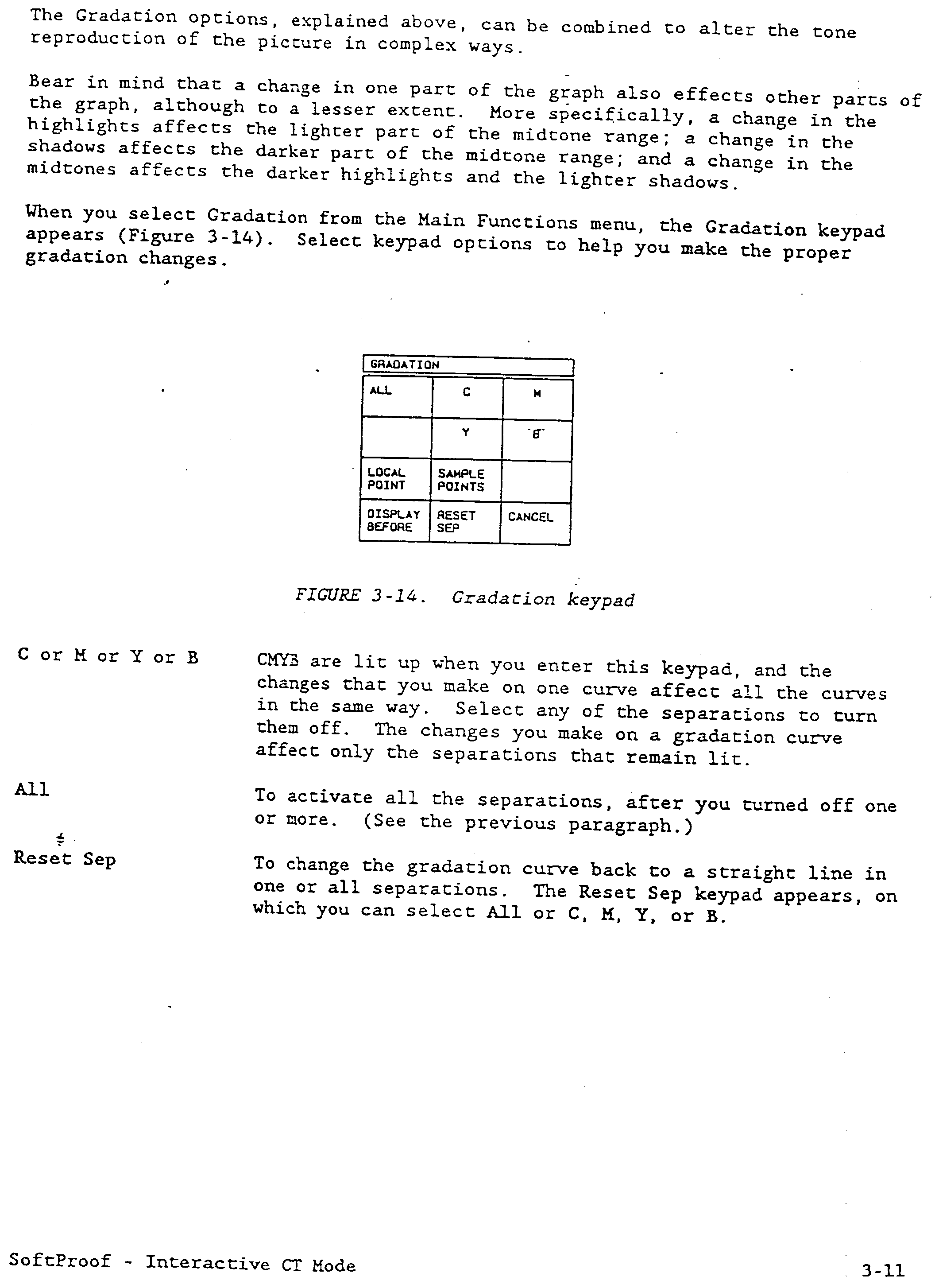

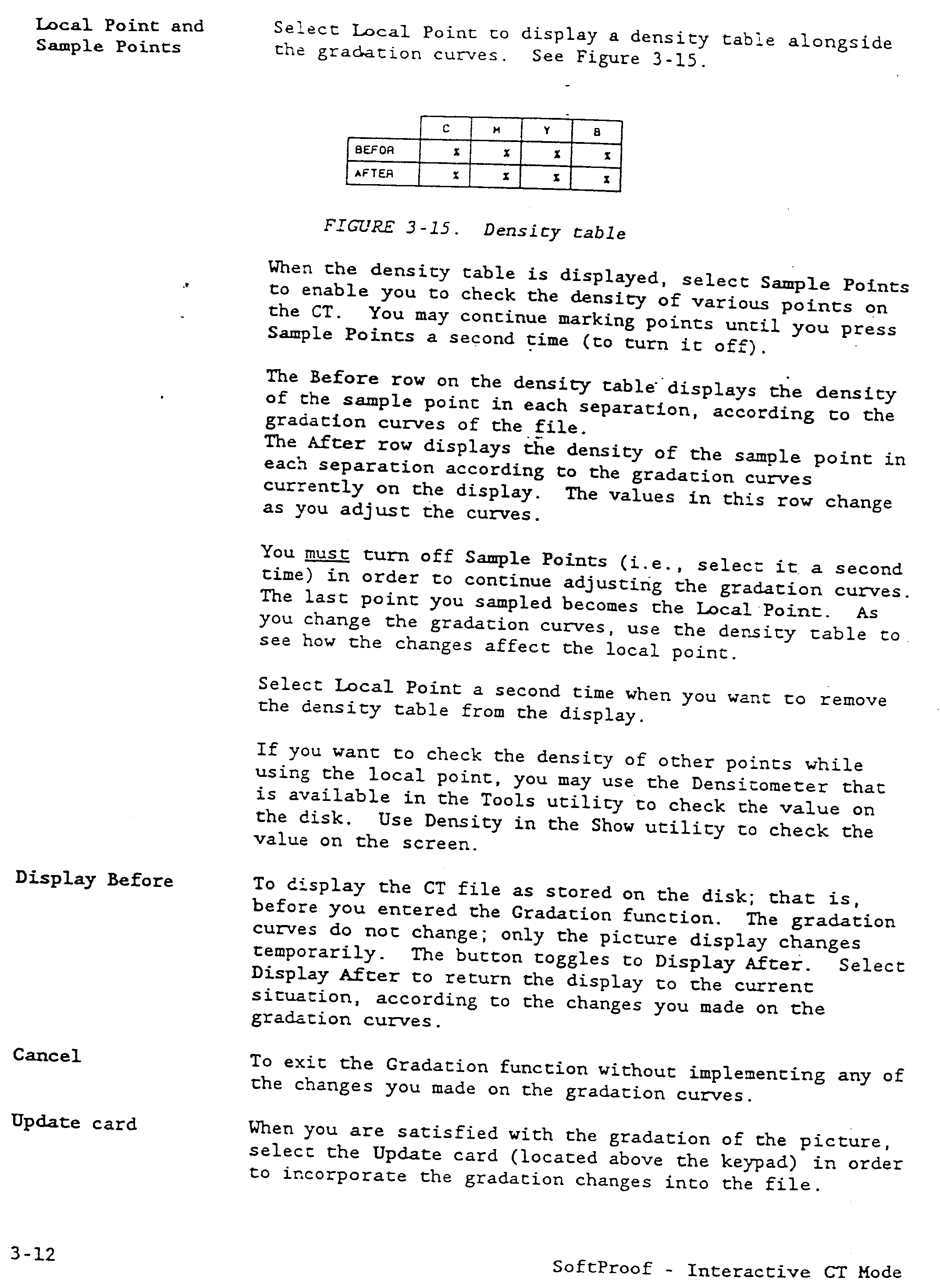

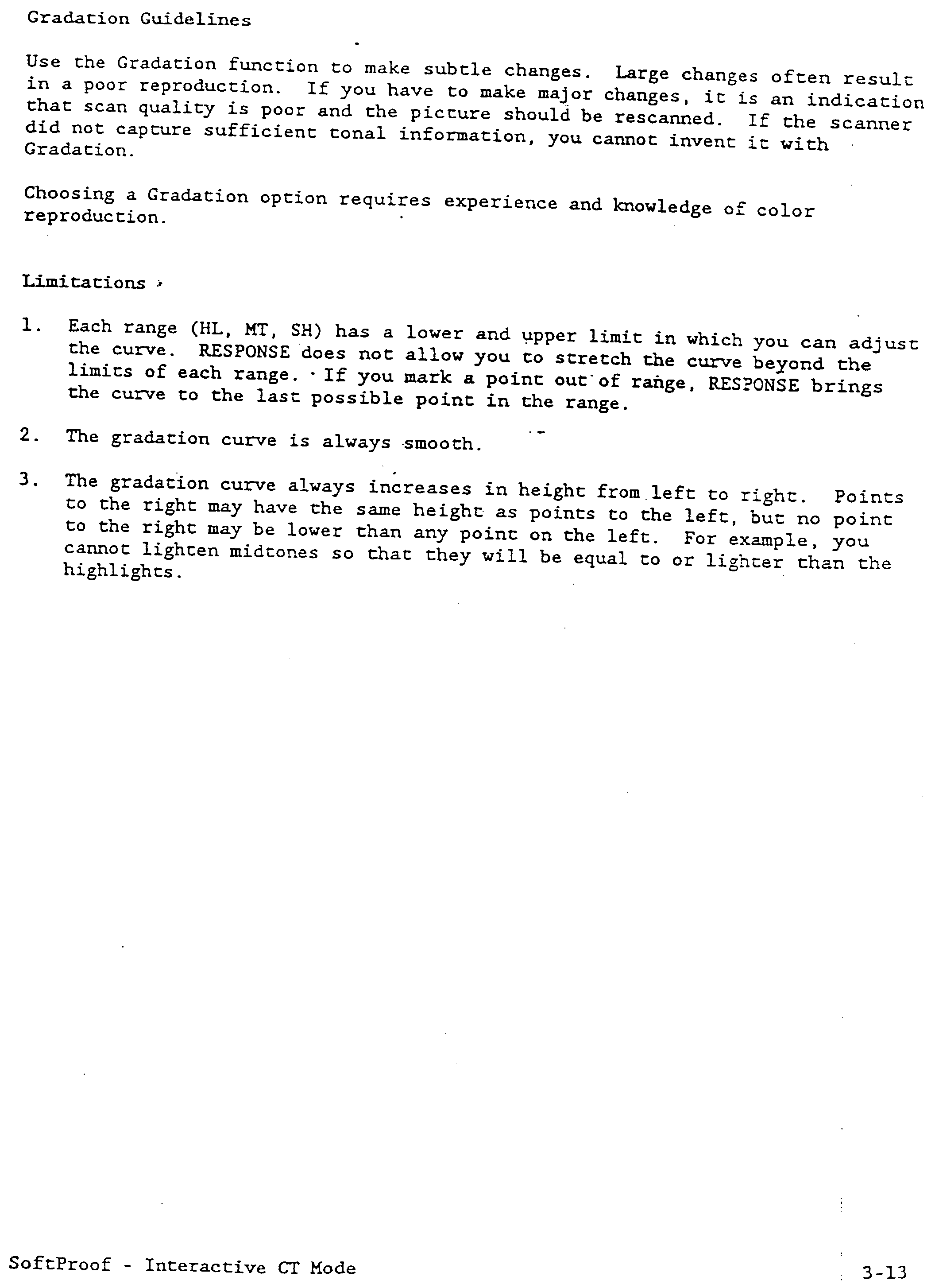

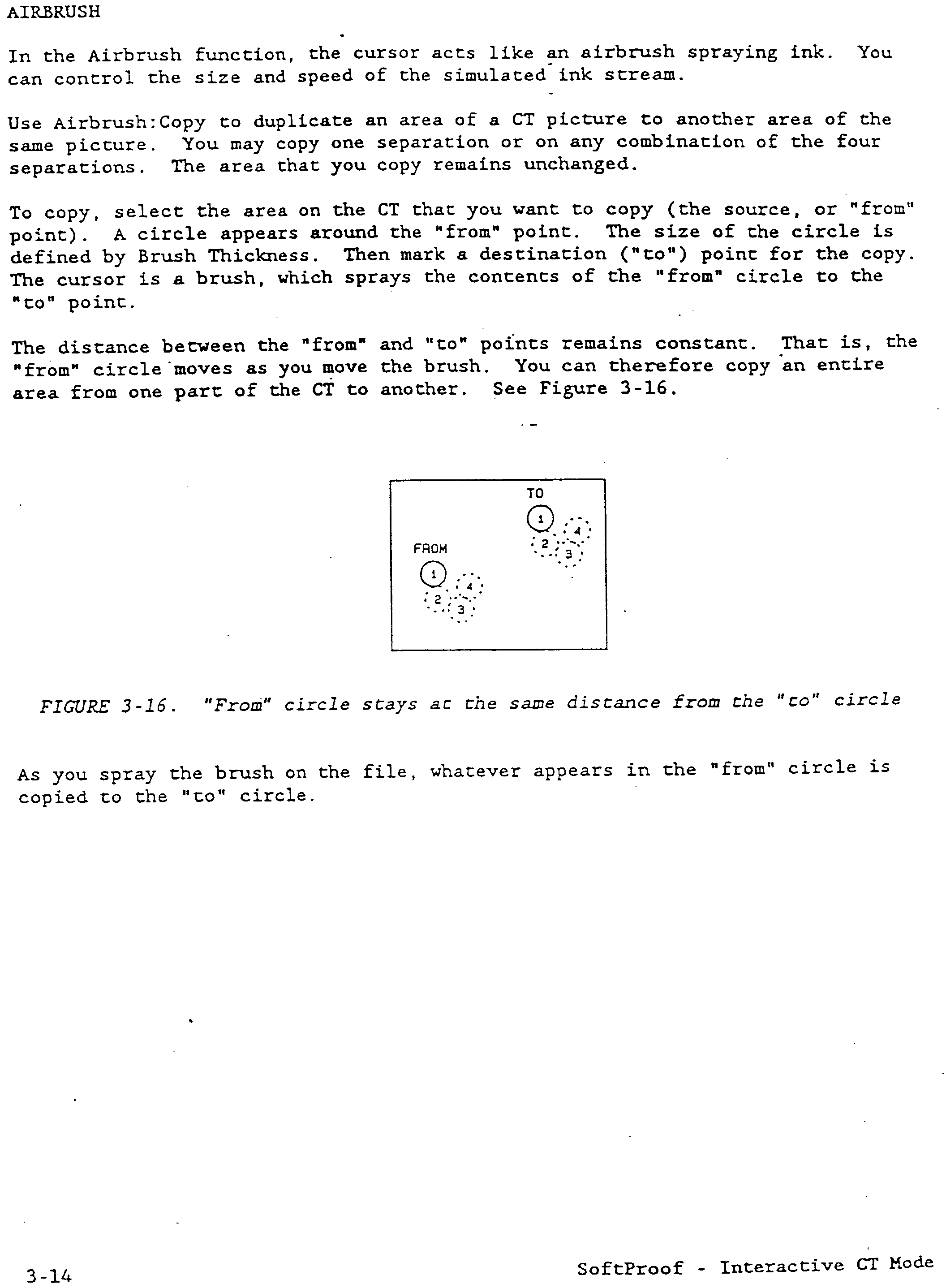

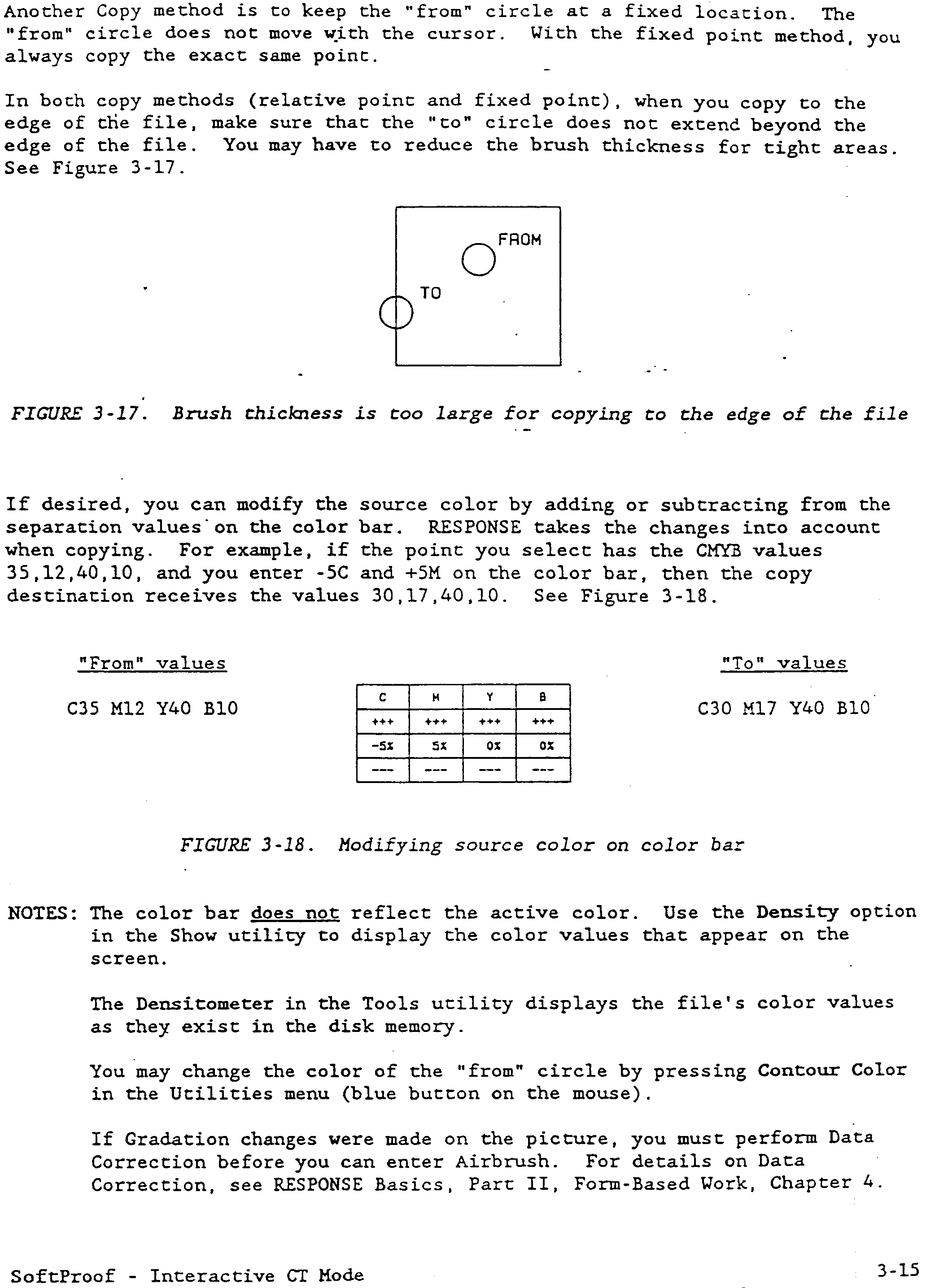

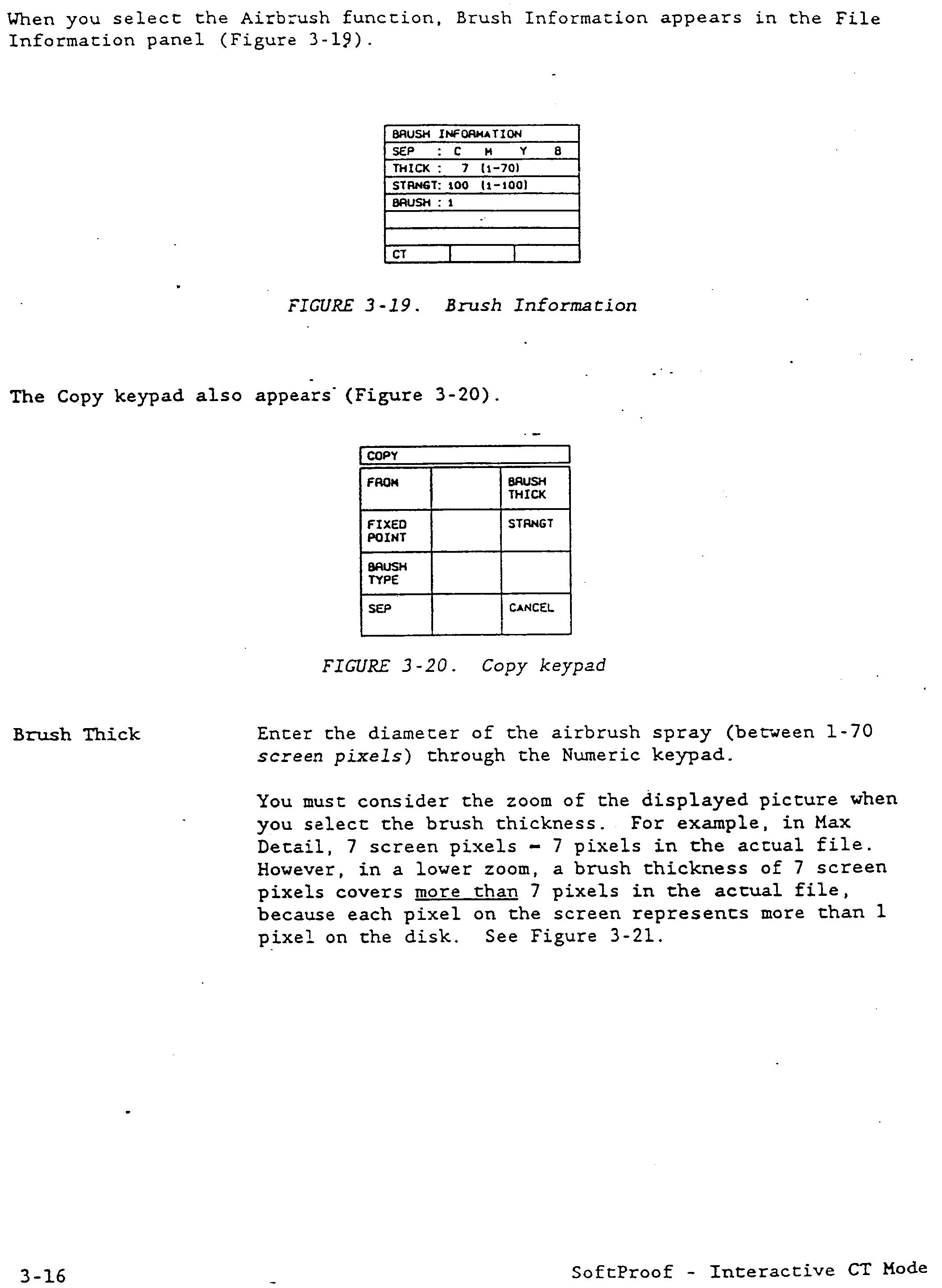

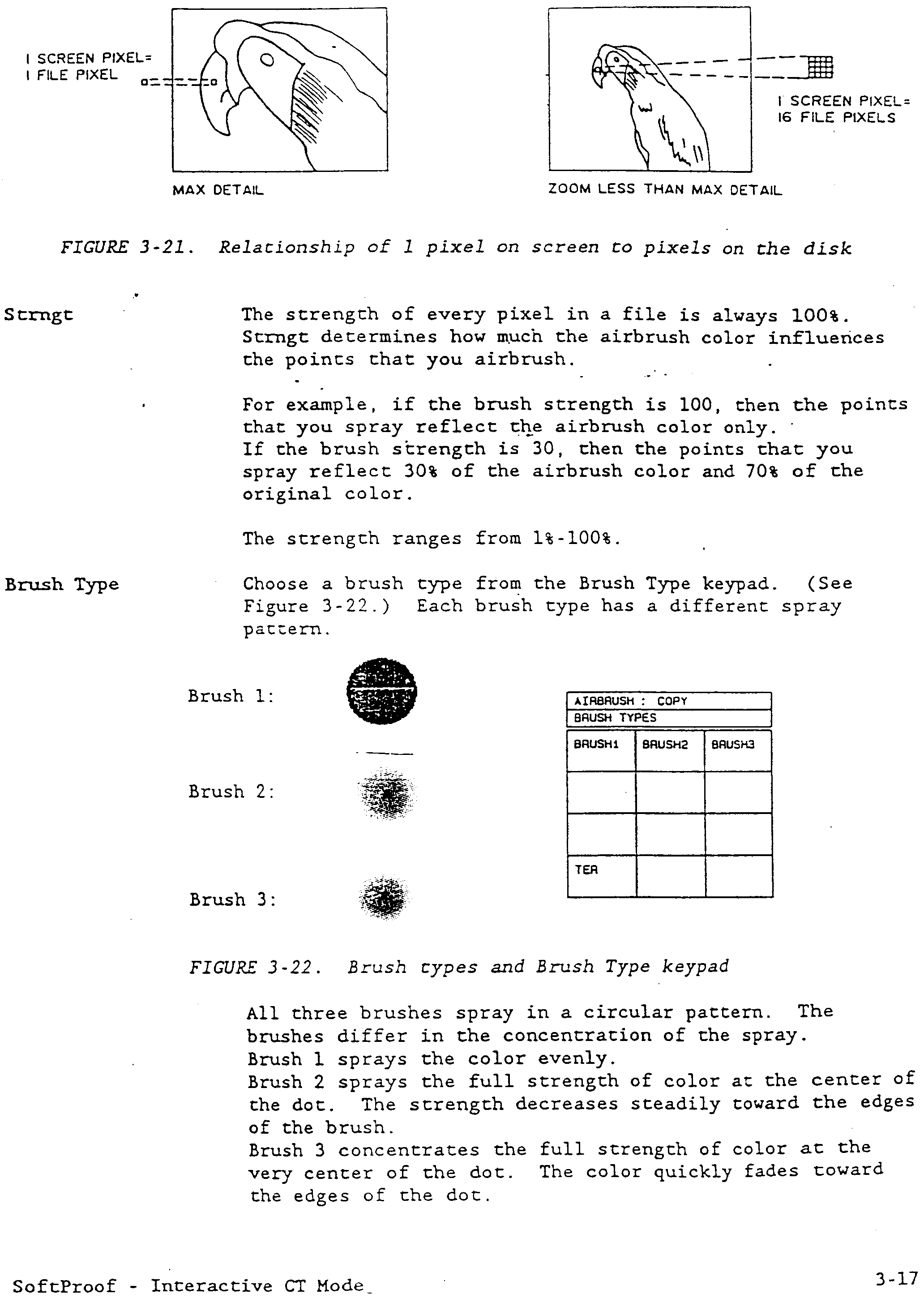

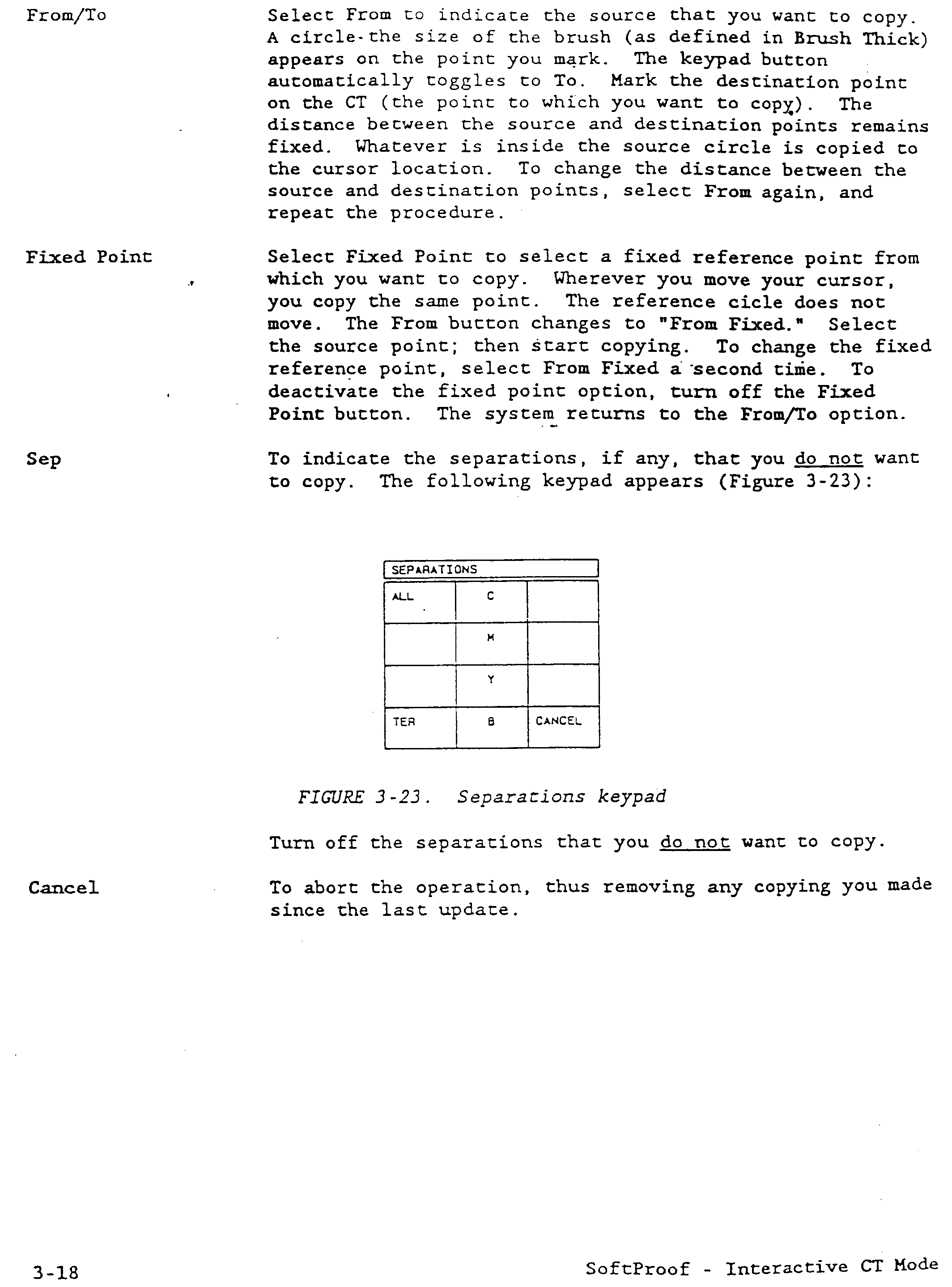

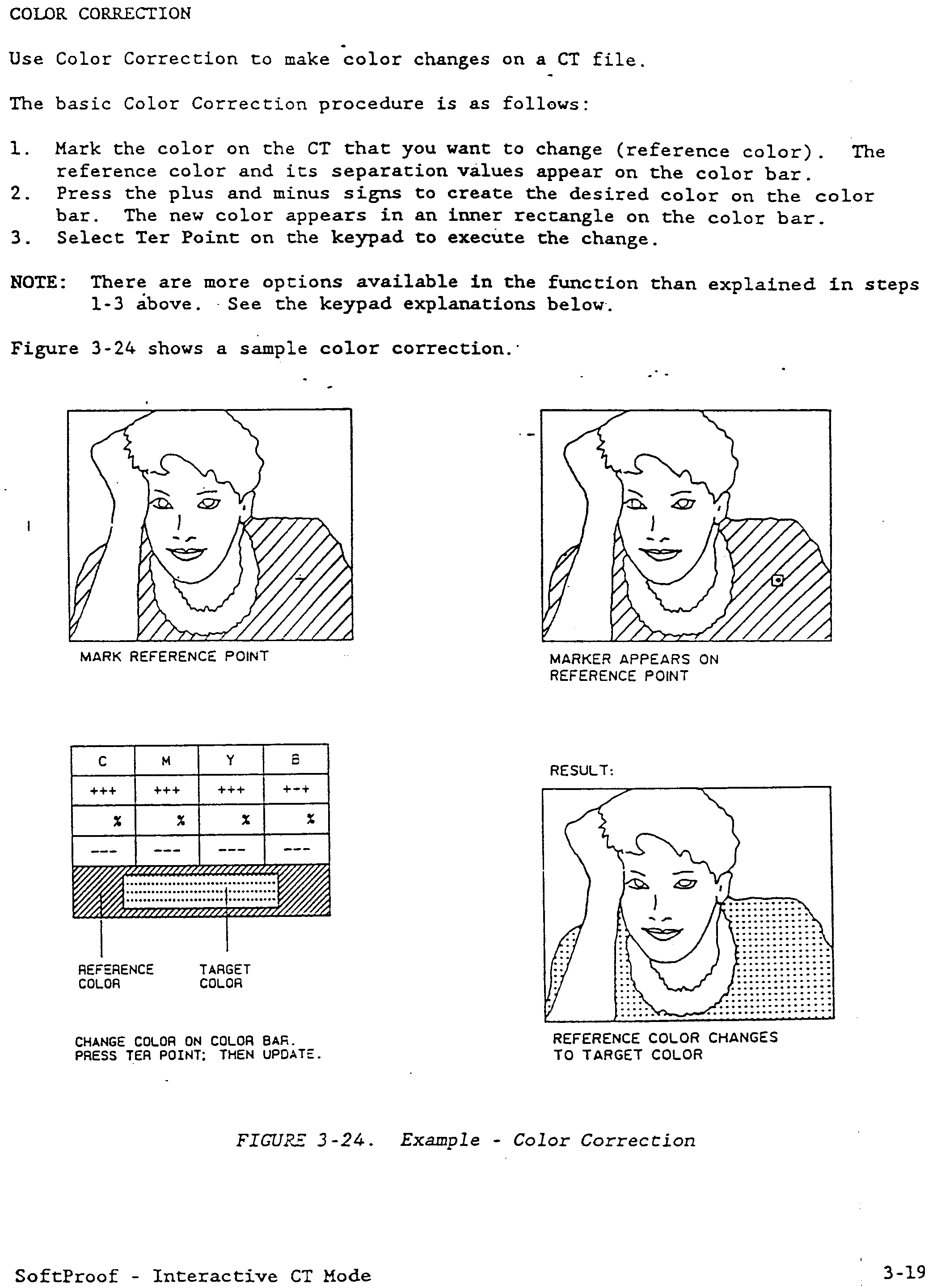

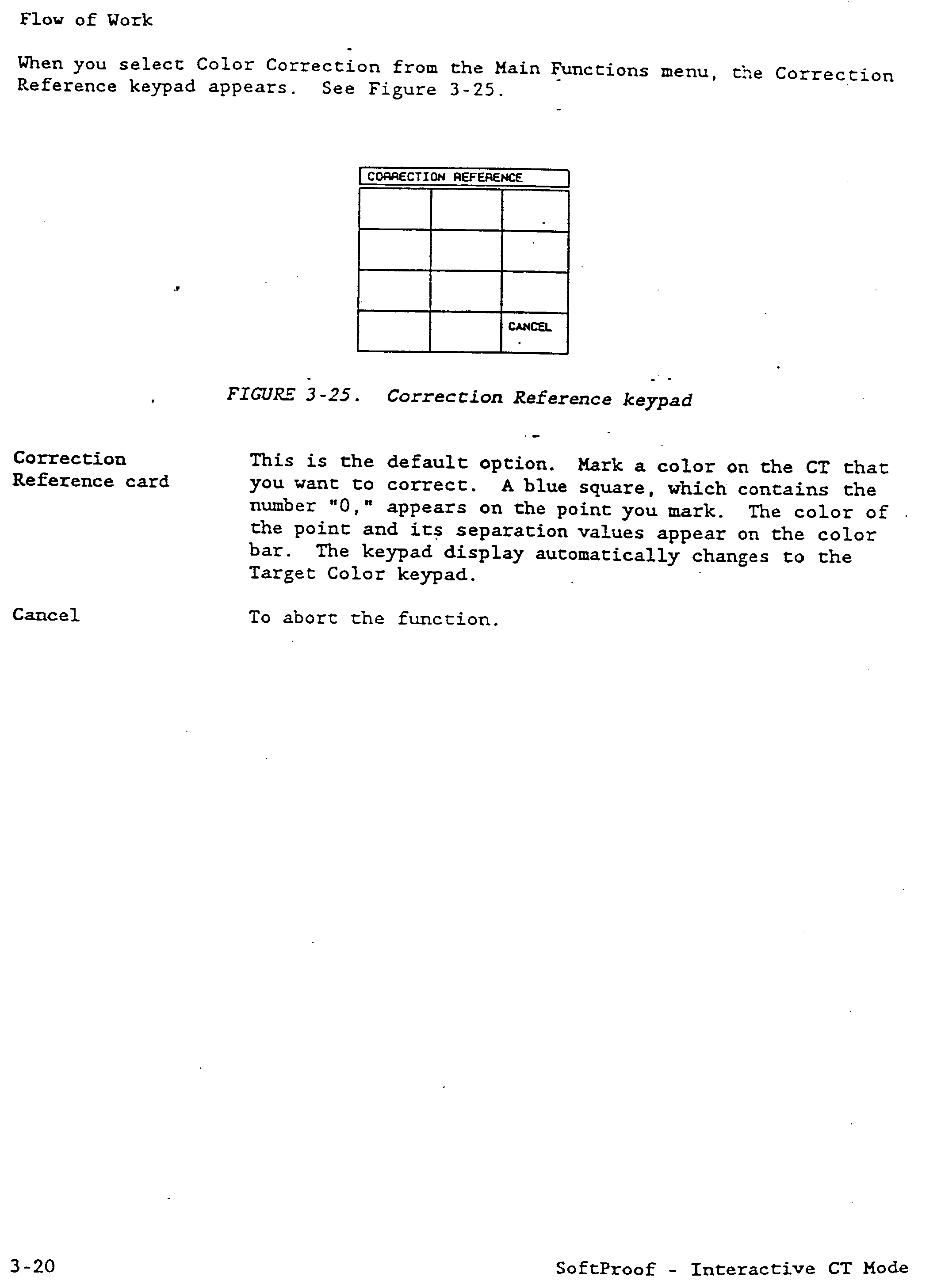

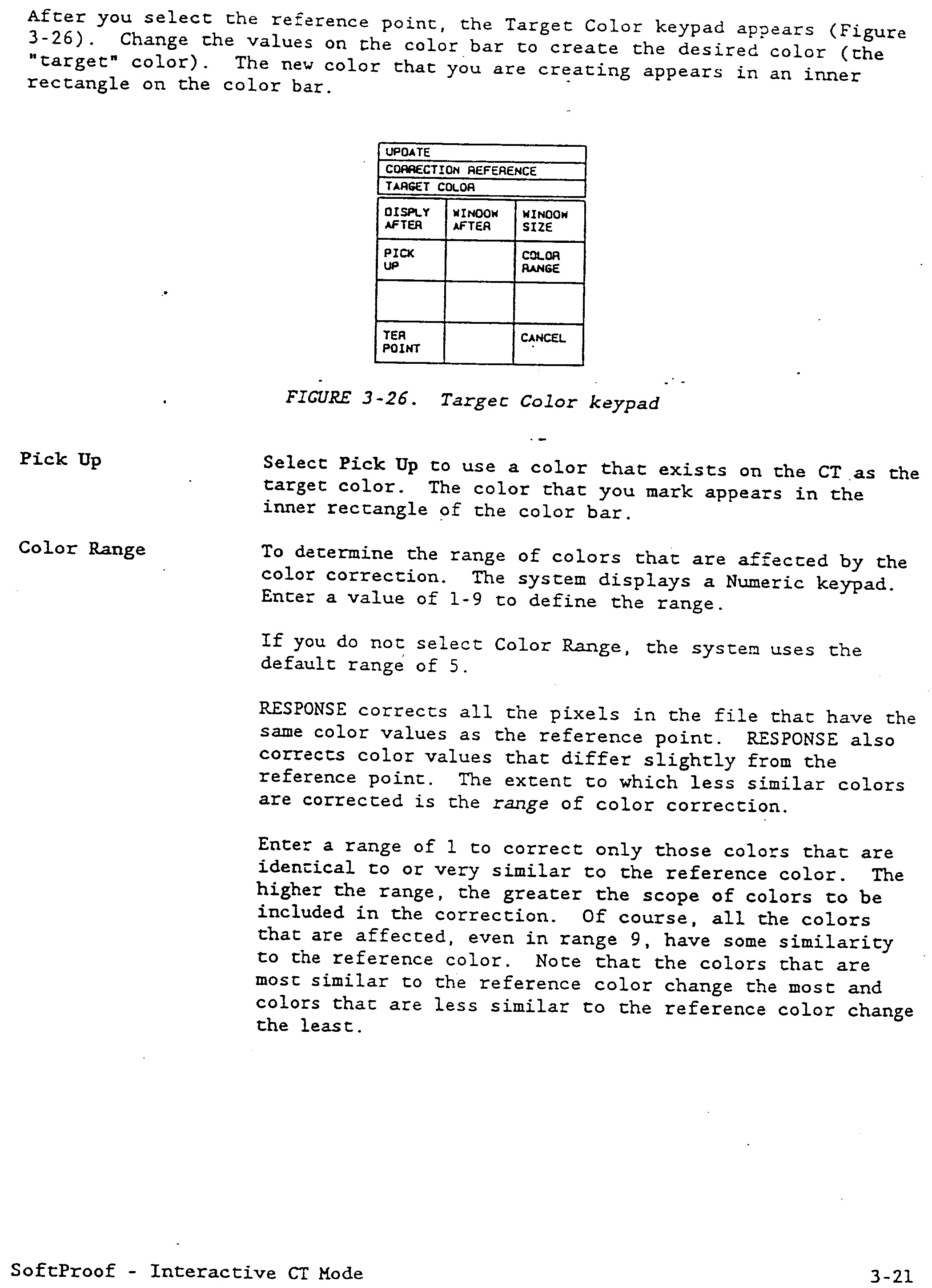

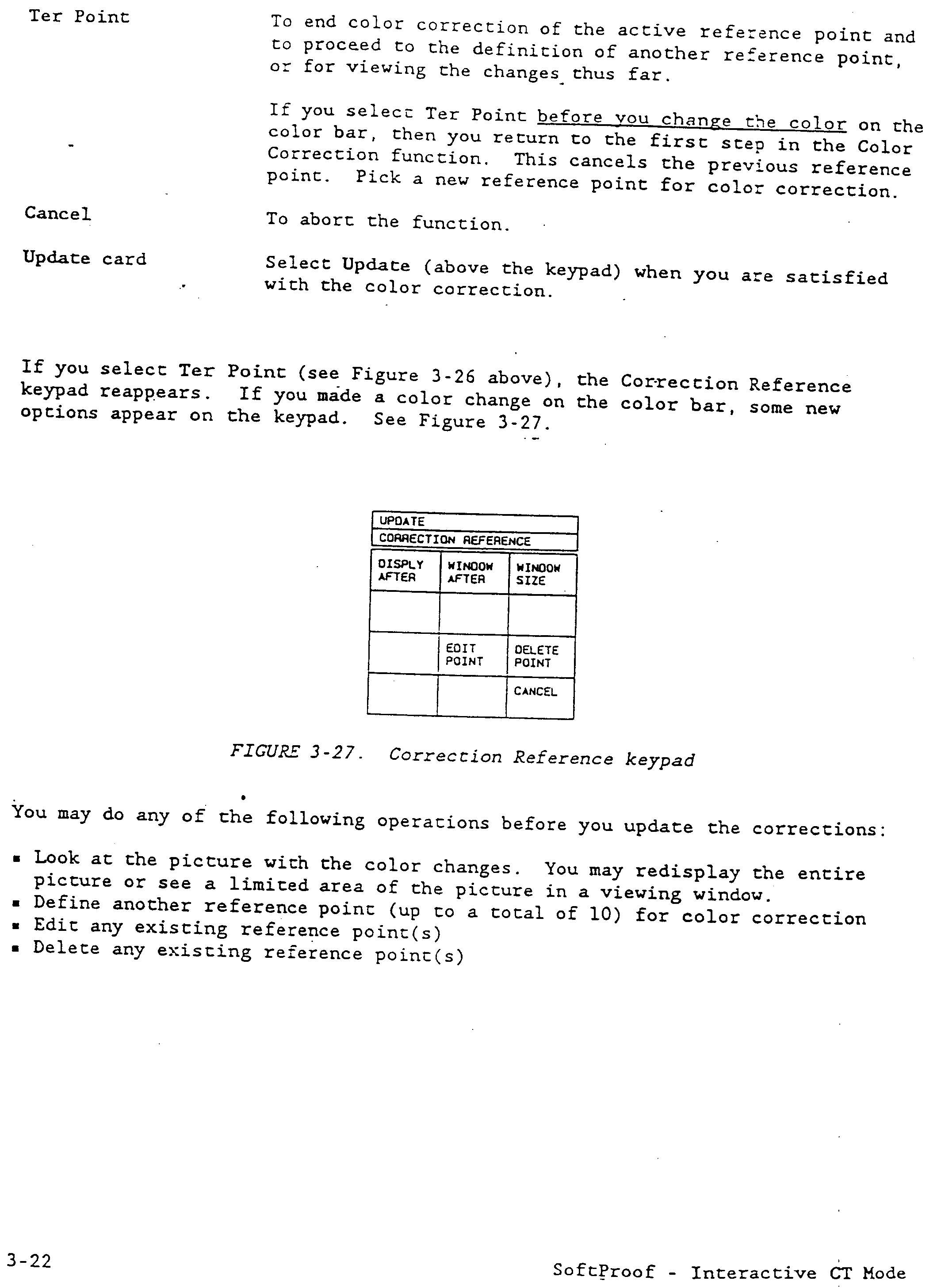

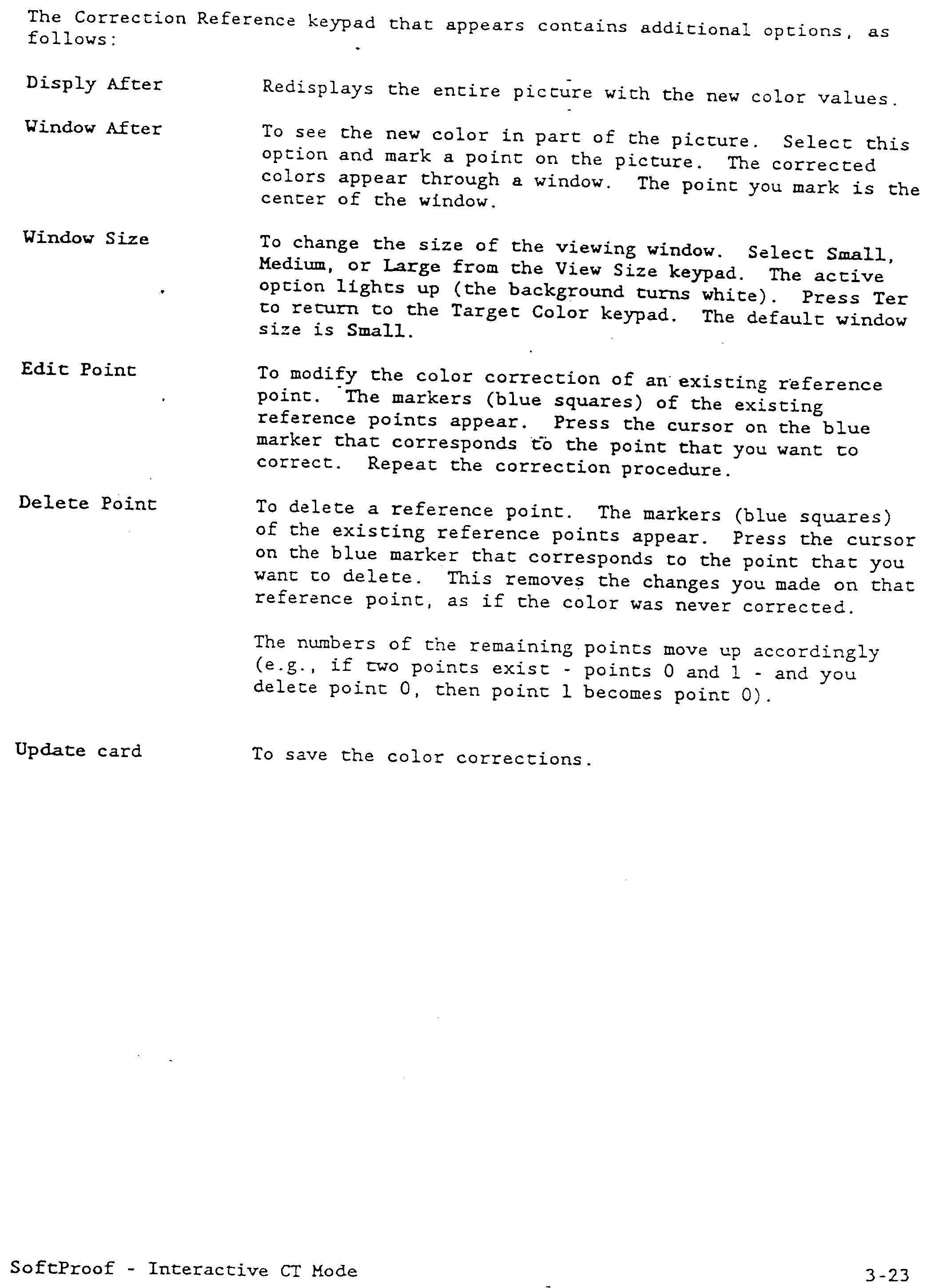

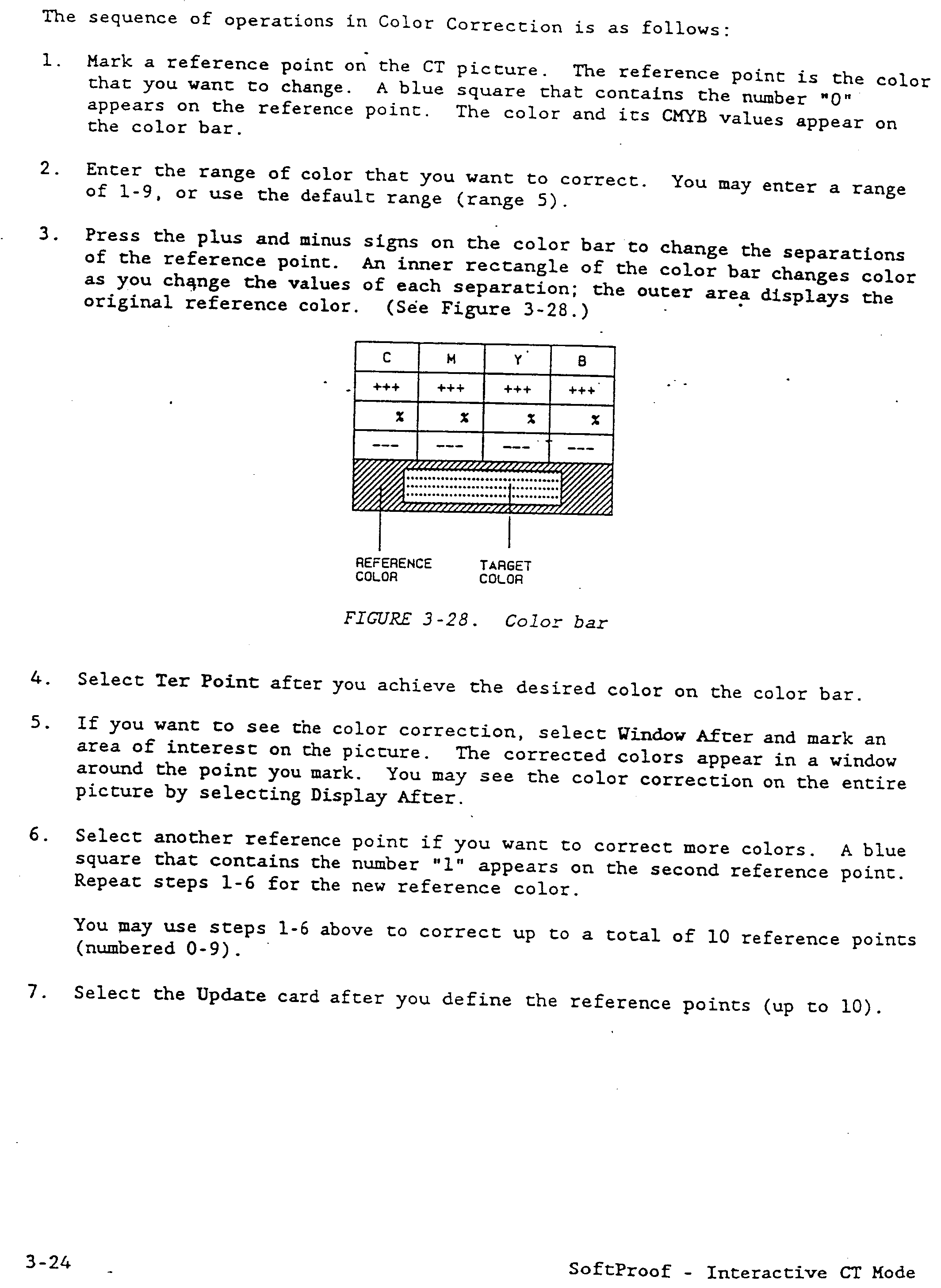

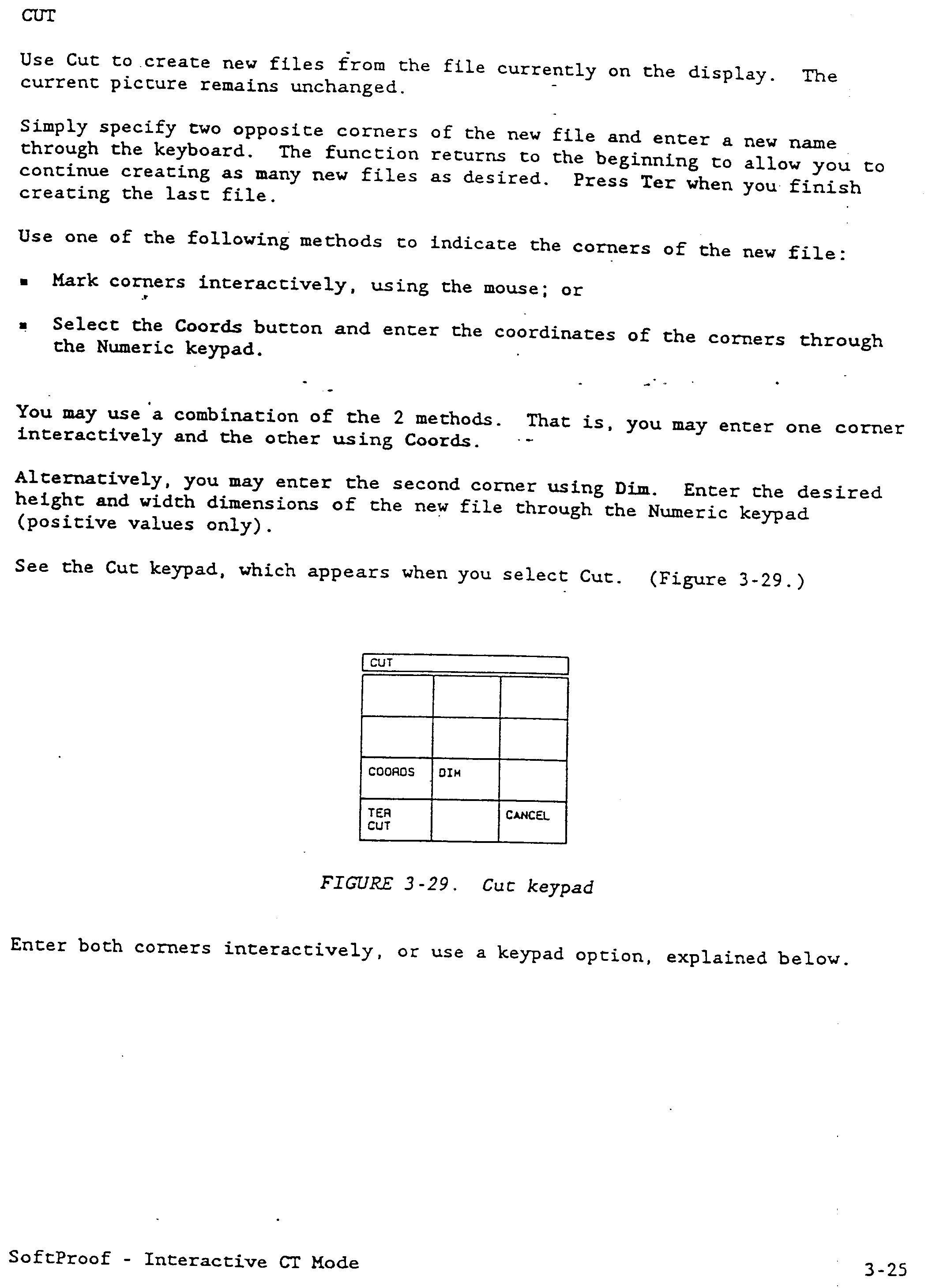

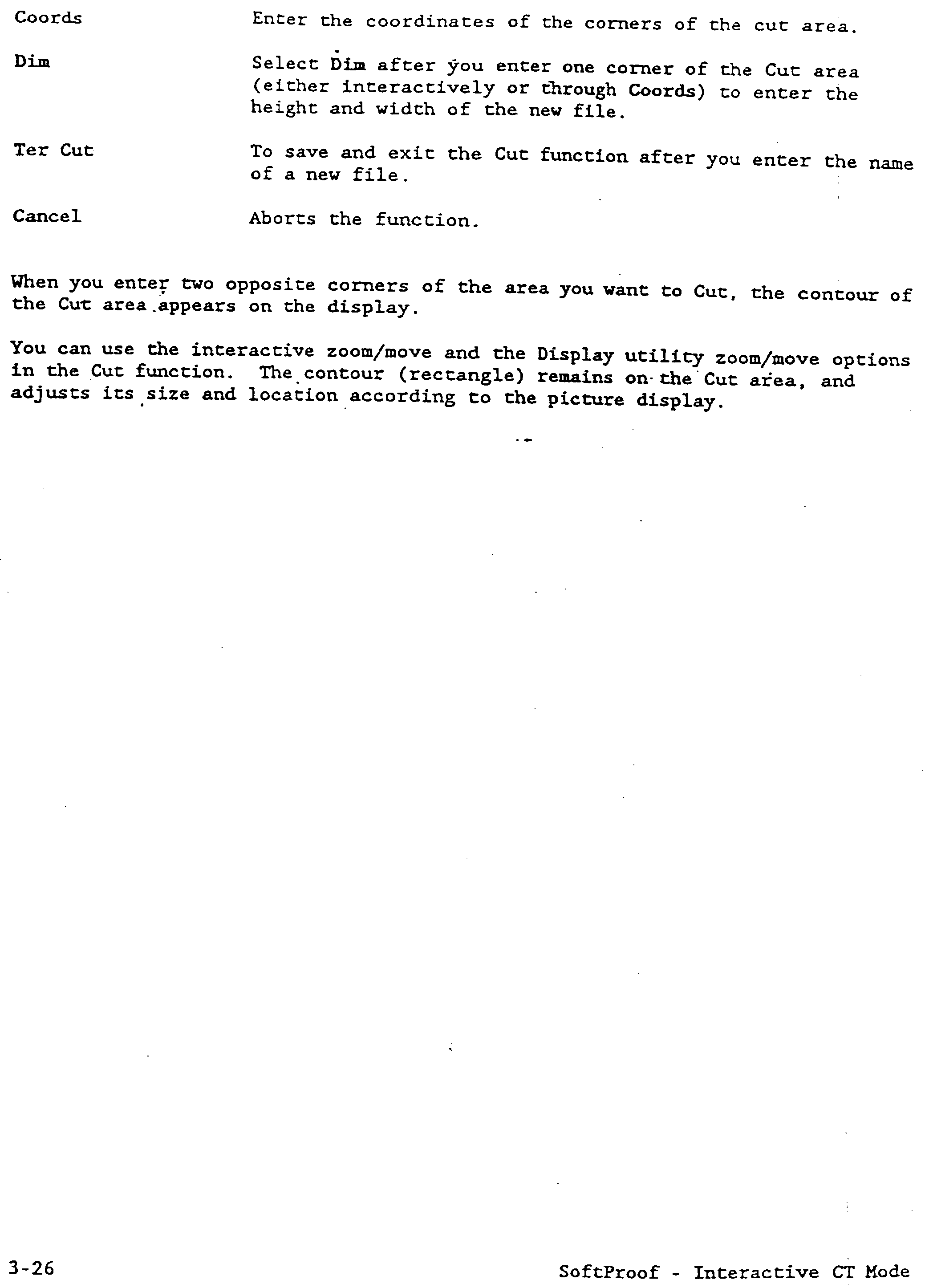

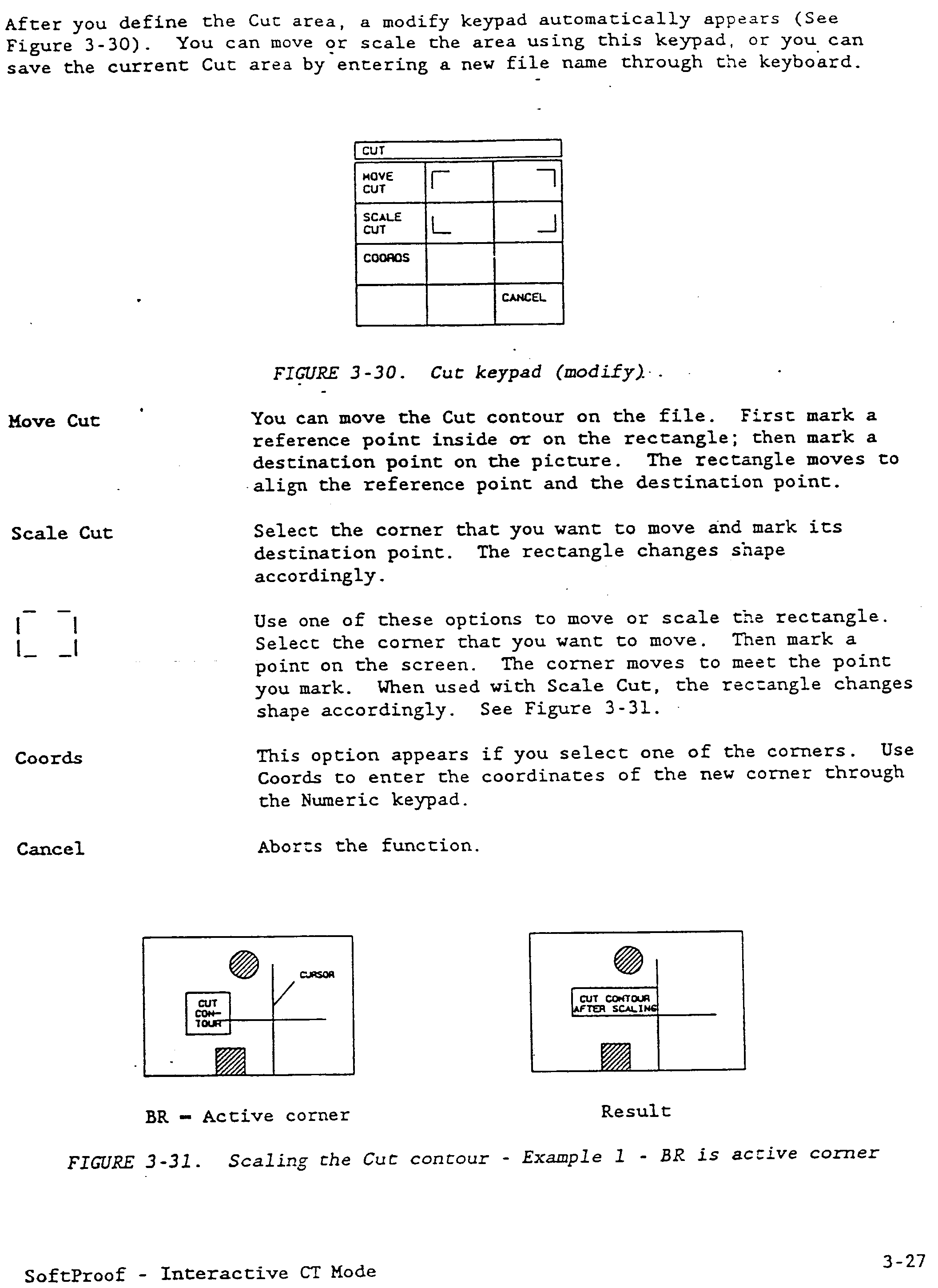

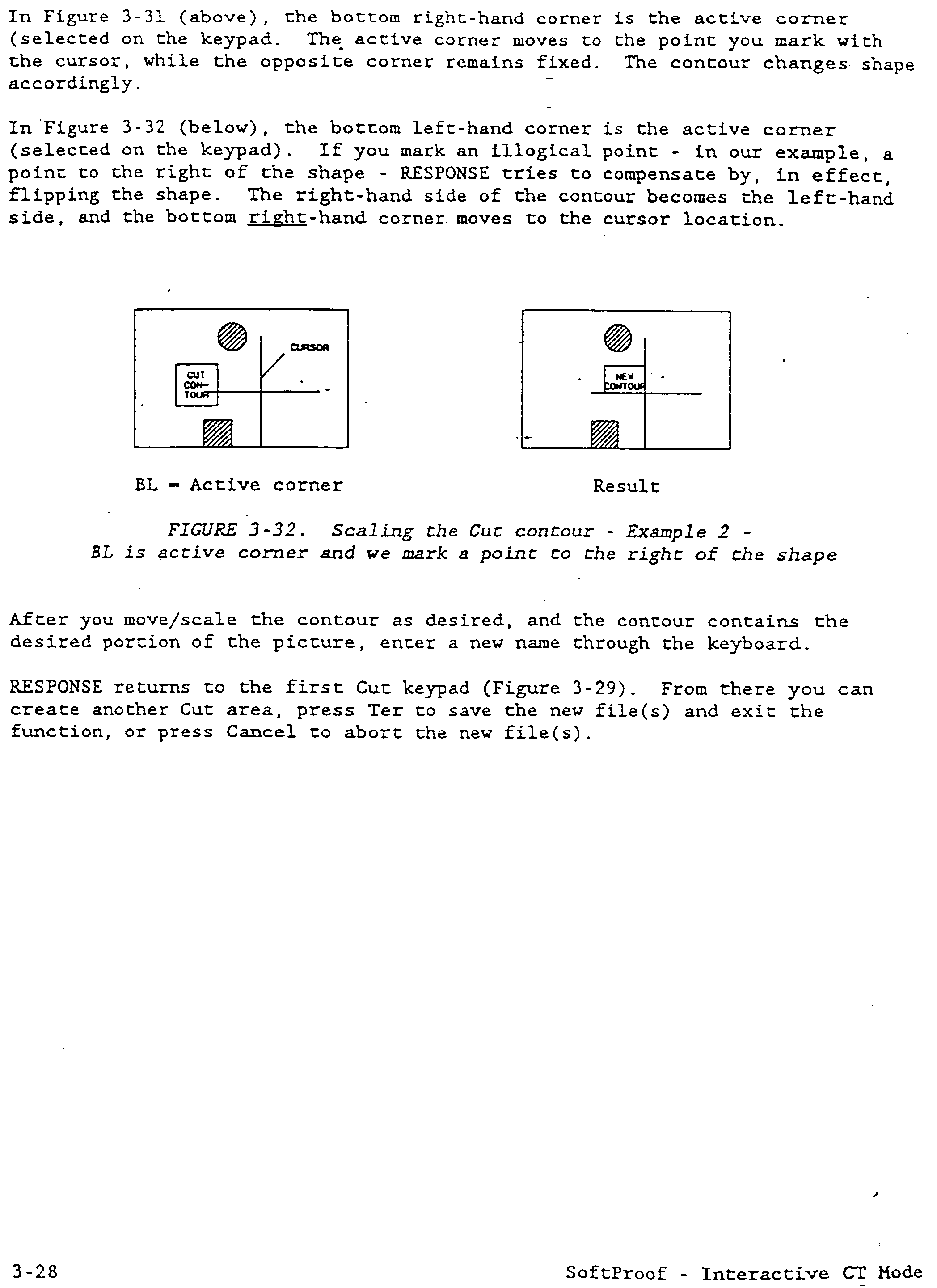

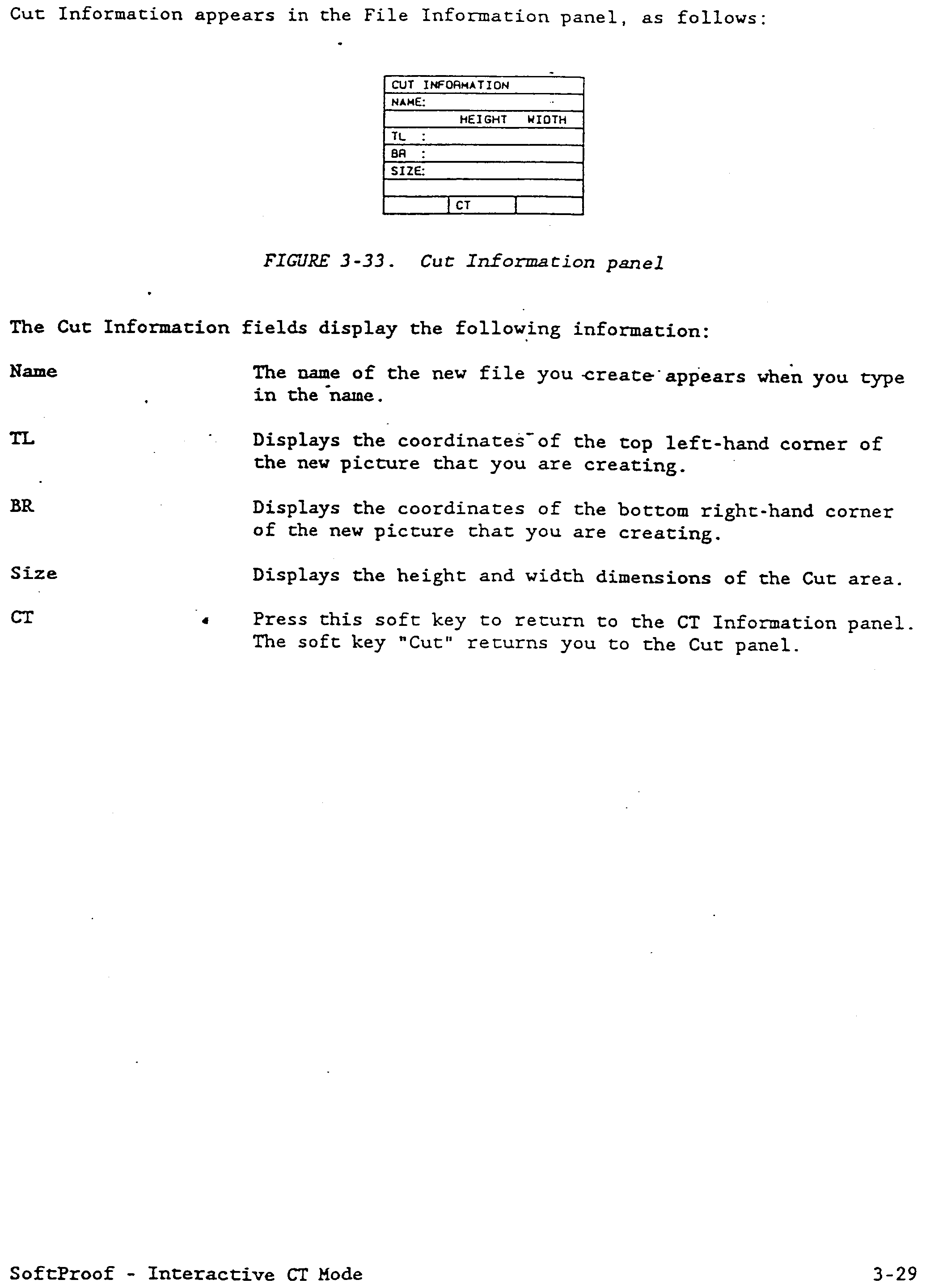

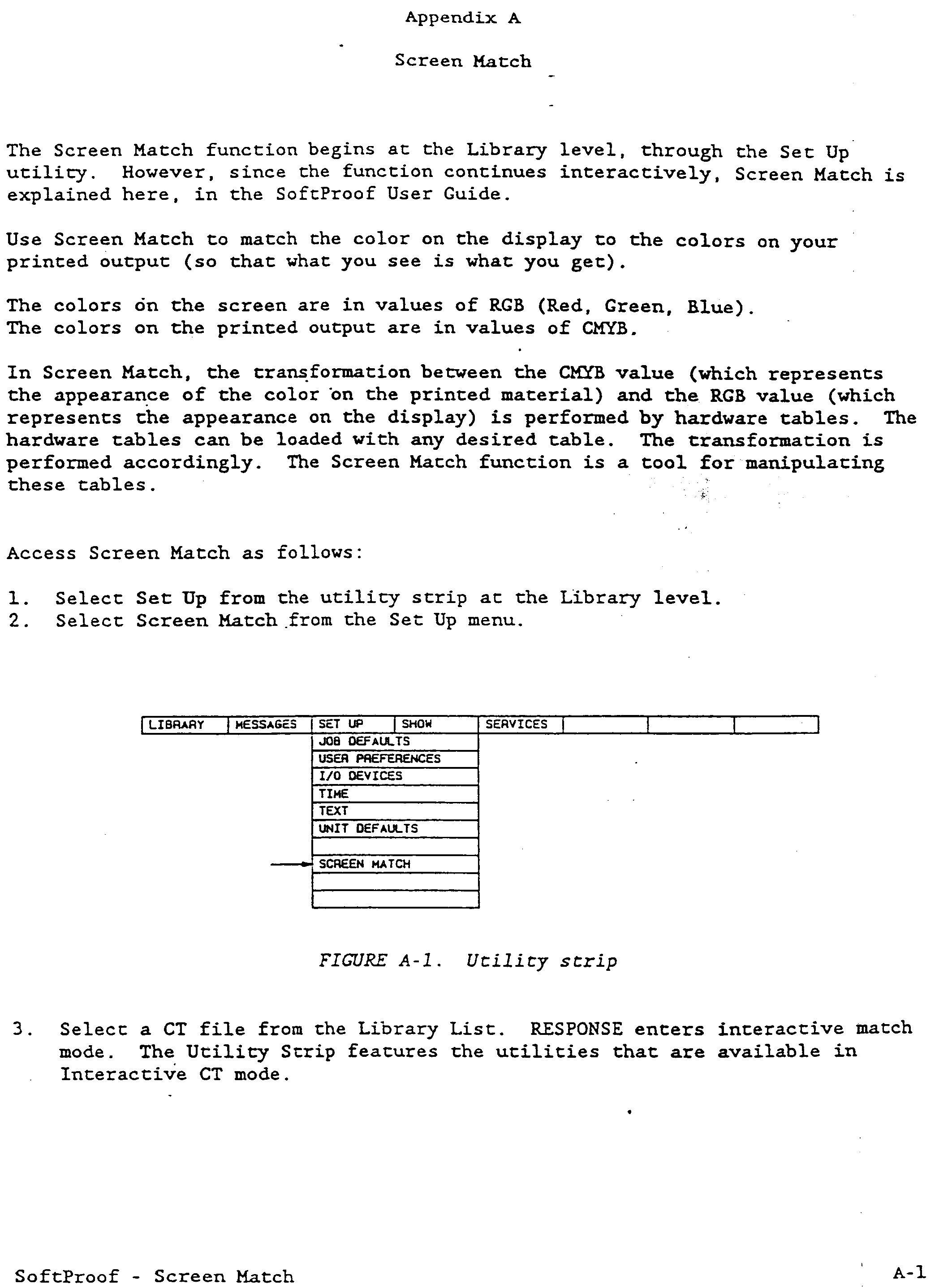

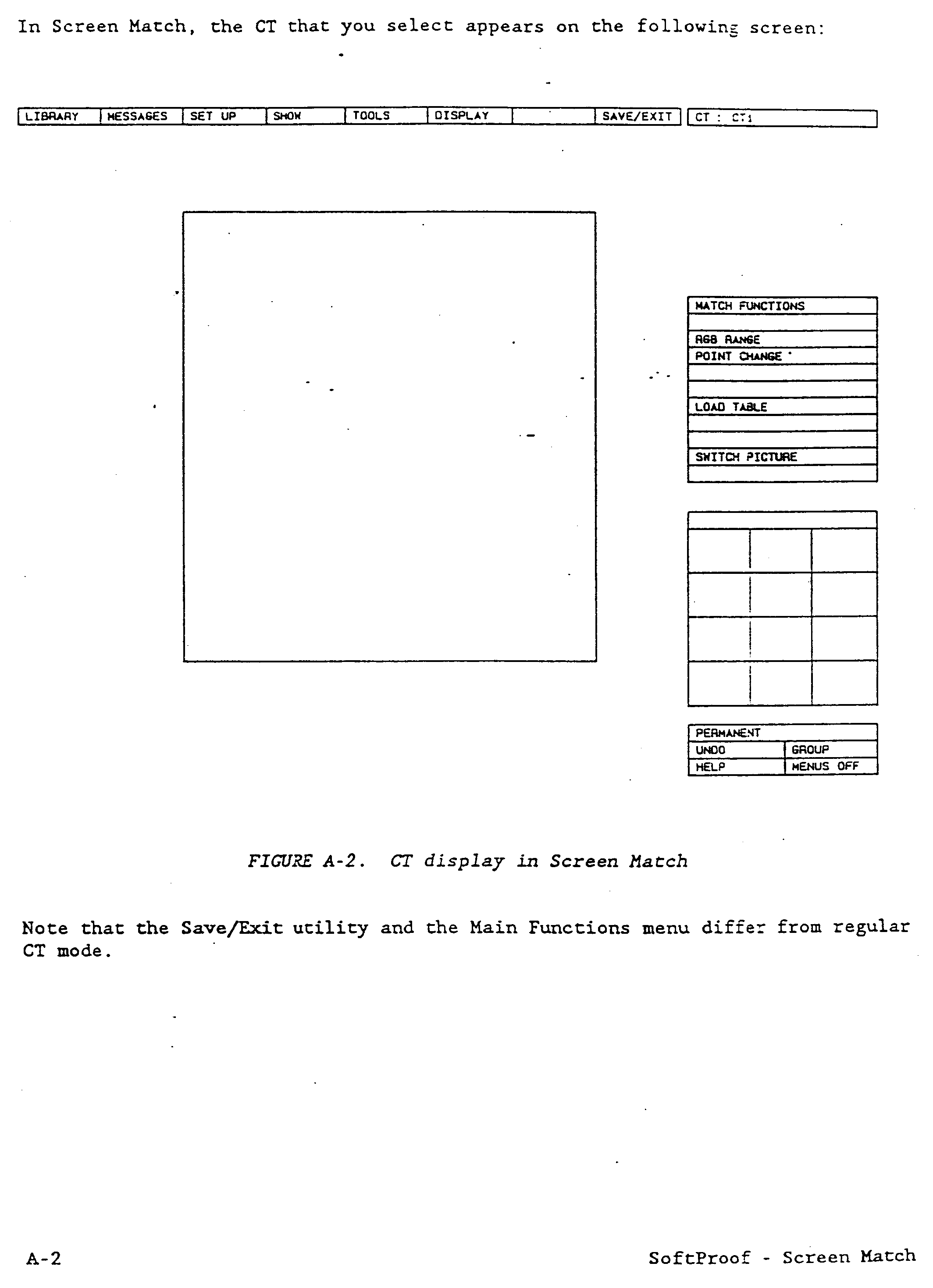

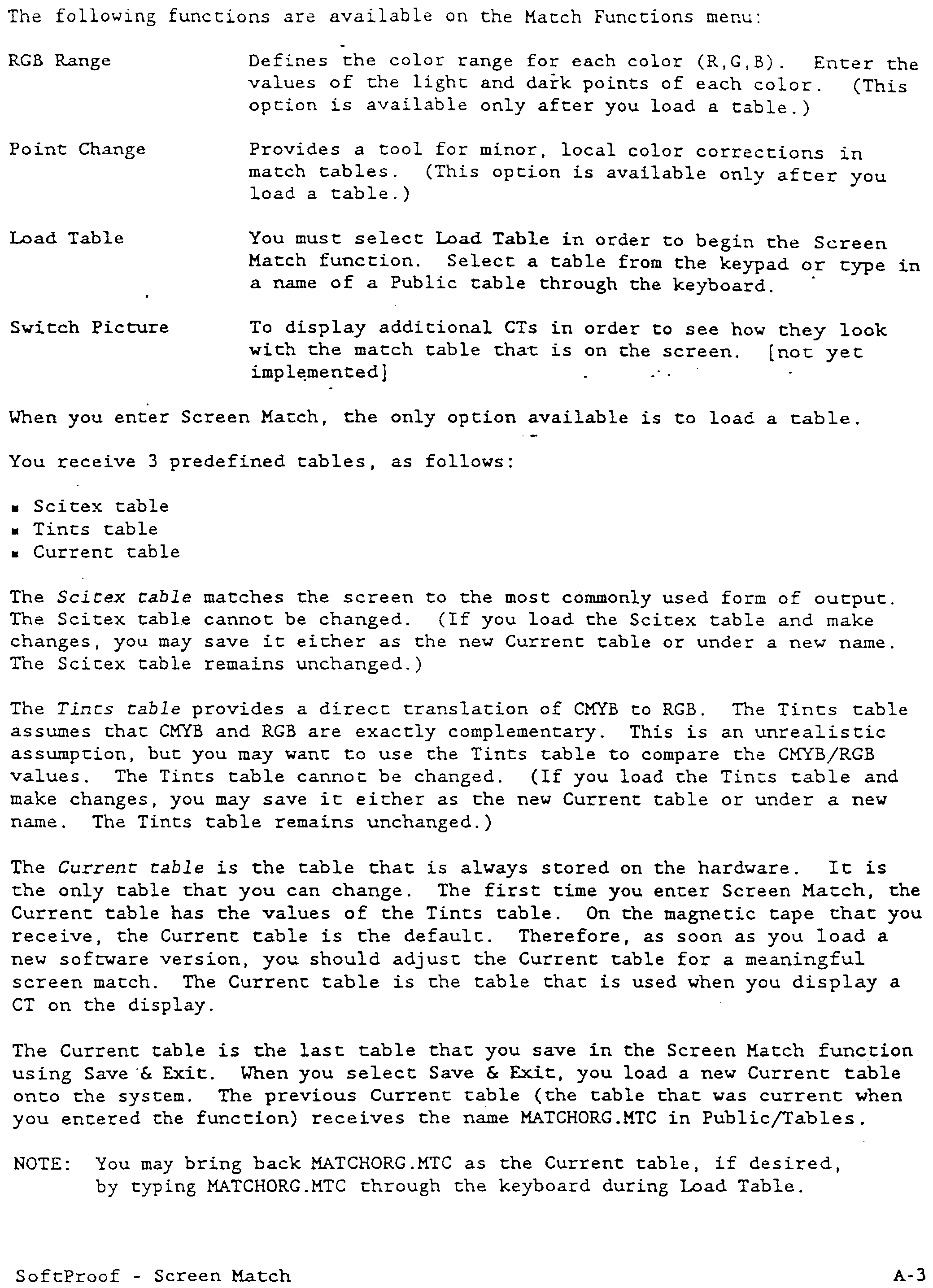

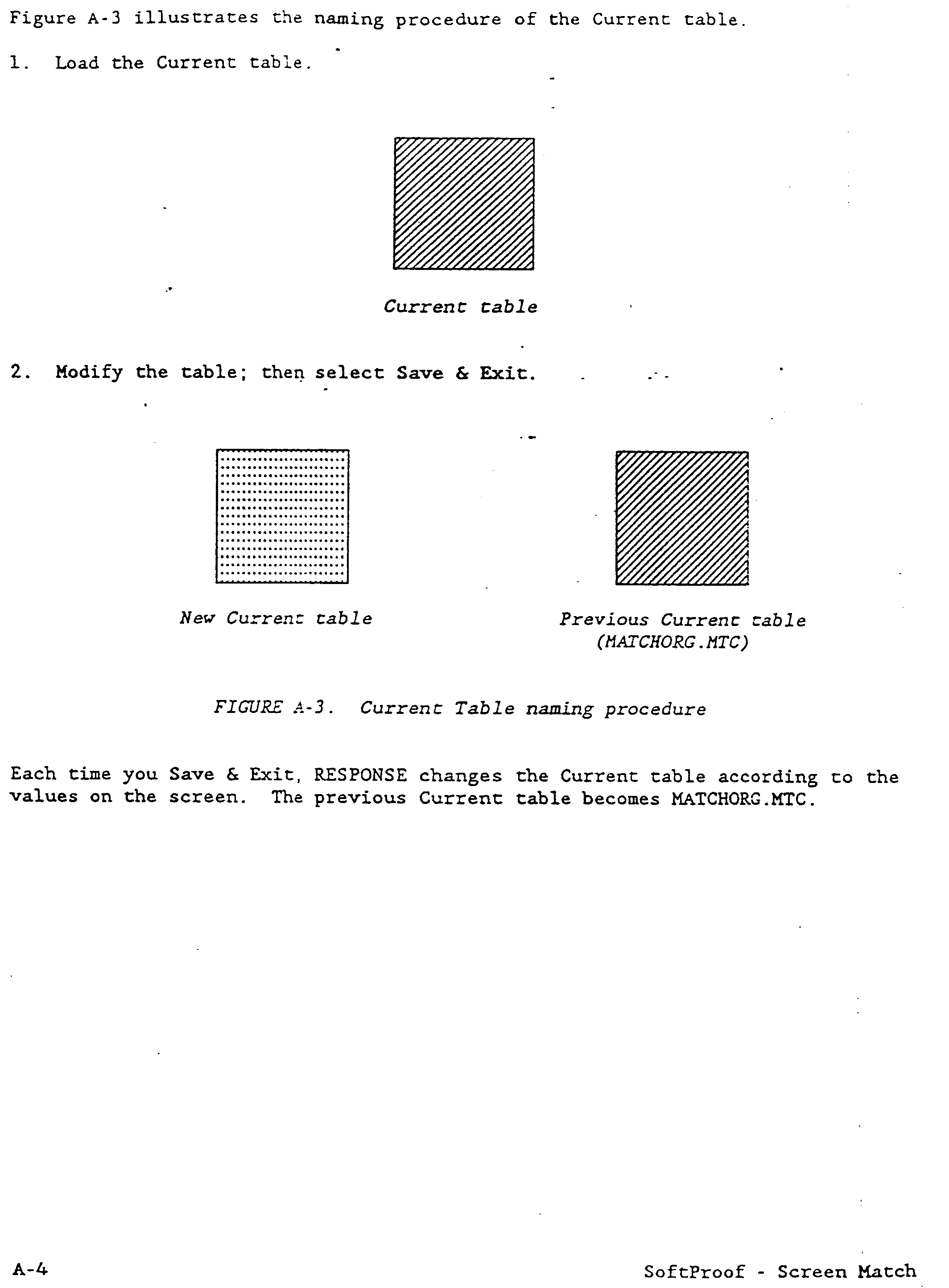

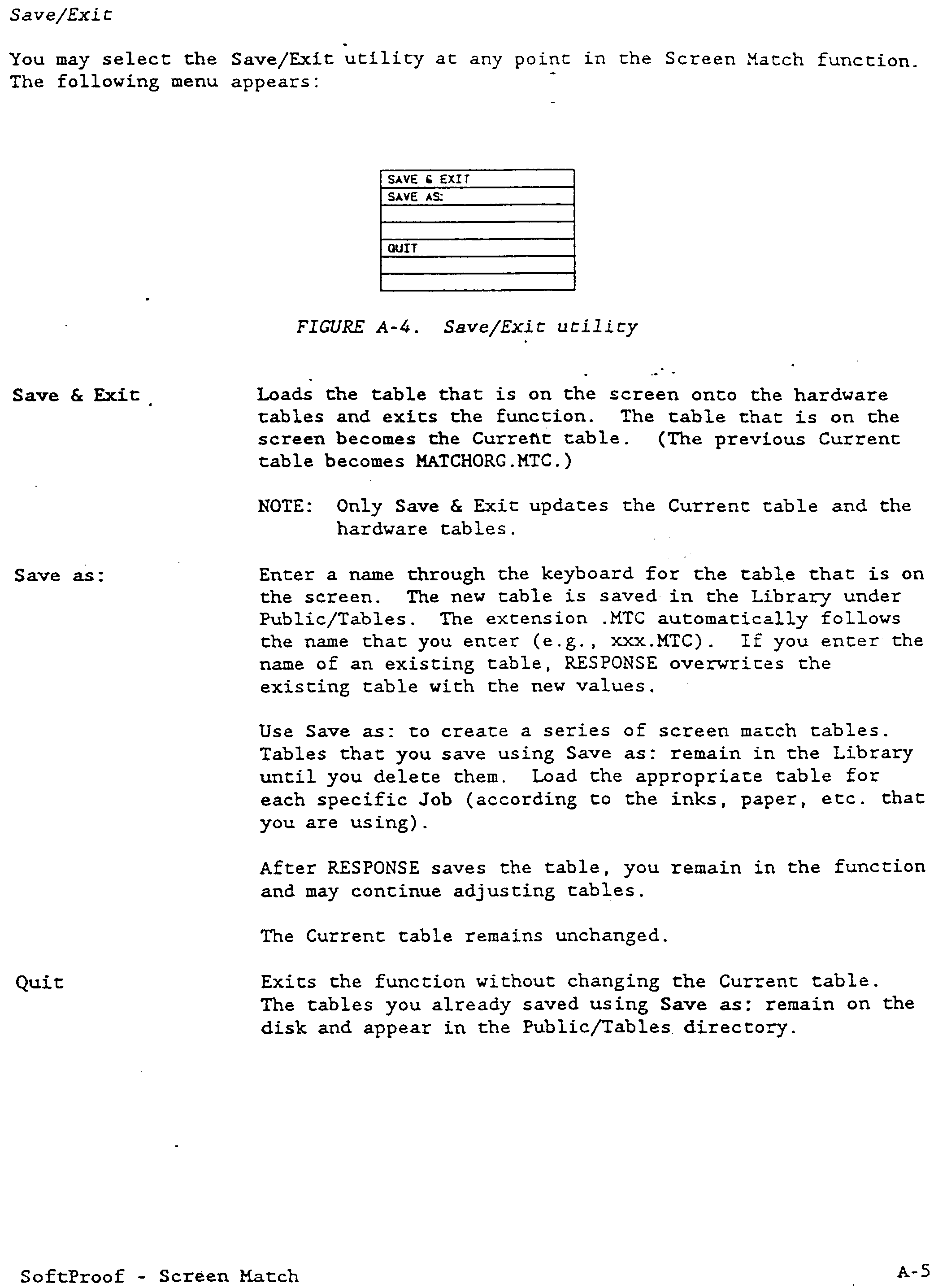

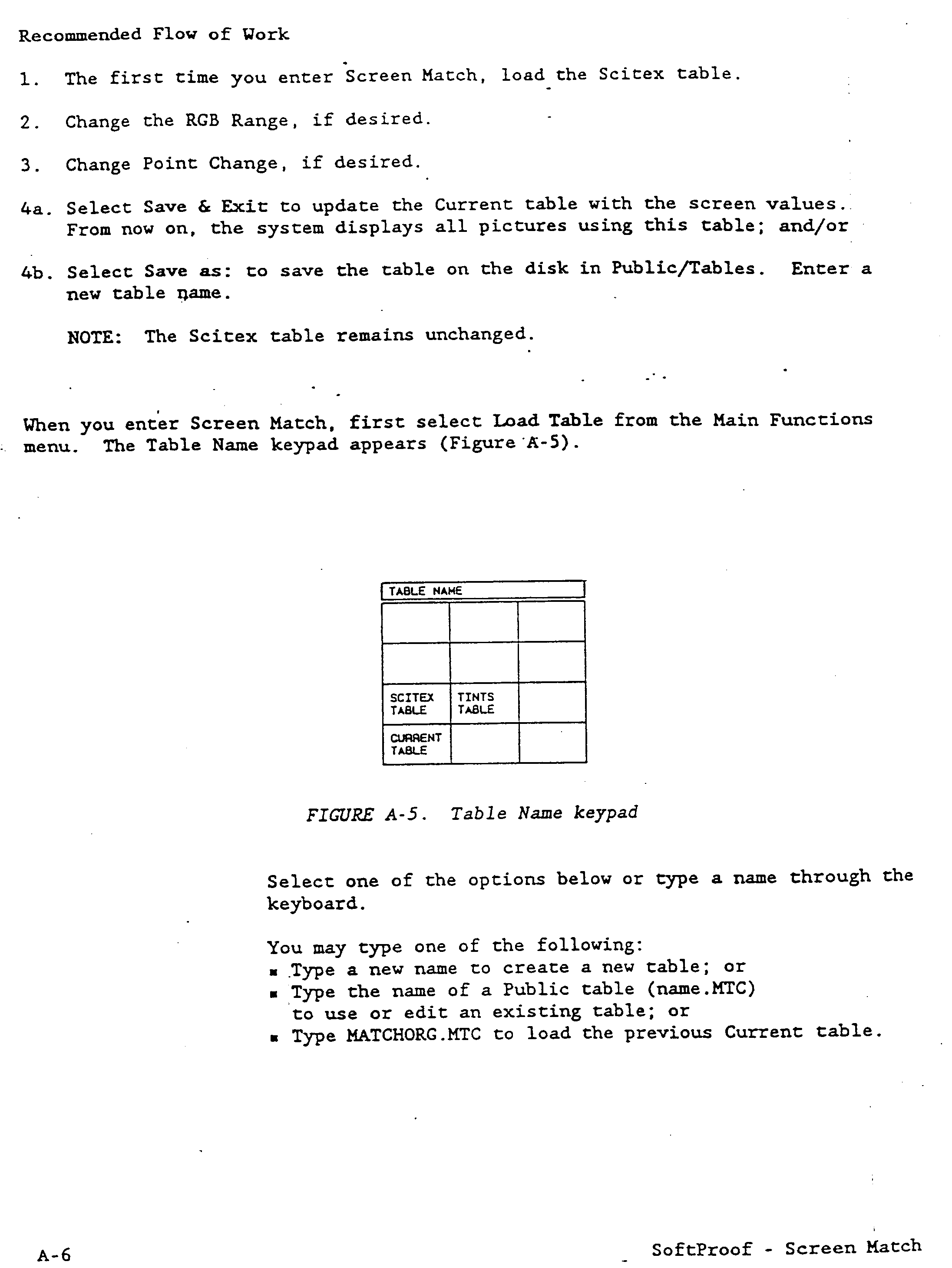

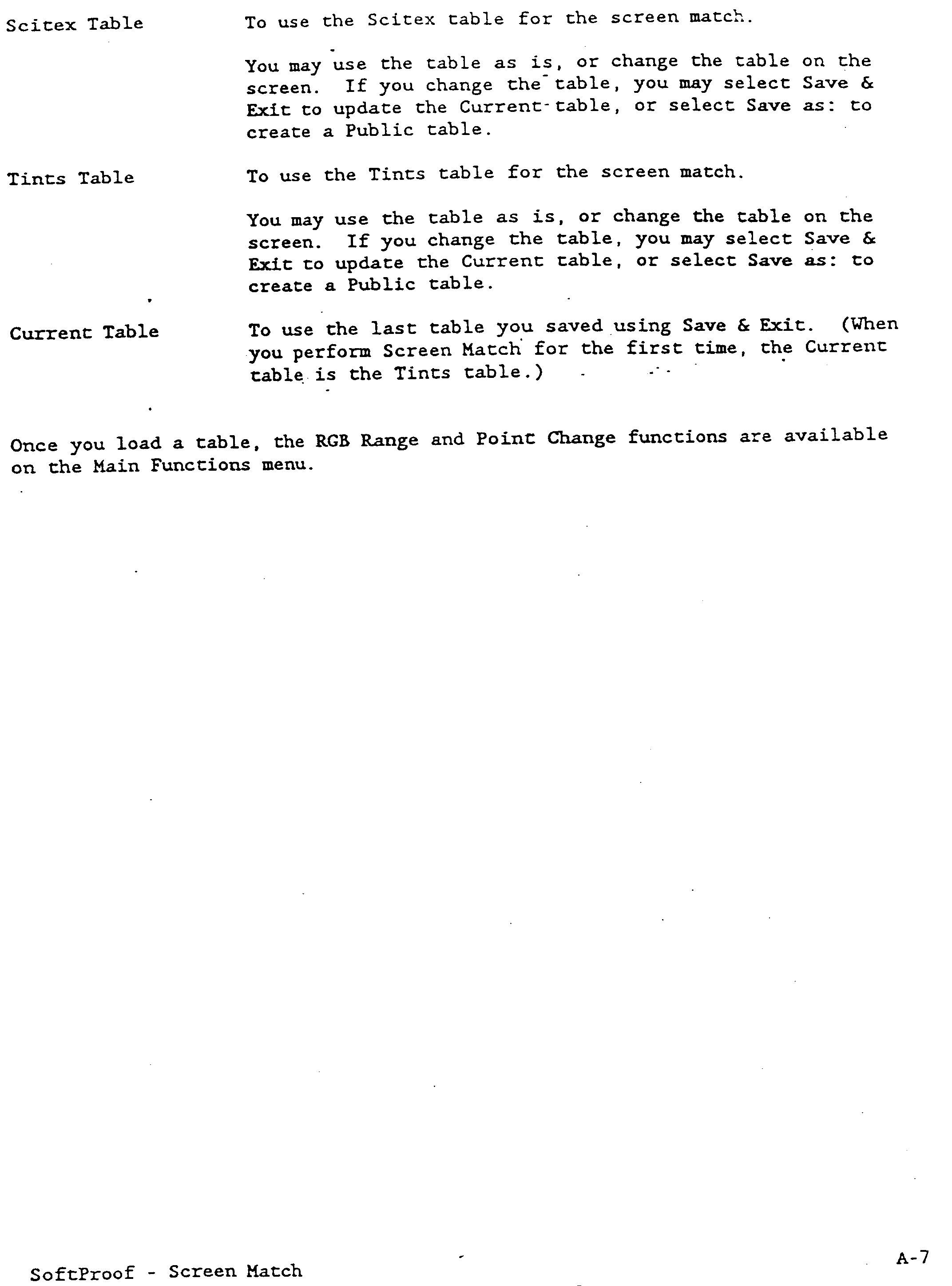

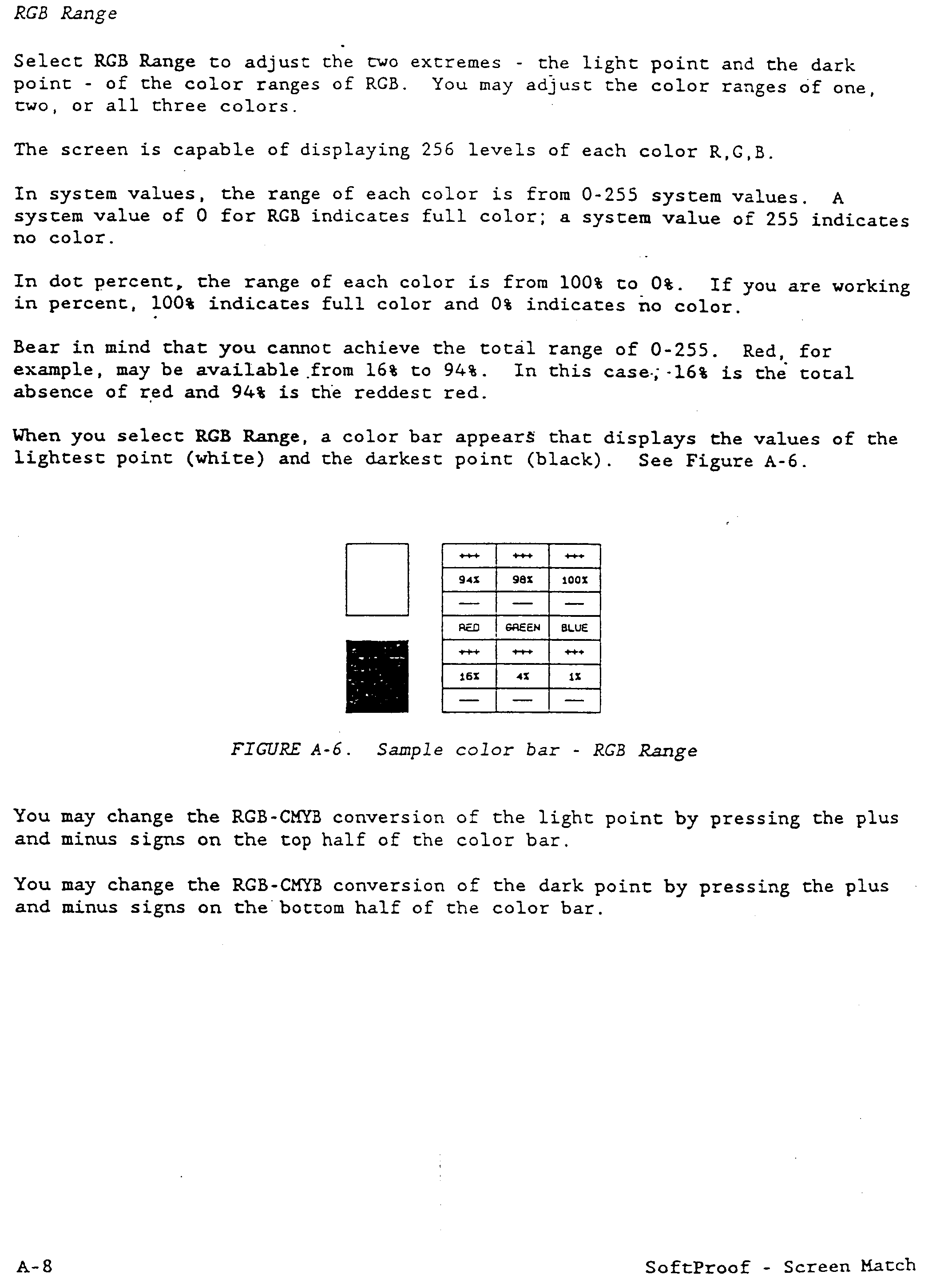

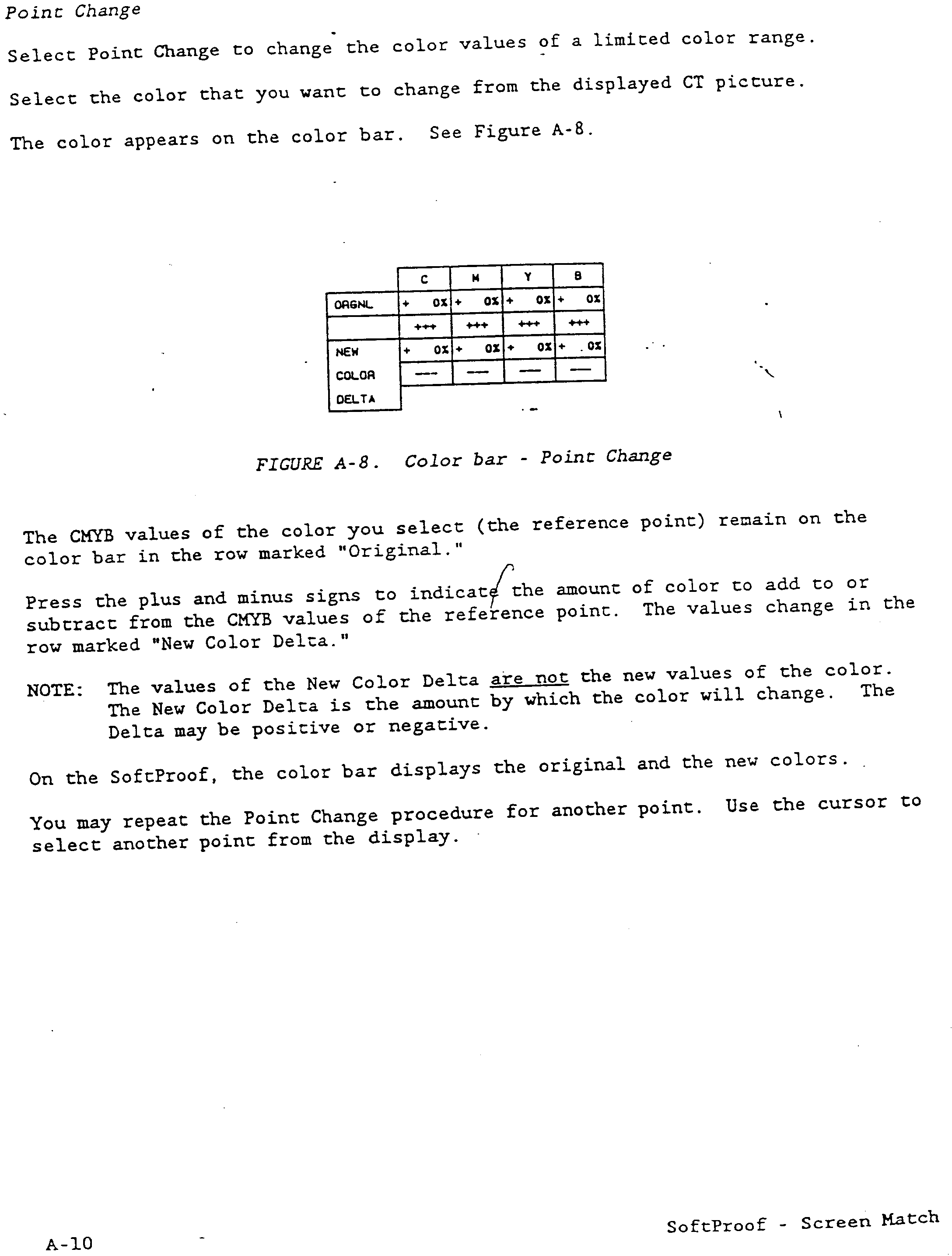

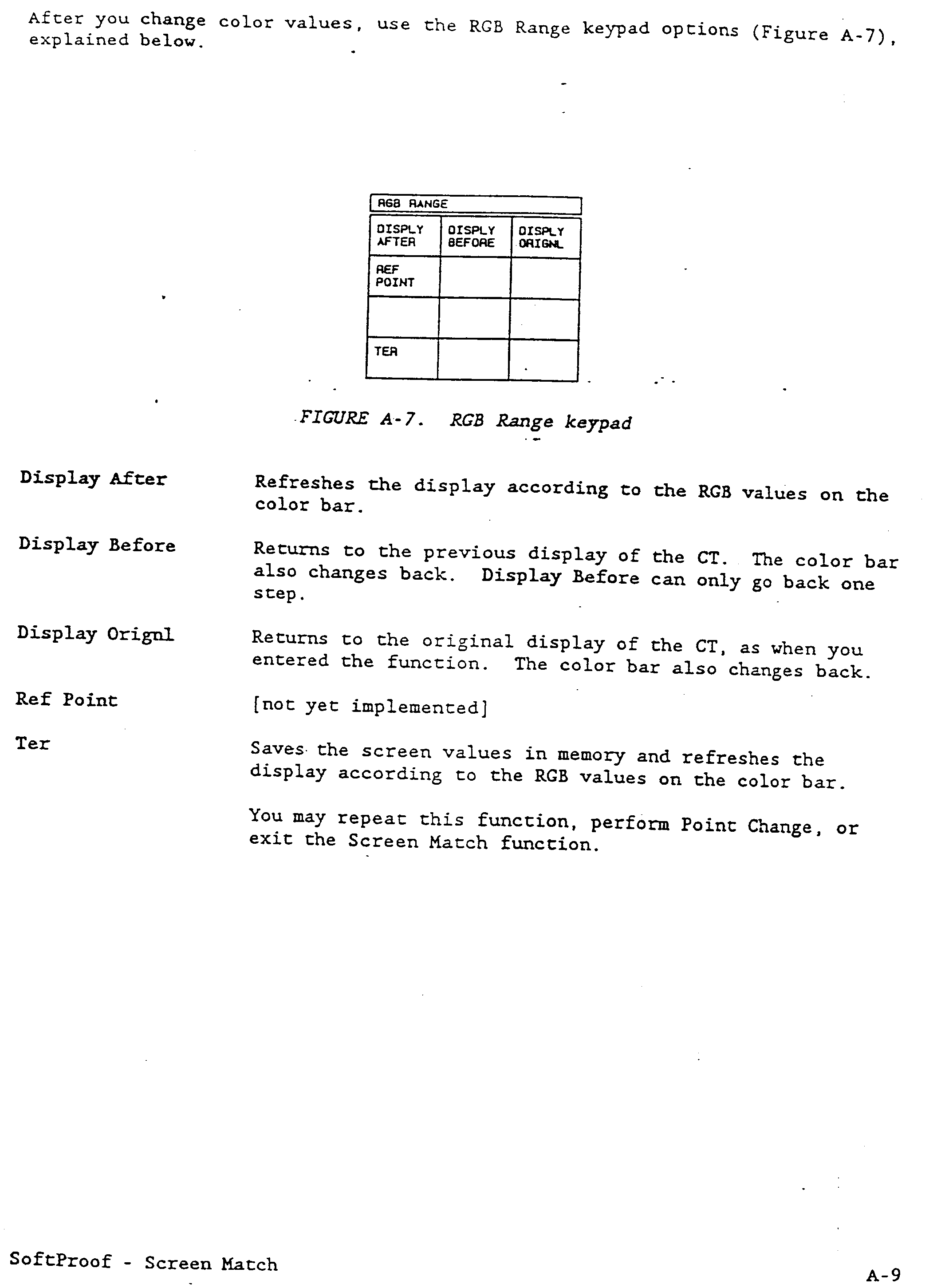

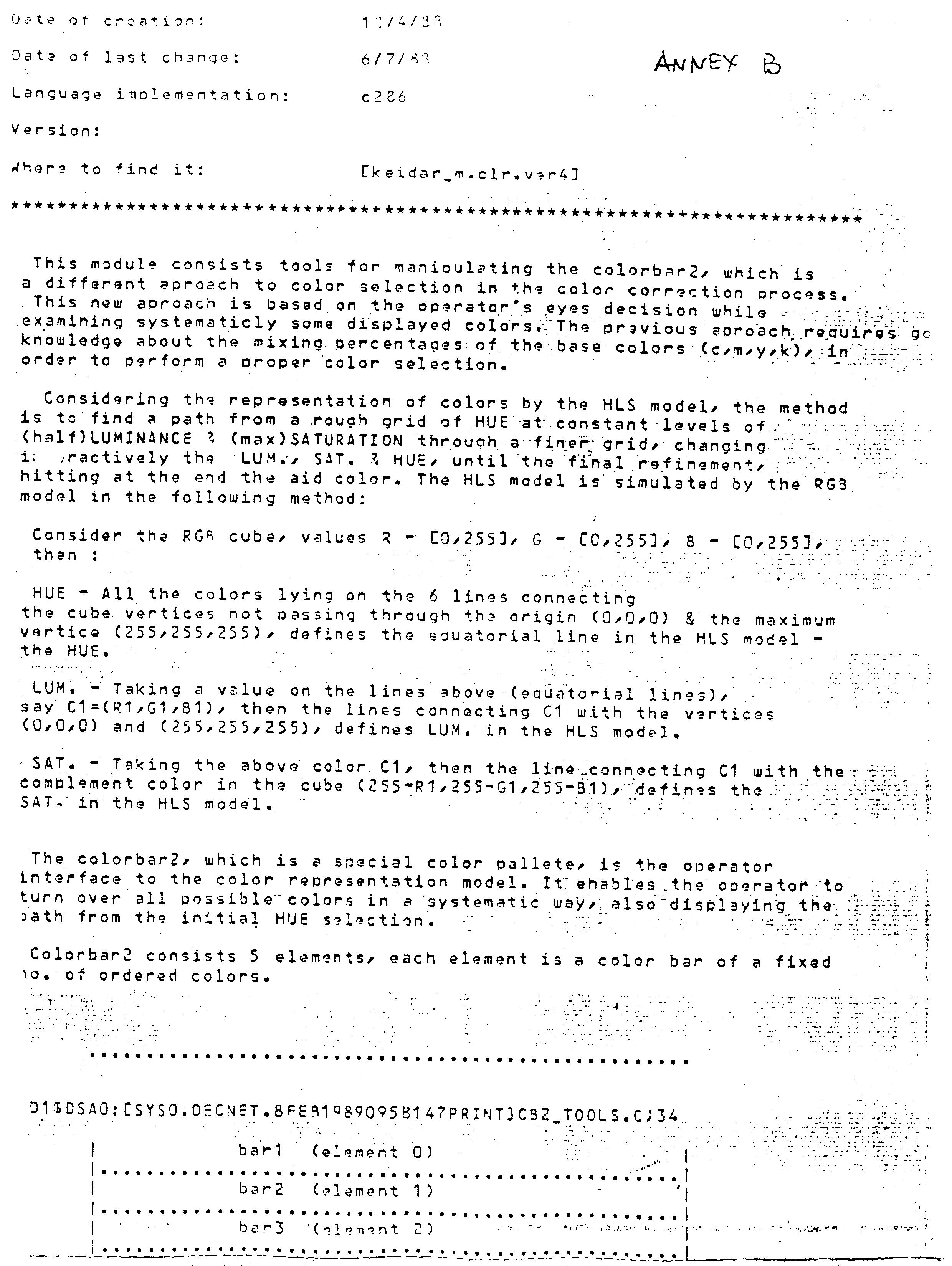

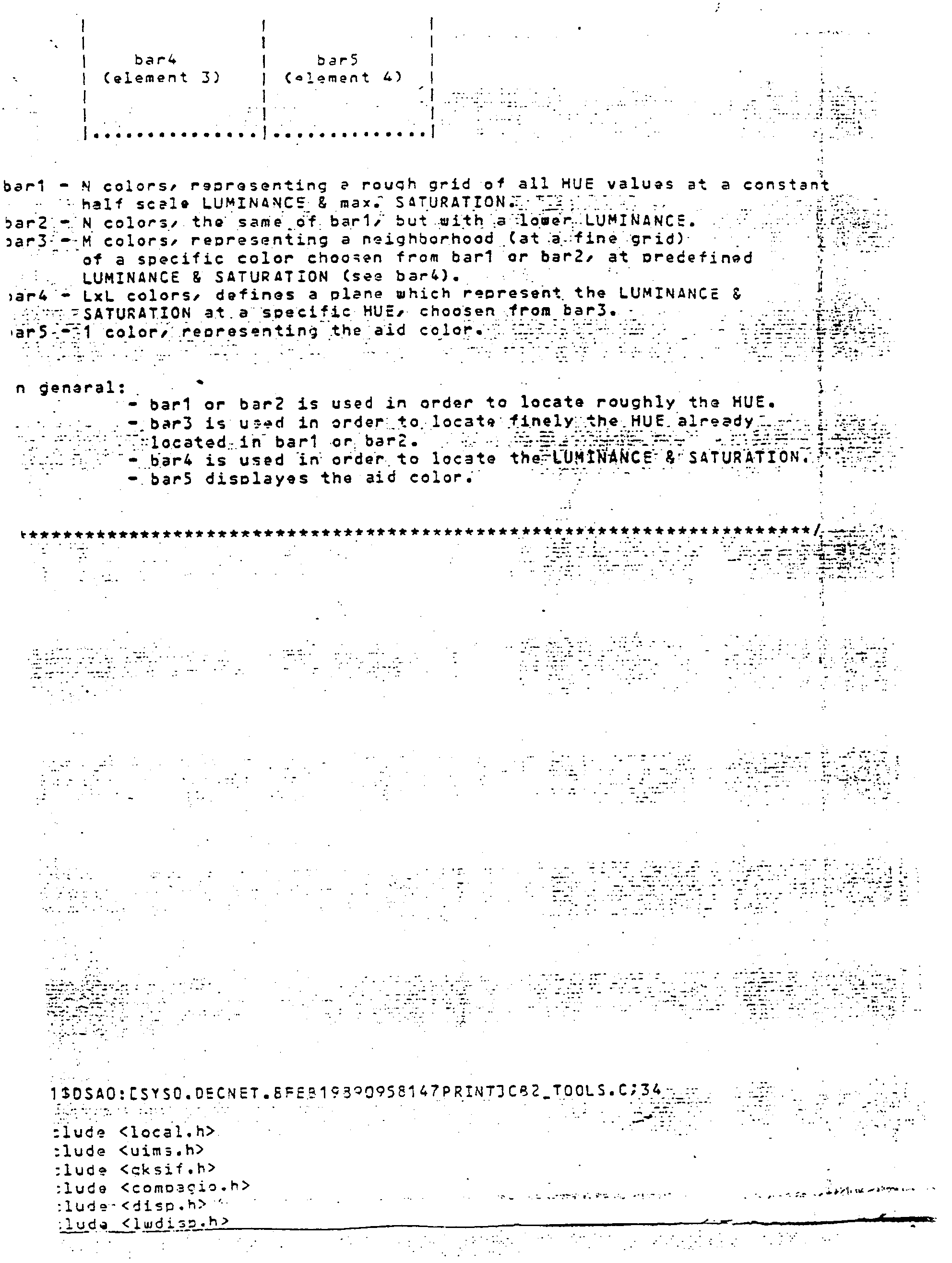

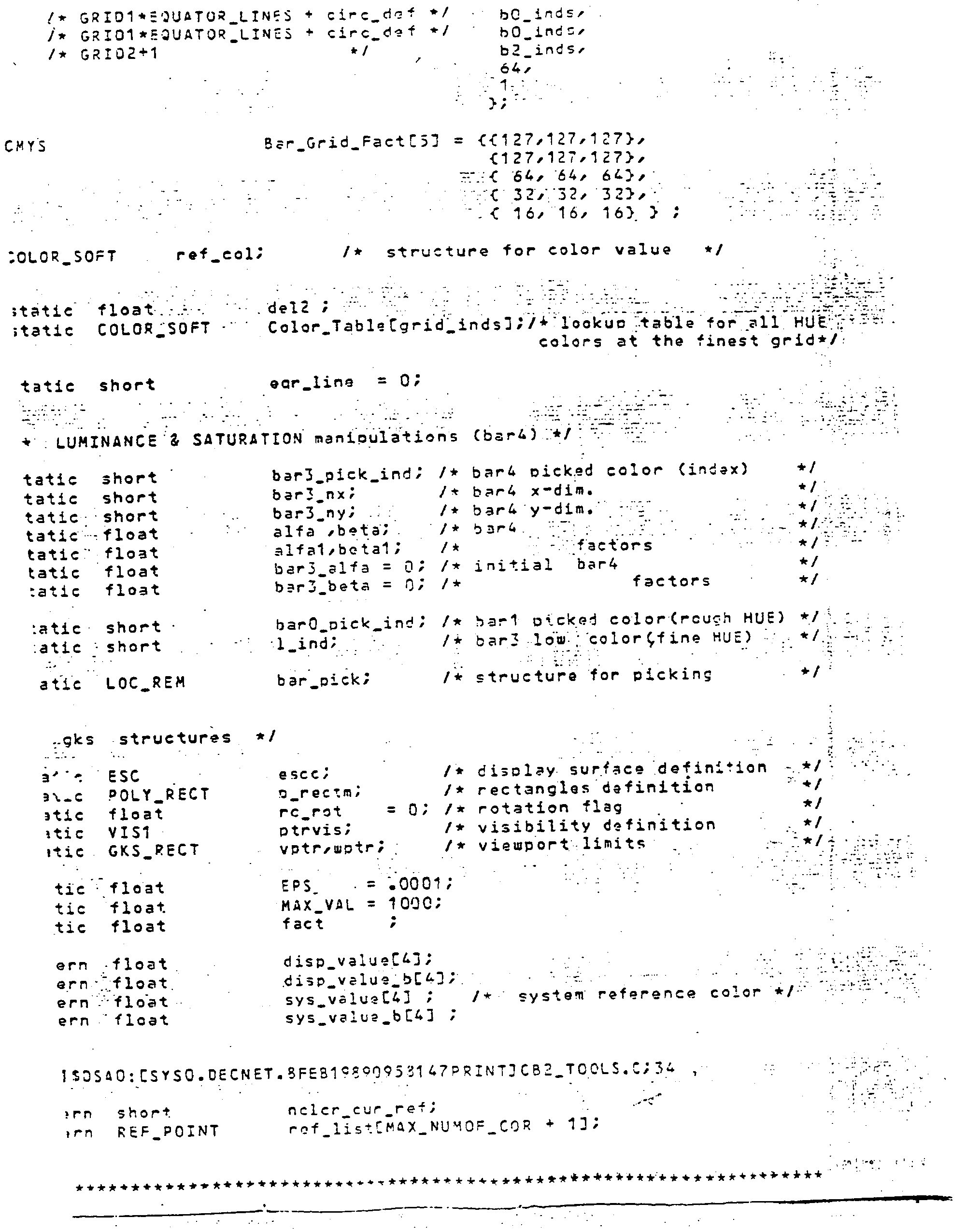

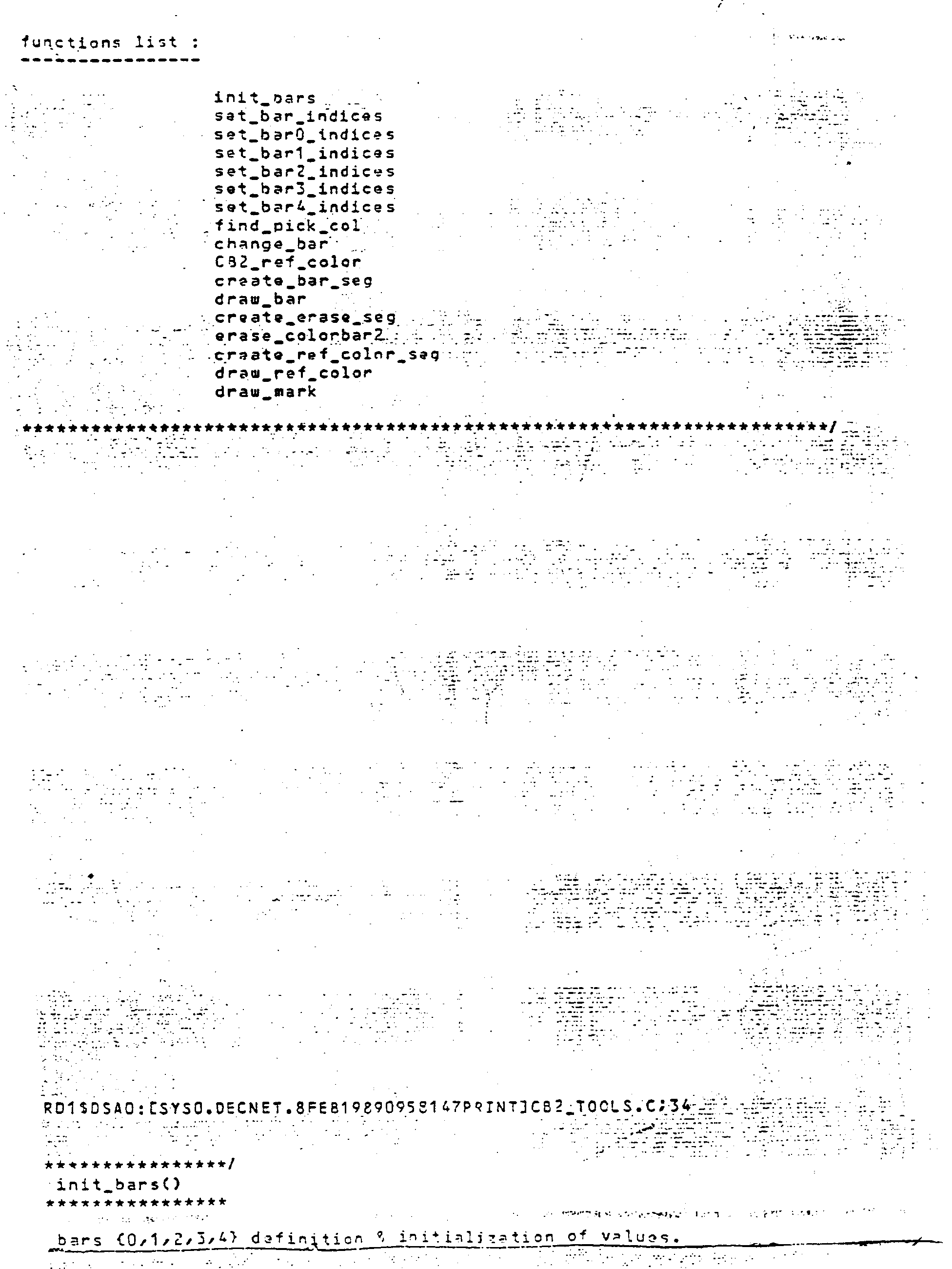

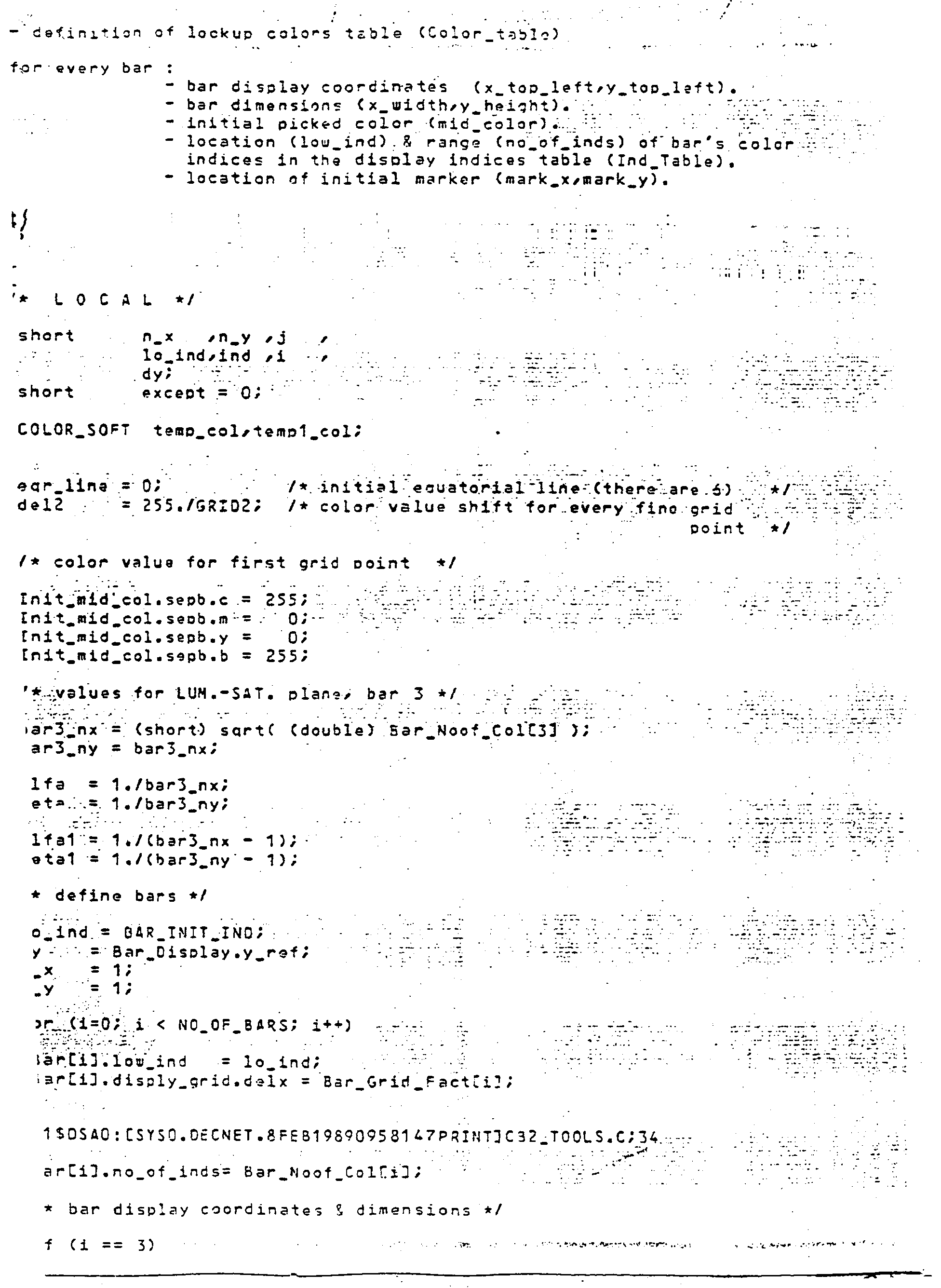

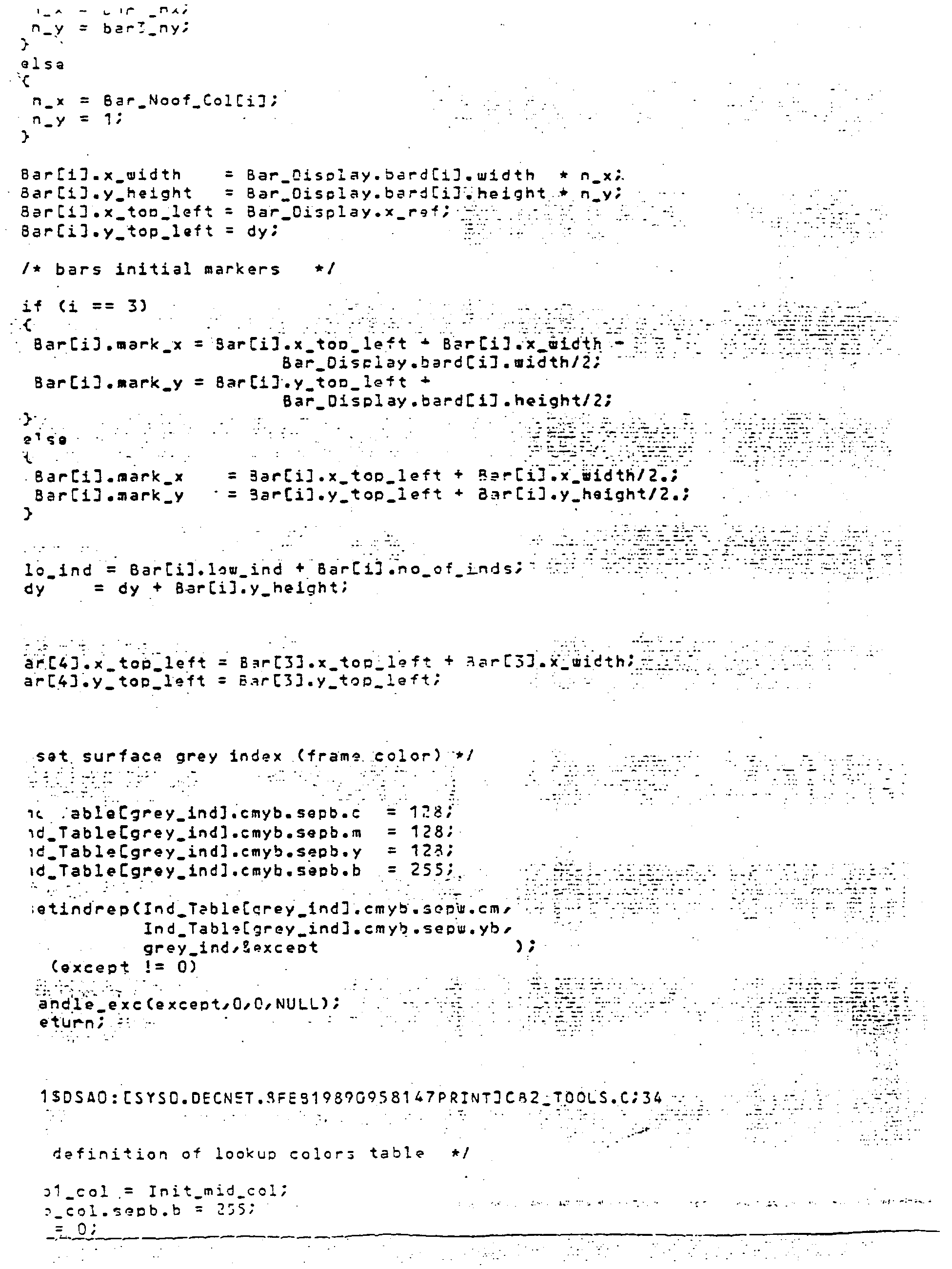

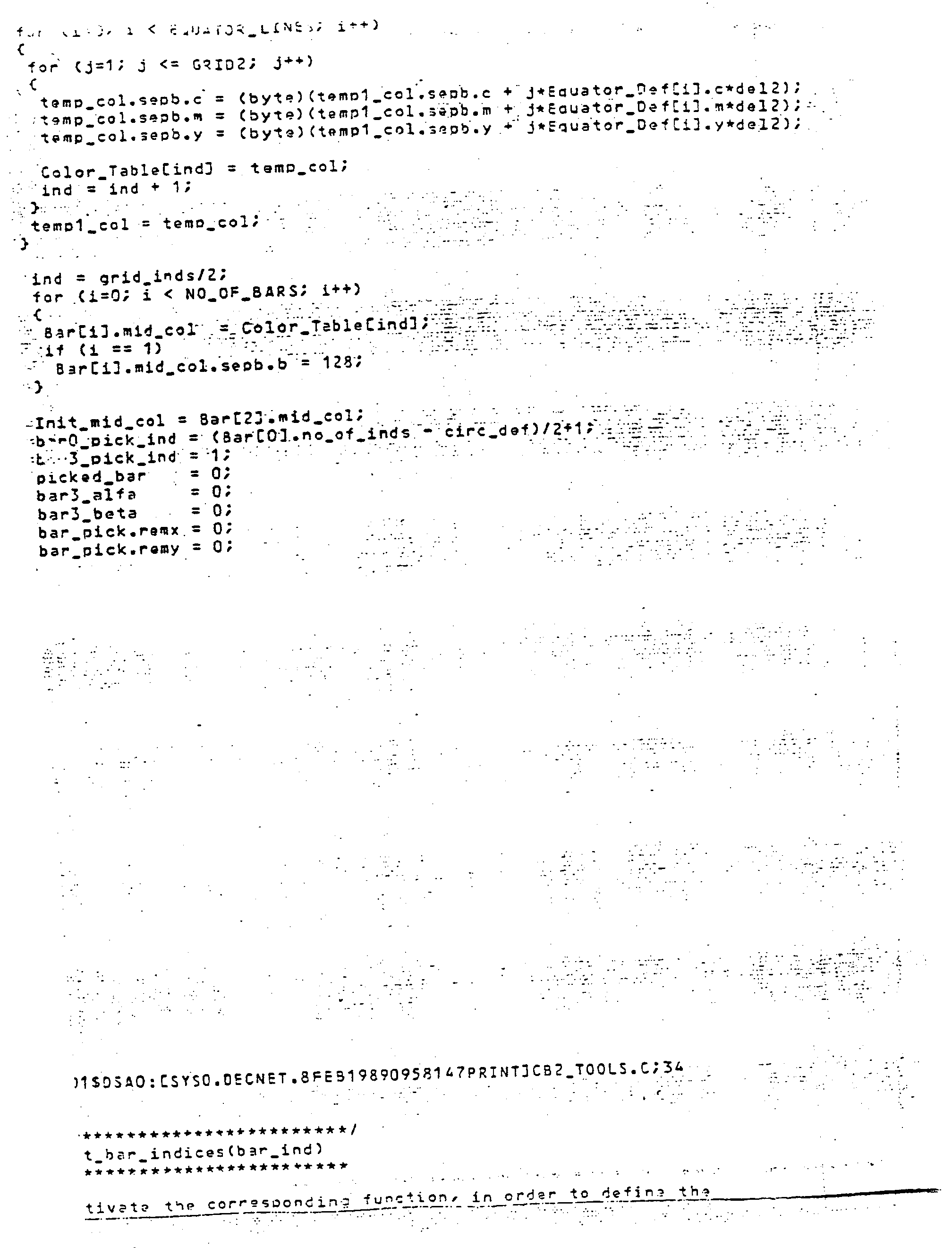

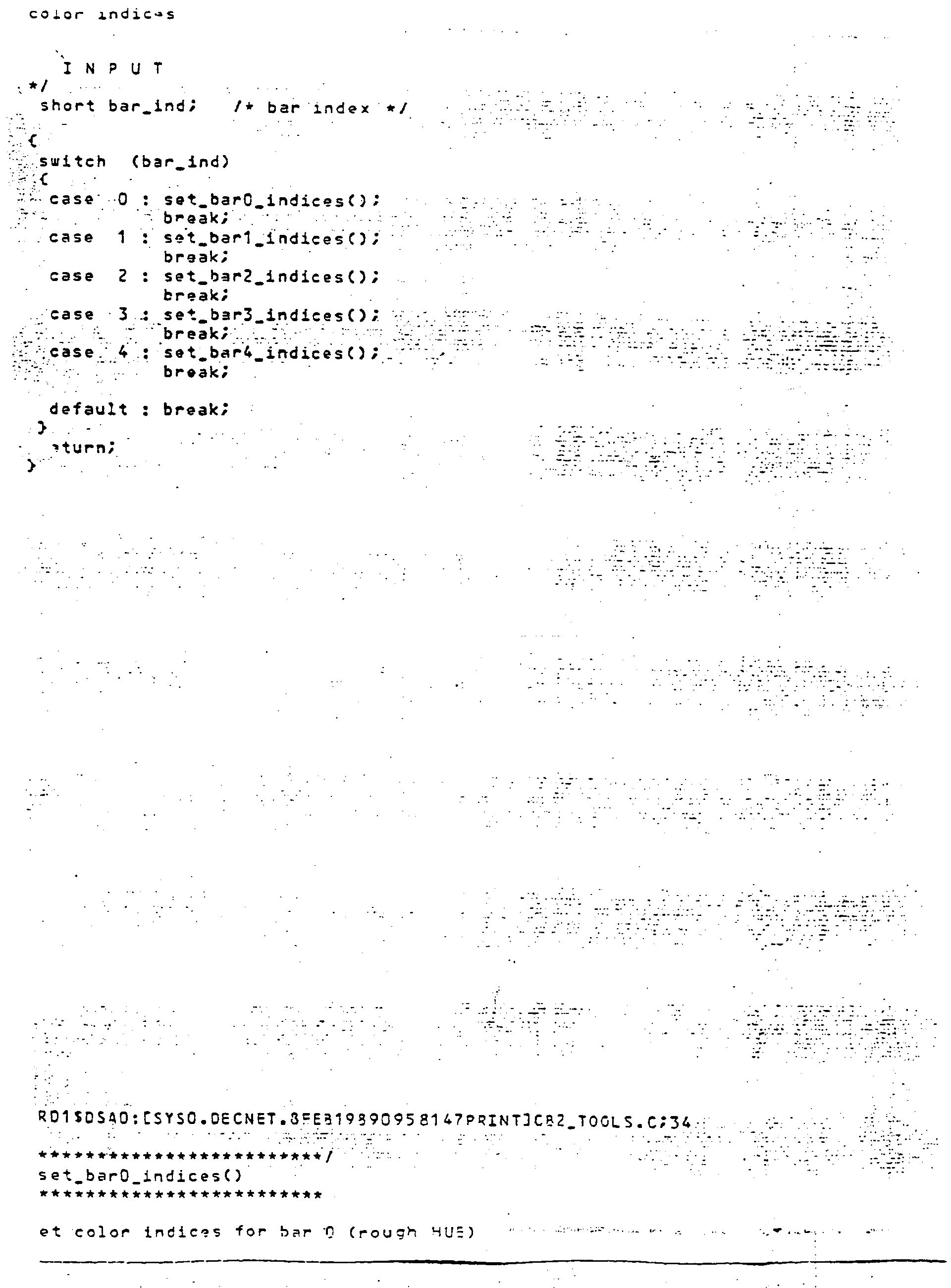

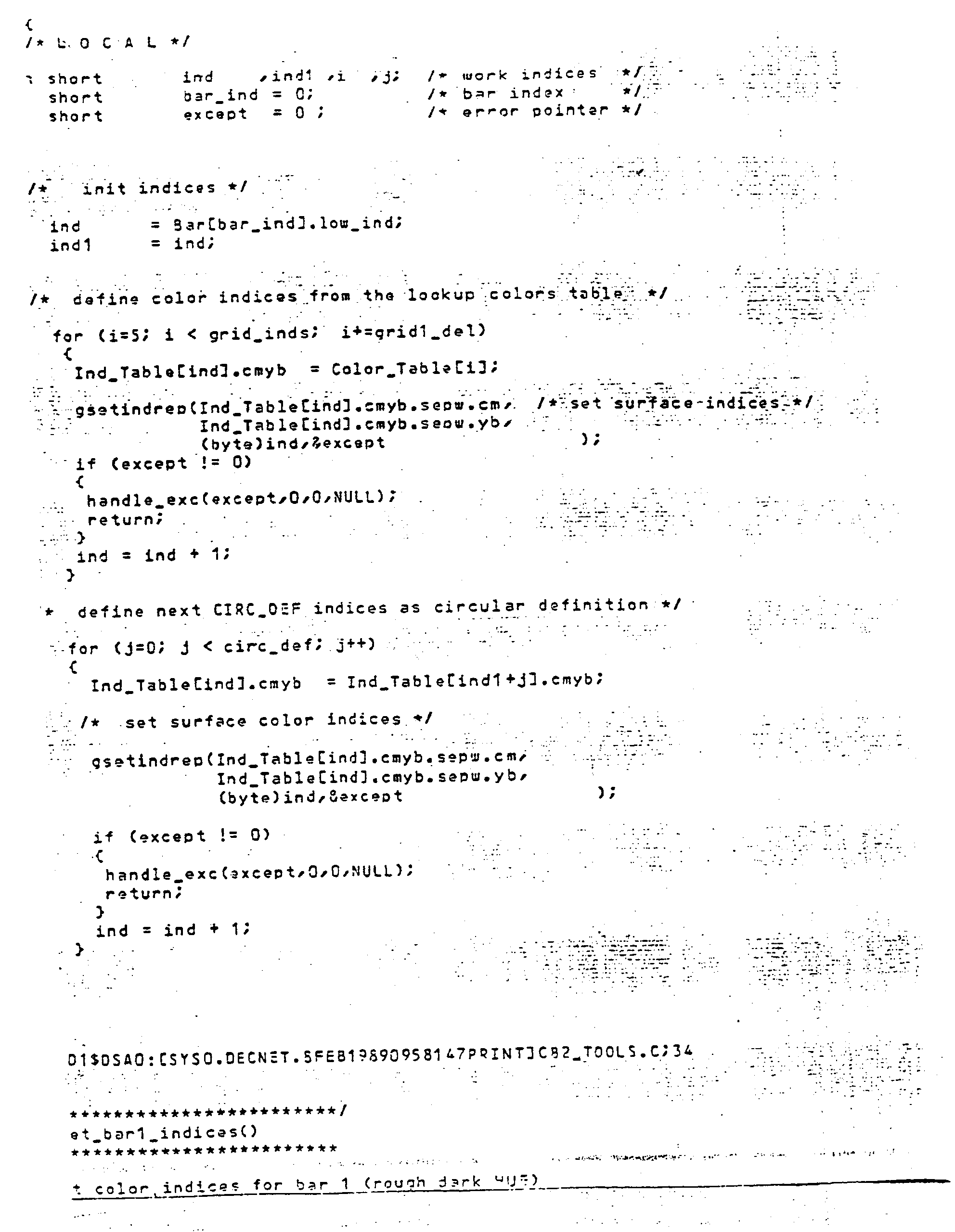

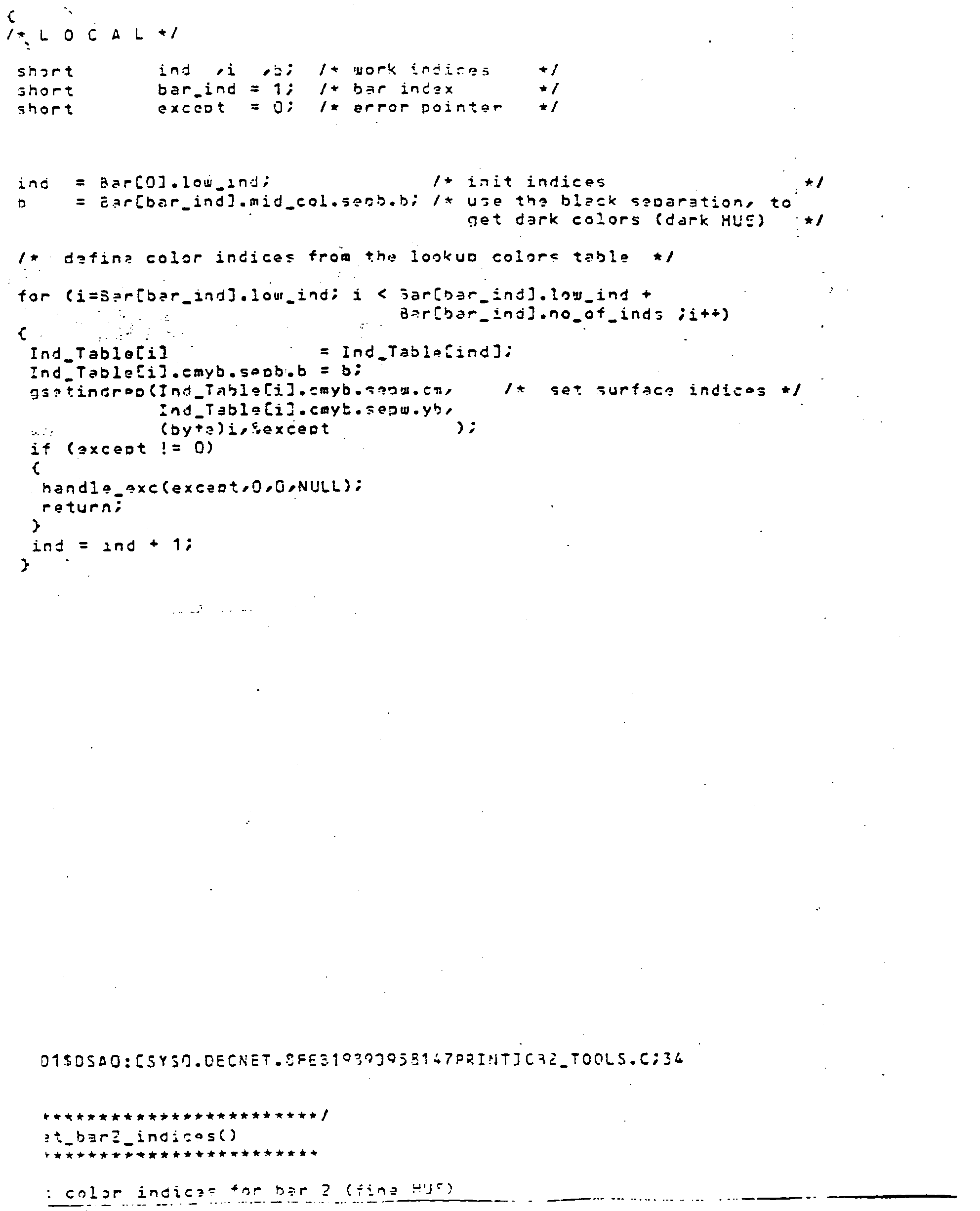

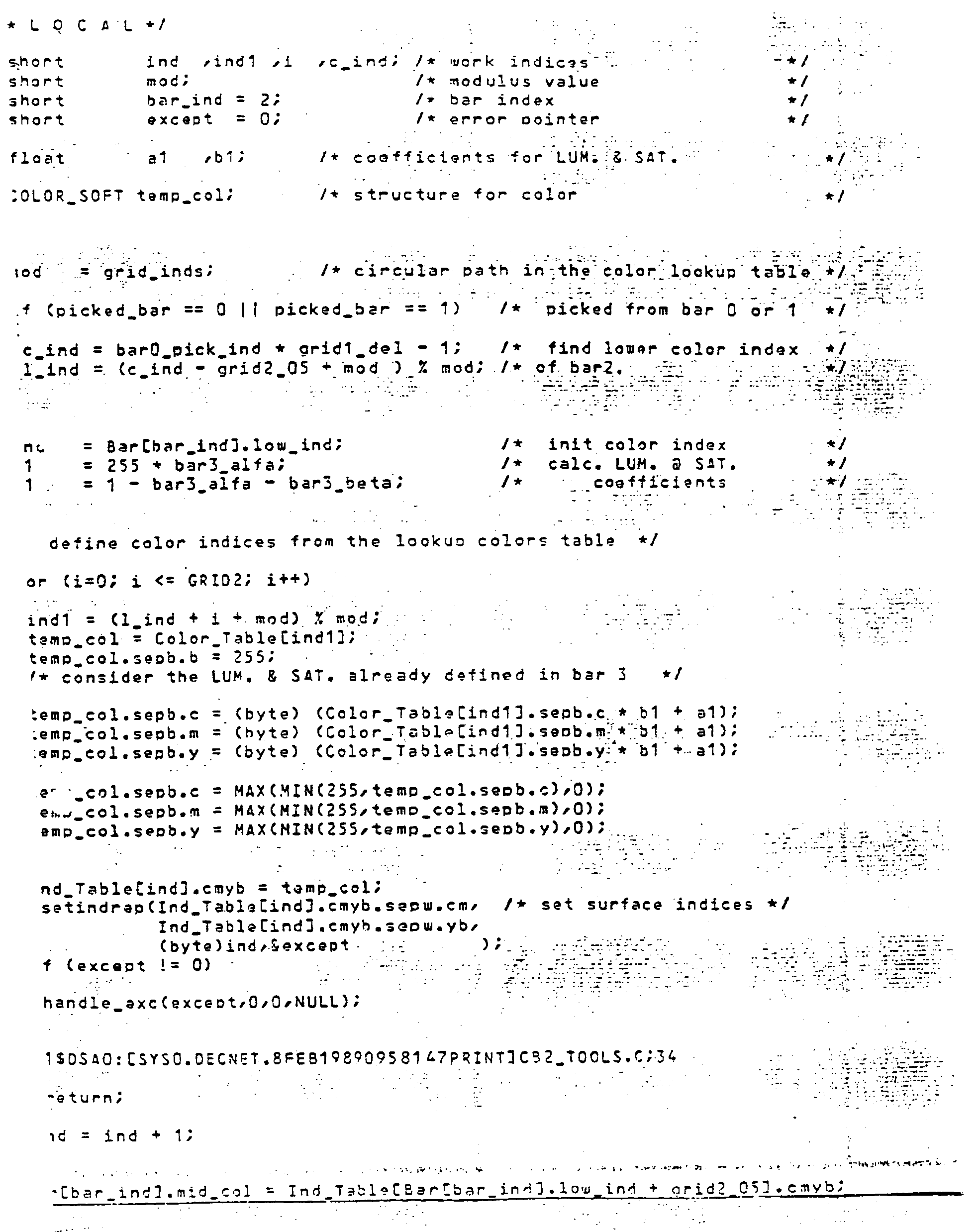

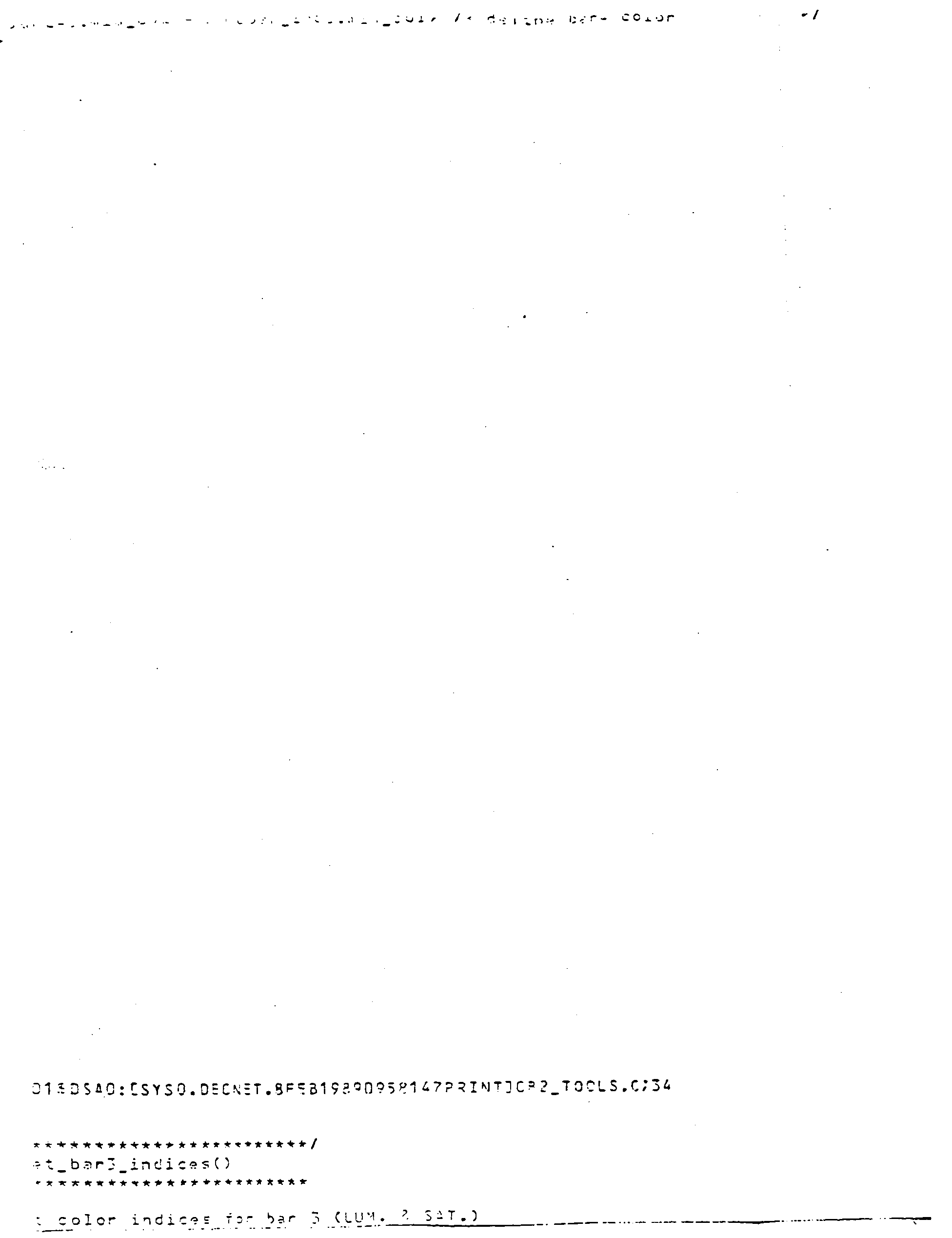

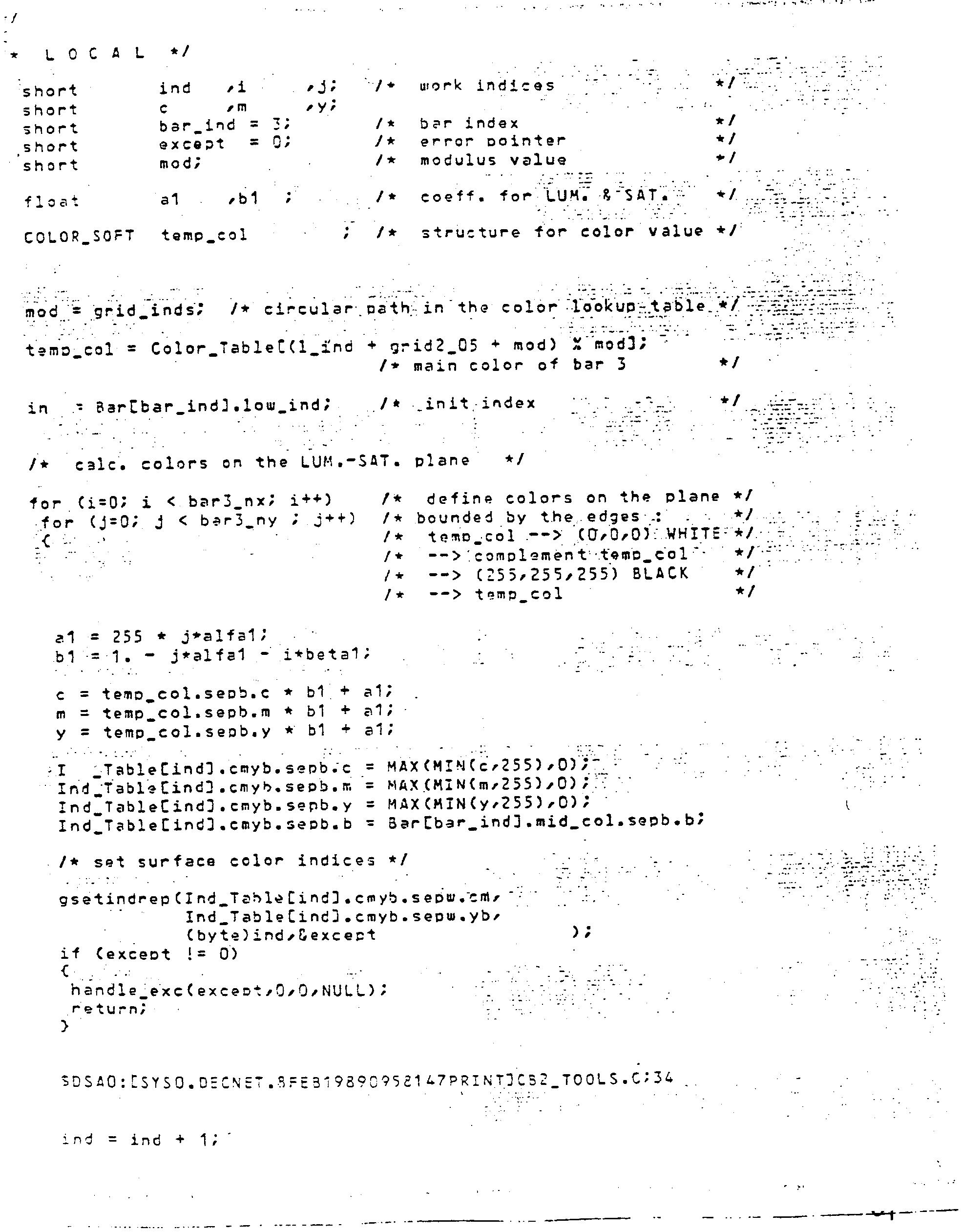

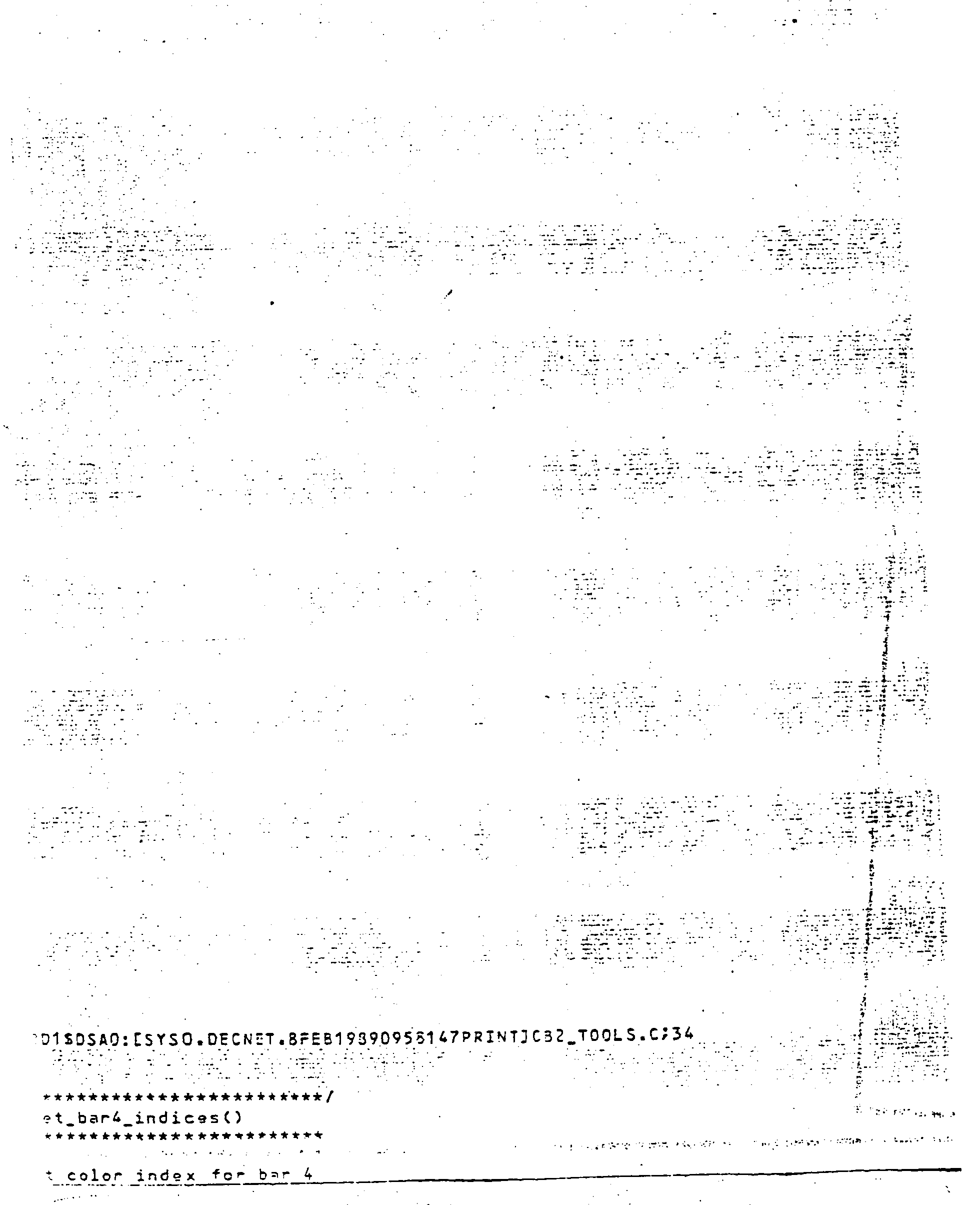

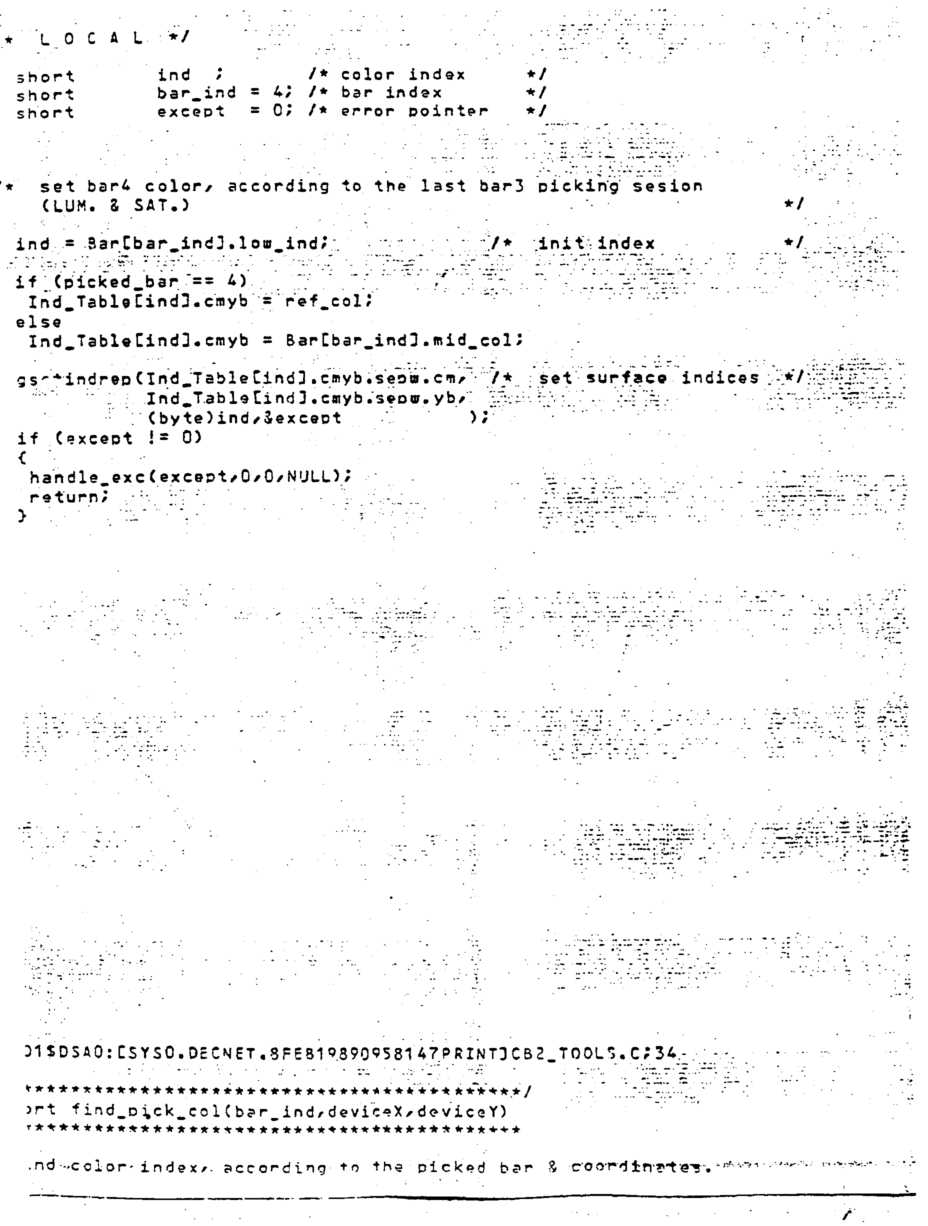

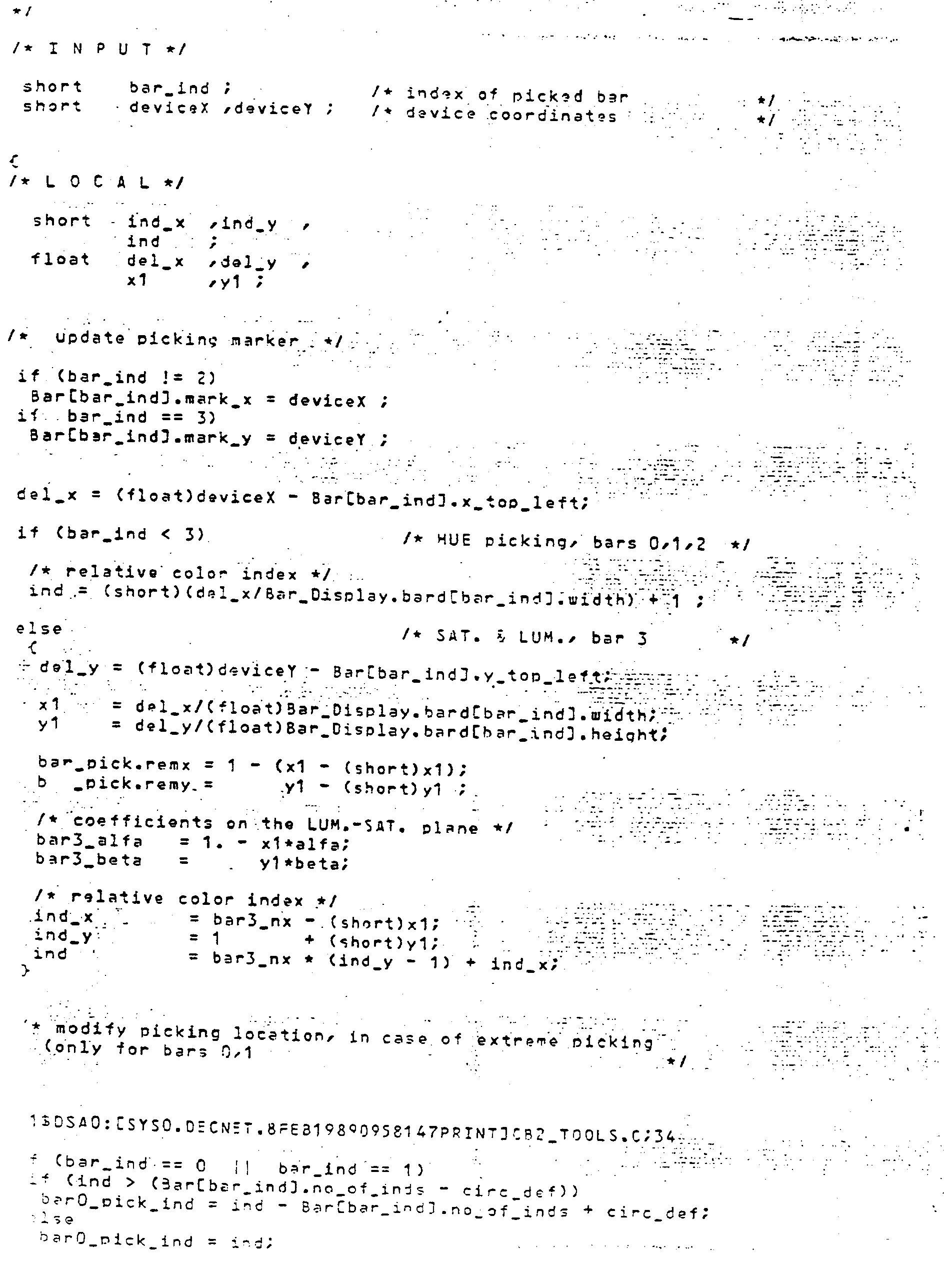

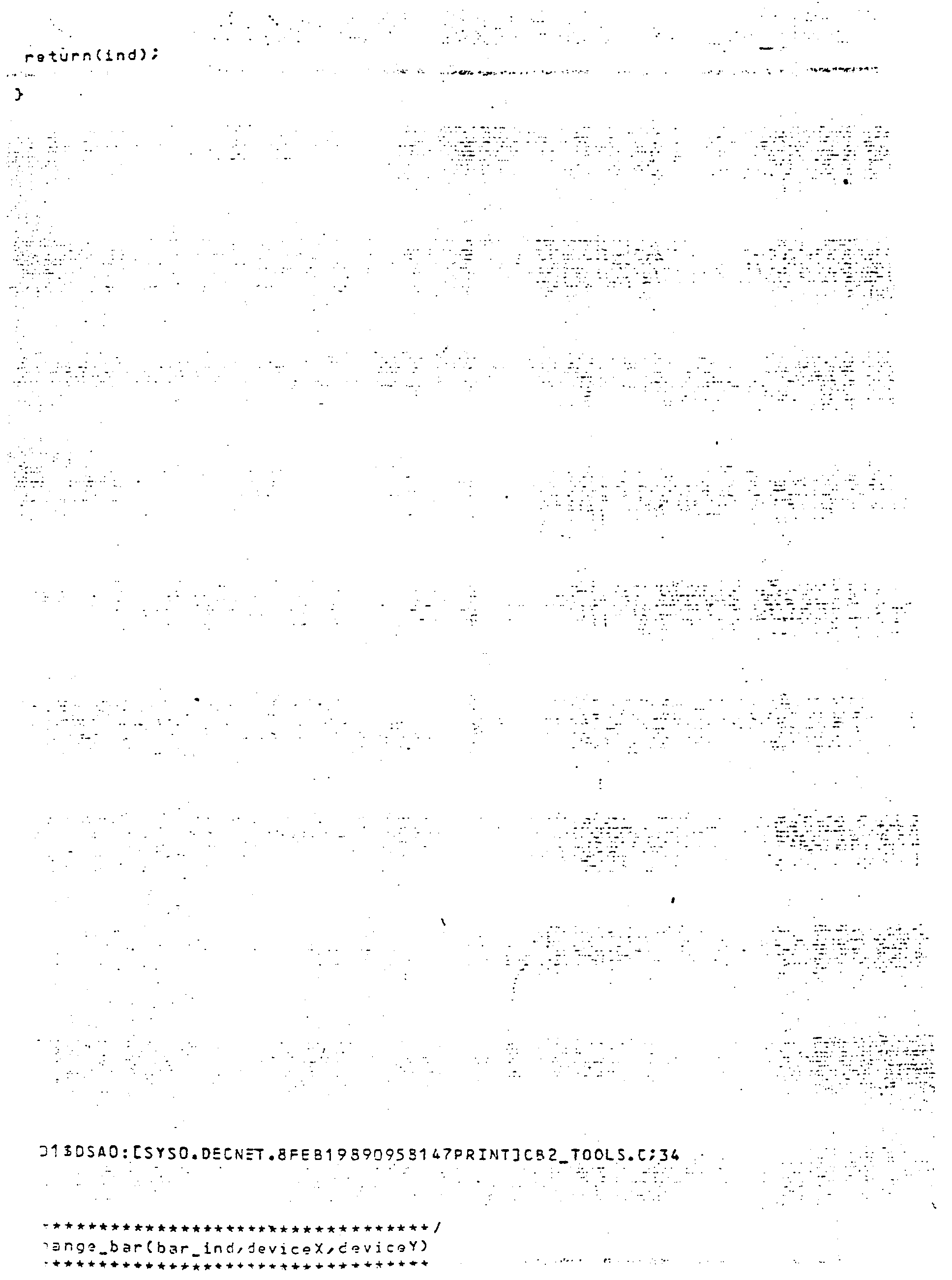

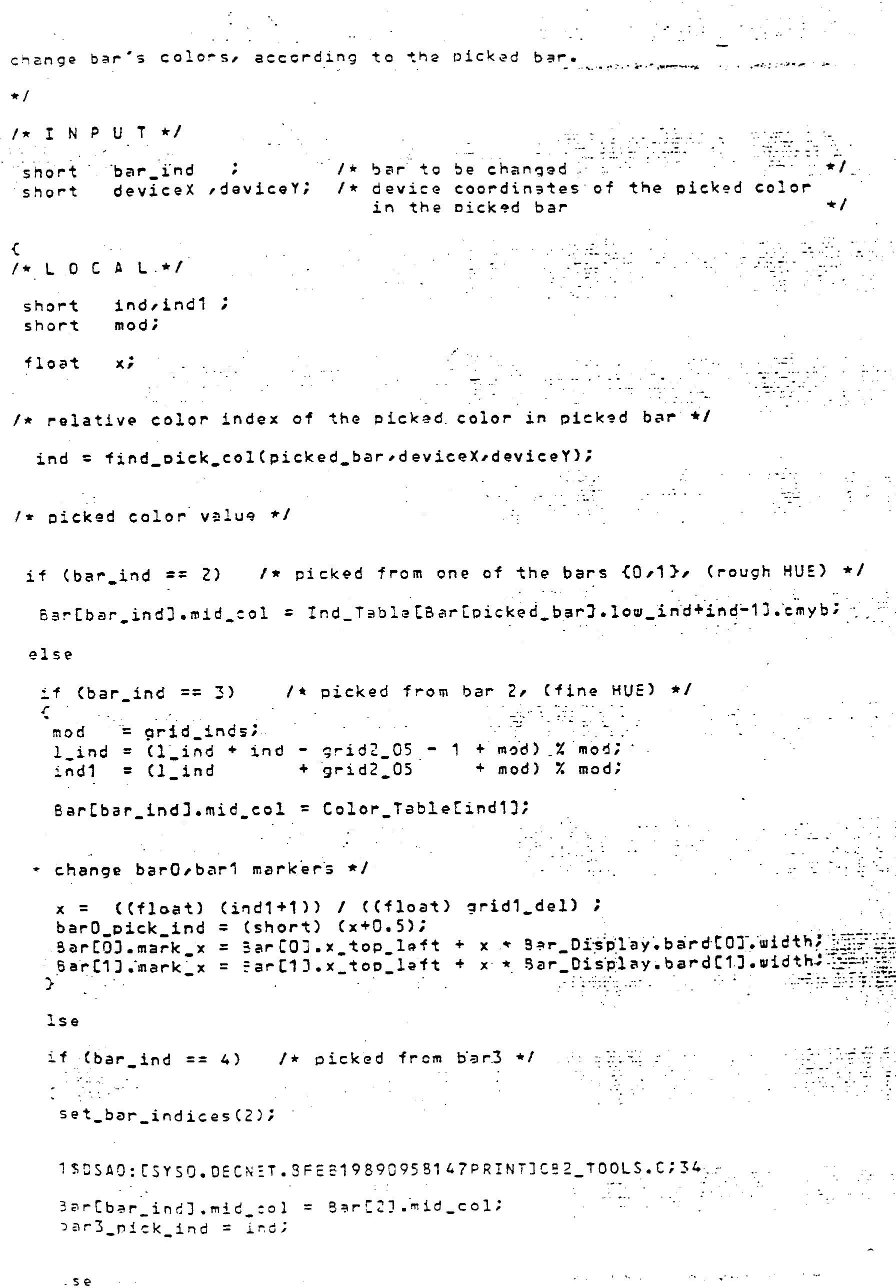

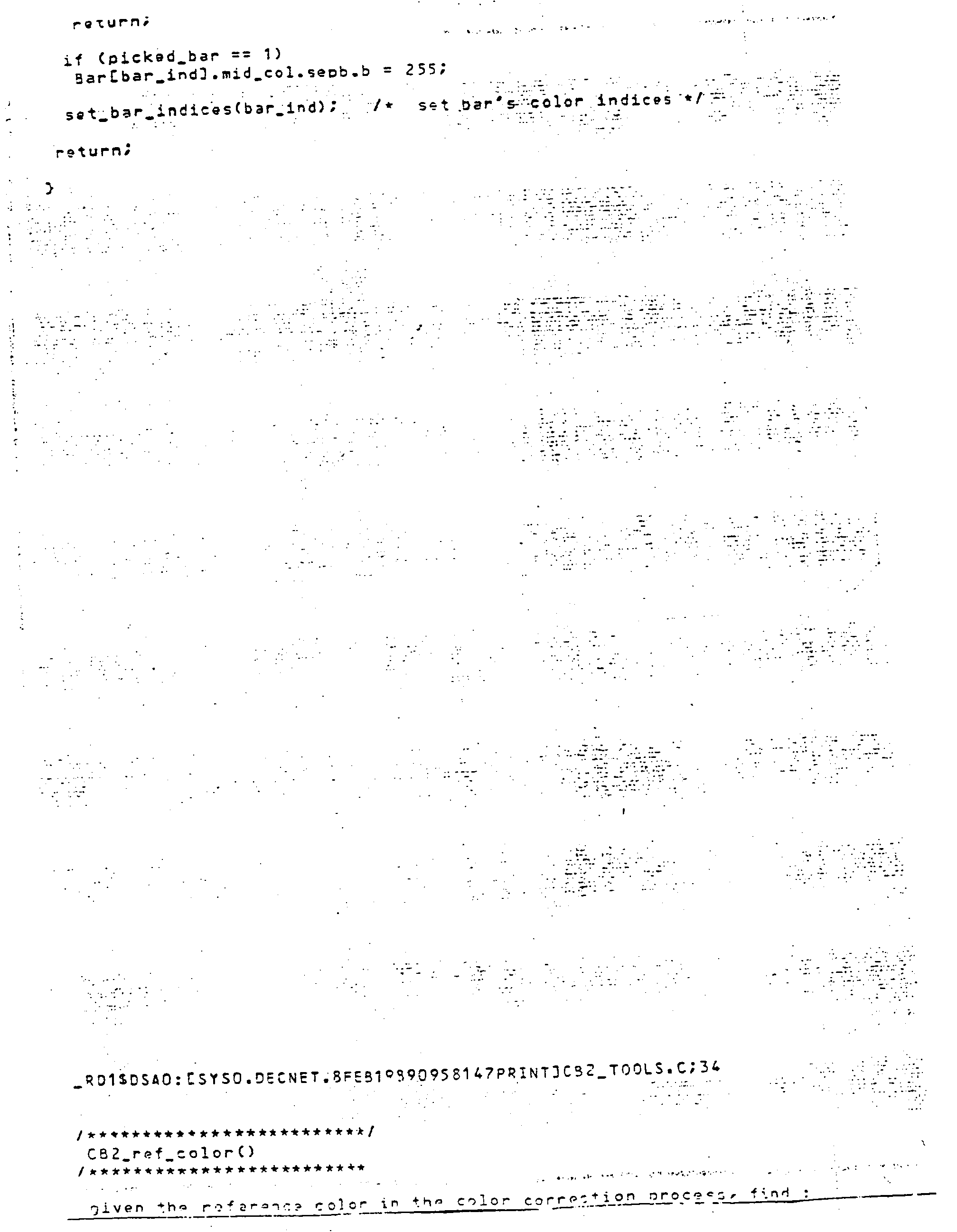

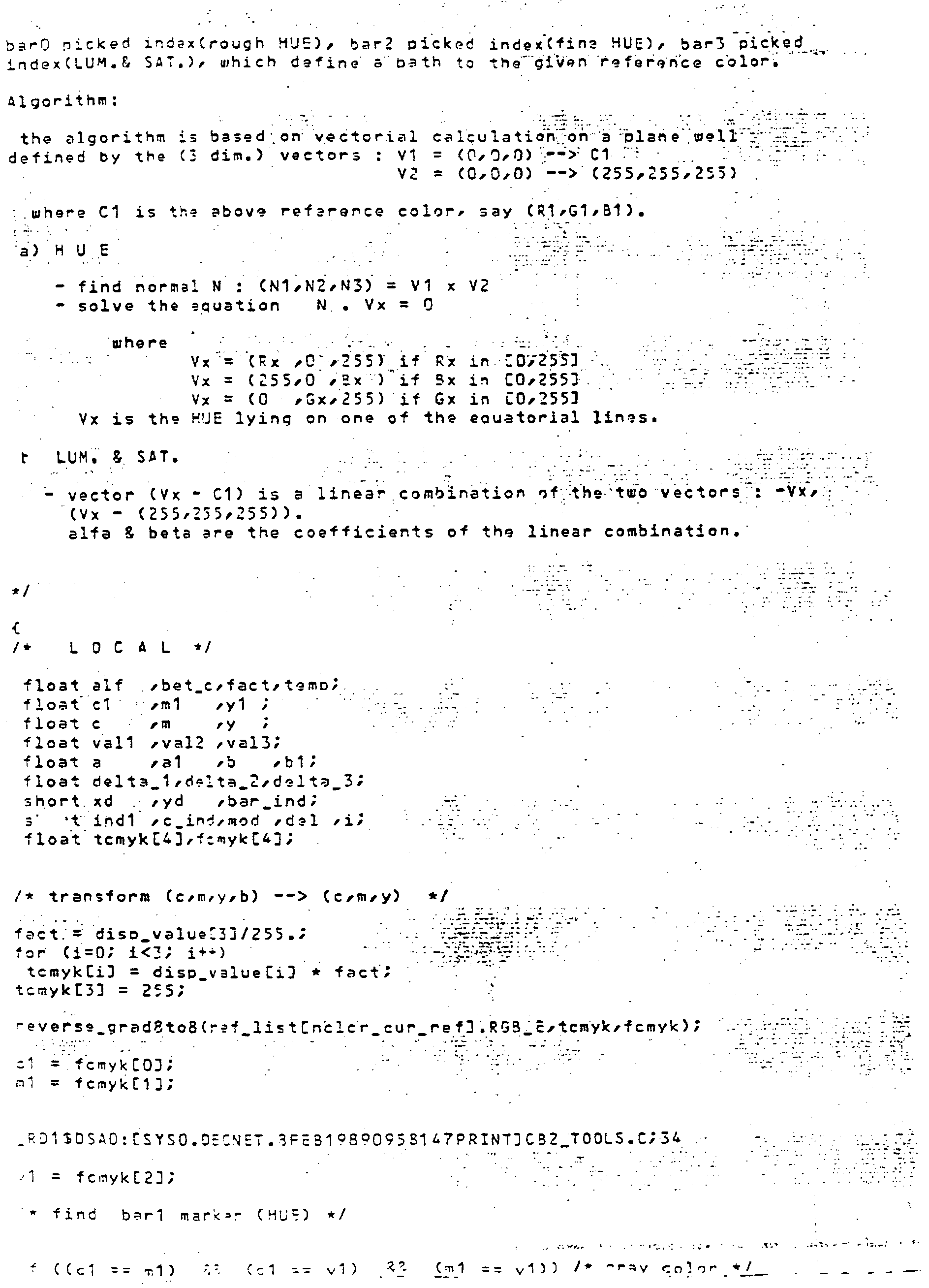

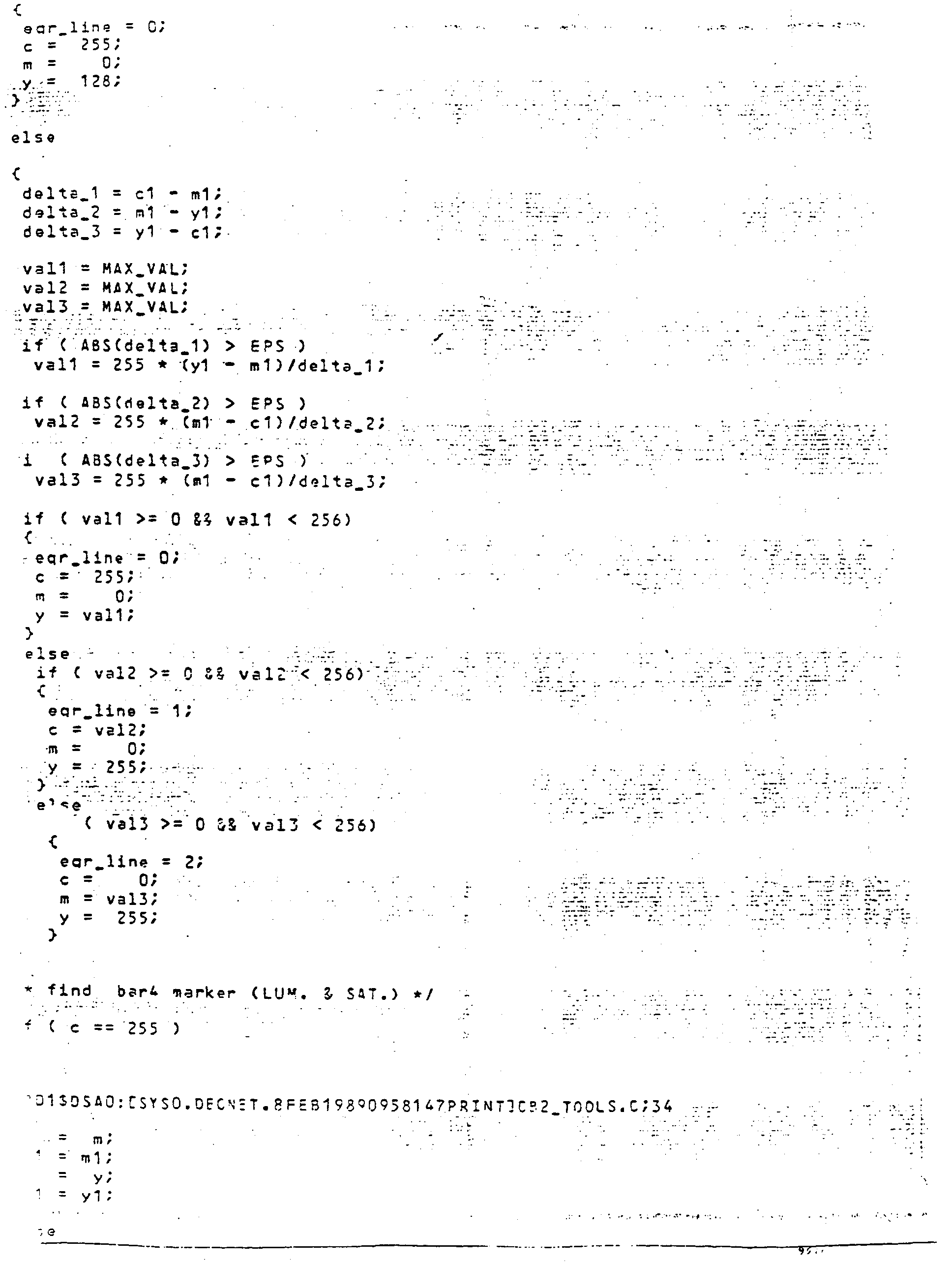

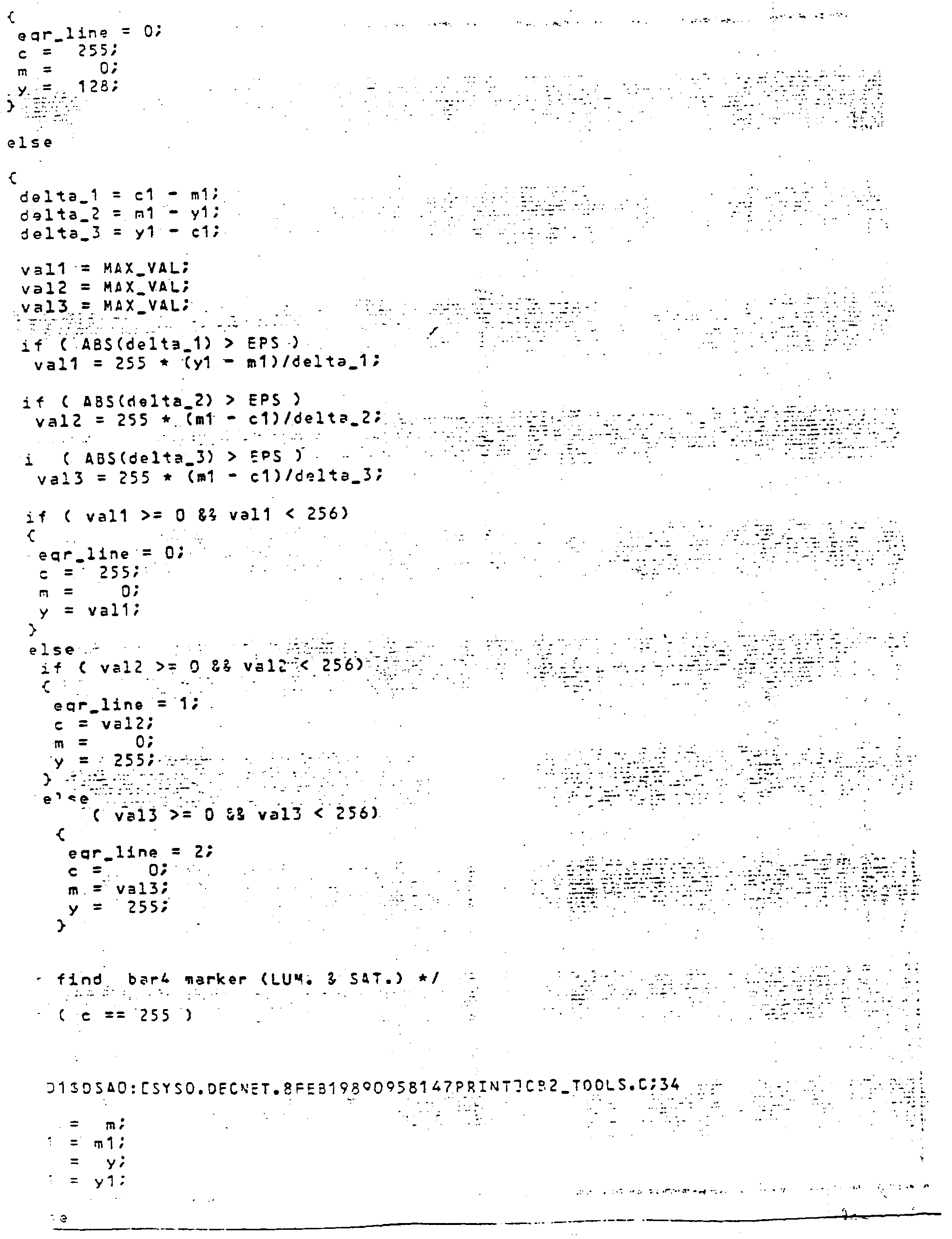

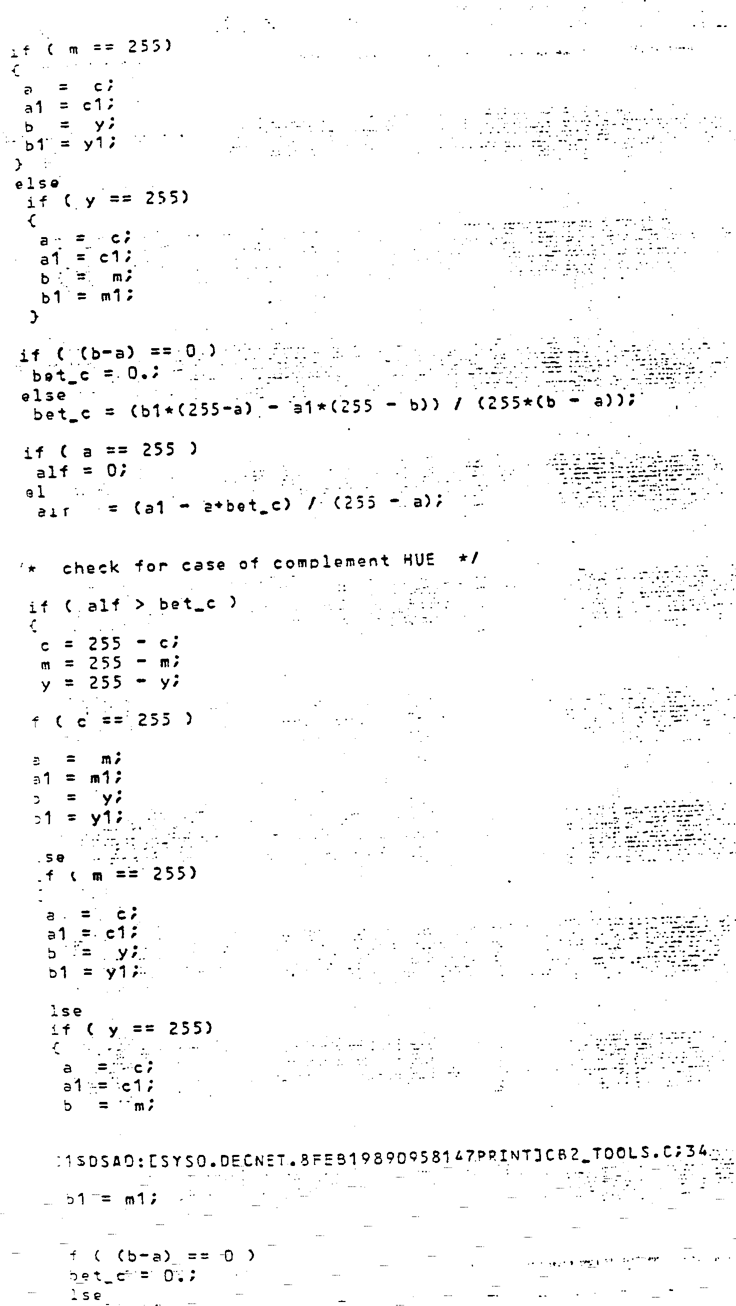

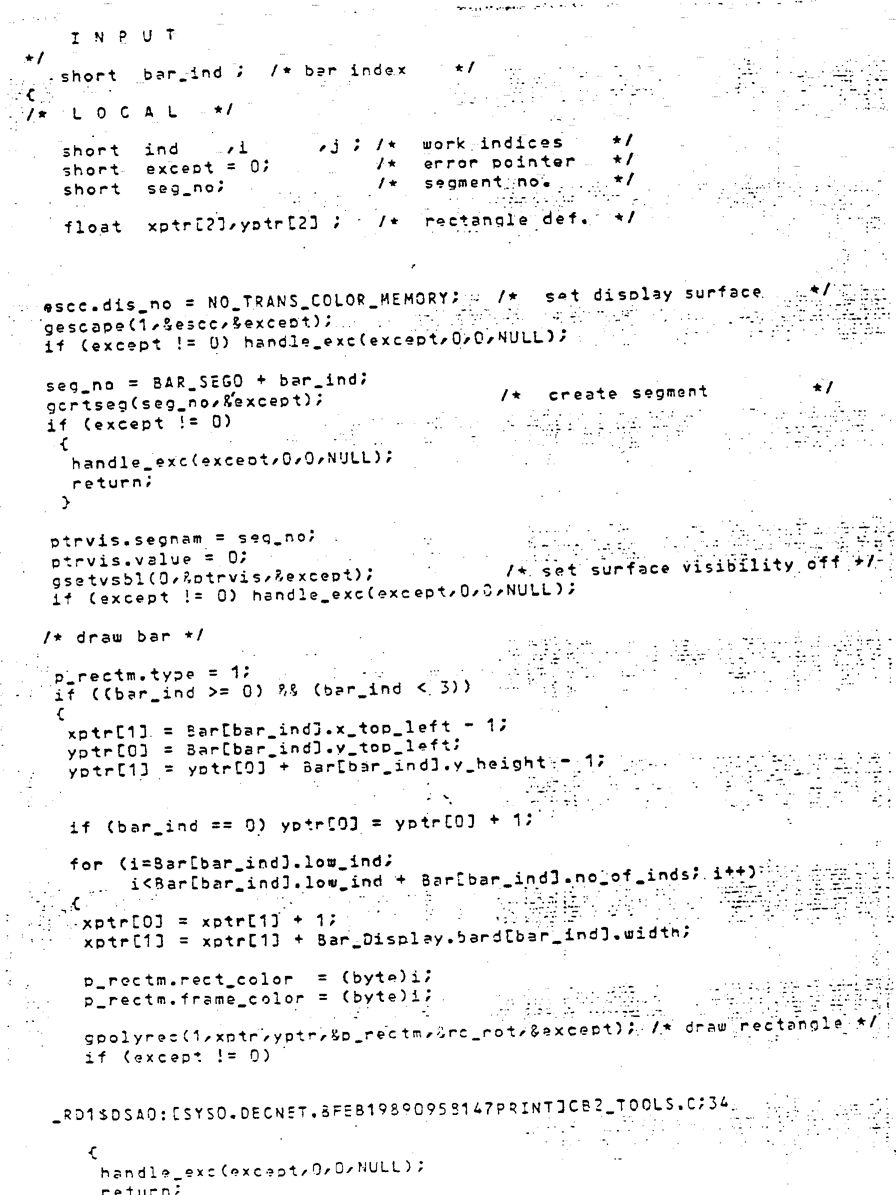

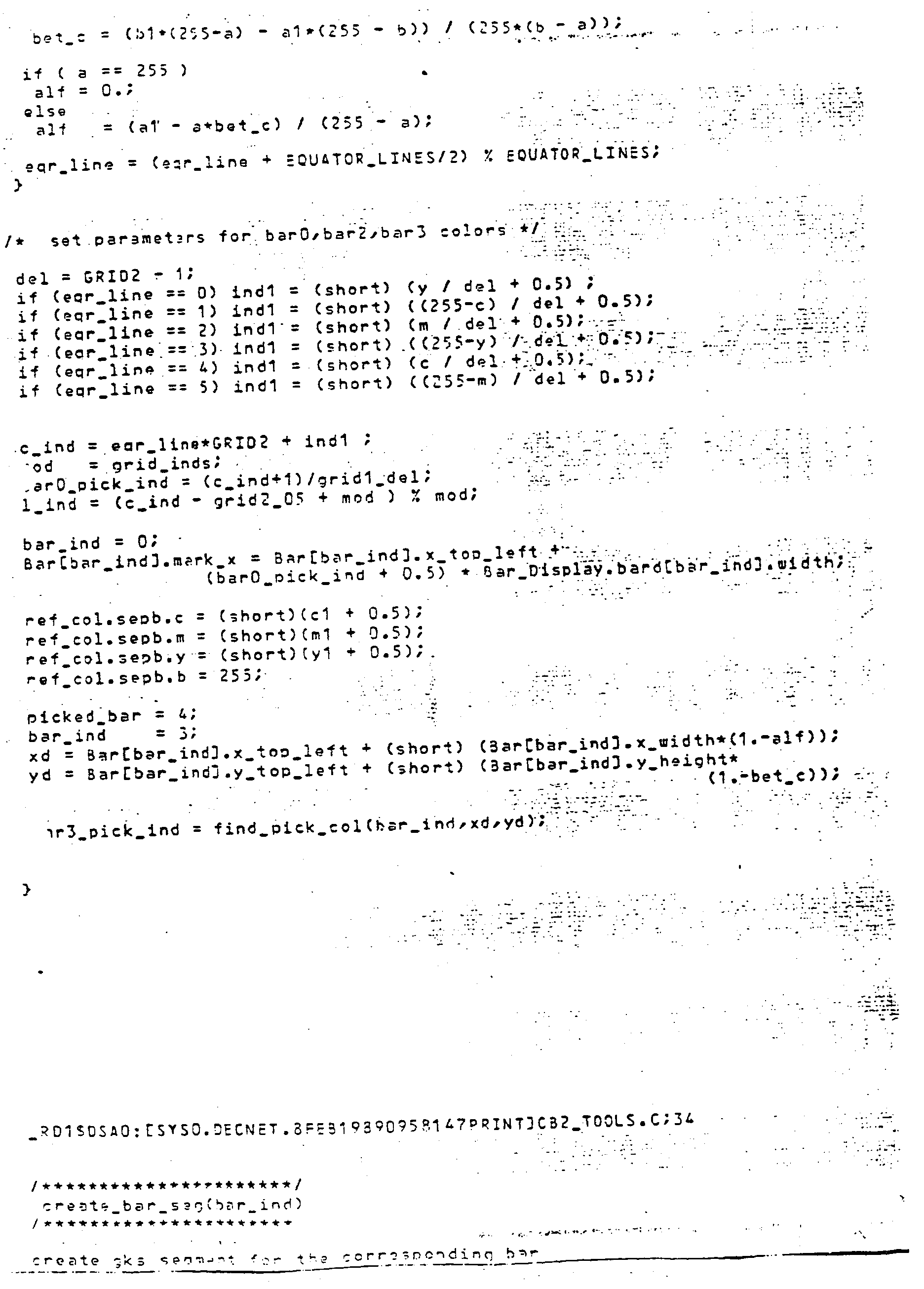

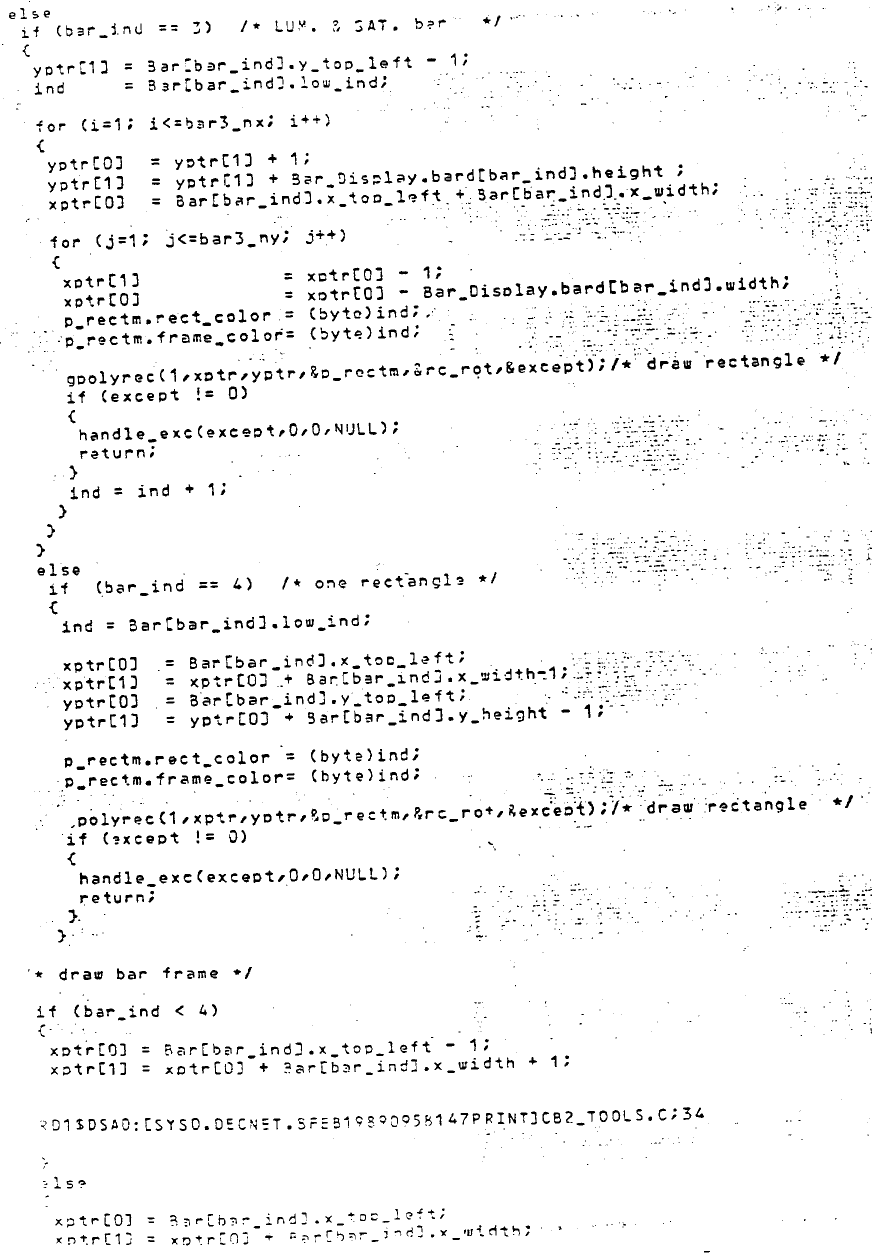

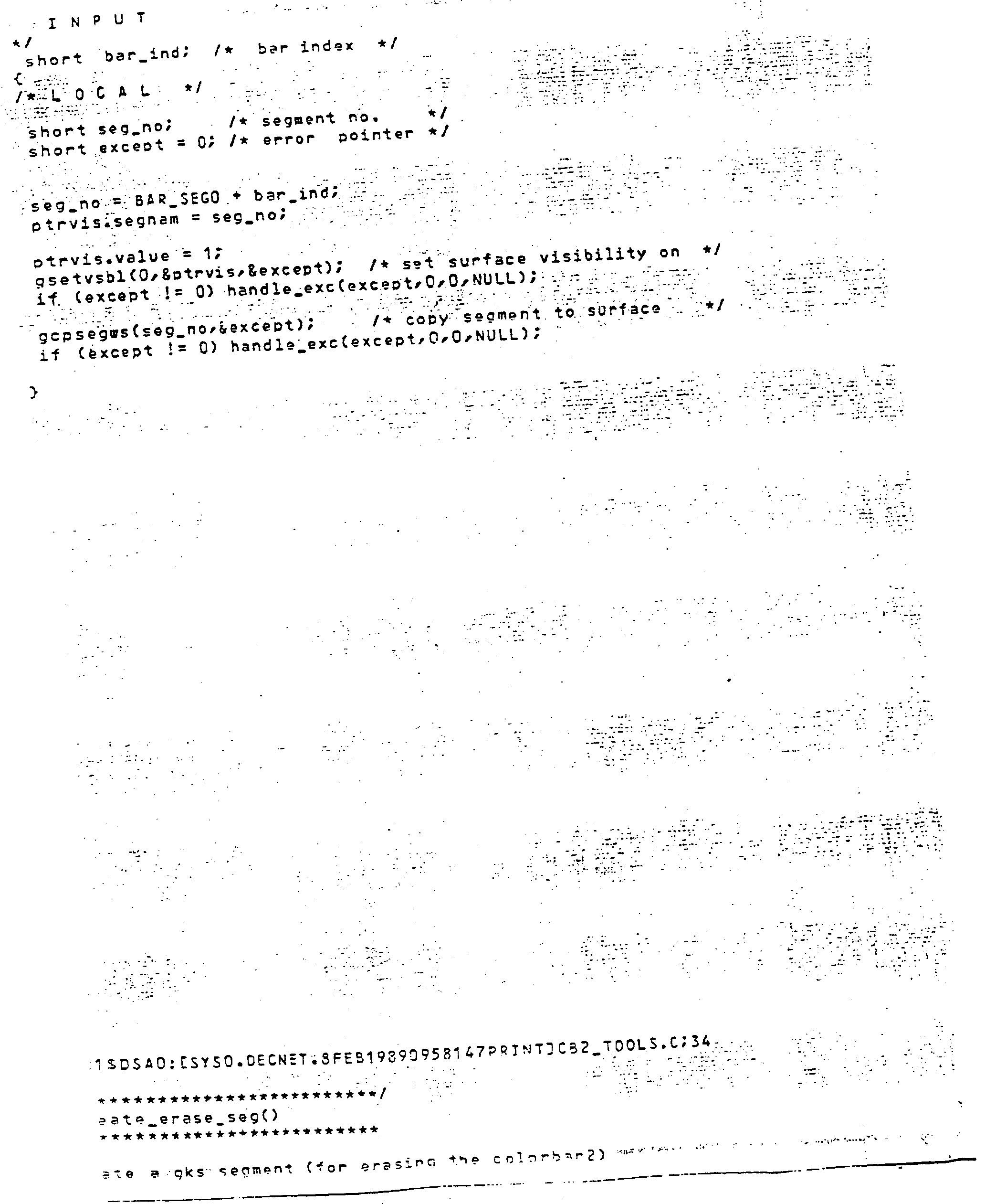

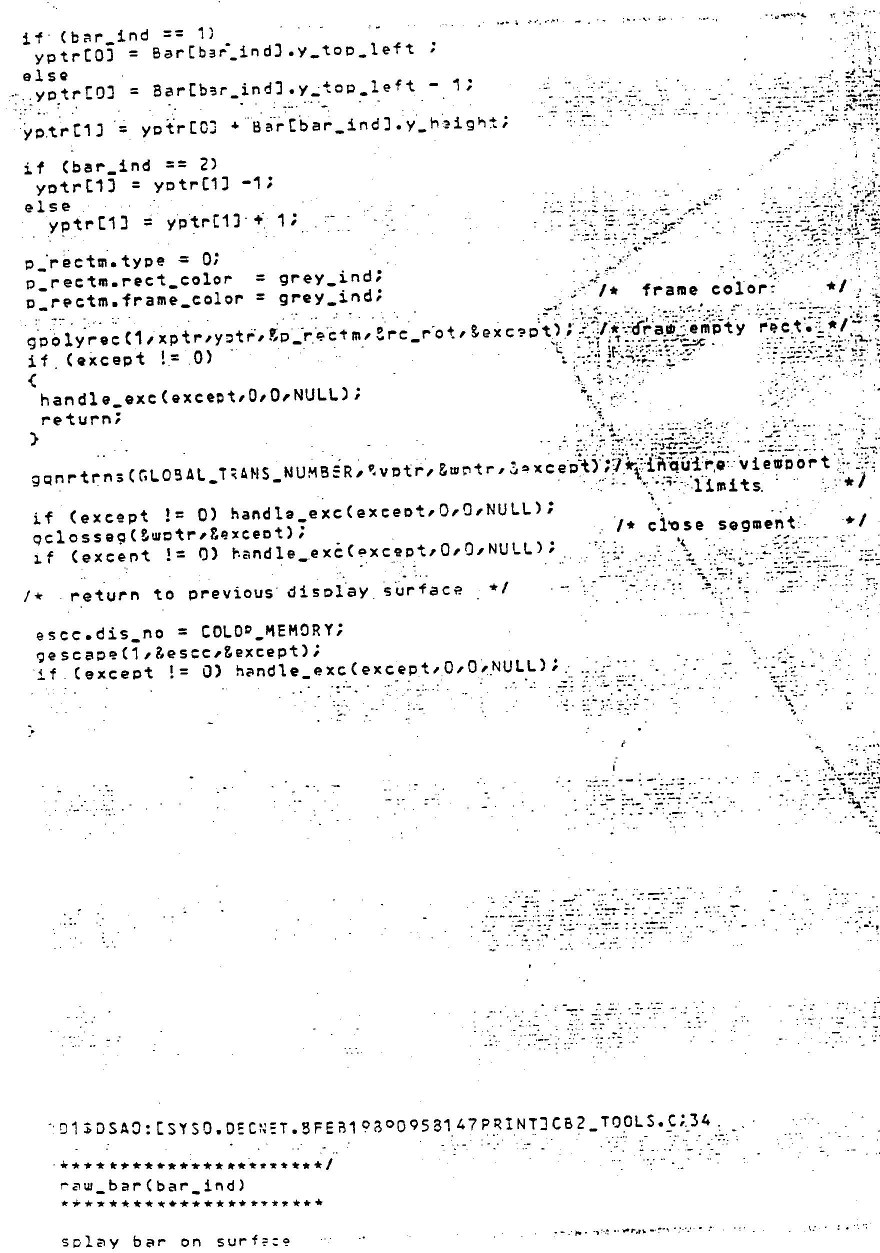

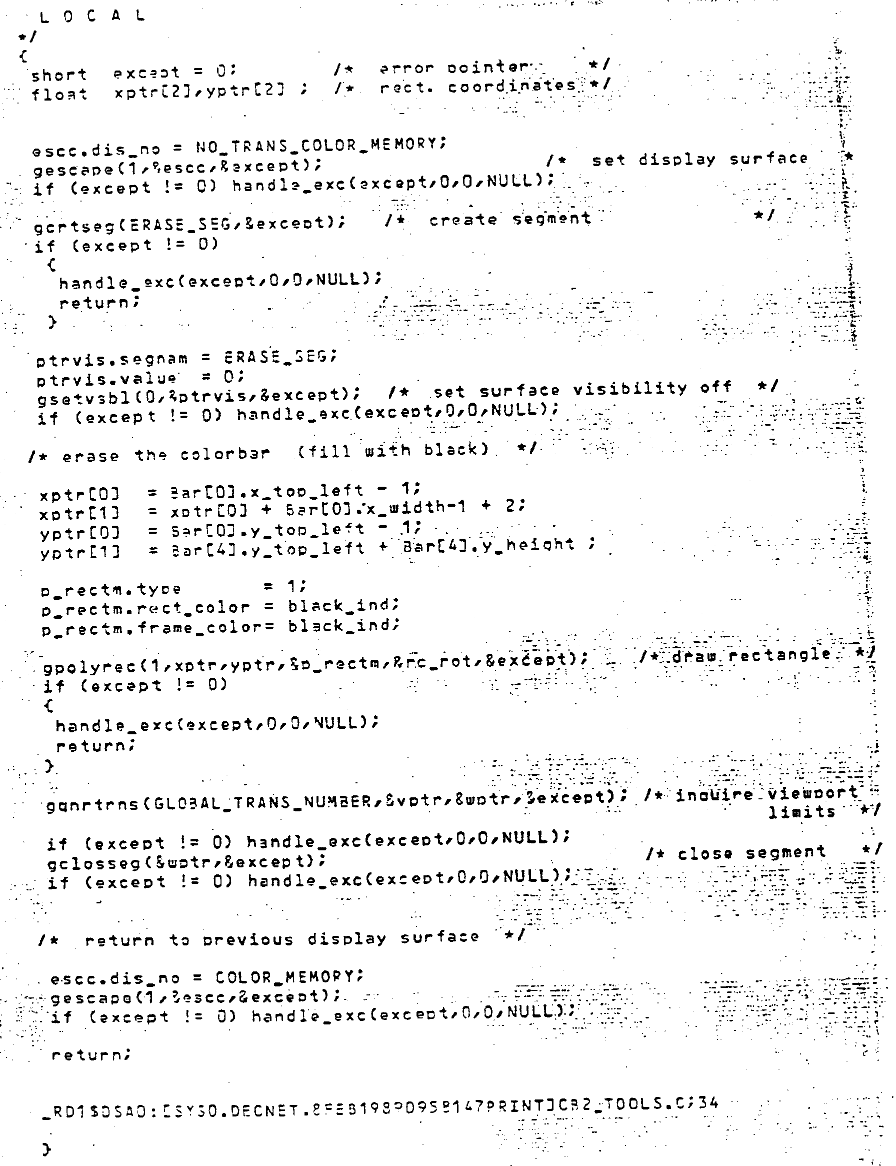

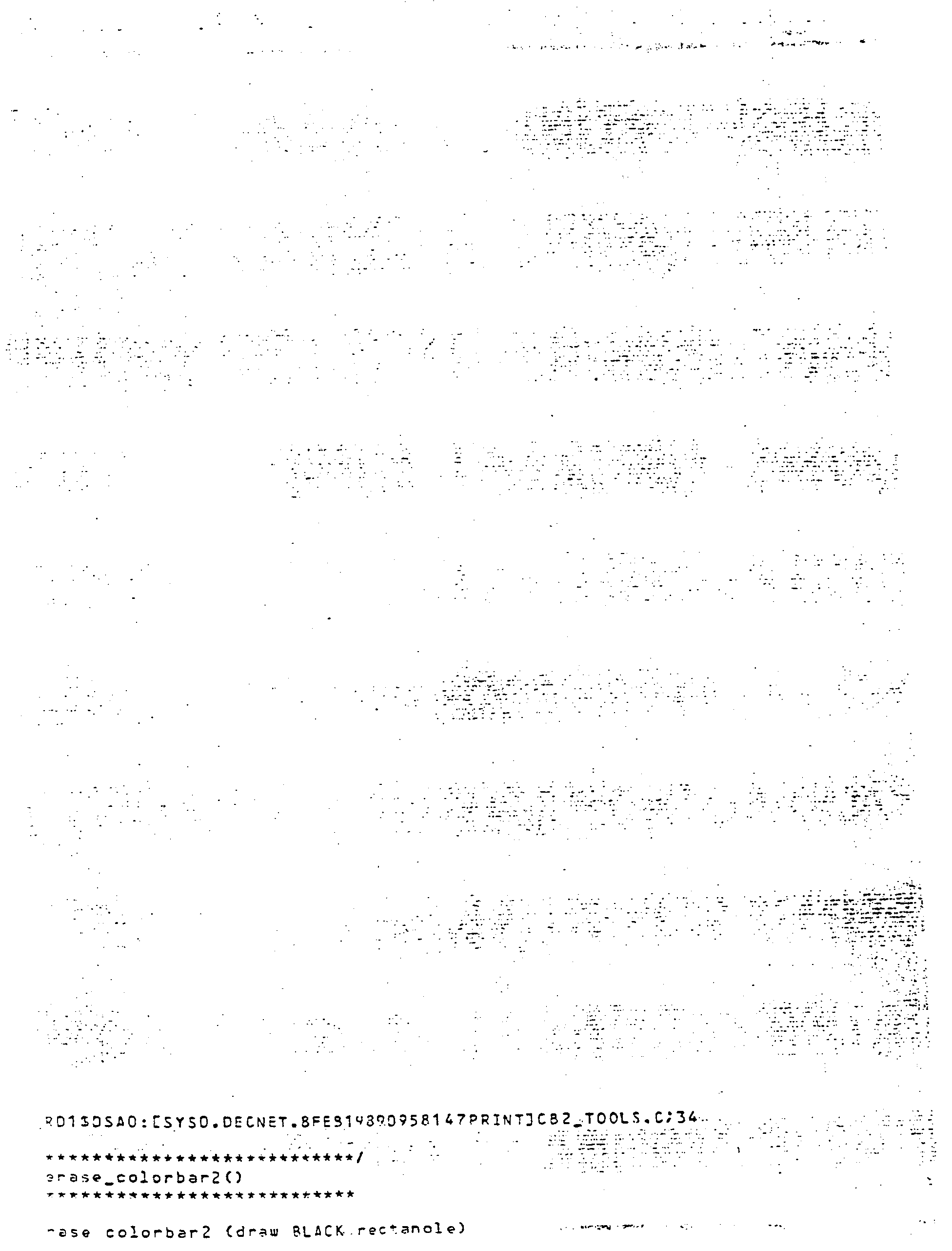

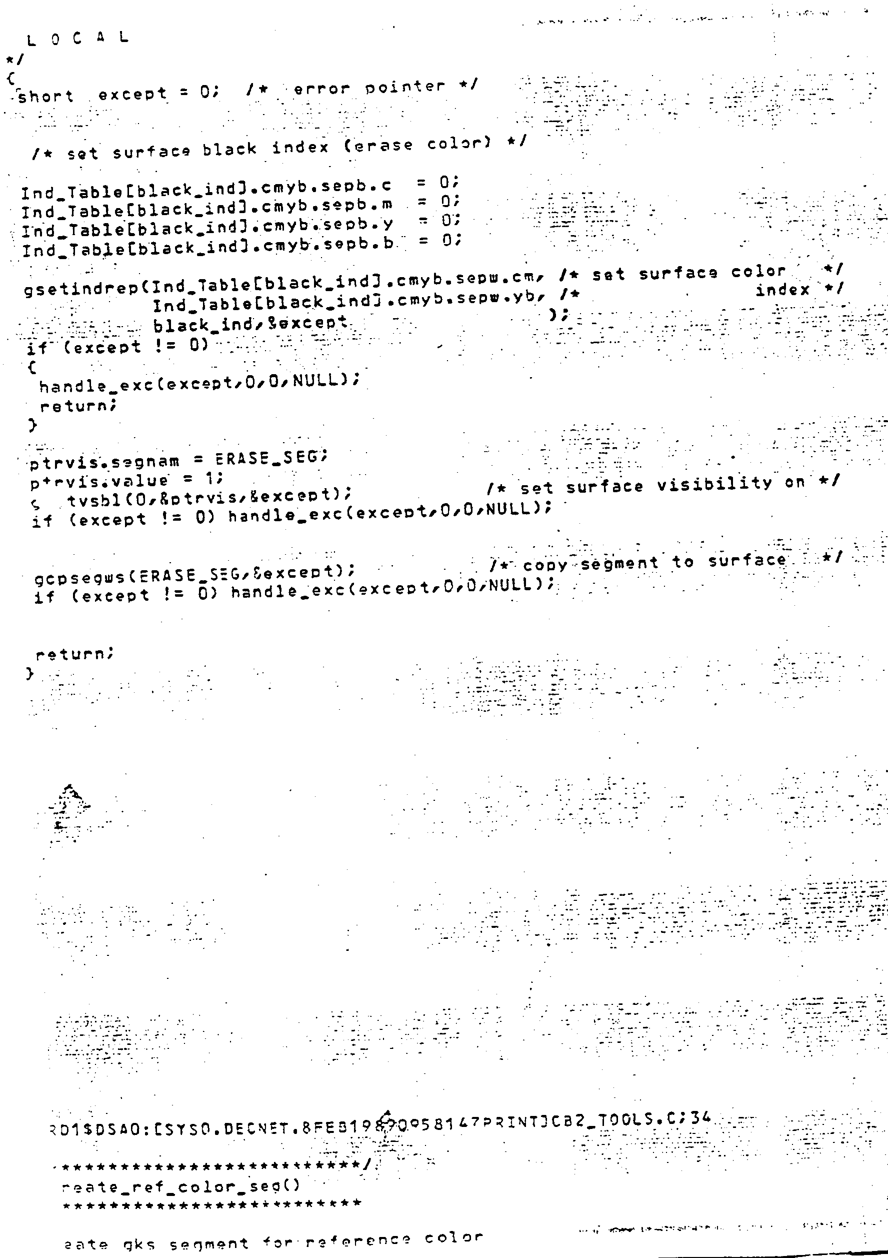

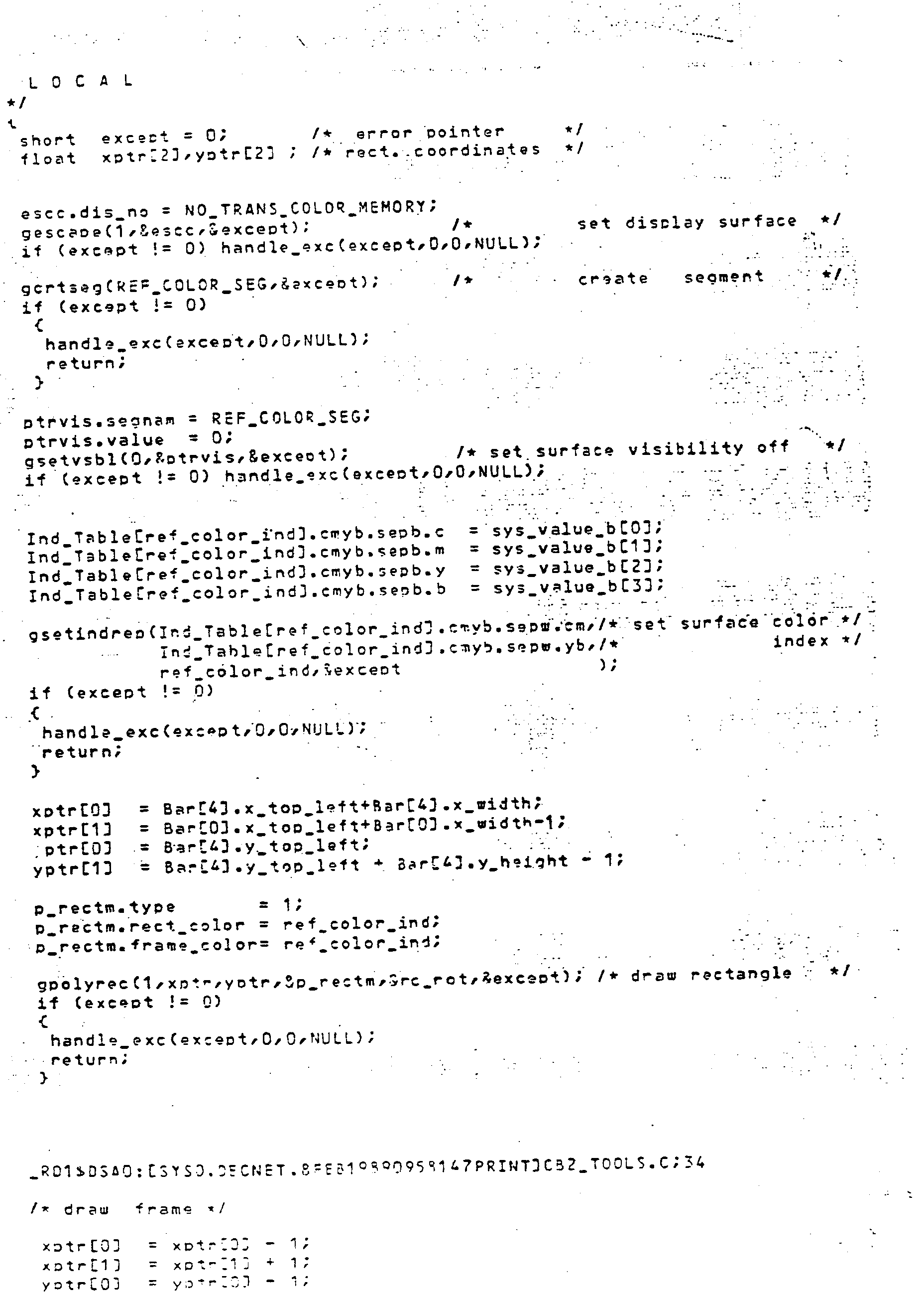

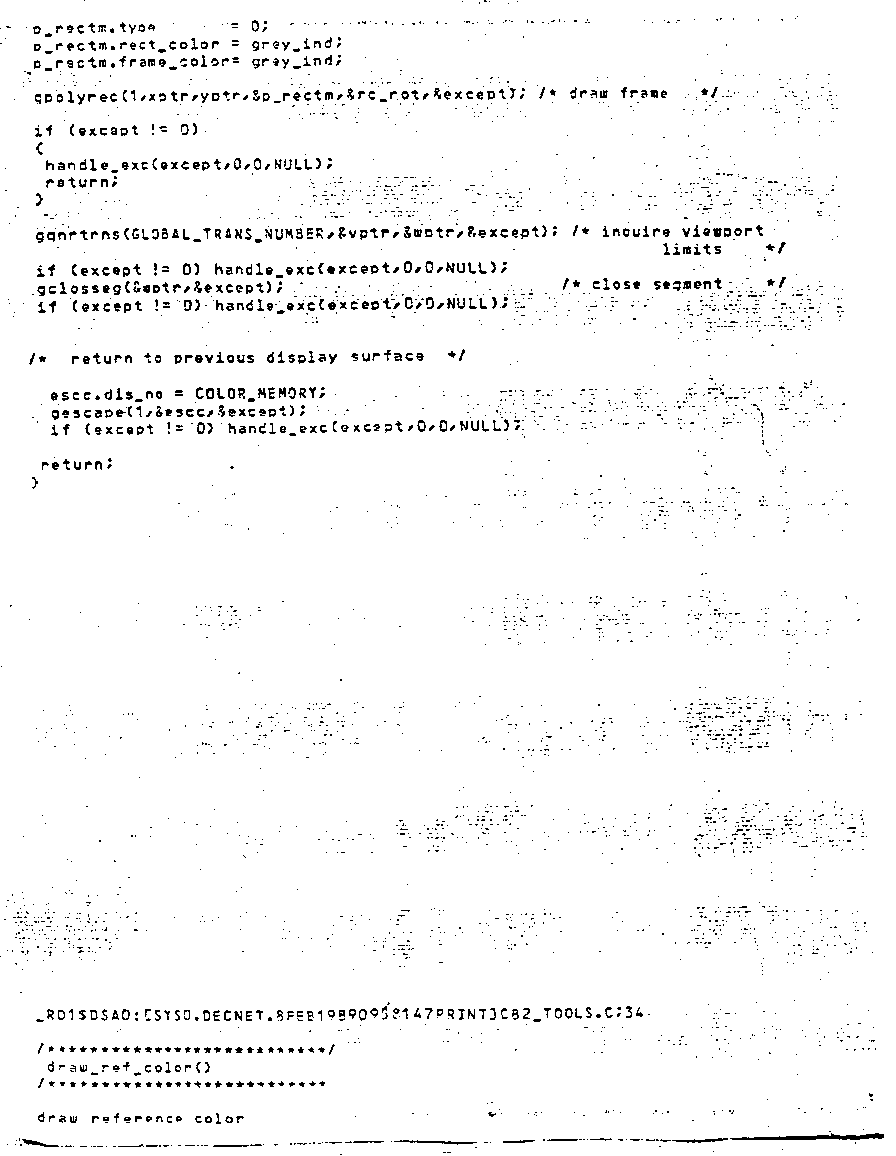

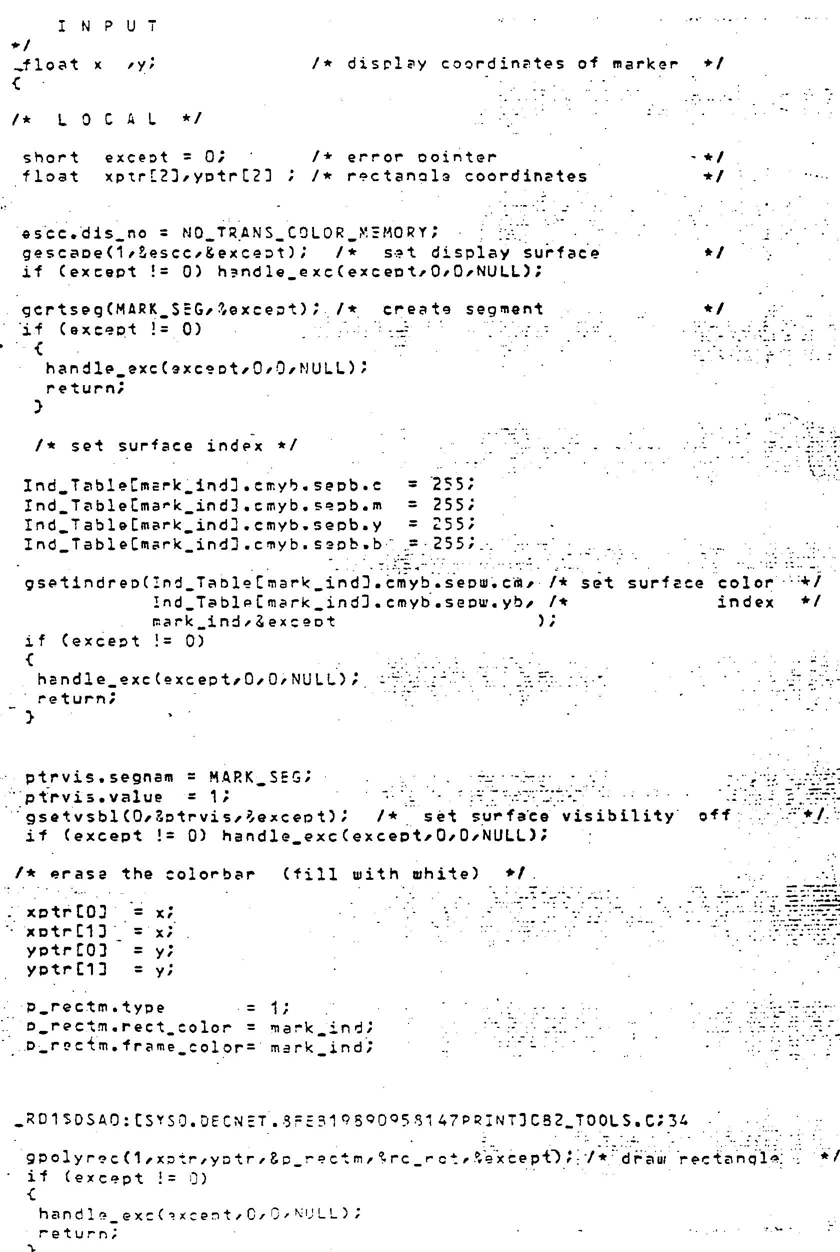

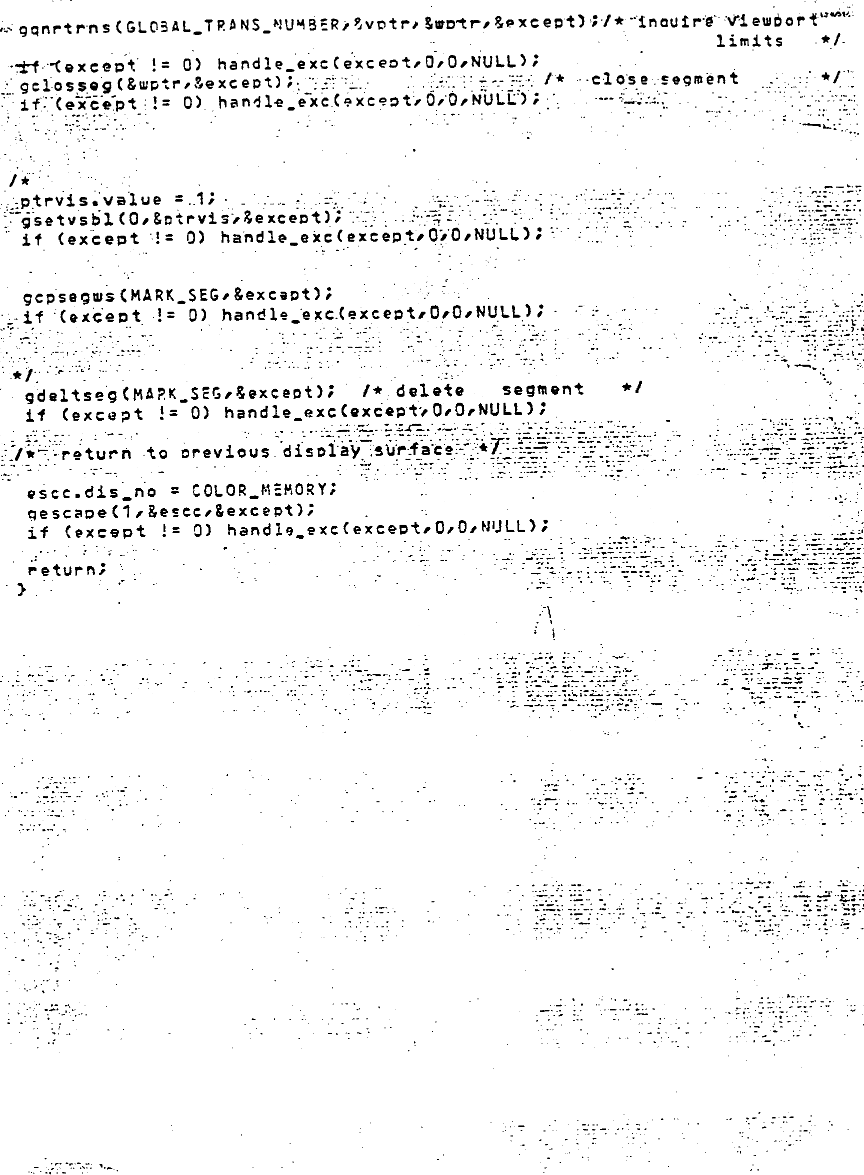

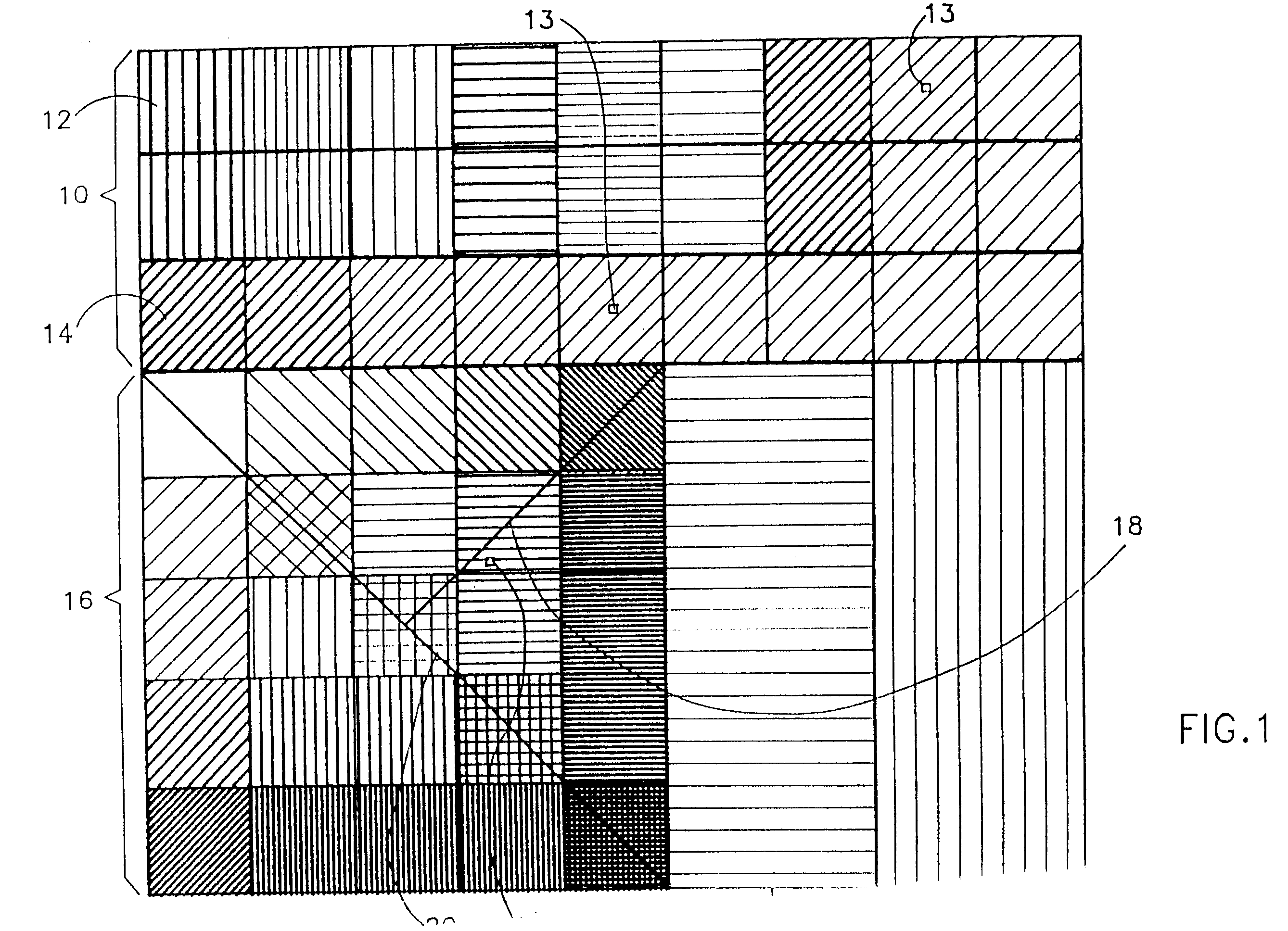

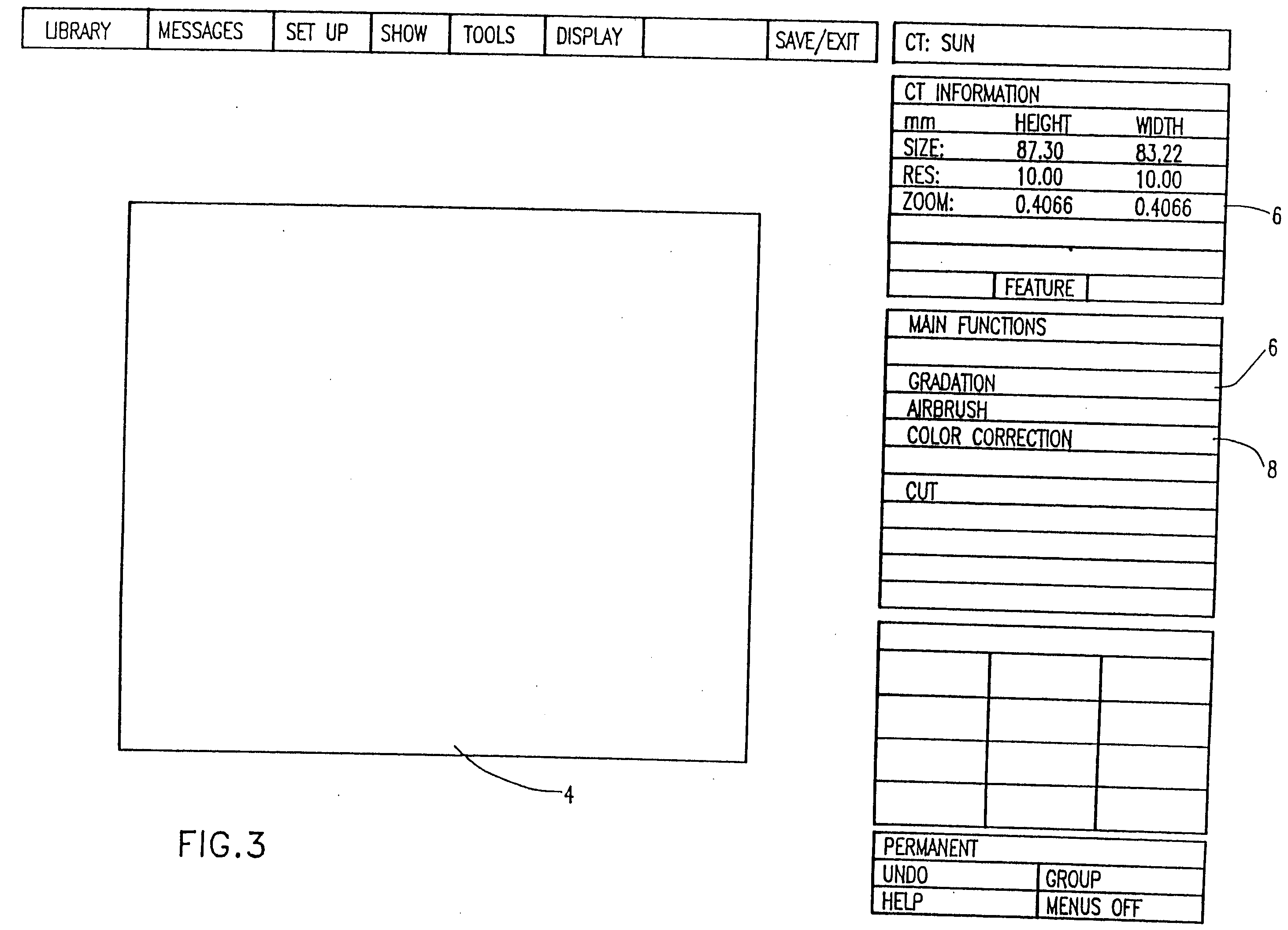

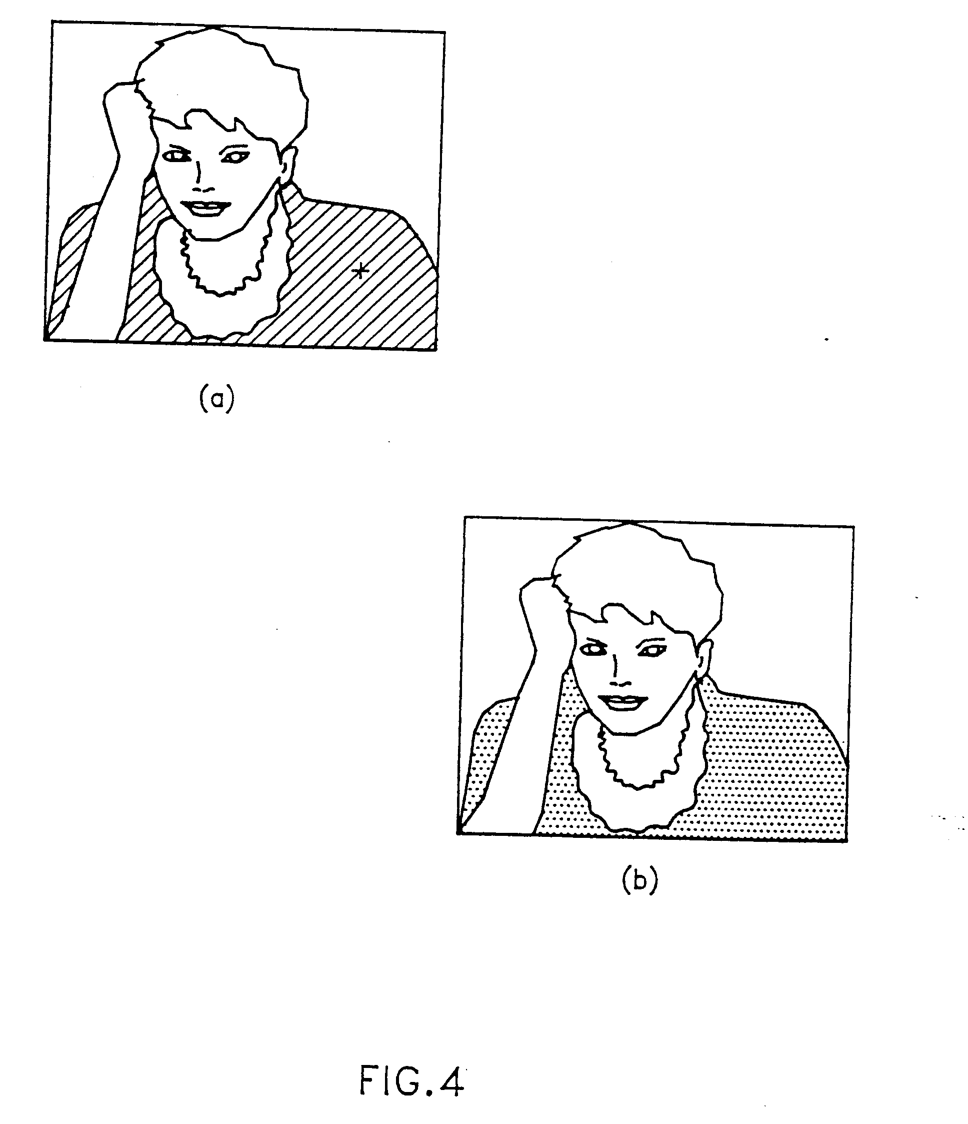

## Claims

1. A method for displaying a color image and a color palette comprising the steps of:
providing an analog representation of a color image, the analog representation corresponding to a digital representation of the color image in a first color space;
providing a digital representation of a color palette in a second color space; and
employing the digital representation of the color palette in the second color space in order to provide an analog representation of the color palette, the analog representation corresponding to a digital representation of the color palette in the first color space.

2. A method according to claim 1 and wherein:
the color palette comprises a plurality of locations 1,
the first and second color spaces define a transformation T such that T transforms the second color space into the first color space,
the plurality of locations 1 and the second color space define a function f such that f operating on the plurality of locations 1 is within the second color space, and
the step of employing comprises the step of computing a color value c within the first color space for each location 1 in accordance with the formula c=T(f(1)).

3. A method according to claim 2 and also comprising the steps of:
receiving an indication of a user-selected location 1 in the color palette, the location 1 addressing a color value c within the color palette representation in the first color space; and
modifying the color image by assigning the color value c to at least a portion of the digital representation of the color image.

4. A method according to either claims 2 or 3 and also comprising the steps of:
receiving an indication of a user-selected location 1 in the color palette, the location 1 addressing a color value c within the representation of the color palette in the first color space; and
modifying the transformation T by assigning the color value c to at least a portion of the values in the range of transformation T.

5. A color palette for use in conjunction with a color processing system comprising a color reading device and a substrate which the color reading device reads,
the color processing system defining a color value domain thereof comprising generally all the colors that the color reading device and the substrate are capable of providing, the color value domain being included within a first color space, the color palette comprising:
an analog representation of a first plurality of colors;
the first plurality of colors comprising second and third pluralities of colors, the second plurality of colors corresponding to color values within the color value domain and the third plurality of colors corresponding to color values outside the color value domain; and
means for differentiating the second plurality of colors from the third plurality of colors.

6. A method for providing a color palette for use in conjunction with a color processing system comprising a color reading device and a substrate which the color reading device reads,
the color processing system defining a color value domain thereof characterized in that the color reading device and the substrate are only capable of providing any color value within the color value domain and in that the color value domain is included within a first color space, the method comprising the steps of:
providing an analog representation of a first plurality of colors corresponding to a digital representation thereof in the first color space,
the first plurality of colors comprising second and third pluralities of colors, the second plurality of colors corresponding to color values within the color value domain and the third plurality of colors corresponding to color values outside the color value domain; and
providing means for differentiating the second plurality of colors from the third plurality of colors.

7. A method according to claim 6 and also comprising the step of:
discarding at least one individual color value from among said plurality of color values which is enveloped by other individual color values from among said plurality of color values.

8. A method of representing a color transformation comprising the steps of:
providing a first digital representation of a color palette in a first color space;
transforming the first digital representation of the color palette employing the color transformation, thereby to obtain a second digital representation of the color palette in a second color space; and
displaying the second digital representation of the color palette.
